# EUROPEAN PATENT SPECIFICATION

(11) **EP 0 815 507 B1**
(45) Date of publication and mention of the grant of the patent: **12.06.2013**
(21) Application number: 96906404.7
(22) Date of filing: 13.02.1996
(51) Int. Cl.: G06F 9/38

(54) **STRUCTURE AND METHOD FOR HIGH-PERFORMANCE SPECULATIVE EXECUTION PROCESSOR PROVIDING SPECIAL FEATURES**
STRUKTUR UND VERFAHREN FÜR EINEN HOCHLEISTUNGSPROZESSOR MIT SPEKULATIVER BEFEHLSAUSFÜHRUNG UND SPEZIELLEN FUNKTIONEN
STRUCTURE ET PROCEDE POUR PROCESSEUR D'EXECUTION SPECULATIVE HAUTE PERFORMANCE A FONCTIONS SPECIALES

(30) Priority: 14.02.1995 US 390885; 03.03.1995 US 398299; 07.06.1995 US 476419; 07.06.1995 US 478025; 07.06.1995 US 483958; 07.06.1995 US 473223; 07.06.1995 US 484795; 07.06.1995 US 472394; 07.06.1995 US 482073; 07.06.1995 US 487801
(43) Date of publication of application: 07.01.1998
(73) Proprietor: FUJITSU LIMITED, Kawasaki-shi, Kanagawa 211-88 (JP)
(72) Inventor: SHEN, Gene, W., Mountain View, CA 94043 (US); SZETO, John, Oakland, CA 94610 (US); PATKAR, Niteen, A., Sunnyvale, CA 94087 (US); SHEBANOW, Michael, C., Plano, TX 75075 (US); OSONE, Hideki, San Jose, CA 95130 (US); SIMONE, Michael, A., Santa Clara, CA 95050 (US); MARUYAMA, Takumi, Los Gatos, CA 95032 (US)
(74) Representative: Sunderland, James Harry
(86) International application number: PCT/US1996/001930
(87) International publication number: WO 1996/025705

(56) References cited:
- EP-A- 0 306 891
- EP-A- 0 355 286
- EP-A- 0 432 774
- EP-A- 0 448 212
- EP-A- 0 509 245
- EP-A- 0 514 763
- EP-A- 0 605 873
- EP-A- 0 606 697
- EP-A- 0 649 086
- WO-A-93/01547
- GB-A- 2 265 481
- US-A- 5 109 514
- US-A- 5 185 872
- US-A- 5 193 157
- US-A- 5 226 126
- US-A- 5 269 017
- US-A- 5 269 017
- US-A- 5 355 457
- US-A- 5 355 457
- US-A- 5 463 745
- US-A- 5 471 598
- US-A- 5 481 685
- US-A- 5 497 499
- WILLIAMS T ET AL: "SPARC64: A 64-B 64-ACTIVE-INSTRUCTION OUT-OF-ORDER-EXECUTION MCM PROCESSOR" IEEE JOURNAL OF SOLID-STATE CIRCUITS, vol. 30, no. 11, 1 November 1995 (1995-11-01), pages 1215-1226, XP000553059 ISSN: 0018-9200
- "TECHNIQUE FOR EXECUTING CISC INSTRUCTIONS IN MULTIPLES AND OUT-OF -ORDER" IBM TECHNICAL DISCLOSURE BULLETIN, vol. 36, no. 9B, 1 September 1993 (1993-09-01), pages 465-470, XP000397229 US ISSN: 0018-8689
- GALLAGHER D M ET AL: "DYNAMIC MEMORY DISAMBIGUATION USING THE MEMORY CONFLICT BUFFER" ACM SIGPLAN NOTICES,US,ASSOCIATION FOR COMPUTING MACHINERY, NEW YORK, vol. 29, no. 11, 1 November 1994 (1994-11-01), pages 183-193, XP000491733 ISSN: 0362-1340
- BUTLER M ET AL: "A COMPARATIVE PERFORMANCE EVALUATION OF VARIOUS STATE MAINTENANCE MECHANISMS" PROCEEDINGS OF THE ANNUAL INTERNATIONAL SYMPOSIUM ON MICROARCHITECTURE,US,LOS ALAMITOS, IEEE COMP. SOC. PRESS, vol. SYMP. 26, 1 December 1993 (1993-12-01), pages 70-79, XP000447489
- WEN-MEI W. HWU, YALE N. PATT: "Checkpoint repair for high-performance out-of-order execution machines" IEEE TRANSACTIONS ON COMPUTERS, vol. C-36, no. 12, December 1987 (1987-12), pages 1496-1514, XP000047023 New York, US
- "SPECULATIVE EXECUTION USING THE COLLISION VECTOR TABLE VALID FIELD.AND THE COLLISION VECTOR TABLE STATUS REGISTER" IBM TECHNICAL DISCLOSURE BULLETIN,US,IBM CORP. NEW YORK, vol. 36, no. 12, 1 December 1993 (1993-12-01), pages 449-451, XP000419027 ISSN: 0018-8689
- NOBUHIRO IDE: "A 320-MFLOPS CMOS FLOATING-POINT PROCESSING UNIT FOR SUPERSCALAR PROCESSORS" IEEE JOURNAL OF SOLID-STATE CIRCUITS,US,IEEE INC. NEW YORK, vol. 28, no. 3, 1 March 1993 (1993-03-01), pages 352-360, XP000363936 ISSN: 0018-9200

## Description

### TECHNICAL FIELD

The field of the subject invention concerns apparatus, systems, and methods for increasing processor performance while maintaining precise state in a speculative out-of-order execution processor.

### BACKGROUND OF THE INVENTION

With processors, control flow instructions (such as branch instructions), latency due to memory transactions, and Instructions requiring multi-cycle operations often prevent the processor from sustaining peak instruction execution bandwidth because "bubbles" are introduced into the pipeline. Performance can be improved by implementing speculative out-of-order instruction execution to enhance performance. Conventionally, when an intermediate result from an instruction is not available for a subsequent instruction, the processor ceases execution, or "stalls" until that intermediate result is available.

Two techniques, speculative execution and out-of-order execution, help to maintain high execution bandwidth in modern processors. Speculative execution is a known technique in which, when a branch is encountered without the information from an eartier process step to select the appropriate branch, a prediction is made and instruction dispatch and execution proceeds based on that prediction. If the prediction later proves to be incorrect, the mispredicted instruction sequence must be undone using branch mispredict recovery. Speculative execution allows the processor to continue issuing and executing instructions. Known prediction schemes minimize the frequency of mispredicted execution in order to improve performance. However, maintaining precise state in a speculative machine is complicated and incurs undesirable overhead. Out-of-order execution is a technique that hides memory and multi-cycle instruction latency. In processors inplementing out-of-order execution, instructions are dynamically reordered and executed in a different order than the sequential program order to reveal available instruction level parallelism.

A "precise exception" model has been shown to be an important feature for simplifying software resolution of exception conditions, but maintenance of precise exceptions is complicated in machines implementing speculative out-of-order execution. Machine state is generally processor specific and architectural state includes all control/status registers, data registers, address registers and all external memory state. For example, SPARC-V9 control/status registers are identified on pages 29-30 of the SPARC-V9 Architecture Manual. It is what the software and software programmer sees. Machine state is a super-set of architectural state that is processor specific and includes everything else about the state of the machine. A faulting instruction is an instruction which generates an exception. An exception is any situation or condition that tells the processor to stop and investigate the situation that caused the exception before proceeding. An exception need not be an error condition and includes interrupts for example. Execution traps may result from exceptions. In a processor implementing a precise exception model, a fault or exception does not modify architectural state. Architectural state has been modified for all instructions prior to the faulting instruction, but architectural state has not been modified for instructions after the faulting instruction. When a precise exception model is not provided, the software must identify the faulting instruction and then calculate a restart point for either retrying the faulting instruction or bypassing the faulting instruction and executing the next instruction.

Precise state maintenance techniques for short-pipelined, single-issue machines are known. Generally, a short-pipelined machine has fewer than about four or five stages including an instruction fetch, issue, execute, and write-back stage wherein state is modified. Single-issue implementations simplify recovery in the event of an exception or misprediction because the pipeline may be cleared without worrying about which instruction in a pipeline stage should be flushed. In these conventional techniques, any exception that may have occurred is detected prior to modifying architectural state. When an exception is detected, the pipeline is flushed of instructions and any writeback of data, status, or results to architectural state is intentionally blocked to prevent modification of architectural state.

In speculative out-of-order superscalar (multi-issue) implementations, maintaining precise state is much more difficult than for a single-issue machine. In such speculative out-of-order machines, instructions which generate errors may execute speculatively and method and structure must be provided to undo any architectural state modification which occur after the location of the fault. Also, exceptions may generally be detected in a different order than program order. Therefore, an out-of-order processor must be able to unscramble the exceptions and determine which instructions should be allowed to complete (and modify architectural state) and which instructions should be undone.

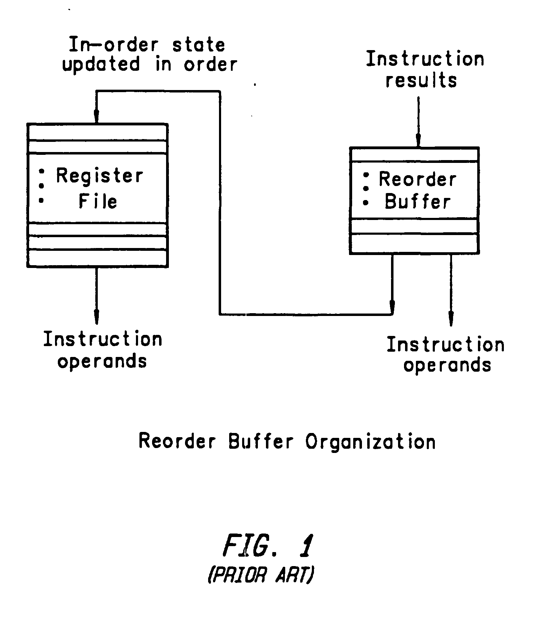

FIG. 1 shows a conventional approach using a re-order buffer for maintaining precise state in a speculative processor. The reorder buffer is implemented by a first-in/first-out stack that effectively introduces a temporal delay between instruction execution completion (when the result is available) and the time when machine state is modified as the result of execution completion. Precise state is maintained by preventing writeback to memory of a mispredicted branch instruction, execution exception, or like condition. Precise state is maintained by preventing state modification while the instruction is still speculative rather than by restoring state to undo mispredicted speculative execution.

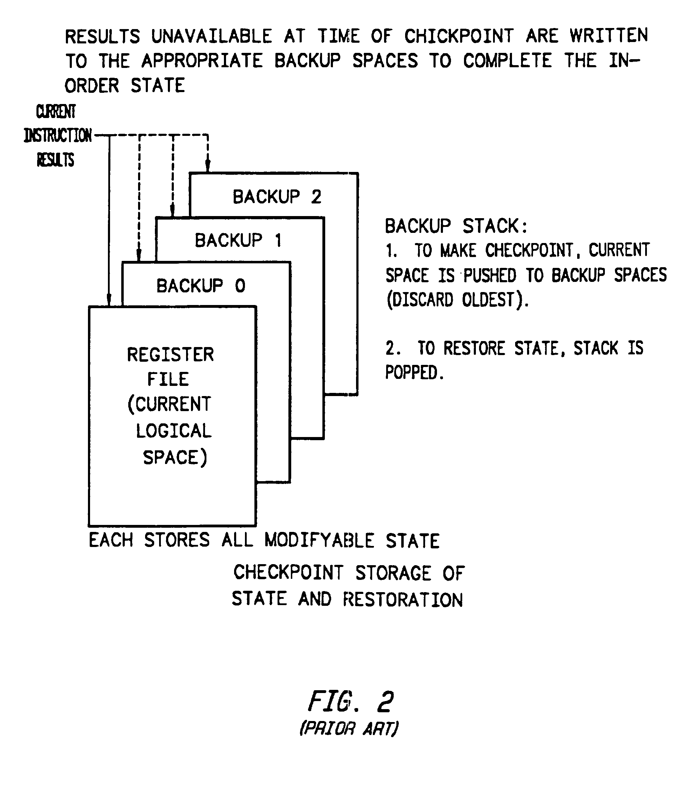

FIG. 2 shows a conventional approach for maintaining precise state in a speculative processor by storing state in a "checkpoint" prior to executing an instruction and later restoring state from the stored checkpoint information. In conventional checkpointing, every speculatively executed instruction that may result in modification of machine state is check pointed. Each processor has a set of state parameters, including for example, all control/status registers, data register values, and the like, that define the state of the machine. In order to restore a previous machine state, all of the state defining parameters must be stored so that they can be restored if and when the need arises. In conventional checkpointing techniques, every state defining parameter is typically stored for every instruction that may modify any one of the state defining parameters. For every checkpointed instruction, conventional checkpointing stores all state information that may be changed by any one of the checkpointed instructions, and not just the state that may be modified by that particular instruction about to be executed. For example, in a machine requiring 100 state parameters to define machine state, if execution of instruction "X" may modify only one control/status register, execution of that instruction will still require storing 100 state parameters, not just the one that may be modified by that instruction.

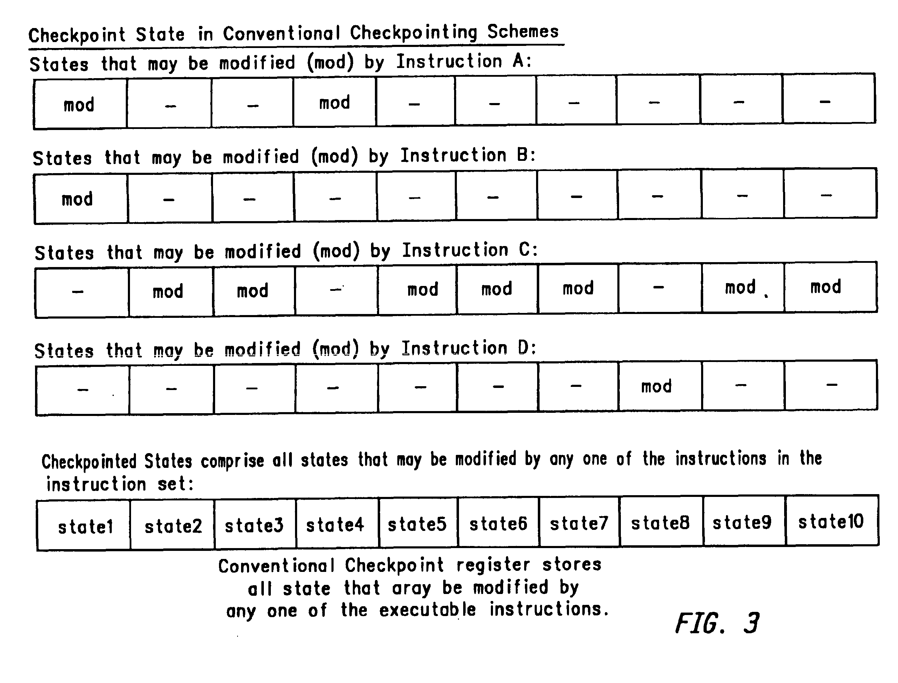

FIG. 3 shows the structure and content of an exemplary sequence of instructions and conventional checkpoints in diagrammatic fashion for purposes of illustration only and do not represent actual checkpoint data for any particular machine or CPU. Since conventional checkpoints are fixed size, this means that each checkpoint must be relatively large compared to the state actually modified by a particular instruction. Recovery using conventional checkpointing includes restoring state using a stored checkpoint closest to but prior to the faulting or mispredicted speculative instruction, backing up the program counter to just after the checkpointed instruction, and re-executing instructions from the checkpointed instruction forward.

Checkpointing, re-order buffers, history buffers, and the use of a future file have been described as ways to manage out-of-order execution and maintain precise state in some circumstances. Conventional Checkpointing which permits restoration of machine state at a checkpoint boundary, but not at an arbitrary instruction boundary, is described by Hwu and Patt (W. Hwu and Y.N. Patt, "Checkpoint Repair for High Performance Out-of-order Execution Machines", Proceedings of the 14th Annual Symposium on Computer Architecture, (June 1987), pp. 18-26.). Methods of implementing precise interruptions in pipelined RISC processors are described by Wang and Emnett ("Implementing Precise Interruptions in Pipelined RISC Processors", IEEE Micro, August 1993, pp.36-43.). Methods of implementing precise interrupts in pipelined processors are also described by Smith and Pteszkun (J.E. Smith and A.R. Pleszkun, "Implementation of Precise Interrupts in Pipelined Processors.", Proceedings of the 12th Annual International Symposium on Computer Architecture, (June 1985), pp. 36-44.). An overview of conventional techniques for designing high-performance superscalar microprocessors is provided by Mike Johnson (M. Johnson [a.k.a. William Johnson]. Superscalar Microprocessor Design, Prentice-Hall, Inc., Englewood Cliffs, New Jersey 07632, 1991, ISBN 0-13-875634-1.). Each of these references are hereby incorporated by reference in their entirety.

Although at least some of these techniques improve performance, they are not entirely satisfactory because they either limit the degree of speculation or they allow only coarse machine state restoration not instruction level machine state restoration. Conventional re-order buffer techniques limit the degree of speculation because the re-order buffer length is linear with respect to the degree of speculation supported. That is, for each instruction that may have to be undone, the instruction execution result must be stored in the re-order buffer. For example, if the machine permits sixty-four outstanding and potentially speculative instructions, the re-order buffer must contain at least sixty-four locations for storing results. In conventional checkpointing, the number of checkpoints checkpointed are typically fewer than the number of outstanding instructions in the machine, but the amount of data stored in each checkpoint is very large (the entire state of the machine at the time). The checkpoint storage requirements place a burden on processor chip substrate area. Ideally, a scheme for maintaining precise state should be scalable, at a linear or lower order relationship (e.g. logarithmic) to larger numbers of concurrently outstanding speculative instructions. Reorder buffer entry storage areas must have sufficient width to store the data and these techniques also require associative lookup to all entries. This can be difficult for very large reorder buffers.

Furthermore, conventional methods of restoring precise state are incomplete in some environments. For example, where an instruction executed as the result of a speculative branch modifies the state of an external "dumb" device, where restoration of state typically involves restoring state at a checkpoint boundary prior to the point of the modification to the external device and then forward re-execution of non-faulting instructions including the instruction that modifies the external device. In such cases re-executing the faulting instruction alone will not undo the effect of the change in the state of the external device and the re-execution of the non-faulting instructions between the point where state is restored and the faulting instruction causes further problems.

Conventional checkpointing saves machine state at a limited number of different points in the instruction stream and restores the checkpointed architectural state in order to recover from branch mispredictions or execution errors. Conventional checkpointing does not checkpoint each instruction. Conventional checkpointing can restore machine state only at checkpoint boundaries, that is at the instruction for which a checkpoint was established. When a fault or execution error occurs, the checkpointed state is restored by known techniques, thereby in effect "undoing" all instructions subsequent to the checkpoint, and thus including the faulting instruction(s). Then the instructions are re-executed serially forward, for example in a single-issue mode, from the checkpointed instruction to reach the faulting instruction.

This conventional checkpointing technique allows speculative execution but is disadvantageous in many respects. For example, it does not provide robust exception recovery. On intermittent errors, conventional backup of the machine to the checkpoint prior to the exception creating instruction and then re-execution of the instructions following the checkpoint may not result in deterministic behavior and may compound machine state disruption by propagating erroneously altered state in the re-executed instructions. Conventional checkpointing and machine backup procedures do not attempt to minimize instruction re-execution. Furthermore, catastrophic machine errors such as hardware failures and machine time-outs may deadlock the processor if all of the instructions between the restored checkpointed instruction and the instruction causing the exception are re-executed.

Conventional "re-order buffers" manage speculative instructions in a re-order buffer which is a first-in-first-out (FIFO) memory structure of a predefined size. When an instruction completes execution, data value results from the execution are written into the re-order buffer and as they move through the buffer and emerge at the top, the data values are written from the re-order buffer into a register file. The size of the re-order buffer effectively defines the delay between completion of execution of the instruction and permanent modification of architectural state. Once the data values are written to the register they cannot be undone. "Associative lookup," a procedure by which entries in the re-order buffers are associated with entries in the register file, is discussed in M. Johnson, Superscalar Microprocessor Design at page 49 et seg.

Re-order buffer schemes have at least three limitations. First, in conventional re-order buffer schemes, only the results of instruction execution are saved in the re-order buffer and the Program Counter (PC) values are not saved. Therefore, any branch rnispredict recovery using re-order buffers requires the additional steps of PC reconstruction, instruction fetch, and instruction issue. As a result, conventional recovery from a branch mispredict using re-order buffers is delayed.

Second, re-order buffers generally only allow speculative execution of a limited mix of instructions. For example, traps detected during the instruction issue stage (issue traps) may not be speculatively executed using re-order buffers because they generally involve control register updates. Re-order buffer techniques do not support speculative execution of an instruction involving control register updates. The inability to speculatively enter issue traps in certain instruction set architectures (e.g. "spill/fill" traps in the Sun Microsystems SPARC architecture) can impose significant performance limitations.

Third, re-order buffer size is generally a direct linear function of the number of outstanding instructions allowed in the processor. For example, in the processor that allows sixty-four outstanding instructions a re-order buffer having sixty-four entries would be required. Allocating the large number of buffer registers within the processor can be prohibitive, especially in dataflow processors where large active instruction windows, that is a relatively large number of concurrently outstanding instructions allow improved extraction of instruction level parallelism. Dataflow processors are processors where the order of instruction execution is determined by the operand or data availability, rather than based on incrementing the program counter as in conventional non-data flow processors.

Future files are a modification of the re-order buffer technique that avoids the associative lookup problem in the reorder buffer. Future Files are described in M. Johnson's Superscalar Microprocessor Design at pages 94-95. History buffers are a method and structure proposed for implementing precise interrupts in a pipelined scalar processor with out-of-order completion and is described in M. Johnson's Superscalar Microprocessor Design at pages 91-92.

"The SPARC Architecture Manual", Version 9, by D. Weaver and T. Germond. Englewood Cliffs (1994), describes a particular type of out-of-order speculative execution processor. The SPARC V9 architecture requires a Floating-Point State Register (FSR). The FSR contains 3 fields, the FSR_accrued_exception (FSR.aexc) field, the FSR_current_exception (FSR.coxc) field, and the FSR_floating_point_trap_type (FSR.ftt) field, which are updated when a floating point exception occurs and are used by a trap handling routine for handling a trap caused by the floating point exception. The updating of these fields is difficult in an out-of-order execution processor because instructions execute and complete in a different order than program order. Since these fields need to be updated or appear to be updated as if instructions are issued and executed in program order, an apparatus and corresponding method is required to track these exceptions and correctly update the FSR register.

For data processors which can execute instructions speculatively, branch direction (taken or not-taken), or branch address (target address or address next to the branch instruction) can be predicted before they are resolved. Later, if these predictions turn out to be wrong, the processor backs up to the previous state and re-starts executing instructions in the correct branch stream. However, most superscalar processors available in the market can evaluate only one branch per cycle to check whether or not branch predictions are correct. But, multiple predicted branches are often ready to evaluate in one cycle. Thus, branch evaluations which could otherwise be performed need to be delayed. Delaying branch evaluations affects the processor performance significantly.

Furthermore, in conventional speculative execution processors, when a trap occurs, the processor has to wait until all predicted branches have been resolved to make sure that the trap is real and not speculative. The easiest way for a processor to make sure that a trap is real is to synchronize the processor (i.e., execute and complete all instructions issued prior to the occurrence of the trap condition) before taking the trap. However, doing so for traps that occur frequently degrades the performance of the processor. This is especially true in the SPARC-V9 architecture where spill/fill issue traps and software traps (Tcc instructions) often occur. This problem needs to be resolved in order to increase processor performance.

EP 0 605 873 Al concerns a method for tracking a group of scalar instructions within a superscalar data processor system. A group of unique identification numbers, which is large enough to uniquely identify each scalar instruction currently being executed within the superscalar data processor system, is selected. Thereafter, one of the unique identification numbers is associated with each scalar instruction being processed within the superscalar processor system, as each scalar instruction is loaded into the processor's instruction dispatcher. After the execution of a particular scalar instruction has completed, the association between the particular scalar instruction and the associated unique identification number is terminated, thereby allowing the group of unique identification numbers to be reutilized to track subsequent scalar instruction execution within said superscalar data processor system. As several scalar instructions are loaded into a superscalar processor for simultaneous execution, certain instructions may be dispatched to an available execution unit before an instruction that proceeds the dispatched scalar instructions in an application specified sequential order. Such prior dispatching of a scalar instruction before other scalar instructions which precede the scalar instruction in application specified sequential order may be referred to as "nonsequential".

### SUMMARY OF THE INVENTION

The foregoing problems in the prior-art are addressed in an invention directed to a high-performance processor that includes structure and methods for providing numerous special processor features and capabilities. These structures and methods include, but are not limited to, structure and methods for : (1) Aggressively Scheduling Long Latency Instructions Including Load/store Instructions While Maintaining Precise State; Maintaining and Restoring Precise State at Any Instruction Boundary; (3)Tracking Instruction Status to Maintain Precise State; (4) Checkpointing Instructions to Maintain Precise State; (5) Creating, maintaining, and using a Time-out Checkpoint; (6) Tracking Floating-point Exceptions; (7)Creating, maintaining, and using a Renamable Trap-stack: (8) Creating, maintaining, and using a Watchpoint for Plural Simultaneous Unresolved Branch Evaluation; (9) Tracking Instruction Status to Maintain Precise State; and (10) Increasing Processor Throughput While Maintaining Precise State. Other structure features and capabilities are described below and within the disclosures and the appurtenant drawings and claims.

The present invention provides a method according to claim 1 and an apparatus according to claim 26. Tacking and maintaining precise state can be provided by assigning a unique identification tag to each instruction at the time of issue, associating the tag with a storage location in a first active instruction data structure, updating the data stored in the storage location in response to instruction activity status changes for each instruction, and maintaining a plurality of pointers to the storage locations that move in response to the instruction activity status. The status information includes an active-bit that is set at the time the instruction is issued and cleared when execution completes without error. Pointers are established that point to the last issued instruction (issued instruction pointer), the last instruction that has completed without error and for which all sequentially earlier instructions have completed without error (last committed instruction pointer), and the last instruction for which allocated processor resources have been reclaimed (reclaimed instruction pointer). These three pointers are moved forward toward the later issued instructions along the data structure based on comparisons of the active-bit for each location associated with one instruction in the data structure and predetermined rules. Exceptions or error conditions for any instruction prevent changing the active-bit so that movement of the pointers is controlled prevented under these conditions.

There can be provided tracking and aggressively scheduling long latency instructions such as instructions referencing external memory, including load and store instructions, ahead of short latency instructions in a speculative out of order execution processor, while maintaining precise state by distinguishing memory referencing instructions from other instructions, identifying which instructions have been predicted and have speculative outcomes, and scheduling only those memory referencing instructions for execution that can be executed without concern for speculative branch mispredictions and execution exceptions. Instructions that can be so scheduled are tracked by assigning a unique identification tag to each instruction at the time of issue, associating the tag with a storage location in a data structure, updating the data stored in the storage location in the data structure in response to instruction activity status changes for each instruction, and maintaining a plurality of pointers to the storage locations that move in response to the instruction activity status. The status information includes an active instruction indicator that is set at the time the instruction is issued and cleared when execution completes without error. Pointers are established that point to the last issued instruction, the last instruction that has completed without error and for which all sequentially earlier instructions have completed without error (last committed instruction), and the last instruction for which allocated processor resources have been reclaimed (reclaimed instruction). Further associating the tag with a second storage location in the data structure, updating the data stored in the second storage location in response to instruction activity status changes for each long latency instruction such as a memory referencing instruction, and maintaining a plurality of pointers to the storage locations that move in response to the long latency (e.g. memory referencing) instruction activity status. The status information includes a long latency instruction type that is cleared at the time the long latency instruction is issued but set for all other instruction types and cleared when execution of the instructions complete without error. A first pointer is established in the data structure that points to the earliest predicted branch instruction (predicted branch pointer). A second pointer is established that points to the last instruction that has completed without error and for which all sequentially earlier instructions have completed without error and further advances even over active long latency instructions. The issued, commit, retire, predicted branch, and long latency pointers are moved forward toward the later issued instructions along the first and second circular data structures based on comparisons of the active-bit and memory bit for each location and predetermined rules. Exceptions or error conditions for any instruction prevent changing the active-bit and the memory-bit so that movement of the pointers is prevented under these conditions. More than one data structure may be provided to store activity status and instruction-type data, and the indicator may be a set or cleared bit stored in the data structure.

There can be provided a method for restoring precise machine state at any instruction boundary in a speculative out of order execution processor by creating checkpoints only for a predetermined set of instruction types, including branch instructions and instructions creating program counter discontinuities or that may have the side effect of modifying control register values, and either creating checkpoints for each instruction that creates a program counter discontinuity or synchronizing the processor so that any instructions that may modify state are executed sequentially in-order to provide means and method for recovering the processor from the exception. Recovery from an exception condition involves determining and storing the instruction serial number when an execution exception occurs or the earliest instruction serial number when more than one execution exception occurs in a cycle, and restoring processor state by backing up the processor to the closest prior checkpointed instruction after the execution exception and restoring processor state from that checkpointed information when a checkpoint lies between the current issued instruction and the faulting instruction and backstepping the processor by updating register resources and decrementing the processor program counter by the backstep amount from the checkpointed instruction, if any, to the point just prior to the earliest faulting instruction. In a further improvement, the large amount of storage required in conventional checkpointing is reduced by checkpointing the logical and physical register rename maps, rather than the register data itself.

There can be provided checkpointing instructions in a processor to reduce checkpointed state while maintaining precise state in the processor by pre-identifying instructions that may modify architectural state when executed in the CPU before the instructions are issued and executed, and pre-selecting particular ones of the identified instructions for execution in a special execution mode without checkpointing architectural state for the particular instructions before execution based on predetermined selection criteria including the amount of state storage required for a checkpoint of a particular instruction and the frequency at which the instruction occurs in a typical instruction stream. Checkpoints are then formed only for the identified instructions, other instructions which may modify state are not checkpointed but rather are executed in a special syncing mode so that if an exception occurs, the exception may be handled prior to writing execution results back to processor state. In one embodiment of the inventive method and structure, the criteria comprises the type of modifiable state and the amount of modifiable state that may be modified by the instruction during execution, possibly including the frequency at which the instruction occurs in the predetermined nominal instruction stream. Advantageously, instructions which appear with a low estimated statistical frequency and require a relatively larger amount of checkpoint storage are selected for syncing mode execution and are not checkpointed. In an embodiment of the inventive structure and method, syncing or synchronizing the processor involves identifying an instruction as a syncing instruction which requires machine synchronization in the instruction stream prior to execution, delaying execution of the syncing instruction until all pending issued instructions have been committed and retired so that execution has completed without error and the execution result has been written back to state, executing each instruction requiring machine synchronization sequentially and in-order, identifying exception conditions arising from execution of each the syncing instruction before writeback to state is made, handling any of the exception conditions that may arise during execution of the syncing instructions; and only then writing an execution result back to machine state, so that precise state is maintained without checkpointing the syncing instruction.

There can be provided checkpoint formation based on the number of instructions issued, the number of clock cycles elapsed, and the like intervals since the last checkpoint was formed rather than forming a checkpoint to store current processor state based merely on the decoded instruction attributes. The inventive time-out condition based checkpointing limits the maximum number of instructions within a checkpoint boundary and therefore bounds the period of recovery from an exception condition. As long as the instruction window size is greater than the maximum number of instructions within a checkpoint boundary, the processor can restore checkpointed state faster than instruction decode based checkpoint techniques in the event of an exception and eliminates processor state restoration dependency on instruction window size. The inventive time-out checkpoint formation may be used in a structure and method implementing conventional checkpoints, or an inventive logical and physical register rename map checkpointing technique. The inventive timeout checkpoint formation structure and method may be used with conventional processor backup techniques as well as with the inventive backtracking technique including processor backup and backstepping.

There can be provided an out of program control order execution data processor that comprises an issue unit, execution means, a floating point exception unit a precise state unit, a floating point status register, and writing means. The issue unit issues instructions in program control order for execution. The issued instructions include floating point instructions and non-floating point instructions. The execution means executes the issued instructions such that at least the floating point instructions may be executed out of program control order by the execution means. The floating point exception unit includes a data storage structure including storage elements. Each issued instruction corresponds to one of the storage elements. Each storage element has a floating point instruction identifying fields and a floating point trap type field. The floating point exception unit also includes first logic to write, for each issued instruction, data in the floating point instruction identifying field of the corresponding storage element which indicates whether or not the corresponding issued instruction is a floating point instruction. It further includes second logic to write, for each issued floating point instruction which causes during execution one or more floating point execution exceptions that will result in a corresponding one of a plurality of predefined types of floating point execution traps, data in the floating point trap type field of the corresponding storage element which identifies the one of the predefined types of floating point execution traps that will result. The precise state means retires each issued instruction which does not cause an execution exception during execution and for which all issued instructions preceding it in program control order have been retired. When a first one of the predefined execution exceptions is caused by an issued instruction, the execution means continues execution of issued instructions and the precise state means engages in execution trap sequencing by continuing to retire issued instructions until it encounters an issued instruction that cannot be retired. The issued instruction that cannot be retired being one of (a) the issued instruction that caused the first execution exception, and (b) an issued instruction that was issued earlier than the issued instruction that caused the first execution exception but which caused a second execution exception occurring later than the first execution exception. The floating point status register has a floating point trap type field. The writing means writes data to the floating point trap type field of the floating point status register which identifies the type of floating point execution trap identified by the data in the floating point trap type field of the storage element corresponding to the instruction that cannot be retired when the data in the floating point identifying field of the storage element corresponding to the instruction that cannot be retired indicates that the instruction that cannot be retired is a floating point instruction.

There can be provided a data processor and associated method for taking and returning from traps speculatively. The data processor supports a predefined number of trap levels for taking nested traps each having a corresponding trap level. The data processor comprises means to form checkpoints, means to back up to the checkpoints means to take a trap, means to return from a trap, registers, and a trap stack unit. The registers have contents that define the state of the data processor each time a trap is taken. The trap stack unit includes a trap stack data storage structure that has a greater number of trap stack storage entries than there are trap levels. It also includes a freelist unit that maintains a current availability list of the trap stack storage entries that are currently available for mapping to one of the trap levels. The freelist unit identifies, each time a trap is taken, a next one of the currently available trap stack storage entries for mapping to the corresponding one of the trap levels. The trap stack unit further includes read/write logic that writes, for each trap taken, the contents of the registers to the next one of the currently available trap stack storage entries. It still further includes rename mapping logic that maintains a current mapping of each trap level to one of the trap stack storage entries. The rename mapping logic replaces, each time a trap is taken, an old mapping of the corresponding trap level to one of the trap stack storage entries with a current mapping of the corresponding trap level to the next one of the currently available trap stack storage entries. The trap stack unit also includes a resource reclaim unit that maintains an unavailability list of each trap stack storage entry not currently mapped to one of the trap levels by the current mappings but unavailable for mapping to one of the trap levels. The resource reclaim unit adds to the unavailability list, each time a trap is taken, the trap stack storage entry that was mapped to the corresponding trap level by the old mapping and removing from the unavailability list, each time a taken trap can no longer be undone, the trap stack storage entry that was mapped to the corresponding trap level by the old mapping. The freelist unit adds each trap stack storage entry removed from the unavailability list to the current availability list. Finally, the trap stack unit includes a checkpoint storage unit that includes checkpoint storage entries. Each formed checkpoint has a corresponding checkpoint storage entry so that the checkpoint storage unit stores, for each formed checkpoint, the current mappings of the rename mapping logic and the current availability list of the freelist unit in the corresponding checkpoint storage entry. For each backup to a checkpoint, the rename mapping logic replaces the current mappings it maintains with the mappings stored In the corresponding checkpoint storage entry and the freelist unit replaces the current availabitity list it maintains with the availability list stored in the corresponding checkpoint storage entry.

There can be provided a data processor processor and associated method for simultaneously monitoring execution results of a plurality of speculatively issued predicted instructions. The inventive structure and method provides a watchpoint unit having a plurality of watchpoint registers for storing watchpoint data coupled to receive execution result signals from one or more execution units within the processor. A watchpoint register for storing watchpoint data including a predicted condition data result for each the speculatively issued predicted instruction is allocated at the time the instruction is issued. The predicted condition data result identifies the predicted value of a condition on which the control flow transfer direction of the speculatively issued instruction depends and on the basis of which the speculatively issued predicted instruction was speculatively issued. The watchpoint unit monitors execution result signals for the speculatively issued predicted instructions that are transmitted over data forward buss(es) from the execution unit(s) and detects occurrence of predetermined events based on the stored watchpoint data and execution result signals including an actual known condition data result signal and predetermined rules that define whether the actual condition codes match the predicted condition codes. The watchpoint data stored in the watchpoint register for one of the speculatively issued predicted instructions is compared with the result signals arriving over the data forward busses pertaining to the speculatively issued instruction to determine if the signals match or do not match; a match indicating that the speculatively issued predicted instruction was correctly predicted and a non-match indicating that the speculatively issued predicted instruction was mispredicted. When a misprediction is identified, then the processor is recovered to an earlier state so that instructions executed on the basis of the misprediction are undone. Aspects of the invention provide structure and method for simultaneously grabbing condition code data from the execution units including the ability to monitor multiple execution units and multiple speculatively issued instructions simultaneously, including multiple predicted branch or jump-and-link instructions; structure and method for grabbing plural Condition-Code data or calculated jump-and-link addresses for which predicted branch or jump-and-link instructions are waiting by watching data forward buses from execution units simultaneously; structure and method for generating plural misprediction signals of branch or jump-and-link instructions simultaneously; structure and method for storing alternate branch address or predicted jump-and-link address in one shared storage region; structure and method for sending the correct branch address or jump-and-link address for instruction fetch after a misprediction is detected as part of processor recovery; and structure and method for speeding up critical paths, by splitting up the task of condition code tag comparison and grabbing. In one embodiment of the inventive structure and method these several aspects are advantageoulsy combined to improve overall processor performance.

### BRIEF DESCRIPTION OF THE DRAWINGS

FIG. 1 shows a conventional approach using a re-order buffer for maintaining precise state in a speculative processor.
FIG. 2 shows a conventional approach for maintaining precise state in a speculative processor by storing state in a checkpoint prior to executing an instructions and later restoring state from the stored checkpoint information.
FIG. 3 shows the structure and content of an exemplary sequence of instructions and conventional checkpoints in diagrammatic fashion for purposes of illustration only and do not represent actual checkpoint data for any particular machine.
FIG. 4 is a top level functional block diagram of an embodiment of the inventive data processor including a central processing unit.
FIG. 5 shows the stages of an embodiment of the novel instruction pipeline of the CPU for some typical instruction types.
FIG. 6 shows an exemplary Branch Block (BRB) of the inventive CPU which includes an instruction prefetch and cache unit and a fetch unit.
FIG. 7 shows an exemplary Issue Block (ISB) including an Issue Unit (ISU), a Precise State Unit (PSU), a Freelist Unit , and a Control Register File.
FIG. 8 shows exemplary signals received by the Issue Unit from the register renaming Freelist Unit and used to implement the inventive register renaming.
FIG. 9 shows an embodiment of the Precise State Unit (PSU).
FIG. 10 shows a functional block diagram of components of an embodiment of the Issue/Commit/Reclaim Unit (ICRU) and input and output signals associated with its operation.
FIG. 11 shows diagrammatic illustrations of embodiments of the Active Instruction Data Structure and Memory Instruction Data Structure for storing instruction status information and various pointers associated with a first set of exemplary data stored in the data structures.
FIG. 12 shows an exemplary Status Control Logic Unit including some structural components of A-Ring Bit Set/Clear Logic.
FIG. 13 is a flow-chart of an embodiment of the inventive method of using instruction tags to track status and maintain precise state.
FIG. 14 is a diagrammatic flow-chart of an embodiment of the inventive method for tracking instruction status to maintain precise state.
FIG. 15 is a flow-chart diagram of the method for writing staus information in the Active Instruction Ring and Memory Instruction Ring according to an embodiment of the inventive method for tracking instruction status to maintain precise state.
FIG. 16 shows an embodiment of the Register File and Rename Unit (RFRN) including a physical register file that includes physical registers.
FIG. 17 shows an embodiment of the Control Register file associated with register renaming.
FIG. 18 shows an embodiment of the Resource Reclaim File (RRF).
FIG. 19 illustrates the inventive register renaming method.
FIG. 20 is a diagrammatic flow-chart of an embodiment of the inventive method for maintaining precise state including instruction issue, deactivation, commit, and retirement.
FIG. 21 shows diagrammatic illustrations of embodiments of the Active Instruction Data Structure and Memory Instruction Data Structure for storing instruction status information and various pointers associated with a second set of exemplary data stored in the data structures.
FIG. 22 shows a functional block diagram of Load/Store Unit (LSU) within the Data Forward Block of the CPU.
FIG. 23 is a flow-chart of an embodiment of the inventive method for aggressively scheduling long latency instructions including load/store instructions while maintaining precise state.
FIG. 24 is a functional block diagram of Checkpoint Unit.
FIG. 25 is a functional Block diagram of Watchpoint Unit.
FIG. 26 is a diagrammatic flow-chart of an embodiment of the inventive method for checkpointing including an optional checkpointing enhancement for forming a time-out checkpoint.
FIG. 27 shows a functional block diagram of the major functional blocks within an embodiment of the Watchpoint Unit.
FIG. 28 shows an embodiment of the Watchpoint Unit showing particular embodiments of the Condition Code grabbing Logic, Evaluation logic, Watchpoint Elements Storage and Control Unit, and Target RAM.
FIG. 29 shows a schematic portion of an embodiment of Watchpoint, including Current Matching Logic, Array Matching Logic, and Condition Code Select Logic which includes Evaluation Ready and Evaluate Condition Code Logic.
FIG. 30 shows an exemplary timing chart associated with branch prediction and evaluation.
FIG. 31 shows structural detail associated with an embodiment of the Current Match Logic and Array Match Logic.
FIG. 32 shows structural detail associated with an embodiment of the Condition Code Select Logic.
FIG. 33 shows structural detail associated with an embodiment of the Evaluation Ready Logic.
FIG. 34 shows structural detail associated with an embodiment of the Evaluation True Logic .
FIG. 35 shows structural detail associated with an embodiment of the TARGET-RAM and Jump-Link Instruction Evaluation Logic.
FIG. 36 is a diagrammatic flow-chart of an embodiment of the inventive Watchpoint method for plural simultaneous unresolved branch evaluation.
FIG. 37 is schematic representation of an embodiment of the Floating-Point Exception (FPEXCEP) Data Structure.
FIG. 38 show signal interfaces to the exemplary Floating-Point Exception Ring data structure.
FIG. 39 shows the floating point exception unit including the RD and AEXC logic.
FIG. 40 is a diagrammatic representation of an embodiment of the Backtrack Unit which includes Back-up and Backstep components.
FIG. 41 is a diagrammatic flow-chart of an embodiment of the inventive method for maintaining and restoring precise state at any instruction boundary including the backup and backstep procedures.
FIG. 42 shows the manner in which the logical to physical mappings are restored in a register rename file.
FIG. 43 provides an illustrative example of a machine backtrack including a single machine backup to a checkpoint boundary followed by two machine backsteps to an instruction boundary.
FIG. 44 shows an exemplary Priority Logic and State Machine (PLSM).
FIG. 45 shows an exemplary Trap Stack Unit.
FIG. 46 shows an embodiment of Freelist Logic for storing a list of the storage elements of the Trap Stack.
FIG. 47 shows exemplary Rename Map Logic.
FIG. 48 shows an exemplary Trap-Stack RRF.

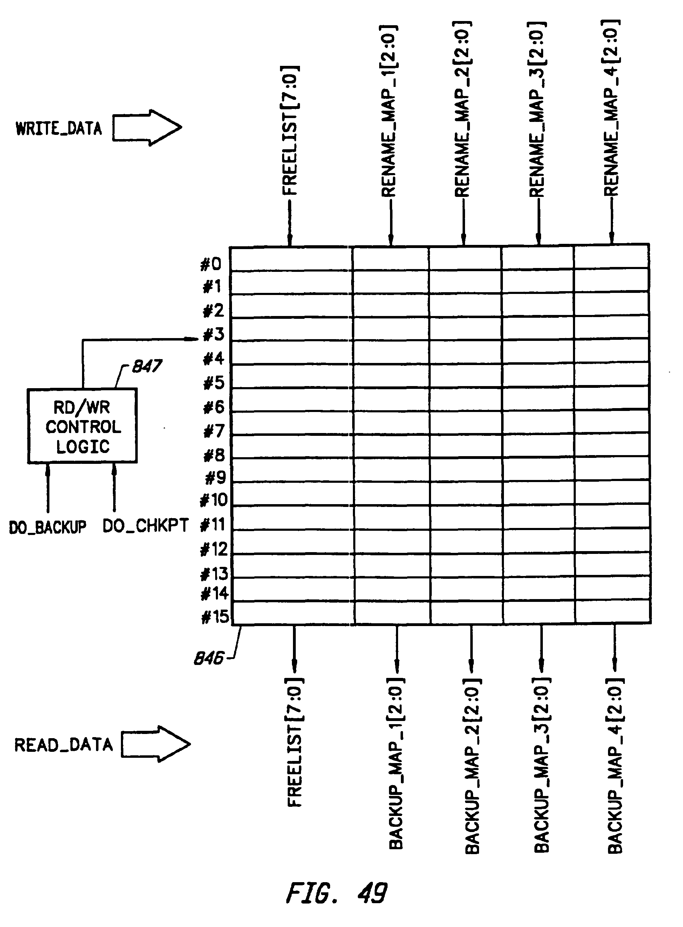

FIG. 49 shows the Trap Stack Checkpoint storage unit.
FIG. 50 shows Watchpoint WP_ACTIVE_VEC and WP_MISPRED Logic.
FIG. 51 shows Trap Stack Backup Example.
FIG. 52 shows XICC Write Logic.
FIG. 53 shows XICC Grabbing Logic and Array Later Match Logic.
FIG. 54. shows Wait For Condition Code Logic.

### DESCRIPTION OF SPECIFIC EMBODIMENTS

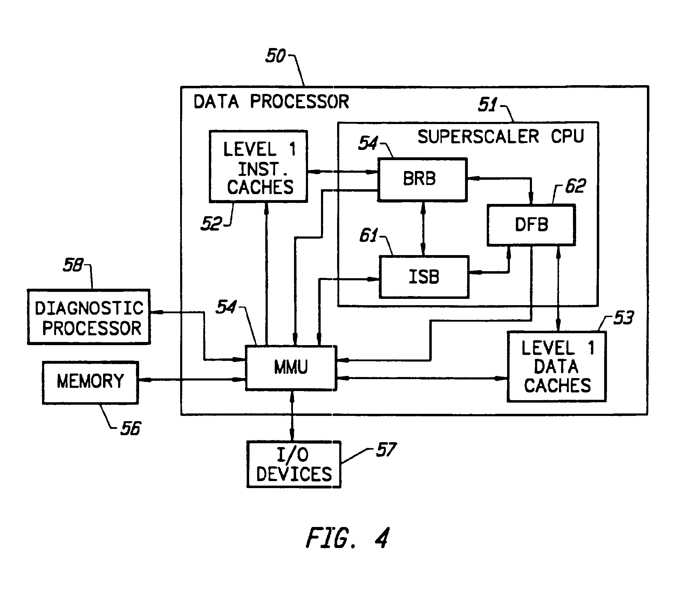

FIG. 4 is a top level functional block diagram of a data processor 50. The data processor includes a novel out-of-order speculative execution (superscalar) central processing unit (CPU) 51. The exemplary CPU is capable of executing the SPARC-V9 instruction set described in the SPARC-V9 Architecture Manual. The SPARC Architecture Manual", Version 9, by D. Weaver and T. Germond, Englewood Cliffs (1994). However, those skilled in the art will recognize that the novel design and methods described herein are not limited to the SPARC-V9 architecture.

Indeed, CPU 51 employs novel designs and methods for increasing throughput while maintaining precise machine state which are applicable to all data processors. Specifically, it employs (1) a novel design and method for tracking instructions to monitor and recover processor resources and state; (2) a novel design and method for aggressively scheduling long latency instructions such as load/store instructions; (3) a novel design and method for checkpointing machine state; and (4) a novel design and method for restoring machine state after detection of an exception or misprediction.

An outline of the Description of Specific Embodiments Section of this Specification is provided here for convenient reference. The topical headers in this Specification are provided for convenient reference only, and are not to be interpreted as limiting the applicability of the disclosure provided in that section to any particular aspect or embodiment of the invention.
**I. CPU OPERATION OVERVIEW**
**II. TRACKING INSTRUCTIONS**
   A. Instruction Fetch
   B. Instruction Issue
      1. Instruction Issue Overview
      2. Instruction Serial Number Allocation and instruction Status Storage
         a. Instruction Issue-Commit-Reclaim Unit (ICRU)
         b. Instruction Issue Related Pointers and Pointer Maintenance During Issue Stage
      3. Register Renaming
      4. Dispatch to Reservation Stations
   C. Instruction Execution and Completion
   D. PSU Participation in the Instruction Execution Stage
   E. Instruction Commitment
   F. Instruction Retirement and Resource Recovery
      1. Updates to RRF and Rename Maps at Instruction Commitment and Retirement
      2. Reading RRF at Instruction Retirement
      3. Precise State Maintenance Using Pointers
**III. AGGRESSIVE LONG LATENCY (LOAD/STORE) INSTRUCTION SCHEDULING**
   A. Memory Instruction Status information Storage
   B. NMCSN and PBSN Pointers for Tracking and Scheduling Long-Latency information
   C. Advancing NMCSN
   D. Load-Store Unit (LSU) within Data Flow Block
      1. Identifying In-Range Memory Referencing (long Latency) Instructions
      2. Enhancement to the Basic Structure and Method For Aggressive Long Latency (Load/Store) instruction Scheduling
**IV. CHECKPOINTING**
   A. Structure of Checkpoint Allocation Register
   B. Checkpoint Allocation
   C. Checkpoint Retirement
   D. Checkpoint Maintenance On Machine Backup
   E. Timeout Checkpoint Enhancement
   F. Maintaining and Restoring Precise State at Any Instruction Boundary
   G. Method of Syncing Machine for Predetermined Instructions to Reduce amount of Checkpointed Data
   H. Method of Checkpointing Register Rename Map to reduce amount of Checkpointed Data
**V. RECOVERY FROM MISPREDICTS AND EXCEPTIONS**
   A. Misprediction Detection with Watchpoint for Simultaneous Plural Unresolved Branch /Jump-and-Link Instruction Evaluation
      1. Activation of Watchpoint Elements
      2. Watchpoint Grabbing of CC Data Directly from Data Forward Busses
      3. Examples of Watchpoint Operation
      4. Evaluation of Branch Instructions
      5. Evaluation of JUMP-LINK (JMPL) Instructions
   B. Exception Detection
      1. Detecting Issue Traps
      2. Detecting Execution Traps
   C. Recovery by Backtracking the Processor to an Earlier State
      1. Processor Backup to a Checkpoint Boundary
      2. Mispredicted Instruction, RED Mode, and Execution Trap Initiated Backup
      3. Processor Backstep to Any Instruction Boundary
   D. Priority Logic and State Machine Operation During Exception & Misprediction Recovery
   E. Handling of Traps with Trap Stack

### I. CPU OPERATION OVERVIEW

CPU 51 fetches instructions from a level one (L1) instruction cache 52 and stores data in and retrieves data from a level one (L1) data cache 53. The L1 instruction and data caches may be physically positioned on the same chip/substrate as the CPU 51 or may be assembled on a different chip/substrate.

The CPU also interacts with a memory management control unit (MMU) 54 to determine the overall status of the data processor 50. Specifically, the MMU retrieves instructions from the external memory 56, stores data in and retrieves data from the external memory 56, receives data from and outputs data to the external I/O devices 57, provides diagnostic information to and receives diagnostic information from the external diagnostic processor 58, the CPU 51, and the caches 52 and 53, performs data address translations, and stores and tracks memory status information.

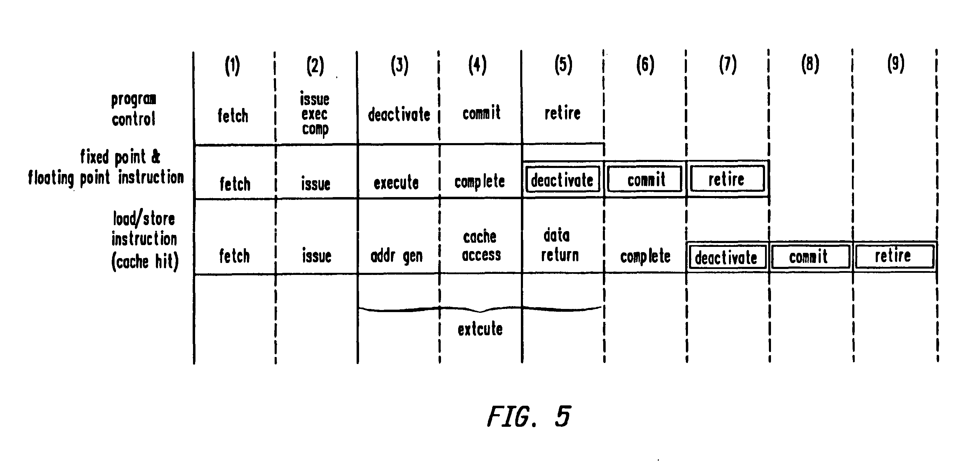

FIG. 5 shows the stages (and associated machine cycles) of the novel instruction pipeline of the CPU 51 for some typical instruction types, including predicted program control instructions, fixed and floating point instructions, and load/store instructions. To implement this pipeline, the CPU 51 includes a branch block (BRB) 59, an issue block (ISB) 61, and a data flow block (DFB) 62, as shown in FIG. 4.

Referring to FIGs. 4 and 5, the BRB 59 fetches instructions during the fetch stage and provides these instructions to the ISB 61. The BRB 59 makes target address predictions and branch taken or not taken predictions for various types of program control instructions. Thus, it is capable of speculatively fetching instructions during the fetch stage.

The ISB 61 issues the fetched instructions in predicted program counter (PC) order during the issue stage because the instructions may have been speculatively fetched. It also forms checkpoints of the machine state of the CPU 51 during the issue stage for instructions that fall at predefined intervals and for predefined types of issued instructions including program control instructions for which predictions were made by the BRB 59.

The BRB 59 executes and completes nop and predicted program control instructions in the same stage as which they are issued by the ISB 61. However, the DFB 62 executes and completes issued fixed point and floating point instructions as soon as the resources they require become available. Moreover, the DFB 62 aggressively schedules issued load/store instructions for execution when the resources they require are available and in such way that when they are executed and completed they do not have to be undone in the case of an exception (e.g., issue trap, execution trap, or interrupt) or program control misprediction. Thus, although some fixed point, floating point, and load/store instructions may have an earlier issue stage than others, they will have later execute and complete stages since the resources they require may not have become available yet. Moreover, they may have been speculatively executed and completed since they may have been speculatively fetched by the BRB 59 based on an earlier program control prediction by the BRB 59. In other words, instructions issued to the DFB 62 may be executed and completed out of predicted PC order.

When an instruction completes without an error occurring (e.g., issue trap, execution trap, or mispredict), it is then deactivated by the ISB 61 in the deactivate stage. Since instructions may complete out of predicted PC order, they may also be deactivated out of predicted PC order.

Deactivated instructions are then committed by the ISB 61 in actual PC order during the commit stage. This is true because a deactivated instruction may not be committed unless all preceding issued instructions were committed. As a result, once an instruction is committed, it may not be undone in the case of an exception or misprediction. This means that the actual PC order up to this point is correct and that the instruction has been committed in the actual PC order. Moreover, when an instruction for which a checkpoint was formed is committed, then the preceding checkpoint can be retired.

When an instruction is committed, it is then retired by the ISB 61 in actual PC order in the retire stage. After an instruction is retired, the resources allocated to it are reclaimed and may be re-allocated to other instructions when they are issued.

The ISB 61 handles recovery from an exception or program control misprediction that occurs at some point during the pipeline. Thus, if a program control misprediction occurs, then the ISB 61 backs up the CPU 51 to the checkpoint formed when the faulting program control instruction was issued. Similarly, if an execution trap occurs, then the ISB 61 first backs up the CPU 51 to the earliest checkpoint formed after the faulting instruction was issued, if such a checkpoint has been formed, and/or backsteps the CPU 51 to the faulting instruction. In backing up to a checkpoint and/or backstepping, the CPU 51 is returned to the correct machine state that existed just prior to the issuance and execution of the faulting instruction.

If the ISB 61 has backed up to a faulting instruction that caused a program control misprediction, then the BRB 59 begins fetching instructions with the correct program counter value and the correct machine state. But, if the ISB 61 has backed up and/or backstepped to an instruction that caused an execution trap, it provides the BRB 59 with the target program counter value for the appropriate trap handling routine. The trap handling routine then handles the trap and returns the program counter value of the faulting instruction or the next program counter value to the BRB 59 for fetching the next instruction. The program counter of the faulting instruction is returned if the trap handling routine instructs the CPU 51 to fetch the faulting instruction and retry issuing and executing it. But, the next program counter value is returned if the trap handling routine instructs the CPU 51 to fetch the next instructions after the faulting instruction so as to skip issuing and executing the faulting instruction.

### II. TRACKING INSTRUCTIONS

As was alluded to earlier, the CPU 51 employs a novel design and method for tracking instructions in the instruction pipeline of the CPU 51. In order to implement this design and method, the pipeline includes the fetch, issue, execute, complete, deactivate, commit, and retire stages shown in FIG. 5 and discussed briefly earlier.

### A. Instruction Fetch

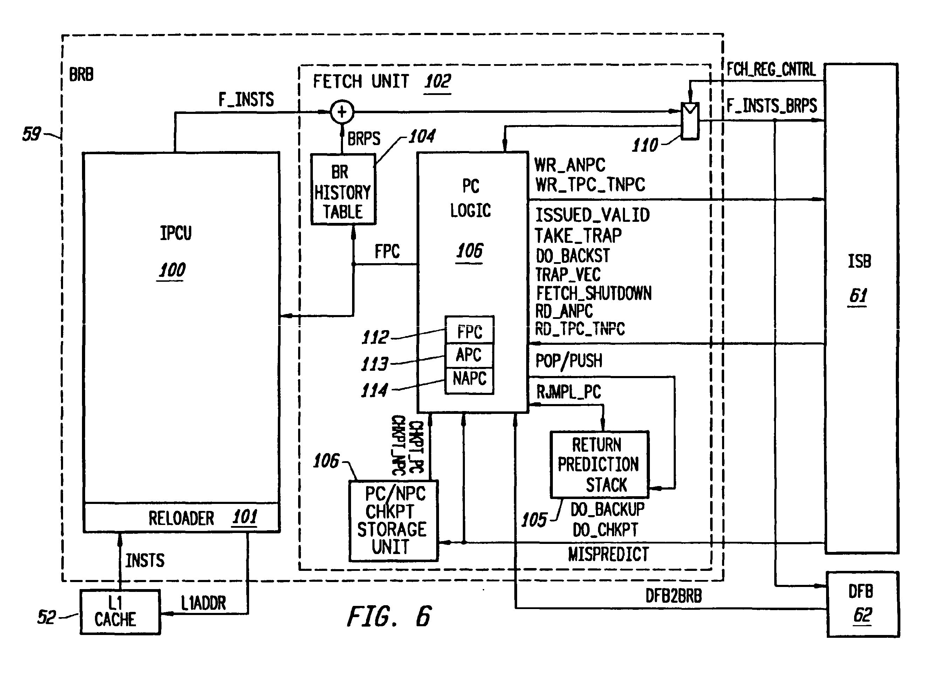

Referring again to FIG. 4, the BRB 59 fetches instructions during the fetch stage and provides them to the ISB 61. As shown in FIG. 6, the BRB 59 includes an instruction prefetch and cache unit (IPCU) 100 and a fetch unit 102.

The IPCU 100 can retrieve four instructions (INSTs) from the level one (L1) instruction cache 52 at a time. The retrieved instructions are recoded by the instruction recoder 101 of the IPCU 100 to a format more suitable for use by the BRB 59, ISB 61, and DFB 62. In alternative embodiments, the IPCU 100 could be implemented to retrieve more or less than four instructions at a time.

The fetch unit 102 includes program counter (PC) logic 106 to compute a fetch program counter (FPC) value, an architectural program counter (APC) value, and a next architectural program counter (NAPC) value. The FPC, APC, and NAPC values computed each machine cycle are respectively stored in the FPC, APC, and NAPC registers 112-114 of the PC logic. The current FPC value in the FPC register points to the instructions being fetched in the current machine cycle while the current APC and NAPC values in the APC and NAPC registers 113 and 114 point to the first and next instructions which are available to be issued by the ISB in the current machine cycle and which were fetched in a previous machine cycle.

In response to the FPC value, four instructions (F_INSTs) at a time are fetched by the IPCU 100. In alternative embodiments, it could be implemented to fetch more or less than four instructions at a time.

For each FPC value, the branch history table 104 contains a branch prediction field (BRP) for each instruction fetched with the FPC value. Thus, each of the BRP fields corresponds to one of the instructions fetched with that FPC value. If any of the fetched instructions are conditional branch instructions, such as the SPARC-V9 BPcc, Bicc, BPr, FBfcc, and FBPfcc instructions, then their corresponding BRP fields identify whether the branch should be predicted taken or not taken in the subsequent issue, execute, and complete stage of the branch instruction. The branch history table 104 outputs the BRP fields for the fetched instructions in response to the FPC value. The BRP fields are then appended to the corresponding fetched instructions (F_INSTs) by the fetch unit 102 to provide composite instructions which are received by the fetch rotation register 110.

The fetch register has four latches for holding four instructions at a time. The latches define an issue window with four slots (0-3) containing, in predicted PC order, the next four instructions that can be issued by the ISU 200. However, some of the instructions held by the fetch register during the previous machine may have not been issued by the ISU 200 because of issue constraints such as those described shortly. To make sure that fetched instructions will be issued in predicted PC order, the ISU 200 generates fetch register control (FCH_REG_CNTRL) signals which control the fetch register to place the instructions that weren't issued in the last machine cycle in the appropriate latches so that they are in predicted PC order in the issue window and can therefore be issued in predicted PC order by the ISU 200. Moreover, in response to the FCH_REG_CNTRL signals, the fetch register places in the remaining latches those of the just fetched instructions that come next in predicted PC order.

In alternative embodiments, the fetch register could be implemented to store more or less than four instructions at a time. Moreover, although the exemplary CPU 51 has been described with one fetch register located in the fetch unit 102, a fetch register of the type just described could be used at each block in the CPU that performs decoding. And, the fetch registers could be placed in these blocks so that initial decoding takes place during the fetch cycle prior to the decoded instructions being stored in the fetch registers with the remainder of the decoding taking in the issue stage.

### B. Instruction Issue

### 1. Instruction Issue Overview

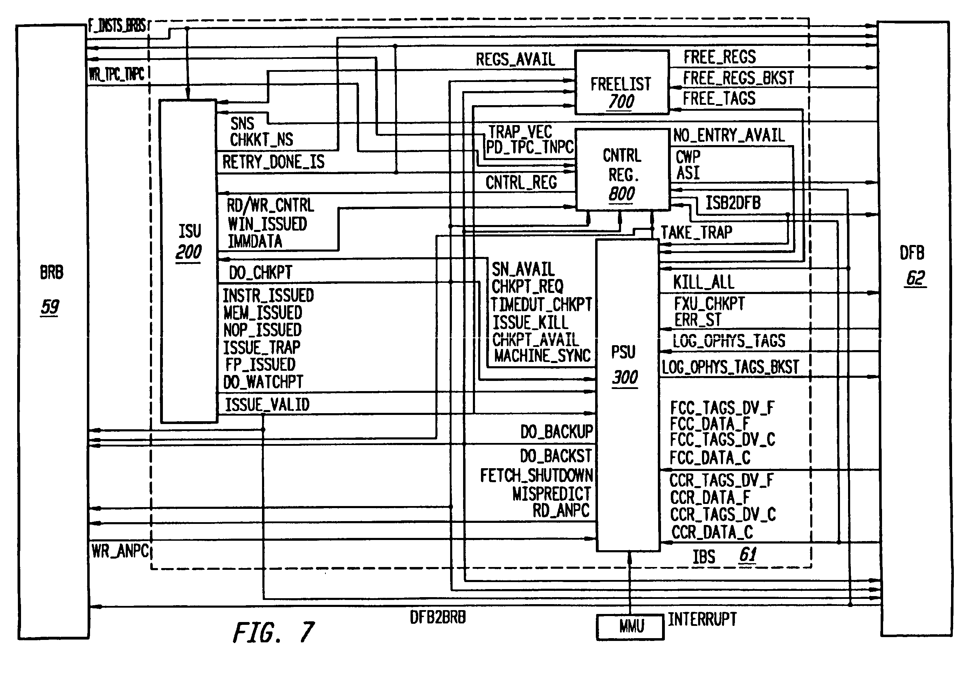

The ISB 61 is responsible for issuing fetched instructions during each issue stage. As shown in FIG. 7, the ISB 61 includes an issue unit (ISU) 200, a precise state unit (PSU) 300, a freelist unit 700, and a control register file 800. During each issue stage, the ISU 200 receives four instructions (F_INSTs_BRPs) at a time from the fetch register 110 of the BRB 59. In response, it decodes them to determine how many of them to issue based on various issue constraints, such as those described next.

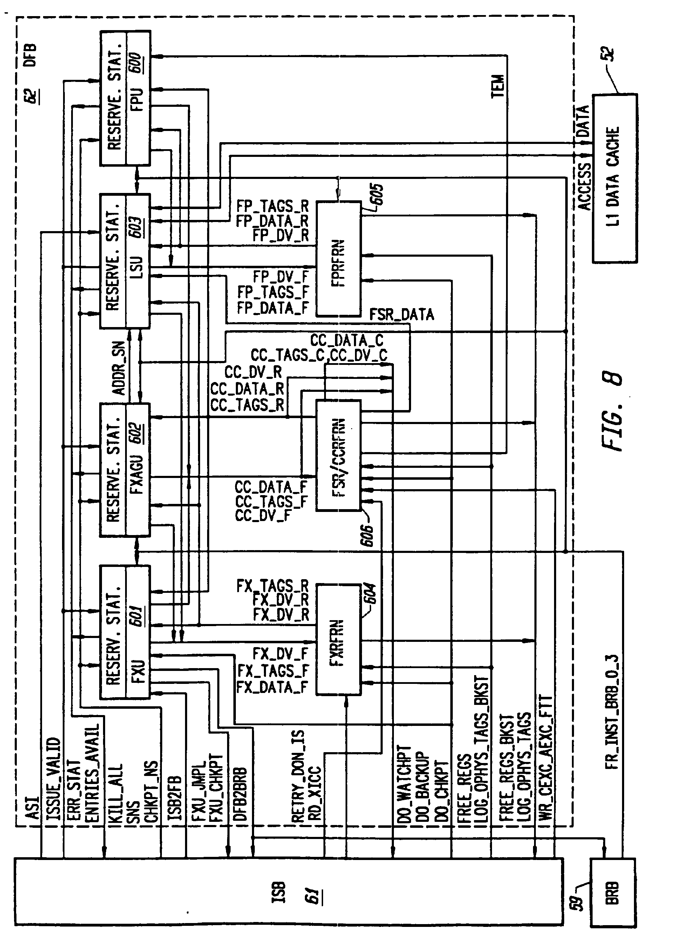

Since the fetch register 110 provides four instructions at a time to the ISU 200 during each issue stage, the ISU 200 can issue up to four instructions during each issue stage. But, it can only issue the four instructions in the issue window of each issue stage in predicted PC order. Therefore, if any other issue constraints require that one of the instructions in the current issue window cannot be issued, then only those of the instructions in the issue window slots prior to this instruction can be issued during the current issue stage. Since, in alternative embodiments, the fetch register 110 may be constructed to provide to the ISU 200 more or less than four instructions per issue stage, the ISU 200 may be constructed to issue up to more or less than four instructions per issue stage. Referring to FIG. 8, the FPU 600, FXU 601, FXAGU 602, and LSU 603 have reservation stations or queues for storing instruction data dispatched to them for issued instructions. However, during the issue stage, some of the reservation stations may not have enough storage elements or entries available to store dispatched instruction data. Thus, the FPU 600, FXU 601, FXAGU 602, and LSU 603 output ENTRIES_AVAIL signals that respectively indicate how many entries are available in the reservation stations of the FPU 600, FXU 601, FXAGU 602, and LSU 603 to receive dispatched instruction data. As a result, the ISU 200 issues floating point, fixed point, and load store instructions based on how many entries are available as indicated by the ENTRIES_AVAIL signals.

Moreover, in the exemplary CPU 51, the FXU 601 is the only execution unit in the DFB 62 that executes program control, multiply/divide, and control register read/write instructions that involve fixed point data computations. Thus, in this case, the ISU 200 issues these kinds of instructions for execution by the FXU 601. In alternative embodiments, the FXAGU 602 may also be configured to execute program control, multiply/divide, and control register read/write instructions that involve fixed point data. In this case, the ISU 200 would also issue these kinds of instructions for execution by the FXAGU 602. Moreover, each of the execution units 600-603 may comprise one or more functional units, with each functional unit capable of executing or performing an issued instruction. Thus, the number of instructions that can be issued depends on the number of functional units within each execution unit.

Referring again to FIG. 7, the PSU 300 may also impose issue constraints on the issuing of instructions by the ISU 200. The PSU 300 can output an ISSUE_KILL signal that identifies which, if any, of the instructions received from the fetch register 110 should not be issued during the current issue stage. As will be explained in greater detail later, the ISSUE_KILL signal is asserted when the PSU 300 is backing up or backstepping to a faulting instruction after an exception has been detected or during the execution, completion, deactivation, and retirement of a syncing instruction which is described next.

For particular types of instructions, the ISU 200 makes certain that the CPU 51 is synced (synchronized) prior to issuing one of these syncing (synchronizing) instructions. The CPU 51 is synced for a particular instruction when all of the instructions preceding it have been issued, executed, completed, deactivated, and retired. Thus, when the ISU 200 determines that one of the instructions received from the fetch register 110 is a syncing instruction, it waits until it has issued the instructions that are in the issue window slots ahead of it and until it receives a MACHINE_SYNC signal from the PSU 300 indicating that the CPU 51 has been synced. When this occurs, the instruction is in the slot of the issue window for the instruction with the earliest PC value (i.e., slot 0) and the ISU 200 will only issue it. Although the exemplary CPU 51 implements the previously described method of syncing machine state for particular instruction types, an alternative technique would allow issue of syncing instructions after commitment of the previous instruction since a committed instruction is guaranteed to be non-speculative.

The ISU 200 also detects issue traps, such as those described in the SPARC-V9 Architecture Manual, which effect issuing of instructions. The ISU 200 receives control register (CNTRL_REG) fields from the control register file 800 and decodes the instructions (F_INSTs_BRPs) received from the fetch register 110 to detect whether certain types of issue traps have occurred during an issue stage. In an embodiment based on the SPARC-V9 architecture, this is done in accordance with the SPARC-V Architecture Manual. Moreover, other types of issue traps do not require register control and are taken and detected based on the instruction opcode decoded by the ISU 200.

Only the issue trap caused by the instruction in the earliest issue window slot will be taken. Therefore, when one or more issue traps are detected, only the instructions in the issue window slots prior to the slot of the issue trap causing instruction in the earliest slot can be issued by the ISU 200. Moreover, for issue traps that occur often, the CPU 51 will be synced in the manner described earlier so that the issue trap is not taken speculatively. In alternative embodiment, the CPU 51 could be configured to allow the issue traps to only occur in slot 0 so as to reduce and simplify logic.

During each issue stage, the ISU 200 assigns (allocates) a serial number to each instruction that is issued and dispatches these serial numbers (SNs) to the DFB 62. As will be described in greater detail later, the PSU 300 keeps track of the issued instructions using the allocated serial numbers. Moreover, in the exemplary CPU 51, it can only keep track of a predetermined number of issued but not yet retired instructions at any one time. But, as issued instructions are retired, their serial numbers become available. Thus, the PSU 300 provides the ISU 200 with SN_AVAIL signals that include a signal to indicate how many serial numbers are available for the current issue stage and signals to contain these available serial numbers. If, during the current issue stage, the SN_AVAIL signals indicate that the number of serial numbers currently available are less than the number of instructions that can be issued, then only those instructions in the earliest slots for which serial numbers can be allocated are actually issued.

Also during the issue stage, the ISU 200 determines whether checkpoints of the machine state of the CPU 51 should be formed for any of the instructions. As will be described in greater detail later, checkpoints will be formed for certain types of instructions and at predetermined issue stage intervals. Thus, when the ISU 200 determines that any of the instructions it will issue require a checkpoint and/or the PSU 300 indicates with the TIMEOUT_CHKPT signal that a predetermined number of issue stages have occurred since the last issue stage in which a checkpoint was formed, the ISU 200 generates a DO_CHKPT signal instructing the PSU 300, control register file 800, the BRB 59, and the DFB 62 to form checkpoints of the machine state of the CPU 51.

Furthermore, the ISU 200 assigns a checkpoint number to each of the instructions that is issued and dispatches these checkpoint numbers (CHKPT_Ns) to the DFB 62. In doing so, each instruction for which a checkpoint is to be formed is assigned a new checkpoint number while the instructions for which a checkpoint is not formed are assigned the checkpoint number of the previous checkpoint. The PSU 300 keeps track of the formed checkpoints using the assigned checkpoint numbers.

As with assigned serial numbers, the PSU 300 can only keep track of a predetermined number of formed but not yet retired checkpoints at any one time. However, since checkpoint numbers become available as checkpoints are retired, the PSU 300 provides the ISU 200 with CHKPT_AVAIL signals that include a signal that indicates how many checkpoint numbers are available for the current issue stage and signals that contain the available checkpoint numbers. Thus, when the CHKPT_AVAIL signals indicate that the number of new checkpoint numbers currently available are less than the number of instructions that require a new checkpoint to be formed, only those of the instructions in the earliest issue window slots for which new checkpoint numbers can be assigned are actually issued.

Furthermore, the CPU 51 may be configured to only form a predetermined number of checkpoints per issue stage. Thus, for example, if the CPU 51 can only form one checkpoint per issue stage and there are two instructions in an issue window that require a checkpoint to be formed, the ISU 200 will only issue the instruction which is in the earliest slot during the current issue stage and will issue the other instruction in another issue stage.

As will be discussed later, the CPU 51 employs register renaming to increase processor throughput. In order to properly implement register renaming, the ISU 200 receives REGS_AVAIL signals from the register renaming freelist unit (FREELIST). Referring to FIG. 8, these signals include signals that indicate how many of the physical fixed point registers of the fixed point register file and rename unit (FXRFRN) 604 are available for renaming, how many of the floating point registers of the floating point register file and rename unit (FPRFRN) 605 are available for renaming, how many of the physical integer and floating point condition code registers in the floating point status and condition code register file and rename unit (FSR/CCRFRN) 606 are available for renaming. Referring back to FIG. 7, if any of the instructions received from the fetch register 110 require register renaming, and physical registers are required for renaming but are not available as indicated by the REGS_AVAIL signals, then the ISU 200 cannot issue these instructions.

The foregoing issue constraints have been described with respect to the exemplary CPU 51 in order to demonstrate the concept of issue determination. Furthermore, implementations may exist which involve different and more or less issue constraints than those just described but do not depart from the basic concept of issue determination as described herein. Thus, those skilled in the art will recognize that issue constraints are implementation dependant and that the invention described herein is not to be limited by the issue constraints just described.

### 2. Instruction Serial Number Allocation and Instruction Status Storage

The exemplary CPU 51 assigns a unique identification tag that is associated with an instruction from the time the instruction is issued until the instruction completes execution and is ultimately retired. Sequential serial numbers are conveniently used as the instruction identification tags. The serial numbers are used during each stage and by virtually every block during exception-free processing and during CPU 51 recovery when exceptions or mispredictions occur. Instruction status information is stored in CPU 51 and continually updated in response to changes in status, such as execution completion signals, execution error signals, and branch instruction mispredict signals, and the like. The Precise State Unit (PSU) 300 within ISB 61 is responsible for allocating the instruction serial number tags and for tracking instruction status in response to signals received from other CPU 51 units, particularly from DFB 62.

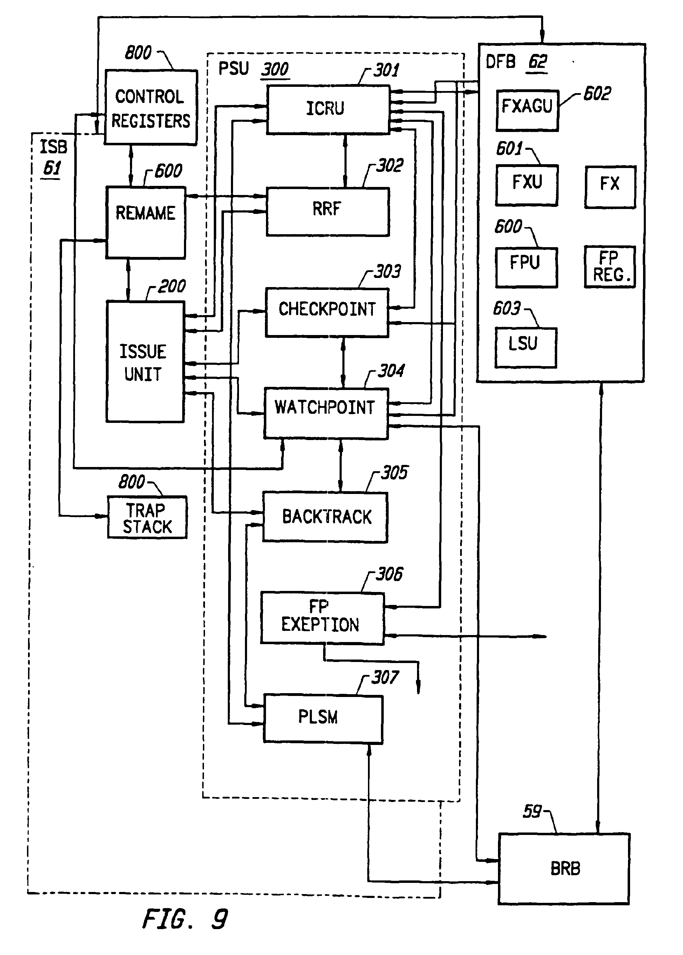

In reference to FIG. 9, Precise State Unit (PSU) 300 is a functionally within ISB 61 and is responsible for (1) tracking the issue, execution, completion, and retirement status of instructions in CPU 51; (2) detecting and initiating branch mispredict recovery; (3) tracking the availability of certain machine resources including instruction serial numbers, checkpoints, and watchpoints; and (4) general exception handling and control. Several units within PSU 300, as shown in FIG. 9 and as described in greater detail hereinafter, are implemented to accomplish this functionality.

PSU 300 includes an Issue/Commit/Retire Unit (ICRU) 301 which maintains activity status information for all issued instructions until they are retired. ICRU 301 supplies ISU 200 with a signal (SN_AVAIL) that identifies up to four instruction serial numbers (SN's) for use by ISU 200 in the next instruction issue cycle. At the time ISU issues instructions, ISU 200 informs ICRU which of the up to four serial numbers provided (SN_AVAIL) to ISU in the previous cycle were validly issued by ISU in the form of the ISSUE_VALID signal that, as indicated earlier, identifies which serial number was allocated and which serial number was associated with each instruction. Recall that issue constraints may restrict ISU's ability to issue all of the instructions in the instruction window. ICRU 301 stores and maintains status information and address pointers to the status information to track instruction issue, execution, completion, deactivation, commitment, and retirement phase status for every instruction that was validly issued by ISU 200, independent of the type of instruction. ISU 200 also informs ICRU 301 with signal ISSUE_NOP which of the issued instructions are associated with nop and certain program control instructions, which allow deactivation in the same stage as which they are issued. ISSUE_NOP is not limited to the specific "nop" instruction which may be inserted into the instruction stream, such as for example, to introduce a pause or delay. When aggressive scheduling of long latency instructions such as load/store and other instructions referencing memory external to the CPU 51, ISU 200 also informs ICRU 301 in the form of an ISSUE-MEM signal that identifies which of the instructions in slot0-3 are long latency. (Aggressive scheduling of long latency instructions is separately described as an enhancement to the basic inventive structure and method.)

### a. Issue/Commit/Reclaim Unit (ICRU)

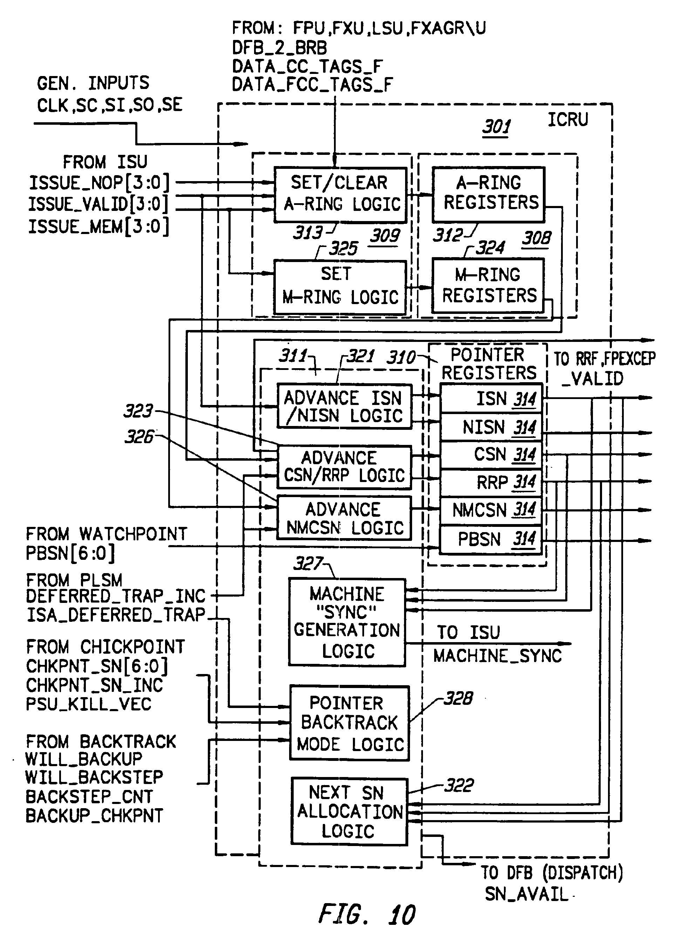

Issue/Commit/Reclaim Unit (ICRU) 301 is functionally within PSU 300 and assigns instruction tags, such as the n-bit sequential serial numbers, and maintains activity status information for all issued instructions by defining and maintaining a data storage area for the instruction status information in memory internal to CPU 51. FIG. 10 shows a functional block diagram of components of ICRU 301 and input and output signals associated with ICRU operation. ICRU 301 is functionally organized into four areas. Instruction Status Information Data Structure 308 is responsible for storing instruction status information and updating the status in response to signals Data Structure Control Logic 309 which itself is responsive to signals from other CPU 51 units, particularly DFB 62. Pointer Data Structure 310 includes data storage areas for separately storing a plurality of a serial numbers that serve as status pointers to various instruction stage milestones in the CPU 51, such as issued, completed, retired, and the like. These serial number pointers are described in greater detail hereinafter. Pointer Control Logic 311 is responsible for evaluating the status information stored in Data Structure 308 in conjunction with data received from other CPU 51 units in order to update the serial number pointer to reflect then current CPU 51 state. Pointer values are provided as global outputs from ICRU 301 and PSU 300 to other units in the CPU 51.

Instruction Status Information Data Structure 308 comprises Active Instruction Ring Registers (A-ring) 312 and may optionally comprise Memory Instruction Ring Registers (M-ring) 324. Memory Instruction Ring registers are described elsewhere in this specification in connection with Aggressive Load/Store instruction scheduling. Data Structure Control Logic 309 comprises A-Ring Set/Clear Logic 313 and may optionally comprise M-Ring Set/Clear Logic 325. Pointer Control Logic 311 comprises ISN/NISN Initialization and Advance Logic 321, Next Instruction Serial Number Allocation Logic 322, and CSN/RRP Advance Logic 323, and may optionally comprise NMCSN Advance Logic 326, Machine Sync Generation Logic 327, and Backtrack Mode Pointer Adjustment Logic 328. Optional elements pertain to enhancements of the basic inventive structure and method and are described more fully hereinafter.

Operation of Issue/Commit/Reclaim Unit during Instruction issue stage is now described in reference to FIG.10. The serial numbers (SN_AVAIL) sent to ISU 200 for allocation to issued instructions are selected by serial number allocation logic in ICRU based on pointers values within Pointer Data Structure 310. When the CPU 51 is initialized (such as on power-up), pointers within Pointer Data Structure 310 may also be initialized so that ICRU initially allocates the first serial numbers to ISU 200 (e.g. SN's 0-3) for instructions in the issue window.

ISU 200 sends ISSUE_VALID signal to Data Structure Control Logic 309 to inform ICRU which of the serial numbers provided in the previous cycle (e.g. which of the four SNs) where validly issued by ISU 200 and for which instruction slot. Set/Clear A-Ring Control Logic 313 uses this information and the values of pointers within Pointer Register 310 to write instruction status information into A-Ring 312. In one embodiment of the CPU 51, ISSUE_VALID is a four-bit vector that informs ICRU which of the instruction serial numbers (SN_AVAIL) were actually used by ISU 200 by identifying instruction slot for which an instruction was actually issued. ICRU can then determine which SN's were used based on both SN_AVAIL and ISSUE_VALID.

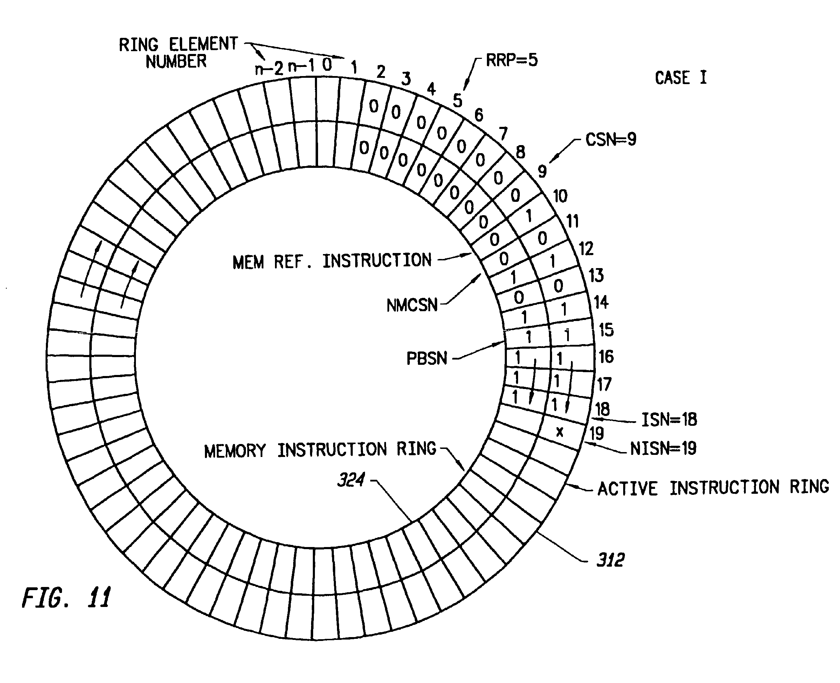

An embodiment of Active Instruction Ring 312 is now described with reference to a diagrammatic representation in FIG. 11. The data structure in FIG.11 is exemplary and those workers having ordinary skill in the art, in light of the teaching of this patent, will understand that a variety of data structures may be used to implant this Active instruction Status Register. FIG. 11 shows Active Instruction Ring (A-ring) 312 which is implemented as a 64-bit data structure. (Memory instruction Ring (M-Ring) 324 is also shown in diagrammatic form and will be described elsewhere in this specification with respect to an enhancement for aggressively scheduling long latency instructions.) Each of the sixty-four addressable locations in A-Ring 312 corresponds to an instruction serial number in the CPU 51. The set ("1") or cleared ("0") state of each Active-bit (A-bit) indicates whether the instruction is active ("1") or inactive ("0") in the CPU. Basically, instruction is actuated where it is issued and deactivated where it completes execution without error and was not mispredicted. For some instructions that are issued and effectively complete execution in a single machine cycle, the A-bit is cleared at instruction issue. The number of addressable locations in A-ring 312 limits the number of instructions that may be concurrently outstanding in the CPU.

In the exemplary processor, A-ring 312 is implemented as a circular, ring, or wrap-around data structure where pointers are moved along the data structure using "modulo-A-ring register length" type arithmetic (here, modulo-64 type arithmetic). That is, as a pointer is incrementally moved from a first data storage location (addressable bit 0) through a series of intermediate storage locations (e.g. locations 15, 16, ...) to the last data storage location (addressable bit 63), it will then return to the first location (addressable bit 0). Those of ordinary skilled in the art will, in light of the teachings of the present invention, realize that a circular data structure is advantageous . Furthermore, although the exemplary A-ring has sixty-four single-bit addressable locations to maintain the required status information, multi-bit addressable locations may alternatively be provided for storing these and additional status indicators. For example, in one embodiment, a 64-bit register with arbitrary rotation is used, and in a second embodiment eight 8-bit registers are used to provide the sixty-four A-ring 312 A-bits. A simple decoding circuit enables writing (set and dear) of the bits as described hereinafter.

"Instruction Issue" by the ISU 200 results in the allocation of an instruction serial number to the instruction. The number of allocatable serial numbers is limited by the number of addressable locations (e.g. bit positions) in A-ring 312. Each addressable A-ring location therefore corresponds to a unique serial number. For example, for the exemplary 64-bit circular A-ring, as many as 64 instruction serial numbers may be concurrently assigned. More or fewer serial numbers may be assigned by providing more or fewer A-ring locations. If all serial numbers are assigned, further instruction issue must be stalled by ISU 200 until serial numbers and locations on the A-ring are freed in subsequent machine cycles. ISU 200 is informed that SN are or are not available by the SN-AVAIL signal. Each addressable location in A-ring 312 corresponds to one of the available serial numbers so that an entry in the A-ring is made for each newly issued instruction by advancement of an Issued Serial Number Pointer (ISN) 314 by one for each instruction issued. Since multiple instructions may be issued during a single machine cycle, more than one A-bit may be set during each cycle and therefore ISN may be advanced by more than one A-ring location each cycle.

"Instruction Dispatch" by ISU 200 is the activation and sending of an instruction (having an assigned serial number) for execution to DFB 62. All dispatched instructions are also issued instructions but not all issued instructions are dispatched. All "dispatched" instructions have the bit corresponding to the assigned serial number in A-RING 312 set equal to "1" to indicate the instruction is active in the machine (1=active. 0=inactive or deactivated) instructions which are issued but not dispatched correspond to known branches or nop-type instructions and for which instructions, the A-bit is cleared (or not set) at issue. These known branches and nop-type instructions do not require an execution unit to execute, and may be issued, executed, and completed in a single stage.

### b. Instruction Issue Related Pointers and Pointer Maintenance During Issue Stage

FIG. 11 also shows several pointers (ISN, NISN, CSN, RRP, NMCSN, and PBSN) that are stored in pointer storage memory area 310 and point to locations on A-Ring 312 and M-Ring 324. Each pointer is element in a pointer storage unit 210 that stores one of the A-Rings location valves 0-64. Certain combinations of pointers may point to the same A-Ring or M-Ring location but other combinations may not. For example, NISN can never equal ISN, but at machine "sync" CSN=ISN=RRP. Issued Serial Number pointer (ISN) 314 and Next Issued Serial Number pointer (NISN) 315 maintain and track instruction issue status and generally limit advantage of other pointers. Committed Serial Number pointer (CSN) 316 tracks instruction commitment which follows instruction execution, completion, and deactivation for which no pointers are specifically provided. Retire and Reclaim Pointer (RRP) 317 tracks instruction retirement and controls resource reclaiming. Two additional pointers Earliest Predicted Branch Instruction pointer (PBSN) 318 and Non-Memory Committed Serial Number pointer (NMCSN) 319 are used to schedule and track execution of predicted branch instructions and long latency instructions such as load/store instructions. ICRU 301 provides current values for each of ISN, NISN, CSN, RRP, and NMCSN to a number of other units within the CPU 51. ICRU receives a value of PBSN 318 from Watchpoint Unit 308 within PSU 300 as described hereinafter. Each of these pointers are implemented as a six-bit vector in the exemplary CPU.

Issued Serial Number pointer (ISN) 314 always points to the serial number of the last issued instruction. An instruction is considered to have been issued when one of the serial numbers supplied by ICRU has actually been allocated by ISU 200. ISN and NISN are incremented in response to ISSUE_VALID from ISU 200 which informs ICRU of the number of instructions actually issued during that cycle. As ISN and NISN are incremented, the pointers effectively advanced around A-ring 312. The maximum number of positions the ISN can advance every machine cycle is determined by the peak issue rate of the machine, but may be limited to a smaller predetermined maximum number of instructions per cycle by other software of hardware controls. For example, in the exemplary CPU advancement of ISN and NISN are limited to four instruction serial numbers (A-ring locations) per machine cycle. When the CPU is initialized ISN is initialized to 0 (zero) and when additional instructions issue ISN is advanced by the number of newly issued instructions.

Next Issued Serial Number pointer (NISN) 315 always points to ISN+1 (modulo A-ring length), so that if ISN=63, then NISN=0. Where A-ring 312 contains sixty-four entries, NISN=ISN+1 (modulo 64). This is essentially the serial number of the next instruction to be issued (all instructions are issued in predicted PC order). While it is convenient to provide a separate pointer NISN, ISN alone could be used in some embodiments since NISN is always one greater than ISN. When the CPU is initialized NISN is initialized to 1 (one) and when additional instructions issue, NISN is advanced by the number of newly issued instructions. Initialization and advancement of ISN and NISN are performed by ISN/NISN Advance Logic Unit 321 in response to ISSUE_VALID from ISU 200.

ICRU 301 provides ISU 200 with four available instruction serial numbers that may be assigned to instructions as they are issued. Determination of the proper four instruction serial numbers is made in the Next Instruction Serial Number Allocation Logic 322 within Pointer Control Logic unit 311 based on the current values of ISN 314 and NISN 315. RRP 317 may limit allocation of SNS if the CU is full, that is if all SNs have been allocated and not reclaimed. ICRU 301 informs ISU 200 of the next series of (four) serial numbers that should be assigned to the issued instructions if the serial numbers are available by sending SN-AVAIL signals to ISU 200.

In one embodiment of CPU 51, SN_AVAIL composes four seven-bit signals (SN_SLOT_0, SN_SLOT_1. SN_SLOT_2, and SN_SLOT_3) that identify the serial numbers to be assigned to the up to four instructions in slots 0-3 of the issue window. Six bits supply the serial number while the seventh bit is a serial number validity bit. If the validity bit for that serial number is not set, the instruction serial number is still active in the CPU 51 and should not be used by ISU. The validity bit may not be set if all sixty-four instructions supported by the sixty-four bit A-ring 312 are active in the CPU 51. Since ISU 200 can only issue an instruction if a serial number is available, ISU may have to wait for previously issued instructions to commit and retire before issuing additional instructions. Instruction commitment and retirement is described hereinafter.

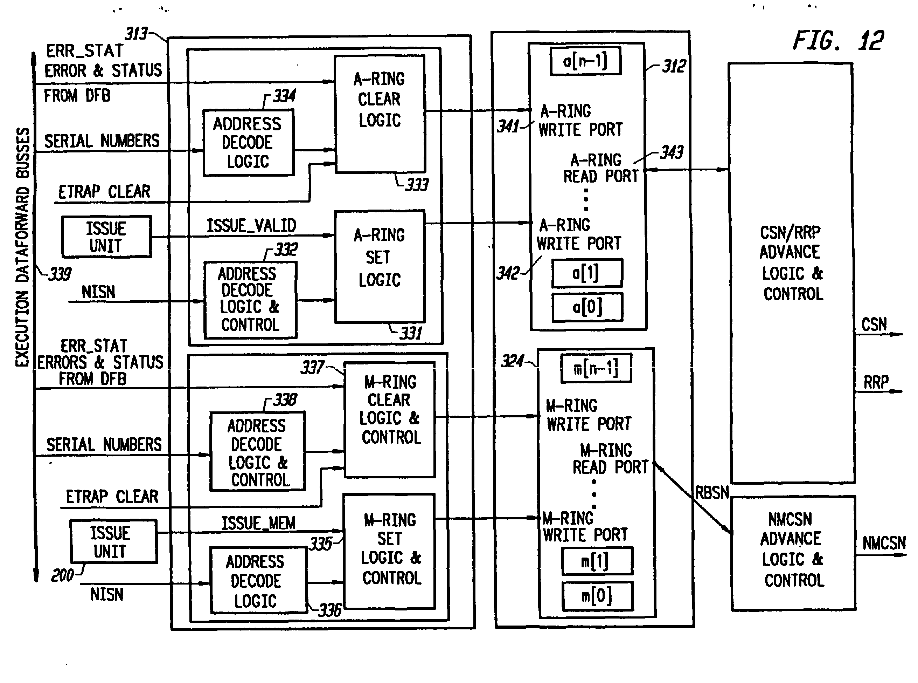

FIG. 12 shows Status Control Logic Unit 309 in greater detail including the structure of A-Ring Bit Set/Clear Logic (ASCL) 313. ASCL 313 comprises Set Logic 331 and Clear Logic 333, as well as an Address Decode Logic Units 332, 334 associated with the Set and Clear Logic Units 331, 333, respectively. Set Logic Unit 331 receives ISSUE_VALID signal from ISU 200, and the decoded NISN pointer address from Address Decode Logic Unit 332. A-ring Set Logic Unit 331 then sets A-bits corresponding to the number of instructions actually issued by ISU to "1" via A-ring write port 342. A-bits are cleared when instructions are deactivated and/or CPU reset. The number of write ports 342 is selected to support the maker of instructions that will be activated (or deactivated) each cycle. Other structures shown in FIG. 12 relating to M-RING 324 are discussed hereinafter in conjunction with aggressive scheduling of long latency instructions and with instruction commitment and retirement.

In one embodiment, ISSUE_VALID is a four-bit vector received from ISU 200 where assertion (bit set "1" or high signal level as seated) at position bit-i indicates instruction in the i-th instruction issue window slot has been issued. ICRU 301 knows which serial numbers are associated with which slot by virtue of the SN_SLOT_i signals described previously. Since instructions are issued in sequential program order, there are only five possible states for ISSUE_VALID in a four instruction issue CPU ("0000", "0001", "0011", "0111", and "1111"). ICRU also receives a "nop-type" instruction signal (ISSUE_NOP) from ISU which informs ICRU that the instruction is a nop-type instruction as described. In one embodiment of the CPU 51, ISSUE_NOP is a four-bit signal where assertion at position bit-i indicates i-th instruction in the slot is a "no-op"-class instruction. In implementing aggressive Local/Store instruction scheduling, ISSUE_MEM is a four-bit signal where assertion at position bit-i indicates i-th instruction in the slot is a memory referencing instruction.

Generally, a no-op instruction is either a control transfer instructions such as a branch, or a write ASR, write FPRS, or write PIL. The instructions "write ASI", "write FPRS" and "write PIL" are executed in the corresponding Control Register Unit 800 and not in DFB 62 and are therefore are treated as NOP-type instructions. Consequently, their corresponding ISSUE_NOP is set to '1' leading to the A-bit be set to '0'. Tcc instructions are not issued when CC is not known. Tcc instructions are issued as a NOP instruction if CC is known and false. Tcc instructions are issued with ISSUE_NOP=0 in other cases. These instructions do not require a DFB 62 execution unit to execute and generally complete in the same machine cycle as issued. When the corresponding instruction is of the "nop"-class such as a "branch" (br) instruction, ISSUE_NOP is set to "1". When ISSUE_NOP is set to "1", the corresponding A-bit is set to '0', i.e. the instruction is instantly deactivated and committable. (Instruction commitment and modification of A-bits at commitment are described hereinafter.)

The sixty-four activity bits in the A-ring indicate the activeness of the instructions coexisting in the CPU. The A-bits do not need to be initialized because they will be set and cleared every cycle before they are used. The A-bits are set according to the ISSUE_VALID, ISSUE_NOP, and NISN.

Because the branch instructions have the A-bit cleared at issue, additional steps are taken to prevent CSN 316 (see description hereinafter) from advancing past a speculatively executed branch instruction. In the exemplary embodiment, a branch condition code is stored in Watchpoint Unit 304 at the time the branch instruction is issued. Watchpoint Unit 304 monitors instruction execution and when the speculatively issued branch instruction completes, Watchpoint compares the execution result with the branch condition code required to validate the speculative issue. Condition code comparison provides a determination as to whether the speculative execution was correctly predicted. If the speculative execution was incorrect, CPU 51 recovery methods (such as backup and/or backstep) are initiated to undo the execution thereby preventing CSN from advancing past the mispredicted branch in spite of the cleared A-bit, which would otherwise preclude recovery. Special attention must be taken to initiate machine recovery fast enough to prevent instruction commitment of the incorrectly issued instruction sequence. Prior to evaluation, the pending instruction itself prevents commitment of the mispredicted instruction sequence. Watchpoints and CPU 51 recovery are described in greater detailelsewhere in this specification.

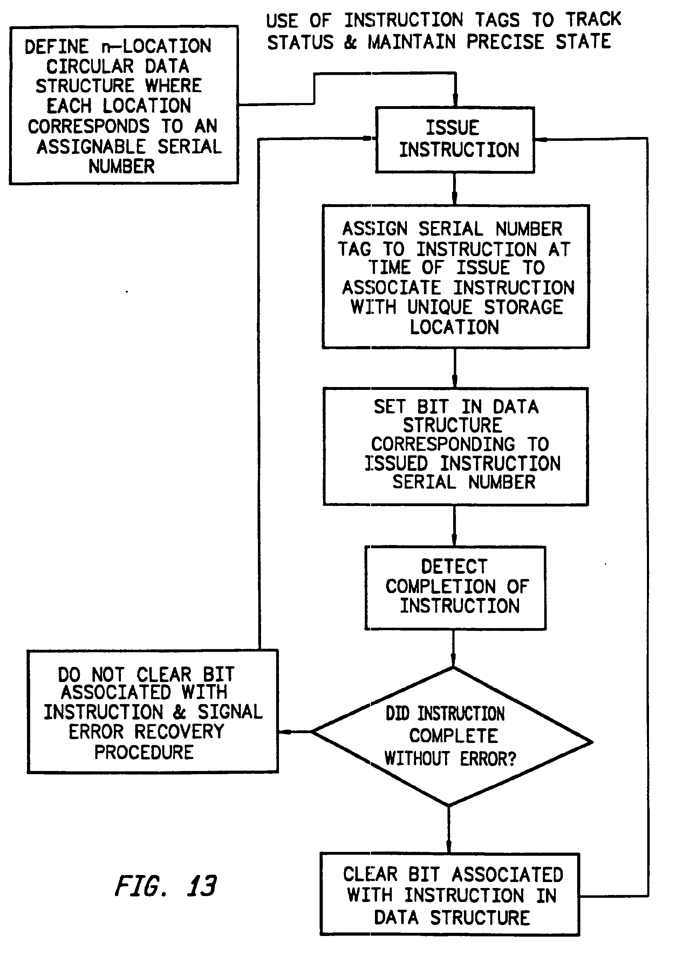

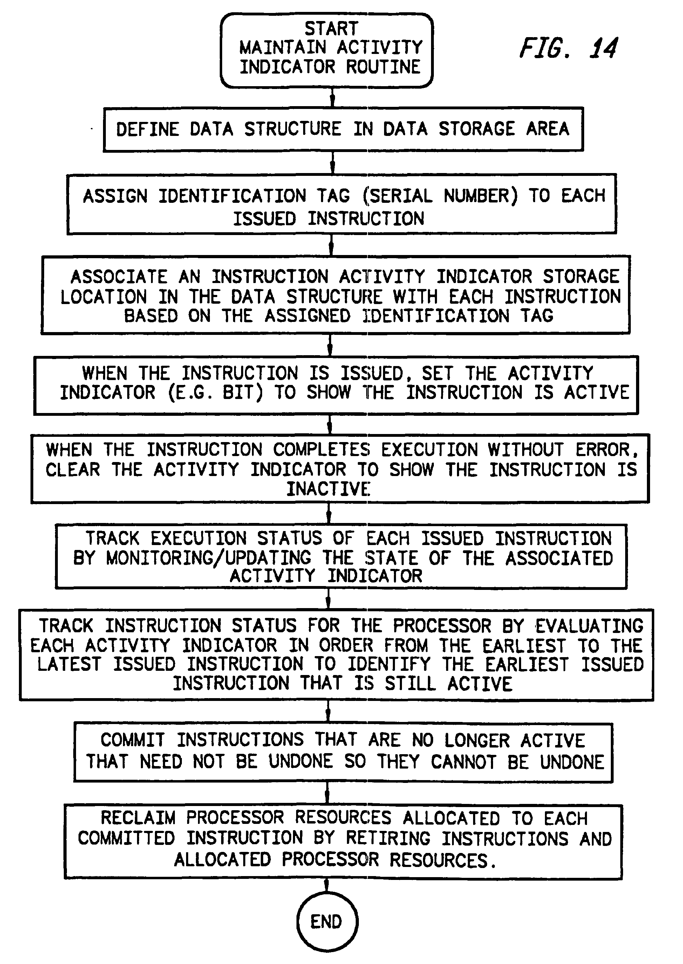

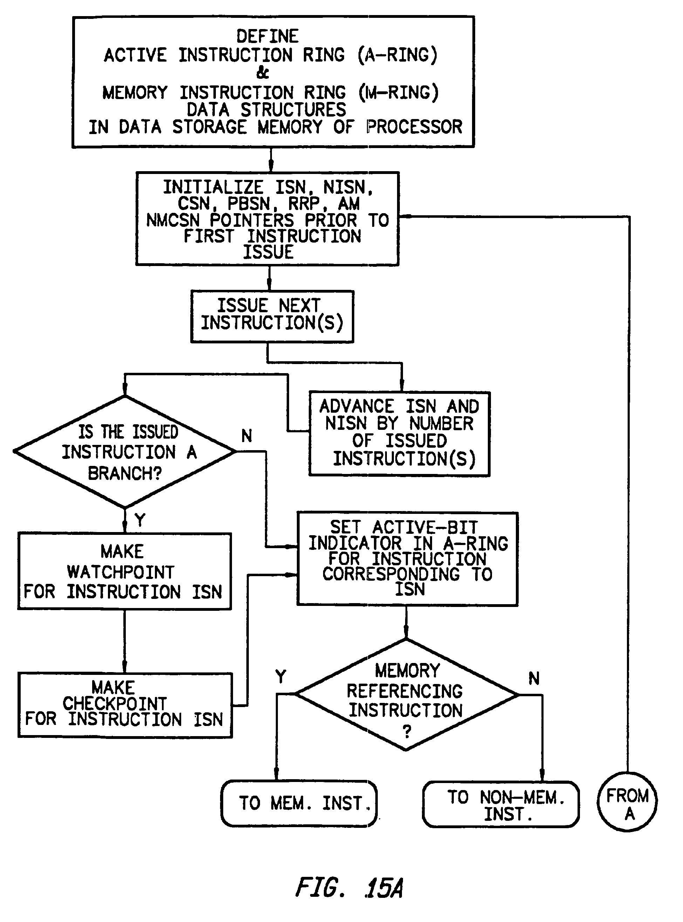

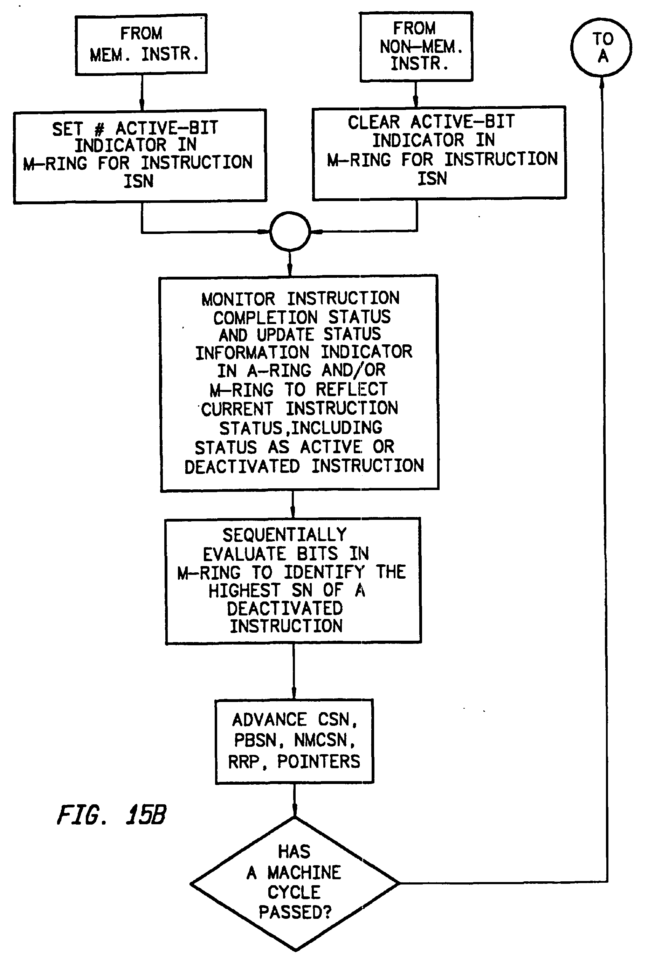

Aspects of an embodiment of the inventive method, including the use of instruction tags to track instruction status and maintain precise state are illustrated in the flow-charts of Figs 13-15. FIG. 13 is a diagrammatic flow-chart of an embodiment of the method of using instruction tags to track status and maintain precise state. FIG. 14 is a diagrammatic flow-chart of an embodiment of the inventive method for tracking instruction status to maintain precise state. FIG. 15 is a flow-chart diagram of the method for writing and maintaining status information in the Active Instruction Ring and Memory Instruction Ring according to an embodiment of the present invention.

### 3. Register Renaming

To remove some register dependencies so that more instructions can be issued per machine cycle by the ISU 200, the CPU 51 performs register renaming during the issue stage. This may be done in a similar manner to that described in U.S. Patent No. 5,355,457 issued on October 11, 1994 to Shebanow et al. and/or that described in the copending U.S. Patent Application Serial No. 08/388,364 entitled "METHOD AND APPARATUS FOR COORDINATING THE USE OF PHYSICAL REGISTERS IN A MICROPROCESSOR" referenced earlier and/or that described in M. Johnson's text Superscalar Microprocessor Design at pages 48-55.

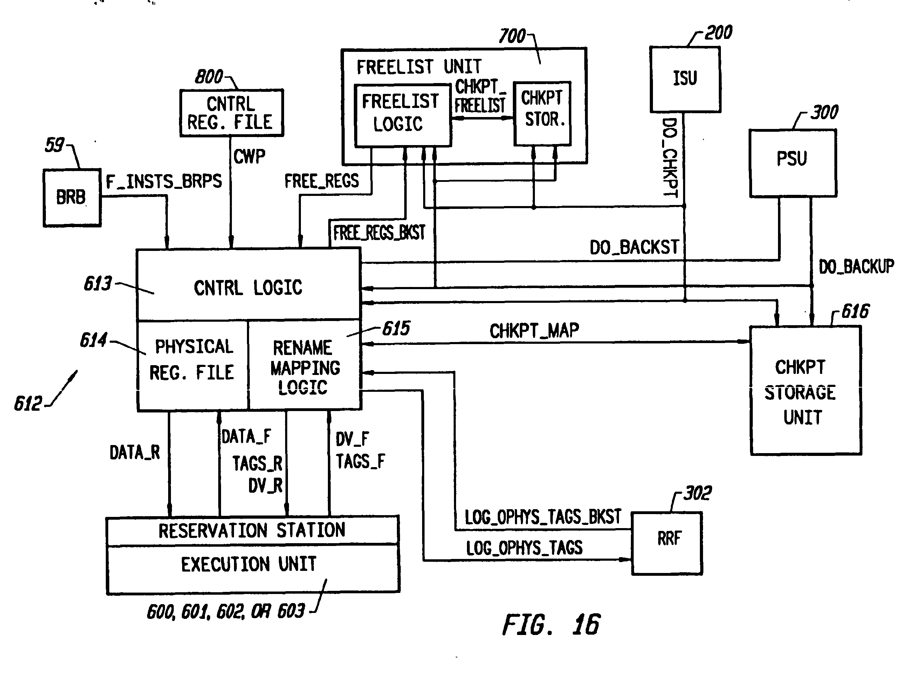

Referring to FIG. 8, to implement register renarning, the DFB 62 includes the FXRFRN 604, FPRFRN 605, and CCRFRN 610 of the FSR/CCRFRN 606. As mentioned briefly earlier, the FXRFRN 604 contains physical fixed point registers for storing fixed point data, the FPRFRN 605 contains physical floating point registers for storing floating point data, the CCRFRN 610 contains physical integer (fixed point) and floating point condition code registers (XICC and FCCs) for storing integer and floating point condition code data. The FXRFRN 604, FPRFRN 605, and CCRFRN 610 may each be configured as shown in FIG. 16.

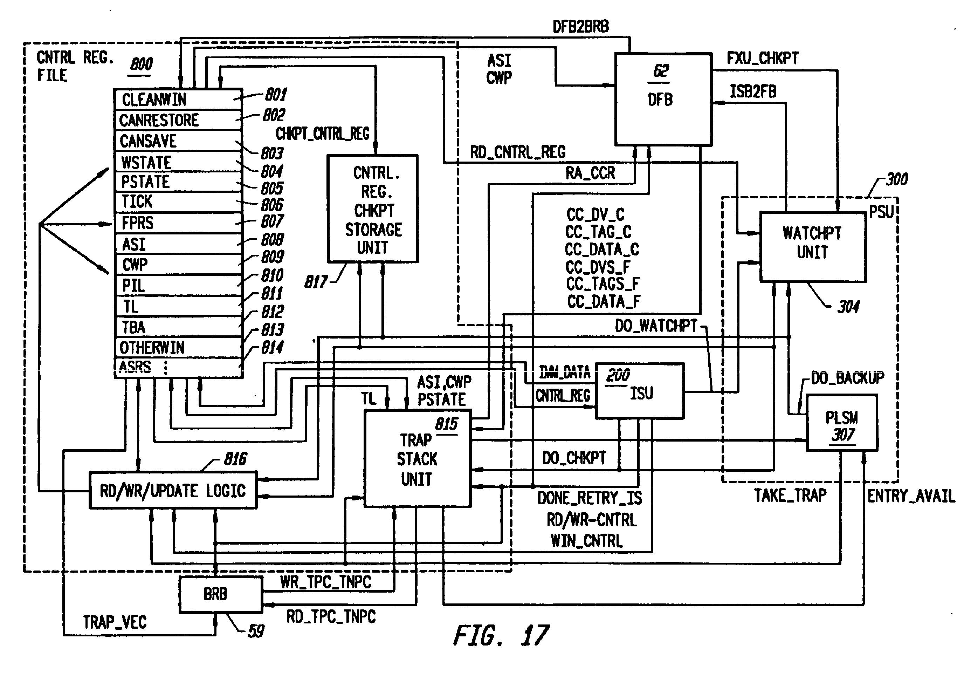

As shown in FIG. 16, the register file and rename unit (RFRN) 612 includes a physical register file 614 that includes physical registers. The RFRN also includes rename mapping logic 613 that maps logical and/or architected registers specified by an instruction to physical registers in the physical register file 614. For example, with SPARC-V9 instructions, the rename mapping logic of the FXRFRN 604 could perform a mapping of 32 architected to 80 logical to 128 physical fixed point registers, the 32 architectural or logical single and double precision floating point registers are mapped into 2 sets of 64 single precision (32-bit) renamed floating point registers (odd and even), the five architected or logical Condition Code Registers (xicc, fcc0, fcc1, fcc2, and fcc3) map to 32 renamed Condition Code Registers. The architectural to logical mapping is due to the fact that SPARC-V9 fixed point instructions specify architected registers that map to logical registers in accordance with the current window pointer (CWP) stored in the CWP register of the control register file 800 shown in FIG. 17.

The control logic 613 of the RFRN receives instructions (F_INSTs_BRPs) from the fetch register of the BRB 59 during each issue stage. In response, the control logic 613 decodes the instructions and determines which of the instructions requires physical registers as sources and/or destinations from the register file 614 of this particular RFRN.

The rename mapping logic 615 first maps each logical or architected, source register specified by the instructions to the currently mapped physical register in the register file and provides the corresponding physical register tags to the reservation stations of the appropriate execution units (FPU 600, FXU 601, FXAGU 602, or LSU 603) in the TAGS_R signals. For each physical register tag, the rename mapping logic has a data-valid (DV) bit that identifies whether the data in the mapped physical source register is available yet as a source. The DV bits are provided by the rename mapping logic 615 to the reservation stations of the appropriate execution units in the DV_R signal. Moreover, if the data is available as indicated by the DV bits, then it is provided by the mapped physical source registers in the DATA_R signals.

For each RFRN (i.e., FXRFRN 604, FPRFRN 605, and CCRFRN 610), the FREELIST unit 700 contains a list of all of the free physical registers of the register file 614 of the RFRN. Free or available registers are those that are not being currently used by instructions that have not been retired. These available physical registers are identified by the FREE_REGS signals from the FREELIST unit 700 each cycle.

Thus, after the logical or architected source registers have been mapped, the rename mapping logic 615 then maps each logical or architected destination register specified by the instructions to an available or free physical register identified by the FREE_REGS signals and sets the corresponding DV bit to indicate that the data in that register is not yet available. The rename mapping logic 615 then provides the physical register tags for the newly mapped physical destination registers and the corresponding DV bits to the reservation stations of the appropriate execution units in the TAGS_R and DV_R signals.

Moreover, the rename logic 615 provides the old logical or architected to physical register mapping to the Reclaim Format Unit (RRF) 302 of the PSU 300. It does so by sending the logical or architected register tags and the physical register tags for the previously mapped physical destination registers to the RRF 302 in the LOG_OPHYS_TAGS signals. The LOG_OPHYS_TAGS signals from each RFRN 612 include a field to indicate that these signals come from that particular RFRN.

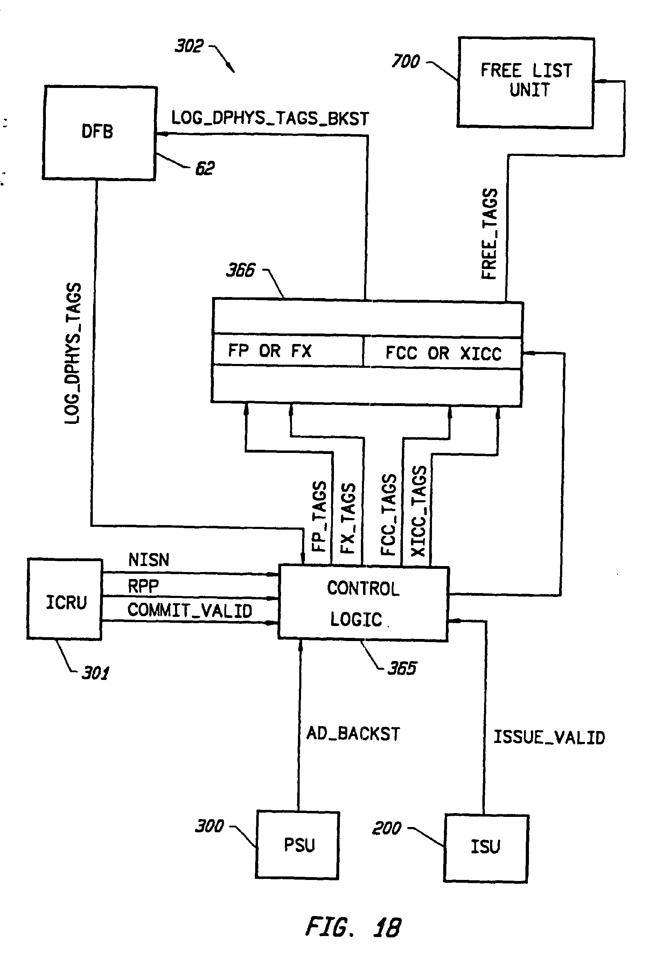

The RRF 302 is shown in greater detail in FIG. 18. The RRF includes a data storage structure 366. In the exemplary CPU 51, in which up to 64 issued but not yet retired instructions may be assigned serial numbers, the data storage structure 366 includes 64 addressable storage elements or entries. Each storage element corresponds to one of the instruction serial numbers. Moreover, each storage element of the data storage structure 366 includes an FP or FX logical to old physical map field and an FCC or XICC logical to old physical map field. Various structures may be used for implementing RRF 302. One exemplary RRF is implemented as a sixty-four register x 29-bit four-bank interleaved RAM, wherein the fields are packed or bundled during the write to RRF cycle and unpacked or unbundled upon readout during backstepping.

The control logic 365 of the RRF receives the LOG-OPHYS-TAGS signals from the DFB 62 and determines which contain floating point register tags from the FXRFRN 604, fixed point register tags from the FPRFRN 605, and XICC and FCC tags from the CCRFRN 610. The control logic 365 also receives the NISN pointer from the ICRU 301 of the PSU 300 and the ISSUE_VALID signal from the ISU 200. In response to the NISN pointer and the ISSUED_VALID signal, the control logic 365 determines the serial numbers of the issued instructions for which the LOG_OPHYS_TAGS signals are being received.

In the exemplary CPU 51, instructions can only modify floating point and FCC registers simultaneously or fixed point and XICC registers simultaneously, but not fixed point, floating point, XICC, and FCC registers simultaneously. Thus for each instruction for which fixed point or floating point logical and old physical register tags have been received in the LOG_OPHYS_TAGS signals, the control logic 365 writes these tags (FP_TAGS or FX TAGS) into the FP or FX logical to physical map field of the storage element which corresponds to the serial number of the issued instruction. Similarly, for each instruction for which FCC or XICC logical and old physical register tags have been received, the control logic 365 writes the FCC or XICC logical to old physical tags into the FCC logical to physical map field of the storage element corresponding to the serial number of the issued instruction. Thus, in the case where an instruction requires both floating point and FCC registers or both fixed point and XICC registers as destinations, the logical and old physical register tags contained by the LOG_OPHYS_TAGS signals for this instruction are written to the same storage element. However, those skilled in the art will appreciate that the RRF 302 could be constructed to store the logical to old physical mappings for an instruction that modifies fixed point, floating point, XICC, and FCC registers simultaneously.

Thus, the RRF 302 serves as a sequential historical ledger from which earlier logical to physical mappings or relationships can be reconstructed if necessary. For example, if it becomes necessary to undo an instruction corresponding to SN="X", the logical and old physical register tags are identified in RRF using SN="X" as an index. Then, these tags are provided to the appropriate RFRN to restore the logical to physical register mapping that existed just prior to execution of instruction SN="X" and the newly mapped physical register is returned to the Freelist. This effectively reverses the register renaming and restores register state to the state that existed just prior to execution of the instruction. When it is necessary to undo several instructions, the same procedure is applied on a reversed step by step basis beginning with ISN and decrementing back to SN="X." This process is described in greater detail later.

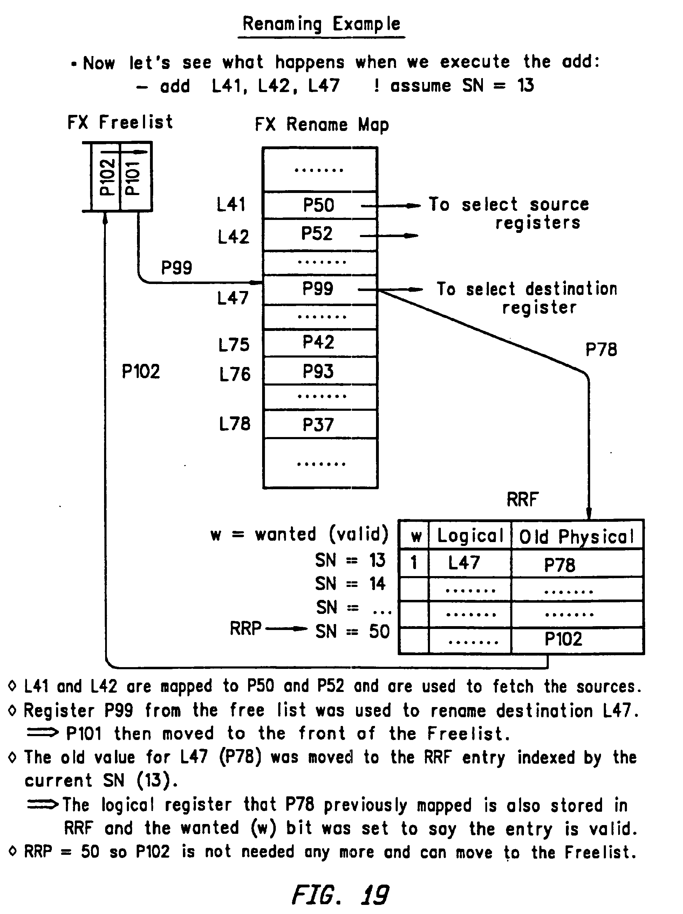

FIG. 19 provides an example of register renaming for an add instruction with logical source registers L41 and L42 and destination register L47. In accordance with the foregoing, the logical source registers L41 and L42 are mapped by the rename mapping logic 615 to the physical registers P50 and P52. Then, the logical destination register L47 is re-mapped to the free physical register P99 provided by the FREELIST unit 700 and the logical register tag for the logical register L47 and the physical register tag for the previously mapped (old) physical register P78 is provided to the RRF for mapping with the serial number (SN=13) assigned to the add instruction. As is evident from this example, each "physical" register tag appears in one and only one of: (1) Freelist 700; (2) rename mapping logic of FXRFRN 604, FPRFRN 605, or CCRFRN 610; and (3) RRF 302.

### 4. Dispatch to Reservation Stations

Furthermore, referring to FIG. 8, during the issue stage, the reservation stations of the FPU 600, FXU 601, FXAGU 602, and LSU 603 receive the F_INSTs_BRPs instructions from the BRB 59. In response, each of the reservation stations extracts the opcodes and immediate data from these instructions.

The reservation stations of each of the FPU 600, FXU 601, FXAGU 602, and LSU 603 also receives during the issue stage the serial numbers and the checkpoint numbers that were assigned to the instructions that were issued. These are provided by the SNs and CHKPT_Ns signals received from the ISB 62

In order to execute mathematical and read/write instructions that involve floating point data, the reservation station of the FPU 600 may receive during the issue stage available data, data valid bits, and FP and CC physical register tags (FP_DATA_R, FP_DV_R, FP_TAGS_R. CC_DATA_R, CC_DV_R, CC_TAGS_R) from the FPRFRN 605 and the CCRFRN 610 in the FSR 607. Similarly, the FXU 601 may receive during the issue stage data from the control register file 800 over the ISB2DFB bus and available data, data valid bits, and FX and CC physical register tags (FX_DATA_R, FX_DV_R, FX_TAGS_R. CC_DATA_R. CC_DV_R, CC_TAGS_R) from the FXRFRN 604 and CCRFRN 610 to execute mathematical, program control, and read/write instructions that involve fixed point data. To execute address generation operations for load/store instructions and fixed point non-multiply/divide mathematical instructions, the FXAGU 602 may receive data and FX and CC physical register tags (FX_DATA_R, FX_DV_R, FX_TAGS_R, CC_DATA_R, CC_DV_R, CC_TAGS_R) from the FXRFRN 604 and/or CCRFRN 610. However, as was indicated earlier, the FXAGU 602 could be configured similar to the FXU 601 to execute program control, multiply/divide, and control register read/write instructions in which case it would receive the appropriate available data and physical register tags from the FXRFRN 604 and CCRFRN 610. Moreover, the LSU 603 may receive during the issue stage available data and FP and FX physical register tags (FX_DATA_R, FX_DV_R, FX_TAGS_R, FP_DATA_R, FP_DV_R, and FP_TAGS_R) from the FPRFRN 605 and/or FXRFRN 604 and the contents of the FSR register of the FSR/CCRFRN 606 to execute load/store instructions.

Then, for each issued instruction for which an entry in a reservation station is available as identified by the ENTRIES_AVAIL signal, that reservation station places in the identified entry the extracted opcode, serial number, checkpoint number, physical destination and/or source register tags, and available data for that instruction. Furthermore, for each physical source register tag for which data is already available as identified by the received data valid bits, the reservation station sets another data valid bit in the reservation station to indicate that the data associated with the register tag is available. Also, if the instruction involves immediate data, then the data valid bit is also set since the data is immediately available and stored in the reservation station entry.

### C, Instruction Execution and Completion

Referring again to FIG. 6, during the issue stage, the PC logic 106 receives fetched instructions (F_INSTs_BRPs) from the fetch register 110 and decodes them. It also receives the ISSUE_VALID signal from the ISU 200 to determine which of the instructions it is decoding where actually issued. For certain program control instructions which can be issued, predictively executed and completed in one machine cycle, the PC logic predicts the program flow and computes the FPC, APC, and NAPC values based on the prediction. For all other instructions, the PC logic computes the FPC value for the next machine cycle based on the FPC value for the current machine cycle and on how many instructions were issued during the current machine cycle as indicated by the ISSUE_VALID signal. For these instructions as well, it computes the APC and NAPC values based on the APC for the previous machine cycle and on how many instructions the ISSUED_VALID signal indicates were issued during the current machine cycle.

For example, if any of the instructions that are issued are conditional branch instructions, such as the SPARC-V9 BPcc, Bicc, BPr, FBfcc, and FBPfcc instructions, then the PC logic 106 decodes the corresponding BRP fields for these instructions in order to determine whether to predict to take or not take the branch. If the branch is predicted taken, then the PC logic 106 extracts the displacement value from the instruction and uses it to compute the new FPC, APC, and NAPC values for the next machine cycle. If the branch is not taken, then the FPC, APC, and NAPC values are computed normally for no change in program flow.

But, if any of the instructions that are issued are return type jump and link instructions, such as the SPARC-V9 JMPL[rd=0] instructions, then the PC logic 106 outputs a POP signal to pop off the return prediction stack 105 a predicted JMPL target PC (P_JMPL_PC) value which is used by the PC logic 106 to form the new FPC, APC, and NAPC values. Since JMPL[rd=0] instructions are used to return from subroutines, PC logic 106 outputs a PUSH signal to push onto the return prediction stack 105 a P_JMPL_PC anytime it determines that a CALL or call type jump and link, such as the SPARC-V9 JMPL[rd=15] instruction was issued. The P_JMPL_PC pushed onto the return prediction stack 105 is the APC value for the instruction incremented by 8. Furthermore, since a P_JMPL_PC is pushed onto the return prediction stack 105 anytime that a CALL or JMPL[rd=15] instruction is issued, the PC logic 106 must also make sure that a P_JMPL_PC is popped off the return prediction stack 105 anytime a RETURN instruction is issued.

Additionally, the issued instructions may include unconditional branch always instructions, such as the SPARC-V9 BPA, BA, FBA, and FBPA instructions. In this case, the PC logic 106 extracts the displacement values from these instructions and uses them to compute the new FPC, APC and NAPC values.

Since the PC logic 106 does not need to wait for additional data from the DFB 62 for conditional branch, branch always, and JMPL[rd=0] instructions, these types of instructions can be issued, executed, and completed in the same stage. Furthermore, since issued conditional branches will be predicted taken or not taken and because predicted target FPC values will be computed for JMPL[rd=0] instructions, subsequently fetched instructions will be speculatively fetched and therefore speculatively executed.

Furthermore, the issued instructions may include other kinds of program control instructions such CALL and RETURN instructions and JMPL instructions other than JMPL[rd=0] instructions, such as the call type JMPL[rd=15] instruction. In this case, the PC logic 106 waits for the DFB 62 to compute an FPC value and provide it on the DFB2BRB bus during the execute stage. Referring to FIG. 8, since the FPC value is fixed point data, the FXU 601 computes the FPC value. Then during the complete stage, the PC logic 106 takes this value and forms the new FPC, APC, and NAPC values.

As will be discussed later in greater detail, when any of the issued instructions are return from trap handling routine instructions, such as the SPARC-V9 DONE or RETRY instructions, then the PC logic 106 receives the trap PC (TPC) value or trap NPC (TNPC) value from the RD_TPC_TNPC signals provided by the control register file 800 shown in FIG. 7. Referring to FIG. 17, the trap stack 815 of the control register file 800 provides these signals when the ISU 200 outputs RETRY_DONE_IS signal indicating that a RETRY or DONE instruction was issued. The PC logic 106 then uses the TPC or TNPC value received from the trap stack 814 to form the new FPC, APC, and NAPC values.

For other issued instructions, the PC logic 106 increments the preceding PC and NPC values during the issue stage to generate the new PC and NPC values for the next fetch stage.

Referring to FIG. 8, an instruction issued during the issue stage can be executed by the FPU 600, FXU 601, FXAGU 602, and LSU 603, only when all of the data it requires is placed in the corresponding reservation station entry. Since the data for instructions issued later than others becomes available sooner, these instructions may be executed and completed ahead of the earlier issued instructions.

As indicated earlier, the reservation station knows that the source data of a physical source register is not available when the data valid bit for the physical register indicates so. Thus, the reservation stations receive and monitor the appropriate available data, data valid bits, and physical register tags (FX_DATA_F, FX_DV_F. FX_TAGS_F. FP_DATA_F. FP_DV_F, FP_TAGS_F, CC_DATA_F, CC_DV_F, CC_TAGS_F) forwarded from the FXRFRN 604, FPRFRN 605, and CCRFRN 610 to determine when the data is available. The reservation station grabs the forwarded data intended for a particular register when the corresponding forwarded physical register tag matches the physical register tag stored in the entry of the reservation station.

When all data dependencies have been met for an instruction (i.e, when all the needed data has become available), the execution unit then executes the instruction using the instruction data stored in the entry of the reservation station for that particular instruction. The types of instructions executed by the execution units 600-603 have been described earlier in regard to storing entries in the reservation stations.

The executed instructions are then completed when the data they generate is stored in the physical register identified by the physical destination register tag stored in the reservation station in the entry for the instruction. During completion, the execution units 600-603 also send error and completion status information to the PSU 300 with the ERR_STAT signals.

Moreover, referring to FIG. 7, the ISU 200 decodes the instructions it receives from the fetch register 100 to determine if any of the issued instructions are read/write instructions of the control registers 801-814 shown in FIG. 17. The control registers 801-814 are used in the overall control of the CPU 51 and may include privileged, non-privileged, and ancillary state registers of the type described in the SPARC-V9 Architecture Manual.

For issued read instructions of the control registers, such as the SPARC-V9 RDPR and RDASR instructions, the ISU 200 outputs RD/WR_CNTRL signals that identify one of the registers 801-814 and indicate that it is to be read. In response, the control logic 816 of the control register file 800 outputs to the Watchpoint unit 304 the contents (RD_CNTRL_REG) of the control register identified by the RD/WR_CNTRL signals.

Since as will be discussed later, the CPU 51 makes checkpoints and corresponding watchpoints for read instructions of the control registers 801-814, the ISU 200 generates a DO_WATCHPT signal and DO_CHKPT signals. The DO_CHKPT signals indicate that a checkpoint should be made and contain the checkpoint number for this checkpoint. The DO_WATCHPT signal indicates that a watchpoint should be formed by the watchpoint unit 304 at the checkpoint number provided by the DO_CHKPT signals. The watchpoint unit 304 has 16 addressable storage elements with each corresponding to one of the 16 checkpoint numbers. Thus, in response to DO_WATCHPT and DO_CHKPT signals, it stores the contents of the control register that was read in the storage element corresponding to the checkpoint number provided in the DO_CHKPT signals.

The read control register instruction is also provided to the reservation station of the FXU 600 for further execution. Thus, the checkpoint number of the instruction is stored in the reservation station entry for the instruction. Then, when the FXU 601 executes the read control register instruction, it outputs the checkpoint number of the instruction to the watchpoint unit 304. In response, the watchpoint unit outputs the control register data that was read in earlier to the FXU 600 which then provides it and a corresponding physical destination register tag to the FXRFRN 604 for storage in a fixed point register. Thus, the CPU 51 does not have to be synced to perform a control register read.

To perform writes to the control registers (such as the SPARC-V9 WRPR and WRASR), the FXU 601 executes the instruction data stored for the instruction in the reservation station and outputs the data on the DFB2BRB bus. As shown in FIG. 17, the data is then provided to the control register file 800. Since the ISU 200 has generated a RD/WR CNTRL signal that indicates that a control register write has been issued and to what register the write is to occur, the RD/WR/UPDATE logic 816 then writes the data into the appropriate control register.

As indicated previously, the exemplary CPU 51 employs register windows for the fixed point registers. Register window operation is described in detail in the SPARC-V9 Architecture Manual. Thus, the ISU 200 also determines when a register window control instruction has been issued. In doing so, it generates WIN_CNTRL signals that indicate that a window control instruction has been issued and identify the specific kind of register window operation to be performed. These signals are provided to the control register file 800, as shown in FIG. 17. In response, the RD/WR/UPDATE logic 816 then performs the updating register window operations indicated by the WIN_CNTRL signals.

### D. PSU Participation in the Instruction Execution Stage

Once instructions have been dispatched to the appropriate execution unit within DFB 62, ICRU 301 waits for instruction completion and monitors error and status information for each instruction serial number to arrive over the Execution Data Forward Busses between DFB 62 and PSU 300. PSU participation in the Execution Stage is limited to receiving execution status information. When instructions complete execution without error and have not mispredicted, the instruction is deactivated; however, if an execution exception occurred or the speculative execution was mispredicted then the instruction is not deactivated or CPU 51 initiates recovery procedures. A-Ring status information is updated to reflect correct or incorrect speculative execution and exception or exception-free execution. When an instruction was correctly predicted and executions without exception, ICRU 301 clears the A-ring bit associated with the serial number to deactivate the instruction.

In the exemplary CPU 51, DFB 62 includes Floating-Point Functional Unit (FPU) 600, Fixed-Point Functional Unit (FXU) 601, Fixed-Point /Address Generation Functional Unit (FXAGU) 602, and Load/Store Functional Unit (LSU) 603, as well as FPRFRN 605, FXRFRN 604, CCRFRN 606, and FSR 607. In the exemplary CPU, each DFB functional unit can process as many as two instructions per machine cycle so that instruction execution completion is limited (by hardware constraints) to a maximum of eight instructions per machine cycle. In one embodiment of the CPU, FPU 600 can process two instructions at a time but can only output one instruction result, therefore in that embodiment, instruction completion is limited to seven instructions; however, there is no reason why two outputs cannot be implemented. FIG. 8 shows a functional block diagram of the major functional units within DFB 62 and major signals passed between DFB 62 and ISB 61.

When a dispatched instruction has completed execution in DFB 62, and instruction identification error and other status information (ERR_STAT) are broadcast back to PSU 300 including to ICRU 301 (and other units) on the execution data forward busses. Data and status are received for each instruction issued, but may be received out of order. Execution status information signals for each instruction may include for example whether an error occurred during execution, error type, condition codes for evaluating if speculative execution was correctly predicted, serial number, instruction checkpoint (the checkpoint that the machine will backup to if it faults and requires a backup), and whether the instruction involved a read or write to a control register.

The broadcast instruction serial number is used to index into A-ring 312 by Address Decode Logic 334 in FIG. 12. The number of A-Ring write ports 341, 342 (and read ports 343 for CSN/RRP Advance Logic 323) on the A-ring are preferably selected to correspond with the peak execution bandwidth of the processor. If a particular instruction causes an error, A-Ring Clear Logic 333 writes a "0" to the A-bit corresponding to the particular instruction serial number and the instruction is thereafter considered deactivated. However, if an instruction completes with error, the corresponding active-bit in the A-Ring is not cleared, the instruction is still considered active, and other processor recovery steps are taken to recover from the exception or error condition. The CSN eventually will catch up with ISN which points to the location one slot ahead of the erroring instruction. CSN cannot pass he SN of the erroring instruction because its A-bit is still set. Then when the execution trap is taken, the A-bit of the erroring instruction will be overwritten with a "1" to permit CSN and RRP to advance.

The Taken Trap (TT) field which identifies the trap type is popped off the TrapStack and decoded to determine whether the trap is an execution trap (etrap). The etrap is then handled by issuing a "DONE" or "RETRY". If the etrap can be successfully handled, a ETRAP_CLEAR signal is asserted by the trap-handler to clear the A-bit. Similar logic is provided to Clear M-bits in M-RING 324.

The data and status signals provide the serial number of the instruction in each execution issue slot and are also used by PSU 300 to determine exception handling priority in instances where multiple instructions fault to determine which exception is temporarily earlier. (Prioritization of exceptions is discussed further relative to Priority Logic and State Machine PLSM 307.) In the exemplary processor, the serial number arrives one cycle earlier than error and status information, thereby permitting serial number decode by Address Decode Logic Unit 334 in advance of arrival of any error information so that the bit can be cleared (when no error is present) or not cleared (when an error is present) without incurring further delay in the address decode logic. When an error or other exception is detected, appropriate steps are taken to handle the error or exception as described hereinafter in this patent.

### E. Instruction Commitment

The structure and method described heretofore provide structure and method for tracking the issue and execution status of as many instructions as addressable locations in A-ring 312, sixty-four instructions in the exemplary embodiment However absent structure and method to recover the CPU resources, resources allocated by the CPU 51 to the instructions, including the serial numbers and associated A-bits for example, would remain allocated to the instructions even though the instructions had been completed and deactivated. By adding additional pointers associated with the A-ring data structure and moving the pointers in response to changes in status of relevant instructions within the CPU 51, particularly deactivation, instructions may be committed and resources may be retired and reclaimed for subsequent use by other instructions. In this way resources are continuously available for newly issued instructions.

Committed Serial Number pointer (CSN) 316 points to the last committed instruction. A "committed instruction" is defined to be an instruction that has completed execution without error so that it has progressed from issue through execution and is older than any speculatively issued predicted central transfer (branch) instruction that may need to be undone and may not be undone. A committed instruction need never be undone. By definition, all instructions prior to the Committed Instruction Serial Number (CSN) pointer 316 have completed execution without error and never need to be undone. The amount that CSN advances every machine cycle sets the maximum instruction commitment rate of the machine. Instructions that have completed and have been deactivated are not deemed to be committed until CSN has advanced to or beyond serial numbers for those instructions in A-ring 312.

As described previously for ISN 314, the maximum number of positions that CSN 316 can advance every machine cycle may be limited to a smaller maximum number of instructions per cycle by software, hardware or other controls. For example, in one the embodiment of the inventions that limits advancement of ISN to four instructions per machine cycle, CSN is limited to eight per cycle by hardware imposed limitations. CSN in addition can be equal to ISN but can never advance beyond ISN around the A-Ring. (Because of the A-Ring structure, CSN may be strictly numerically less than, equal to, or greater than ISN.) When the CPU is initialized, CSN is initialized to 0 (zero), and then advanced according to changes in instruction status and predetermined CSN advancement rules described hereinafter.

As active-bits are cleared in the Active Instruction Ring, CSN is advanced according to predetermined rules to "commit" instructions which have completed execution. In general, the CSN pointer may lag behind instructions that have already completed execution (i.e. are deactivated). CSN/RRP Advance Logic Unit 323 is responsible for advancing the position of the CSN and RRP pointers. Each machine cycle, CSN/RRP Logic unit 323 attempts to advance CSN past completed de-activated instructions (activity bit="0" in the A-ring) without passing ISN. Except when deferred trap occurs, CSN advances only based on the set or cleared condition of A-bits in A-ring 312 and predetermined rules implemented (e.g. software, firmware, and/or hardware) within logic unit 323, CSN/RRP only needs to query the status of the A-ring itself and remain mindful of ISN to determine the proper serial number address for CSN. When a deferred trap is taken and successfully handled, PLSM 307 sends a DEFERRED_TRAP signal to CSN/RRP advance logic control unit 323 which causes CSN to be advanced by one SN location, allowing CSN and later RRP to advance past the instruction that caused the exception. In one embodiment of the invention, the advancement of CSN is limited by a predetermined maximum instruction commitment rate (eight instructions per machine cycle) that is selected based on the desire to limit the hardware required to implement movement of the CSN pointer.

In principle, the CSN can advance up to and be equal with ISN. When ISN=CSN, the CPU is empty, that is, all issued instructions are committed. In practice, it may be advantageous to restrict the maximum advancement of the CSN [to eight instructions per machine cycle (for the four instruction issue machine) because] so that the logic can be simplified and the hardware required reduced. For example, four-issue per cycle CPU, the CSN advancement is limited to eight SNs per cycle. The rules governing the advancement of CSN may be summarized as follows: (1) Advance CSN up to, inclusive, ISN; (2) Advance CSN no more than eight instruction serial numbers in one cycle; (3) Advance up to, exclusive, the first "1" in the A-ring which corresponds to an active instruction that cannot be committed yet. More rigorously, CSN is generally advanced (see modification for certain exceptions below) according to the following relationship: CSN=min(CSN+4, ISN, slot_A), where A(CSN+1), ..., A(slot_A) are all "0" and A(slot_A+1)=1. In this expression "min" is the minimum function, "slot_A" refers to an A-bit location in A-Ring 312, and A(slot_A) is the bit-state of that A-bit location (e.g. "1" or "0"). The rules for advancing CSN are modified when a deferred trap is deleted and taken such as an unfinished floating point operation exception or a data breakpoint exception are detected. Unfinished floating point exceptions and data breakpoint exceptions are identified by the execution status signals (ERR_STAT from DFB 62. When these exceptions occur and the trap is handled CSN is advanced by 1 (one), that is CSN - CSN + 1, so that it advances past the instruction that caused the exception. PSU 300 is particularly concerned about unfinished floating-point operations and data breakpoints, both of which may require special handling of the pointers, since if A-bits are not cleared for handled traps the CPU would fill up and stall.

By limiting CSN advancement to the "maximum(8, ISN, the next A-bit = 1)" simple hardware circuitry may be implemented to move CSN to the proper position. For example, A-ring 312 can be implemented as eight 8-bit registers. At the A-ring read port 343 of these eight 8-bit registers, the registers of the surrounding CSN are read out, and the content of these read-out registers is brought into two separate 8-bit buses. Concatenating these buses into a single 16-bit bus then shifting the bus by from 0-bits to 8-bits forms an 8-bit window of interest (maximum CSN advancement of 8) for advancing the old CSN. A "finding the first 1" circuit will yield the amount that CSN will advance.

ICRU 301 also informs Checkpoint Unit 303 of the new Committed Serial Number (CSN) 316 by sending a committed serial number signal (CSN) signal and issued Send Number (ISN) to Checkpoint Unit 303 so that it can free up any allocated checkpoints have a serial number less than CSN. Relative to locations on the circular A-Ring rather than strict mathematical order (i.e. SN_{≤⊙}CSN relative to locations on the circular A-Ring). Checkpoints are described in greater detail elsewhere in this specification. In one embodiment of the CPU 51, CSN, as well as the other pointers described herein is a six-bit vector that encodes the instruction serial number corresponding to the addressable A-Ring bit location.

### F. Instruction Retirement & Resource Recovery

CPU allocatable resources are recovered by provider. An additional pointer is provided to track and control instruction retirement and resource reclaiming for resources that are freed when instructions are retired. Resource Reclaim Pointer (RRP) 317 points to the last retired instruction and trails CSN. A "retired instruction" is an instruction that has completed execution, been deactivated, and committed by the CPU 51 and has had all associated machine resources reclaimed for subsequent use during subsequent instruction issue. Reclaimed machine resources include renamed and/or remapped logical, architectural, and physical registers allocated to the instruction, instruction serial numbers (SN), checkpoints, and watchpoints which are freed at instruction retirement and thereby made available for reallocation during subsequent instruction issue. The amount that RRP advances every machine cycle sets the maximum instruction retirement rate of the machine. When the CPU is initialized RRP is initialized to 0 (zero) and advanced according to changes in instruction status and predetermined RRP advancement rules described hereinafter. Allocation and deallocation of checkpoints and watchpoints, are described in detail hereinafter.

As instructions are committed, Resource Reclaim Pointer (RRP) 317 is advanced behind CSN 316 to retire instructions so that machine resources can be freed up and reclaimed for reuse. Each machine cycle, RRP 317 attempts to advanced past committed instructions based on the A-ring A-bit state and predetermined RRP advancement rules without passing CSN. RRP cannot pass CSN because machine resources allocated to non-committed instructions, even if deactivated, cannot be freed until it is certain that the instruction need not be undone. Instruction completion (deactivation) alone is not sufficient for instruction commitment or retirement because the deactivated instruction may still be speculative. Only committed instructions can be retired. RRP 317 points to the next instruction who's register resources can be reclaimed. RRP 317 advances based only on the set or cleared condition of bits in A-ring 312, CSN 316, and predetermined rules which may be implemented within CSN/RRP Advancement Logic 328.

As was the case for ISN and CSN, the maximum number of positions RRP can advance every machine cycle may be limited to a smaller maximum number of instructions per cycle by other software, hardware, or other controls. In one embodiment of the invention, the advancement of RRP is limited by a predetermined maximum instruction retirement rate that is selected based on the desire to limit the hardware required to implement movement of the RRP pointer. For example, in the exemplary four issue per cycle CPU embodiment, RRP advancement and therefore recovery of resources is limited to a maximum of four instructions per machine cycle. This is equal to the maximum instruction issue rate of the exemplary machine so it does not limit CPU 51 performance. RRP should not be restricted to advance more slowly than the normal issue rate. More rigorously, RRP is advanced according to the relationship: "RRP-min(RRP+4, CSN)." In principle limiting resource recovery in this manner is not essential, and RRP may be advanced up to CSN. The limitations in the exemplary CPU 51 were imposed because of hardware design tradeoffs. The hardware required to advance CSN for a predetermined number of instructions is greater than that required to advance RRP for the same number of instructions. Therefore, to minimize hardware to a desired level, RRP is advanced more slowly than CSN with little or no detrimental effect on performance.

### 1. Updates to RRF and Register Rename Maps at_Instruction Commitment and Retirement

Referring to FIG. 18, resource recovery frees up instruction serial numbers so they can be used again and, as a result, also frees some registers so that they can be put back into the freelists within Freelist Unit 700. When instructions are committed, they are identified by the COMMIT_VALID signal generated by the ICRU 301. In response to the COMMIT_VALID signal, the entries in the storage unit 366 of RRF 302 that correspond to the committed instructions are freed by the control logic 365 for reuse.

### 2. Reading RRF at Instruction Retirement

RRF is read when an instruction is retired (See ICRU 301 description) and at machine Backup (See Backtrack description). When an instruction is retired, as indicated by the RRP pointer, the control logic 365 controls the storage unit 366 to output to the Freelist Unit 700, in the form of the FREE_TAG signal, the physical register tags corresponding to the retired instruction. The Freelist Unit then places the physical register tags in its list of free physical register tags.

### 3. Precise State Maintenance using Pointers

A-Ring 312 and its associated logic provides accurate machine cycle current information on the status of each instructions that has been issued. Pointers ISN and CSN track status of issued and active instructions. Only when CSN advances to a particular instruction can the CPU 51 be certain that the instruction can be committed and free resources associated with executing the instruction, thereby preserving precise state. ISN moves around the A-ring setting A-bits (A=1) for issued instructions as it passes entries. CSN follows ISN looking for completed instructions (A=0) to commit. NMCSN follows ISN looking for completed (deactivated) memory instructions (M=0). RRP follows CSN around A-ring 312 and reclaims resources of committed instructions. When aggressive load/store instructions scheduling is discussed, that description will describe how NMCSN follows ISN looking for completed (deactivated) memory instructions (M=0).

CSN doesn't advance into an instruction that has an A-bit set. (NMCSN advances past memory referencing instructions because the M-bit is cleared at issue for memory referencing instructions.) Other rules for moving the pointers that permit precise state to be maintained are: (1) CSN can't advance past ISN (ISN₂^{•}CSN), (2) CSN can't advance past NMCSN (NMCSN₂CSN), (3) CSN can't advance past PBSN (PBSN₂^{•}CSN), (4) NMCSN can't advance into ISN (ISN₂NMCSN), (5) PBSN can't advance into ISN (ISN₂^{•}PBSN), (6) RRP can't advance past CSN (CSN₂^{•}RRP). (7) NISN is always ISN+1 (addition is modulo ring length), and (8) ISN can't catch up to RRP or CSN (indicating a full machine condition). Other rules that may optionally be implemented in a preferred implementation of the method are (9) CSN and NMCSN can advance by at most eight in one clock cycle, and (10) RRP can advance by at most four in one machine clock cycle. The symbol "z" indicates that the greater than or equal to relationship is determined with respect to the wrap around A-ring structure rather than strict mathematical equality or inequlaity.

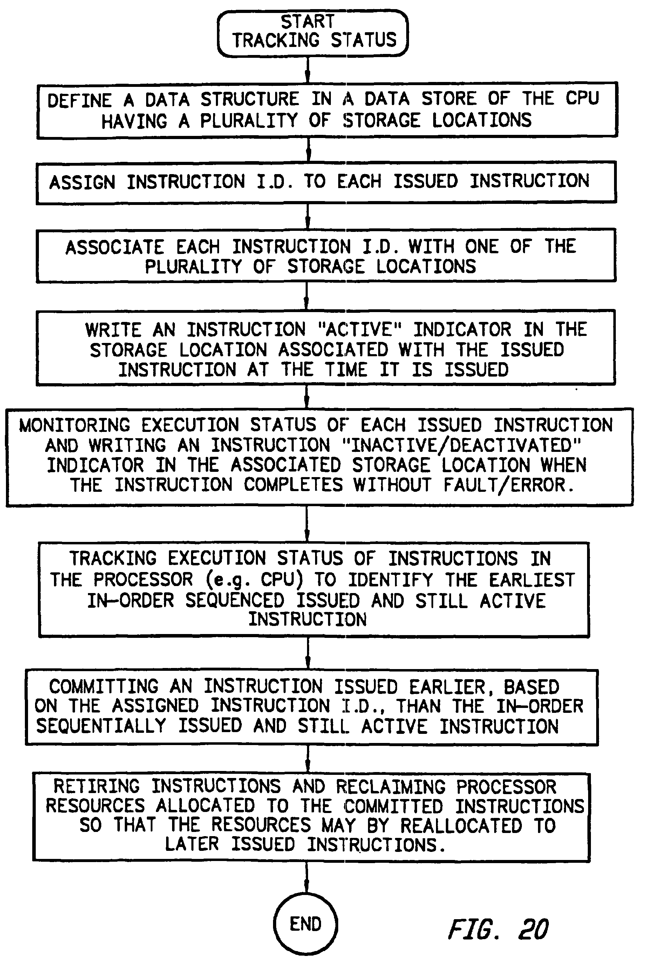

Several observations may be made relative to the ISN, CSN, and RRP pointers: First, instructions having serial numbers between CSN and ISN correspond to outstanding active instructions in the machine. These instructions are speculative and may need to be undone. Second, instructions between CSN and RRP correspond to unretired instructions which have been committed and are simply awaiting retirement by RRP. These committed instructions will never be undone. Third, CSN can never pass ISN since it is not possible to commit the result of an instruction that has not issued. Fourth, machine "sync" is reached by definition when CSN=ISN=RRP so that all issued (ISN) instructions in the machine have been committed (CSN) and retired (RRP). Fifth, ISN can never pass RRP in the conceptually circular A-ring and the serial numbers between RRP and ISN are available for instruction issue. When ISN=RRP-1 (modulo A-ring length), all instruction serial numbers have been allocated and the machine must stall (wait) until RRP can advance to reclaim machine resources for reuse before another instruction is issued. Of course the CPU 51 continues to execute, deactivate, complete, and commit instructions that had been issued prior to the stall. Finally, the relative relationship among the three pointers is RRP ≤ ⊙ CSN ≤ ⊙ ISN, where the "≤ ⊙" operator indicates an ordering within the circular A-RING (modulo A-ring length) and does not imply a strict mathematical relationship. FIG. 20 is a diagrammatic flow-chart of an embodiment of the inventive method for maintaining precise state including instruction issue, deactivation, commit, and retirement.

### III. AGGRESSIVE LONG LATENCY (LOAD/STORE) INSTRUCTION SCHEDULING

The description of the inventive method of using various pointers to track and schedule instruction commitment and retirement pertain to all instruction types and provides many advantages in modern speculative out-of-order processors. Further benefits are attainable by recognizing that many modern processors have been designed as "load-store" architectures in which only load instructions and store instructions reference external memory, while all other instructions or operations reference registers within the processor.

Actually, load and store instructions belong to a more general class of instructions that are referred to here long latency instructions that require several machine cycles to complete, and include external memory referencing instructions of which load instructions and store instructions are two types. Instructions that reference internal registers generally require fewer or perhaps only a single machine cycle to complete. Long latency instructions also include "atomic" instructions which are instructions designed to execute in multiple-machine cycles without interruption.

Latency is the elapsed time between issuing an instruction and execution completion of that instruction. An instruction set for a load-store architecture is desirable because it decouples long latency memory references (such load-store references to memory) from short latency logical or arithmetic operations (such as add, multiply, divide, logical compare, and the like) that reference internal CPU 51 registers. Additionally, most modem CPU 51 of the designed with load-store type architectures have many general purpose registers which can support the increased register requirements that arise from this type of instruction set.

Both load instructions and store instructions modify architectural state. In an out-of-order execution processor, it is important to be able to schedule load and store instructions effectively in order to maintain a high load/store bandwidth without compromising precise state. An enhancement to the basic structure and method for tracking instruction status is provided that aggressively schedules long latency instructions while maintaining precise state. Structures and methods within the ICRU 301 of PSU 300 cooperate with structures and methods within the DFB 62 particularly the Load/Store Unit (LSU) 603 as will be described to provide the enhanced capabilities.

### A. Memory Instruction Status Information Storage

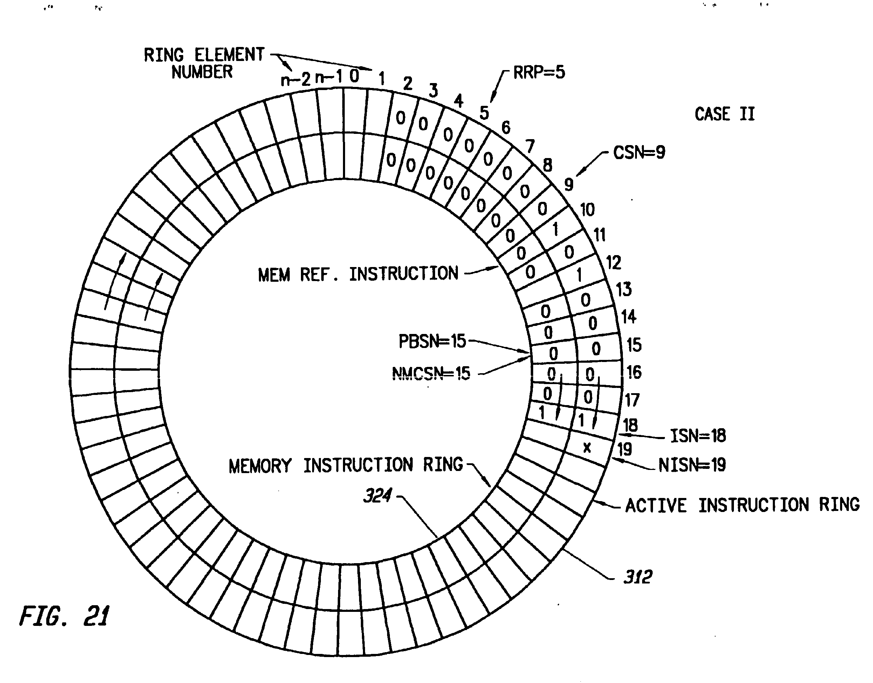

The inventive structure and method can provide additional signals that distinguish long latency instructions, storage regions for storing long latency instruction status information, and pointers for tracking the instruction status. FIG. 21 shows a conceptual diagram of Memory Instruction Ring (M-ring) 324 for storing long latency instructions status information, typically memory referencing instructions (e.g. Load/Store instructions), in relationship with Active Instruction Ring 311 already described. M-ring 324 has generally the same structure and overall characteristics as A-ring 311 but the Memory status bits are set according to a different set of rules than the A-Ring status bits. In particular, M-ring 324 implements different rules concerning which instructions or instruction types are treated as active (blt set to "1") or inactive (bit cleared to "0") at issue.

As shown in FIG. 10. when ISU 200 issues an instruction, it provides an instruction type signal ISSUE_MEM which distinguishes between a memory referencing instruction and non-memory referencing instructions, along with the ISSUE_NOP and ISSUE_VALID already described. ISSUE_MEM could also be generated so that it signals any particular class of long latency instructions that would benefit from being aggressively scheduled, including load instructions, store instructions, atomic instruction sequences, and other instructions referencing memory.

In one embodiment of the CPU 51, ISSUE_MEM is a four-bit vector (each bit corresponding to one of the issuable instructions in the instruction issue window) where assertion ("1") at bit i indicates that i-th instruction is memory-related. ISSUE_MEM is used by M-Ring Set Logic 335 within ICRU 301 to set bits in M-Ring 324 at issue as shown in FIG. 12. Address decoding logic 338, 336 are provided within A-Ring 312. ISSUE_MEM indicates whether or not the issued instructions are related to memory operations. If ISSUE_MEM from ISU 200 is asserted at bit i, and ISSUE_VALID corresponding to the same instruction slot is asserted, then that particular M-bit is not set in the Memory Instruction Ring (M-Ring) 324. Not setting M-bit when the instruction is memory related permits the memory related instruction to be effectively "deactivated" at the time it is issued so that a Non-Memory Committed Instruction Serial Number (NMCSN) pointer (described hereinafter) advances over the cleared M-bits and is prevented from advancing by non-memory referencing instructions in the manner that CSN advances over cleared A-Ring bits. An M-bit must be written as either a "0" or "1" for every instance when ISSUE_VALID is "1", that is for every issued instruction whether memory related or not. Not setting the M-bit for a memory operation facilitates "ignoring" memory related operations for the purpose of advancing NMCSN.

M-bits are cleared by M-Ring Clear Logic 337 when an instruction completes without error just as they are cleared for A-ring 312. Memory referencing instructions having their M-bit cleared at issue remain cleared after instruction deactivation. M-Ring bits are cleared for execution traps in the same manner as for A-Ring 312. M-ring 324 status information is used to track and aggressively schedule memory referencing instructions. The overall status of memory referencing instructions, including issued, committed, retired status are still maintained by A-ring 311 and its associated pointers.

In light of the described similarities between the A-ring and the M-ring, those skilled in the art will realize that the function of the A-ring and M-ring could be implemented within a single data structure, such as a single circular ring wherein each addressable location of the ring comprises a plurality of bits. In such a plurality-bit ring, both instruction activity (active or inactive) and instruction type (memory, non-memory, branch, nop, and the like) could be encoded in the plurality of bits. Furthermore, other coding schemes could be provided to store the same information as presently provided in separate A-ring and M-ring data structures. Those of ordinary skill in the art, in light of the present description, will also appreciate how the ring set and clear logic, how CSN/RRP logic for a multi-bit circular ring would be modified to support the multi-bit format, and to accommodate NMCSN and that different logic states or symbols may be implemented other than a "1" for set and a "0" for clear to differentiate between active and inactive and between a memory instruction and a non-memory instruction.

### B. NMCSN and PBSN Pointers for Tracking and Scheduling Long-Latency Information

So far, the structure and method for setting M-bits in M-ring 324 has been described. In the structure and method of the present invention a Predicted Branch Instruction Serial Number (PBSN) 318 pointer and a Non-Memory Committed Serial Number (NMCSN) pointer 319 are provided and used in conjunction with M-ring 324 to enable the CPU 51 to effectively and aggressively schedule long latency instructions, particularly load/store instructions referencing external memory. Both NMCSN and PBSN are stored in Pointer Register 313 within ICRU 301 as described.

NMCSN 319 points to the last "committed" instruction (as defined previously), but since M-bits for memory referencing instructions are cleared at the time of instruction issue, all memory access instructions are effectively ignored in M-ring 324 for the purposes of advancing NMCSN, therefore NMCSN advances more rapidly. Note that only advancement of pointer CSN 316 actually commits instructions. NMCSN is used only by Load/Store Unit 603 as will be described hereinafter. An instruction can be committed if it has completed without error and all prior instructions have been completed without error. NMCSN can advance past memory referencing instructions even if the memory referencing instructions are still active. This method may also be used to aggressively schedule other long latency instruction types that do not reference memory. When the CPU is initialized, NMCSN is initialized to 0 (zero).

PBSN 318 is the serial number of the earliest (oldest) unresolved predicted branch instruction. In the present exemplary embodiment, PBSN is determined by Watchpoint Unit 304. (Watchpoint Unit 304 is described in greater detail elsewhere in this specification.) An unresolved branch instruction is an instruction (and instruction sequence spawned from that instruction) that has been speculatively issued, begun executing, and possibly even completed execution before it is known for certain that the instruction should have been issued and executed. In other words, the conditions that would make execution of the instruction appropriate have not yet arisen in the processing flow at the time the instruction is issued. In the present inventive structure and method, whenever there are no active unresolved predicted branch instructions PBSN is made equal to ISN. PBSN is used in NMCSN advancement logic as a barrier to NMCSN advancement. NMCSN can never advance beyond the SN address of pointer PBSN or ISN, and in situations where there are no memory instructions, pointer NMCSN is equal to CSN. When the CPU is initialized PBSN is initialized to 0 (zero).

### C. Advancing NMCSN

NMCSN 319 is the memory-related operations counterpart of the CSN 316. In correspondence of A-ring for advancing CSN, there is an M-ring for advancing the NMCSN. The M-ring consists of 64 bits of M bits in a wrap-around manner. That is for the exemplary 64 bit M-ring, the bit following M-bit #63 is M-bit #0. An M-bit=0 means that the corresponding instruction is a long-latency instruction such as a memory-related instruction, for example, a load/store instruction.

In an exemplary CPU, the rule to advance the NMCSN pointer is similar to that of CSN as shown below. (1) Advance NMCSN up to, inclusive, ISN; (2) Advance NMCSN no more than eight instruction serial numbers in one cycle; (3) Advance up to, exclusive, the first "1" in the M-ring.

The rule for advancing NMCSN is modified when an "unfinished floating point operation" exception occurs in the floating-point unit (FPU) or a "data breakpoint exception" is detected from the load/store execution unit (LSU). In these two instances NMCSN is advanced by one serial number just as for CSN previously described. That is CSN - CSN + 1, and NMCSN - NMCSN + 1 under these conditions. PSU 300 is particularly concerned about unfinished floating-point operations and data breakpoint operation which require special pointer handling.

The implementation of the M-ring can be similar to that of A-ring. In fact, in the exemplary CPU, since NMCSN can only be advanced to the maximum(8, ISN, the next M-bit=1) simple hardware circuitry may be implemented to move NMCSN to the proper position as for CSN. (The expression "maximum (x, y, z)" means select the maximum value from among the values of parameters or expressions x, y, and z.) M-ring 324 can be implemented as eight 8-bit registers. At the M-ring read port 346 of these eight 8-bit registers, the registers of the surrounding NMCSN are read out and the content of these registers when read is brought into two separate 8-bit buses. Concatenating these buses into a 16-bit bus then shifting the bus by from 0-bits to 8-bits forms an 8-bit window of interest for advancing the old NMCSN. A "finding the first 1" circuit will yield the amount that NMCSN shall advance.

Correct maintenance of NMCSN and PBSN permits simple determination of the load/store or other memory referencing instructions that can be selected for execution without compromising precise state. Load/store instructions which can be selected for execution without compromising precise state are considered to be "in-range" for execution. Recall that precise state is maintained when (1) an instruction which generates an exception does not modify architectural state, (2) all instructions prior to the faulting instruction have completed modifications to architectural state, and (3) all instructions after the faulting instruction have not modified architectural state. LSU 603 also receives NMCSN 319 from ICPU 301 and PBSN 318 from Watchpoint Unit 304 to use in scheduling the long latency instructions.

### D. Load-Store Unit (LSU) within Data Flow Block

While implementation of several of the invention features of the invention pertain to general execution units, aggressive scheduling of Long Latency instructions benefits when particular structures are present to support the Long Latency in state schedule. For example, structures for aggressively scheduling load/store and other memory referencing instructions are provided. Those having ordinary skill in the art will, in light of the disclosure, appreciate how such testers could be implemented in other execution units not dedicated to local store operations.

The LSU supports both Relaxed Memory Model (RMO) and Total Store Ordering (TSO) modes that are defined in the SPARC-V9 Architecture Manual. The LSU is responsible for scheduling of both fixed and floating point Load/Store instructions. The LSU can make up to two requests each cycle to the Cache. Instruction ordering required to maintain precise state is managed by a set of protocol signals between the processor and the cache chips. The LSU contains a 12-entry reservation station. In RMO mode, load instructions are allowed to speculatively bypass store instructions. There is a three stage pipeline between the LSU and the Data Caches that supports split transactions. In the first stage, an instruction's address, opcode, and serial number are sent to the Data Caches. Also sent are some control bits used for speculative execution. In the second stage, a store instruction's data is sent from the LSU to the Data Caches. Also in the second stage, the Data Caches send back to the LSU the serial number and valid bit of the instruction that is going to complete in the next cycle. In the third stage, the Data Caches return the status and load data. On a cache miss, the Data Cache will return the data during an unused pipeline slot or it will assert a signal which opens up a pipeline slot for the data.

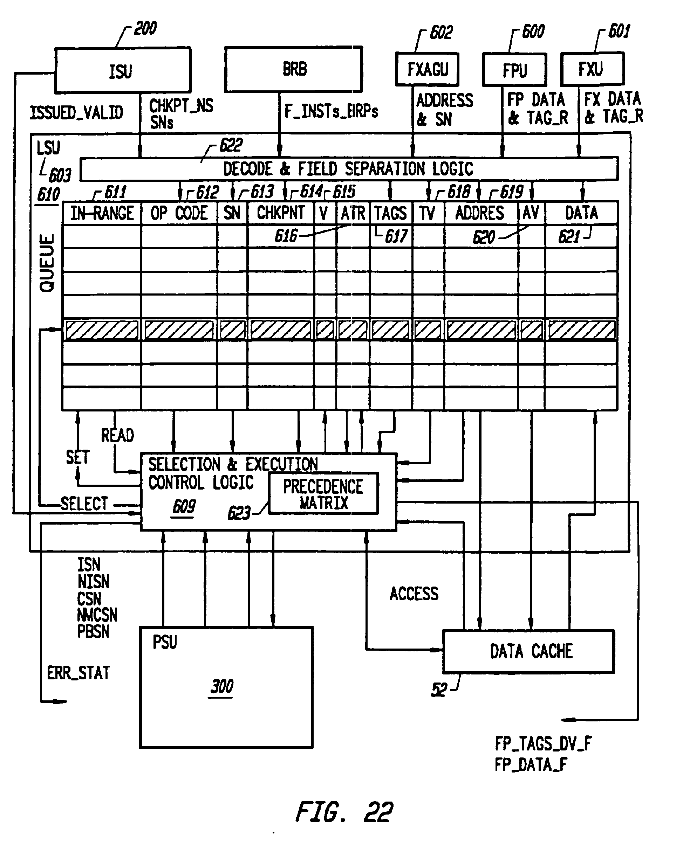

FIG. 22 shows a functional block diagram of Load/Store Unit (LSU) 603 which comprises Selection & Execution Control Logic Unit 609, and Instructon/Data Queue (IDQ) 610 for storing a variety of instruction and data related information, and Decode & Field Separation Logic (SSFSL) 620 for decoding signals from ISU 200, FPU 600, FXU 601, and FXAGU 602. More particularly, IDQ 610 comprises In-Range Bit field 611, Op-code filed 612, Instruction Serial Number (SN) filed 613, Checkpoint Number 614, Validity Bit filed 615, Attribute (ATR) field 616, Register Tag (TAGS) field 617, Tag Valid Field (TV) 618, Address field 619, Address Valid (AV) field 620, and Cache Data Field 621. Data cache 52 sends and receives addresses and data with IDQ 610.

When the LSU 603 receives an instruction, the decode and field separation logic 622 decodes it and determines whether the address will be contained in the immediate data field of the instruction, or whether the FXAGU 602 will have to compute the address. If the decode logic 622 determines that the address has to be computed by the FXAGU 602, then it clears the address valid bit. But, if it decides that the address is contained within the instruction, meaning that its immediate data within the instruction, then it sets the address valid bit to indicate that the address data is ready and available for the instruction, and that the instruction can be executed. Tags coming from the FPU and the FXU are handled in the same manner, so that the tag signals indicate whether the data is valid or not. The issued valid signal when the instruction gets stored in the reservation station or queue 610, the valid signal is cleared (not asserted) until the issued valid signal indicates that it was actually issued.

When the LSU 603 executes the instruction, it sends the data to the data cache 52 directly. When it is retrieving data from data cache 52, the data in our implementation is shown going into the selection and execution control logic which then sends out a signal containing the tag sends and the data valid bit indicating that the data is valid and it also sends out the data as we show it, so there are combined signals that come out. These are the FP_TAGS_DV_F signal, and the FP_DATA_F signals in FIG. 22.

The Selection Execution Control Logic 609 also gets access information and gives access information to the data cache 52. Some of that information will be trap information, the type of traps that are associated with memory operation, and outputs error signals (ERR_STAT) for use by PSU 300 in error detection.

Selection & Execution Control Logic Unit (SECLU) 609 is responsible for selecting instructions for execution in LSU. It deals with ordering constraints of loads, stores, atomic operations, and the like. For example, a younger load to address "X" cannot pass an older store to address "X". This type of load is marked as "strong" in the Attributes Array like a store. It initiates stores "in-order" and a store cannot be initiated until all previous loads and stores have completed. Finally, a store's serial number must be in-range. SECLU 609 contains logic that masks only the instructions that are valid, eligible (i.e, not currently being processed by the cache), have all of there dependencies met, and are a "weak" operation (e.g. a load) or are "in-range" and not constrained by a previous cache miss. The masked instructions are then processed by Precedence Matrix 623 which selects the oldest instructions from the set of instructions that meet the mask logic criteria.

SECLU 609 is also responsible for controlling a memory access. It sends commands to the caches and receives cache status information on completion of the access. It also puts the proper destination register tags on "load" data from the cache and keeps track of the attributes of an access in Attribute Array 616. These attributes include in-range, weak/strong (generally stores and atomics are "strong" and loads are "weak"), speculative access, and eligible to send to cache.

SSFSL 620 receives Instruction Packets from ISU 200 which include instruction op-code, instruction serial number, instruction checkpoint, and register tags, and decodes the information, selects the correct slot in IDQ 610 to store the information, and separates the information into the proper field. Each serial number entry and data associated with the SN is stored into an empty slot in the queue.

SECLU also receives pointer values (ISN, NISN, CSN, PBSN, and NMCSN) from PSU 300. CSN, PBSN, and NMCSN are particularly relevant to determining if the instruction serial number is in-range. SECLU 609 includes the logic that determines if an access is "in-range," that is if the serial number is greater than CSN and less than or equal to NMCSN as described. In-range information is forwarded to Attributes Array 616 and stored in In-range file 611 within SECLU. SECLU also contains logic to match an entry stored in the IDQ with data returning status and/or data from the cache for a given access. All valid entries within IDQ are monitored to see if they are in-range during that cycle and the attributes array is updated as required. Once a queue entry is in-range, it remains in-range until the queue entry is reused.

Checkpoint Field 614 contains the checkpoint number that corresponds to the access in a queue slice. New checkpoint number(s) can arrive from ISB 61 each cycle. Valid Bit Queue 615 holds a validity bit that is set if a memory access instruction is actually issued. This information comes from the ISB 61 during the instruction issue cycle. The bits can be reset if accesses are killed by the ISB. Address field 618 holds the addresses for all cache accesses. The serial number arrives in the IDQ address match logic before the address arrives in the Address Queue from the DFB 62 Address Generation Unit (FXAGU) 602. Attributes may be set in the Attributes Array 616 in response to the content of the control registers. For example, if the Program Order bit is set, then the "strong" bit will be set in the attributes section.

### 1. Identifying In-Range Memory Referencing (long Latency) Instructions

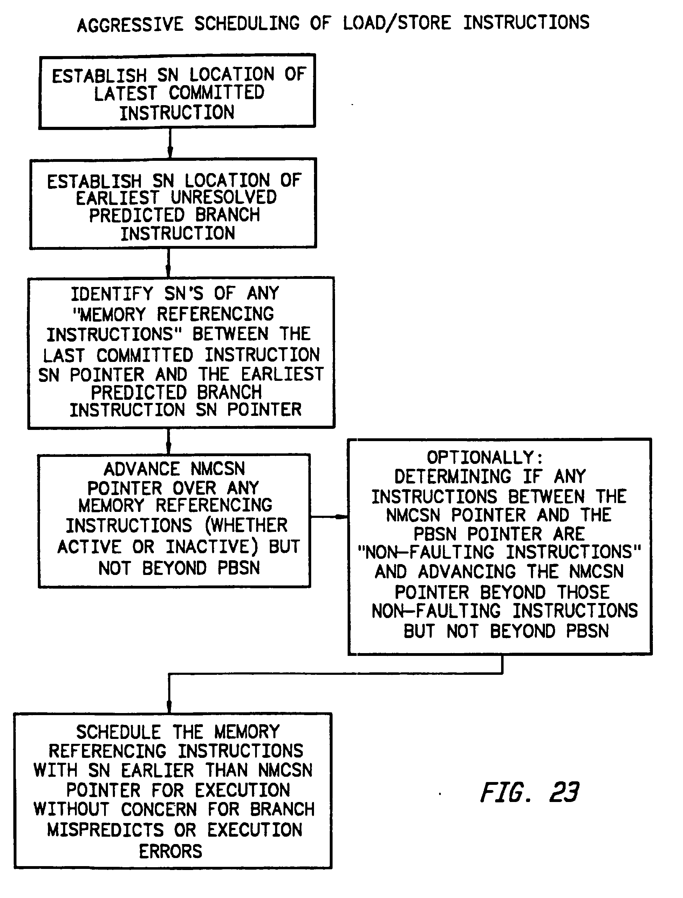

As described, SECLU 609 contains logic that determines whether an instruction is "in-range" in response to CSN and NMCSN from ICRU 301 and PBSN form Watchpoint Unit 304. The logic identifies instructions in a first-window having serial numbers between CSN and PBSN (CSN ₂^{•}first-window ₂^{•}PBSN) can be executed without concern for branch mispredicts, where the symbol "₂^{•}" indicates relative order in the Memory Instruction Ring rather than strict mathematical order. Instructions in a second, and possibly smaller "in-range" window having serial numbers between CSN and NMCSN (CSN ₂^{•}in-range ₂^{•}NMCSN₂^{•}PBSN) can be scheduled for execution without concern for branch mispredicts or execution exceptions. It is the memory referencing instructions that are "in-range" that can be identified to LSU 200 within DFB 62 for aggressive execution scheduling. FIG. 23 is a diagrammatic flow-chart of an embodiment of the inventive method for aggressively scheduling long latency instructions including load/store instructions while maintaining precise state.

### 2. Enhancement to the Basic Structure and Method For Aggressive Long Latency (Load/Store) Instruction Scheduling

In an enhancement to the basic method of the invention, rules can be implemented so that NMCSN ignores predetermined instructions known to be "non-faulting" instructions for purposes of advancement of the NMCSN pointer and improve performance by permitting an even more aggressive scheduling of load/store and other instructions that reference memory.

### IV. CHECKPOINTING

A Checkpoint is a "snapshot" of the machine state at known instant of time. Checkpoints provide method and structure for quickly restoring an earlier machine state to undo a speculative instruction sequence in the event of a mispredicted branch or execution exception. In an exemplary processor according to the present invention, checkpoints are made during the instruction issue cycle. In the present inventive method, the restoration of machine state based on restoration of a checkpoint is defined as a machine "backup."

In the present invention, checkpoints are created for several classes of instructions: (1) predicted program control transfer instructions such as branches and (2) instructions that may have the side-effect of modifying control register values.

Control transfer instructions (such as branches) are predicted and may result in program counter (PC) discontinuities. In the CPU 51 implementing the inventive structure and method, the processor makes a checkpoint for each predicted program control instruction in order to provide a quick machine backup if that program control instruction (branch or return type jump and link) is mispredicted. If the APC and NAPC values were not saved in these circumstances, it would be difficult to reconstruct the correct FPC, APC, and NAPC values without re-issue and re-execution of the program control instruction that was mispredicted. Since a checkpoint is created for each such program control instruction, the maximum number of checkpoints allowed in the machine limits the number of program control instructions which may be predicted and remain unresolved concurrently. The predicted program control instructions may be those such as the SPARC-V9 BPr, FBcc, FBPcc, Bcc, BPcc, and JMPL[rd=0] instructions described earlier.

Other types of instructions that result in program flow changes may also be checkpointe. These may include SPARC-V9 instructions such as CALL, JMPL, TCC, RETURN, DONE, and RETRY.

Checkpoints are also created for instructions that modify machine state including instructions which may have the side-effect of modifying control register values. Checkpointing certain control registers, allows the control registers to be modified speculatively. These include writes to the control registers in the control register file 800, such as the SPARC-V9 WRPR and WRASR instructions, and include register window control instructions, such as the SPARC-V9 SAVED, RESTORED, and FLUSHW instructions. However, not all control registers are checkpointed in order to reduce the amount of checkpointed state, without loosing performance.

Moreover, in the exemplary CPU 51, reads of control registers in the control register file 800 require checkpoints since, as described earlier, their data is stored in the watchpoint unit 304 so that it can then be made available to the FXU 601 for execution at a later time. These may be instructions such as the SPARC-V9 RDPR and RDASR instructions.

Furthermore, instructions which often result in an issue trap may require a checkpoint. These include window control instructions such as the SPARC-V9 SAVE and RESTORE instructions and unimplemented instructions, which for example, may be the SPARC-V9 LDD/LDDA and STD/STDA instructions.

Traps may also be entered speculatively and when so issued are checkpointed. Thus, checkpoints may be made for the issued instruction prior to an instruction that causes an execution trap (etrap) or issue trap in the manner described later. Moreover, checkpoints are made prior to the first instruction in a trap handling routine so that return can be made if the trap was taken speculatively.

For instructions which have side-effects which cannot be controlled speculatively, or instructions which so rarely cause exceptions and require large amounts of checkpoint information, a decision may be made not to checkpoint the instruction for reasons of efficiency, but instead to force a "syncing" of the machine prior to issue. That is, prior to issuing an instruction that has side-effects which cannot be controlled speculatively, the CPU must be at machine sync, meaning that all pending instructions have committed and been retired (ISN=CSN=RRP).

An important performance/design trade-off is made in the choice of which instructions are to be designated as machine syncing instructions and which instructions are to be checkpointed. The performance degradation for syncing is weighed against the additional logic complexity and processor area that would be associated with handling such instructions speculatively, including the chip area required for storing the checkpointed machine state.

Many different types of instructions modify data values in registers. Conventional checkpointing methods checkpoint register data values in order to restore register state. By comparison, in a machine implementing the method of the present invention, the CPU 51 is able to restore earlier register state without checkpointing actual register data values by instead checkpointing the register rename maps. Checkpointing the "register rename map" rather than the "register data values" is advantageous because it drastically reduces the amount of checkpointed state information stored in the CPU 51.

In the exemplary machine, supporting 64 concurrent instruction up to sixteen Checkpoints are available at any given time. In the exemplary embodiment, ISU 200 is limited (by hardware considerations) to allocating at most one checkpoint per issue cycle; however, in general, one or any plurality of checkpoints may be allocated in a cycle. Predetermined rules have also been implemented in the exemplary CPU 51, to restrict the types and combinations of instructions that may be issued during the same machine cycle. For example, in the exemplary CPU, only one control transfer instruction may be issued during a single machine cycle, so that only a single checkpoint is needed to save state for that cycle. This checkpoint limitation means that in some cases (depending on what type instructions are waiting in the issue window) the maximum number of instructions (e.g. 4) cannot be issued during the cycle. More or fewer checkpoint can be provided, the number being selected based on such factors as the number instructions requiring checkpointing that will be outstanding concurrently in the machine.

In the exemplary embodiment, Active Instruction Ring 312 supports as many as sixty-four instructions concurrently. As described hereinafter, the inventive structure and method provides for certain instruction types to be checkpointed, and optionally provides for checkpointing arbitrary instruction types at predetermined instruction cycle time-out intervals in response to a TIMEOUT_CHKPNT signal from ISU 200. Therefore, the number of checkpoints supported need be no greater than the number of instructions supported by Active Instruction Ring 312 and the number may generally be fewer. In the exemplary CPU 51, sixteen checkpoints are allocatable and each of these checkpoints is a machine resource that is recovered after the instruction causing the checkpoint is retired.

In the exemplary CPU 51, checkpoint data (the machine state) is saved locally throughout the CPU 51 in checkpoint storage units in response to the DO_CHKPT signals to cut down on chip routing and to improve performance. However, those skilled in the art will recognize that the checkpointed data could be stored off chip.

Each of the checkpoint storage units has 16 addressable storage elements or entries. Each storage entry corresponds to one of the 16 checkpoint numbers described later. Thus, referring to FIG. 6, the contents of the APC and NAPC registers 113 and 114 (CHKPT_PC and CHKPT_NPC) are stored in the PC checkpoint storage unit 107 by the PC logic 106 in response to the DO_CHKPT signal. Similarly, the control register contents (CHKPT_CNTRL_REG) are stored in the control register checkpoint storage unit 817 by the control logic 816, as shown in FIG. 17. Moreover, as shown in FIG. 16, data representing the rename maps (CHKPT_MAP) of each of the FXRFRN 604, the CCRFRN 610, and the FPRFRN 605 are stored in a checkpoint storage unit 616 and data representing the freelist (CHKPT_FREELIST) of the freelist logic 701 are stored in the freelist checkpoint storage unit 702. And, as will be described later, certain contents of the trap stack unit 815 are also checkpointed.

The ISU 200 is responsible for determining when a checkpoint is to be formed. I does so by decoding the fetched instructions it receives from the BRB 59 to determine if any are of the type just described that need to be checkpointed. And, as explained later, it also determines when to form a checkpoint when the PSU 300 indicates with the TIMEOUT_CHKPT signal that a checkpoint should be made after the occurrance of a predetermined number of machine cycles. As a result, the ISU 200 generates DO_CHKPT signals which indicate that a checkpoint is to be formed and specify the checkpoint number (explained in greater detail later) for the checkpoint.

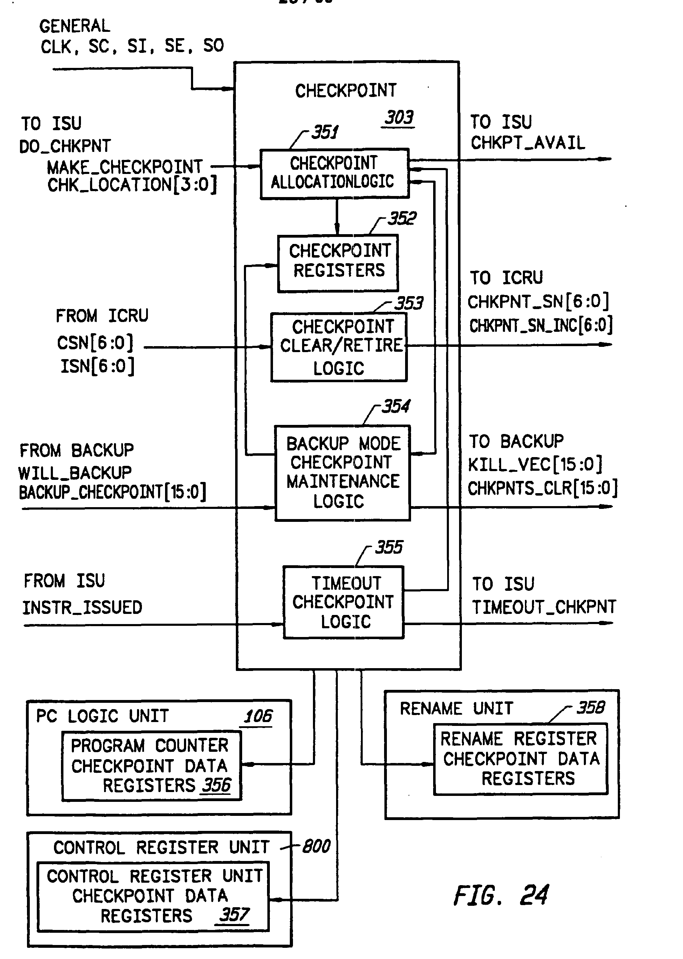

FIG. 24 is a functional block diagram of Checkpoint Unit 303 within PSU 300. Assertion by ISU 200 of DO_CHKPNT signals instructs Checkpoint (CKPT) 303 to make checkpoint(s) for one or more instructions, and which of the instructions issued in instruction slot(s)0-3 required the checkpoint. Since no checkpoints can be allocated unless at least one free checkpoint register is available, CKPT 303 must send a CHKPT_AVAIL signal to ISU 200. CHKPT_AVAIL which informs ISU that at least one checkpoint is available for allocation, and informs ISU of the checkpoint number so that the checkpoint number can be associated with each instruction and incorporated into the checkpoint number (CHKPTs) formed by ISU 200 and forwarded to DFB 62. These signals would precede the DO_CHKPNT signal issue by ISU 200. If no checkpoints are available for allocation, instruction issue by ISU stalls until checkpoint resources become available. In simplified terms, stored checkpoints are only used if it is necessary to recover from execution exceptions or mispredictions, otherwise they are deallocated and the storage space freed for reuse. (Allocation and deallocation of machine resources, including checkpoints, is described in detail hereinafter.) In an enhancement to the basic inventive structure and method, described hereinafter, timeout checkpoints are also formed independent of the decoded instruction type when a predetermined number of machine cycles or alternating a predetermined number of instructions have issued, have expired without checkpoint formation.

Checkpoint Unit 303 keeps track of the checkpoints, allocates checkpoints when ISU 200 instructs it to, and frees checkpoints when they are no longer needed. If the Committed Serial Number is greater than the Serial Number (CSN>SN) of checkpoint i+1, then checkpoint i can be retired because in accordance with the inventive method and structure that permits restoring machine state at any instruction boundary, it is never necessary to backtrack the machine to an instruction sequentially earlier than a committed instruction. PSU 300 also instructs the rest of the system when it allocates or frees a checkpoint so those system components can reuse their local data storage areas used for the retired checkpoint. Checkpoint Unit 303 also tells ISU 200 how many checkpoints are free for allocation. The use of Checkpoints are described in greater detail with respect to the Backup - and Backstep - Units hereinafter.

Checkpoint 303 has five main functions: First, it controls the allocation of checkpoints, as requested by ISU 200 through the maintenance of a list of checkpoint data register structures (CHKPNT_REG_i) within Checkpoint Register Unit 352 in response to DO_CHKPNT signals from ISU 200. DO_CHKPNT specifies that one or more checkpoints are to be formed and their respective checkpoint number location(s) (e.g. 0-15) when control transfer instructions are issued. In an enhancement to the inventive structure and method, TIMEOUT_CHKPT is generated by Checkpoint 303 and sent to the ISU 200 to form a checkpoint at predetermined timings relatively independent of instruction type as described hereinafter in an enhancement to the basic checkpointing method. This Timeout checkpoint is provided to establish and limit the maximum number of cycles it would take to undo the effects of instructions for which no checkpoints were formed. (Time-out checkpoint formation may be delayed or canceled when a checkpointable instruction type is to be issued in the same instruction window.)

Second, checkpoint retires (clears) checkpoint(s) based on CSN advancement past a given checkpoint (n) and the temporally next checkpoint (n+1). The mechanism used to determine CSN has passed a specific checkpoint number is a comparison of CSN with the serial number stored in the checkpoint register. The serial number stored in the checkpoint register is the serial number of the instruction after the instruction that made the checkpoint. In response to ISN and CSN from ICRU 301. For example, checkpoint n can be retired only if CSN has advanced past checkpoints n and n+1.

Third, Checkpoint 303 indicates to ISU 200 what is the next checkpoint that should be allocated through the signal CHKPT_AVAIL sent to ISU 200, including whether checkpoints are available for allocation by ISU and the checkpoint location number(s). Fourth, Checkpoint 303 stores instruction serial numbers (SN) corresponding to an allocated checkpoint, and provides both SN and SN+1 associated with a checkpoint when requested by other units particularly to ICRU 301. Fifth, it participates in executing machine Backups by generating an instruction kill vector (KILL_VEC) which indicates to Backup Unit 402 within Backtrack Unit 305 which of the outstanding valid checkpoints to kill, and by indicating to ICRU 301 by signals CHKPNT_SN and CHKPNT_SN_INC which checkpoints can be retired in conjunction with the machine backup. (Machine Backup is described in greater detail hereinafter.)

### A. Structure of Checkpoint Allocation Register

Checkpoint Allocation Register 352 structure is shown diagrammatically in Table 1. The first six bits are status bits. Bit-V denotes the validity (allocation) of the checkpoint. Bit-CP (checkpoint passed) indicates whether CSN has passed the SN of this checkpoint, Q denotes one of the 5 states to keep track of CSN advancement, and GT (greater than) indicates whether CSN is greater than the serial number of the checkpoint at allocation. Bit-GT is used to determine when CSN has passed this checkpoint. On boot-up, bits V and CP should be set to zero except at Checkpoint location 0 where Bit-V is set to "1" and Bit CP is set to "0" for proper functionality. The NSN field indicates the next serial number following the checkpointed serial number. In this implementation, a checkpoint number is not saved, rather setting the V-bit in the checkpoint data structure for location "i" indicates that checkpoint "i" has been allocated. The possible states for the checkpoint register (CHKPNT_REG_) are described in Table 2. In the exemplary CPU, Bit-Q is reset to either '000' or '001' during checkpoint allocation. Bit-Q changes state based on CSN advancement around A-ring 312. Table 3 show Q-bit states and transition.

**Table 1. Structure of Exemplary Checkpoint Allocation Registers (CHKPNT_REG_i).**

| | 1-bit | 1-bit | 3-bit | 1-bit | 6-bit | | |
|---|---|---|---|---|---|---|---|
| 0 | V | CP | Q | GT | NSN | | |
| 1 | V | CP | Q | GT | NSN | | |
| | . | . | . | . | . | . | . |
| | . | . | . | . | | | |
| | . | . | . | . | | | |
| 14 | V | CP | Q | GT | NSN | | |
| 15 | V | CP | Q | GT | NSN | | |

**Table 2. Possible States for Exemplary Checkpoint Register (CHKPNT_REG_i).**

| V | CP | GT | Description |
|---|---|---|---|
| 0 | X | X | Checkpoint has not been allocated. CP and GT are not valid. CP is always set to zero if the checkpoint is not active. |
| 1 | 0 | 0 | Checkpoint has been allocated. CSN is less than this checkpoint serial number at allocation, and CSN has not yet advanced past the checkpoint. |
| 1 | 0 | 1 | Checkpoint has been allocated. CSN is greater than the checkpoint serial number at allocation, and CSN has not yet advanced past the checkpoint. |
| 1 | 1 | x | Checkpoint has been allocated. CSN has passed the checkpoint. GT is not valid (don't care). If the next checkpoint is also in "11X" state, then this checkpoint can be retired. |

**Table 3. Exemplary Q-bit States and Transitions**

| Q-State | State Description |
|---|---|
| 000 | Initial state of a currently formed checkpoint if 0 < CSN < 32 during checkpoint allocation. |
| 001 | Initial state of a currently formed checkpoint for 31 < CSN < 64 during checkpoint allocation. |
| 010 | State of a checkpoint where CSN has advanced across the 63/0 boundary once since allocation. |
| 011 | State of a checkpoint where CSN has advanced across the 63/0 boundary twice since allocation. |
| 1XX | State of a checkpoint where CSN has advanced across the 63/0 boundary twice, and CSN is currently less than 32. X indicates don't care. |

### B. Checkpoint Allocation

On allocation of a checkpoint for an instruction SN, Checkpoint Allocation Logic Unit 351 sends a signal to Checkpoint Register and Control Unit 352 which sets the V-bit to "1" in CHKPNT_REG_i to "1" to indicate that checkpoint "i" is valid and has not been retired and sets the CP-bit to zero. The checkpoint which is to be allocated is determined in CAL 351 by the CHKPT_AVAIL signal sent to ISU 200 which tells ISU the next checkpoint number(s) available for allocation (CHKPNT_SN) and by DO_CHKPNT from ISU which includes a make checkpoint enable signal and identifies the instruction serial number for which the checkpoint is made (CHK_LOCATION). Bit-Q is written to indicate the location of CSN at the time the checkpoint is allocated as shown in Table 3 below. This information is used to detect CSN transition from around the ring (e.g. from location 63 back to location 0). The checkpoint which is allocated is determined by a signal DO_CHKPNT which identifies the checkpoint serial number and serves as an enable signal. In addition, the serial number corresponding to the checkpoint is calculated by Checkpoint Allocation Logic Unit 351 but only the serial number incremented by one (NSN=SN+1) is stored in the register. Serial number NSN is used in two different conditions. First, NSN becomes an incremented checkpoint serial number signal (CHKPNT_SN_INC) on data bus to ICRU 301. Second, NSN is used to determine whether faulting instructions lie in the instruction slot following the checkpoint Saving NSN (SN+1) rather than SN in the register saves logic and speeds up generation of signals that identify the serial number after the checkpoint. Alternatively, SN itself could be stored in the register and logic provided to generate the incremented serial number signal.

The following checkpoint allocation procedure is exemplary. If the make checkpoint signal is asserted (DO_CHKPNT), then the V-Bit field is set to "1" (CHKPNT_REG_i[V_field] =1) and the CP_bit filed is cleared (CHKPNT_REG_i[CP_field] =0). Then the instruction serial number for which the checkpoint has been created is derived from the encoded four-bit checkpoint location vector and stored in the checkpoint serial number field (CHKPNT_REG_i[SN_field]). For example, in an embodiment of the CPU 51 '0000' designates checkpoint location NISN; '0001' designates NISN+1: '0011' designates NISN+2; '0111' designates NISN+3; and '1111' designates NISN+4.

### C. Checkpoint Retirement

Checkpoints are cleared or retired in the Checkpoint Clear/Retirement Logic Unit 353. Checkpoint 303 will only require as many checkpoints per cycle as are requested by ISU 200. A checkpoint is retired by clearing the V-bit field in Registers 352 in response to CSN passing the current checkpoint (n) and the next checkpoint (n+1). Checkpoint Allocation Logic Unit 353 maintains a pointer called OLDEST_ACTIVE_CHECKPOINT which is used to point to the checkpoint which will be retired in Checkpoint register 352. The checkpoint retirement procedure is as follows. A signal called "CSN_PASSED" is generated in Retire Logic 353 by computing the difference between the serial number stored in the checkpoint (CKPSN) and the committed serial number (CSN) pointer (e.g. CKPSN-CSN). CSN is maintained in ICRU 301 and sent to Checkpoint Unit 303 each cycle. Checkpoints can only be retired when CSN advances past a given checkpoint (n) and the temporally next checkpoint (n+1), or if there is a machine backup past the checkpoint serial number.

In one embodiment of the inventive structure and method, CSN advancement past the checkpoints is determined by providing logic that simultaneously compares CSN with all checkpoint serial numbers. In making the comparison, the wrap around character of A-ring 312 is considered (modulo-ring length) so that simple greater than tests are may be insufficient to determine whether CSN has passed a checkpoint serial number is some cases.

### D. Checkpoint Maintenance On Machine Backup

In response to receiving WILL_BACKUP and BACKUP_CHECKPOINT signals from Backtrack 305 that tell Checkpoint Unit 303 to prepares a KILL_VEC signal for the beginning of the next machine cycle. KILL_VEC kills instructions that have not been committed. The instructions to be killed are derived from the BACKUP_CHECKPOINT signal which specifies the instruction serial number of the instruction at the checkpoint, and ISN which indicates the last committed instruction. All those instructions between CSN and the backup checkpoint will be killed.

In one embodiment of the CPU 51, BACKUP_CHECKPOINT is a signal generated by the Backup Unit 402 within Backtrack 305 and tells the CPU 51 which checkpoint to backup to in order to restore state. An instruction kill vector signal (KILL_VEC) is also generated by Backtrack to indicate which of the instructions between ISN and the backup checkpoint are to be killed. For example, the instruction kill vector may be a multi-hot signal with the hot bits identifying the instructions to be killed. Other signal forms may alternatively be used.

Checkpoint 303 provides checkpoint register information (CHKPNT_SN) that identifies the checkpoint serial number to ICRU 301 so that it can adjust ISN during a backup. Checkpoint Unit 303 also provides the serial number is used by ICRU 301 to adjust ISN when an unfinished floating-point exception or a data breakpoint exception are detected (CHKPNT_SN_INC).

### E. Timeout Checkpoint Enhancement

In conventional checkpointing techniques, checkpoint is made based on decoded attributes of an instruction. Checkpoints are made only for certain instruction attributes so that the number of instructions between successive checkpoints (within a checkpoint boundary) is unbounded. When a instruction execution exception occurs, the CPU 51 may have to expend many machine cycles to restore CPU 51 state prior to the faulting instruction. As a consequence, the time the CPU 51 spends re-executing or undoing instructions before reaching the faulting instruction becomes a function of the instruction window size and the number of instructions within the checkpoint boundary. Instruction window size in this context means the maximum number of instruction allowed to be outstanding in the CPU 51 at any time. (In the exemplary CPU 51, up to sixty-four instructions may be outstanding in the machine at any time.)

In this enhancement to the inventive structure and method, a checkpoint is made, not based (only) on decoded instruction attributes, but rather (in addition) due to a timeout condition in the CPU 51. The timeout condition is based on the number of instruction issue cycles that have passed without forming a checkpoint. For example, no checkpoint has been formed because recently issued instructions have not been of the type that are conventionally checkpointed. Timeout checkpointing limits the maximum number of instructions within a checkpoint boundary. As long as the instruction window size is greater than the maximum number of instructions within a checkpoint boundary, the processor can restore checkpointed state faster than conventional instruction decode based checkpoint techniques in the event of an exception. Furthermore, the inventive checkpointing enhancement eliminates the CPU 51 state restoration dependency on instruction window size.

Timeout Checkpoint may be used in a structure and method implementing conventional checkpoints, or the inventive rename map checkpointing. Furthermore, timeout checkpoints may be used with conventional processor backup techniques as well as with the inventive backup and backstepping structure and method.

Timeout Counter 355 receives INSTR_ISSUED signal from ISU 200 that indicates that at least one instruction was issued during that machine cycle and counts the number of instructions issue. When the number of instruction issue cycles that have passed without forming a checkpoint (either a checkpoint based on instruction decode or an earlier timeout checkpoint) exceeds a predetermined count, it sends TIMEOUT_CHKPNT signal to ISU that a timeout condition has occurred, and that a checkpoint should be formed. The ISU 200 then generates a DO_CHKPT signal to indicate that a checkpoint should be formed. As indicated earlier, this signal may also be generated when ISU 200 determines that an issued instruction is of the type that requires a checkpoint. Counter 356 is reset by DO_CHKPNT signal from ISU if and only if a checkpoint is actually formed. The maximum number of instructions allowed within a checkpoint boundary is determined by the maximum instruction issue rate (maximum number of instructions issued per machine cycle) and the timeout value of the counter.

Variations on the timeout checkpoint may be advantageous. For example, if one of the instructions due to be issued in the same cycle as the timeout checkpoint is due, the instruction decode based checkpoint may be preferentially made and serve to reset the timeout counter. Furthermore, if all checkpoints are allocated at the time a timeout checkpoint becomes due, the timeout checkpoint may be delayed according to predetermined rules (e.g. delay one cycle) rather than stalling the machine as might be required to maintain precise state for an instruction decode type checkpoint.

### F. Maintaining and Restoring Precise State at Any Instruction Boundary

The method of the present invention permits maintenance of precise state at any instruction boundary and also minimizes the amount of information required to restore state at the instruction boundary. As used in here, an "instruction boundary" corresponds to the point in the sequential set of instructions just before (or just after) an instruction is issued. Each and every instruction creates an instruction boundary.

Conventional instruction checkpoints permit maintenance of precise state at checkpoint boundaries (i.e. only at checkpointed instructions) in the processor but conventional checkpointing has not been used at every instruction, and even if so used would hinder rather than improve CPU 51 performance because for a machine issuing multiple instructions per machine cycle, an equal multiple of checkpoints would be required for each cycle. In the present invention various instruction issue rules are implemented so that only one instruction ever need be checkpointed each cycle, and the backstep method and structure provides the finer instruction level restoration. Instruction checkpoints are used to preserve and later restore architectural (machine) state, such as state which may be incorrectly modified by a speculative instruction sequence.

Conventional checkpointing that maintains precise state at checkpoint boundaries is known; however, conventional checkpointing when used as the only method of capturing and later restoring machine state does not permit maintenance of precise state at the more closely spaced instruction boundaries during speculative out-of-order execution.

### G. Method of Syncing Machine for Predetermined Instructions to Reduce Amount of Checkpointed Data

Checkpoints are a fixed size independent of the instruction type or operands for which they are created. For example, in a machine (CPU) having instructions that may alter 200 state values, every checkpoint created must store those 100 state values even if the instruction itself will at most modify eight values. In an embodiment of the invention, novel structure and method are implemented to reduce the amount of checkpointed data in all checkpoints by taking into account the amount of state modified by each particular instruction and the statistical frequency which the each particular instruction occurs in typical processing.

Using this design technique, an optimum checkpoint size may be determined and implemented in the machine. First, the state modifiable by each instruction is determined. Second, the statistical frequency at which each particular instruction occurs for some representative nominal processing task is determined. The state storage requirements for each instruction are examined. The design goal is to identify those instructions that are rarely issued and require relatively larger amounts of checkpoint storage than more frequently occurring instructions. Any linear or non-linear optimization technique may be used to determine which instructions to checkpoint, and non-mathematical rules based on some maximum checkpoint storage may also be used to achieve a reduction in checkpointed state. A simplified example is described below:

### Simplified Example of Checkpointed State Reduction

| States that may be modified by any Instruction in the Instruction Set | | | | | | | | | |
|---|---|---|---|---|---|---|---|---|---|
| state1 | state2 | state3 | state4 | state5 | state6 | state7 | state8 | state9 | state10 |

| States that may be modified (mod) by Instruction A: | | | | | | | | | |
|---|---|---|---|---|---|---|---|---|---|
| mod | - | - | mod | - | - | - | - | - | - |

| States that may be modified (mod) by Instruction B: | | | | | | | | | |
|---|---|---|---|---|---|---|---|---|---|
| mod | - | - | - | - | - | - | - | - | - |

| States that may be modified (mod) by Instruction C: | | | | | | | | | |
|---|---|---|---|---|---|---|---|---|---|
| - | mod | mod | - | mod | mod | mod | - | mod | mod |

| States that may be modified (mod) by Instruction D: | | | | | | | | | |
|---|---|---|---|---|---|---|---|---|---|
| - | - | - | - | - | - | - | mod | - | - |

If each of instructions A, B, C, and D are checkpointed then every checkpoint must store all of states 1-10. However, if Instruction C is rarely executed so that the CPU 51 slowdown necessitated by syncing the machine during execution of that instruction occurs only rarely, then not checkpointing Instruction C reduces the checkpointed state from ten states to three states: state 1, state 4, and state 8.

Syncing the machine involves delaying issuance of any instruction that requires machine sync until pending instructions have committed and been retired and then executing instructions requiring sync sequentially and in-order. When the machine is run in sync mode, instruction checkpointing is not required to maintain precise state because exception conditions are identified before writeback to state is made.

### H. Method of Checkpointing Register Rename Map to reduce amount of Checkpointed Data

Furthermore, conventional checkpoints contain large amounts of information because the entire state of the machine at the time the checkpoint was generated is stored so that machine state can be restored to recover from a mispredicted branch, fault, execution error, or other anomaly in processing. No attempt is made in conventional checkpointing methods to modify only the state that changes.

For example, if conventional checkpointing methods were applied to each instruction in the CPU 51 that permitted sixty-four concurrently issued instructions, then up to sixty-four checkpoints would have to be maintained, one for each of the instructions, and as many as four checkpoints would have to be created per machine cycle in a four-issue machine. Although the particular type and amount of state stored in a conventional checkpoint will depend on the CPU 51 architecture and the instruction set, each conventional checkpoint contains state information for every state that may be modified by any instruction. That is, a conventional checkpoint contains state information for every modifiable state independent of whether the instruction can modify that state or not. In conventional checkpointing methods, all of the machine status required to restore machine state are rewritten for each checkpoint, not just the status that changes from checkpoint to checkpoint.

In the inventive method, registers are renamed and the Rename Maps are stored in a register rename map. Register renaming is described elsewhere herein. Register renaming is a method of mapping architectural registers to greater number of physical registers that serves to effectively increase the number of architectural registers available for processing. In the inventive method, the amount of storage required for a new checkpointing method is reduced by checkpointing the renamed registers rather than the data values themselves. As described, certain predetermined instructions that would require large amounts of checkpointed state to maintain precise state cause the machine to sync so that all previously issued instructions have executed, committed, and had their resources retired (ISN=CSN=RRP). If the synced type instruction faults is mispredicted, then state will not be modified and either the fault can be handled or an alternative instruction path can be pursued before the instruction execution results are permitted to modify state.

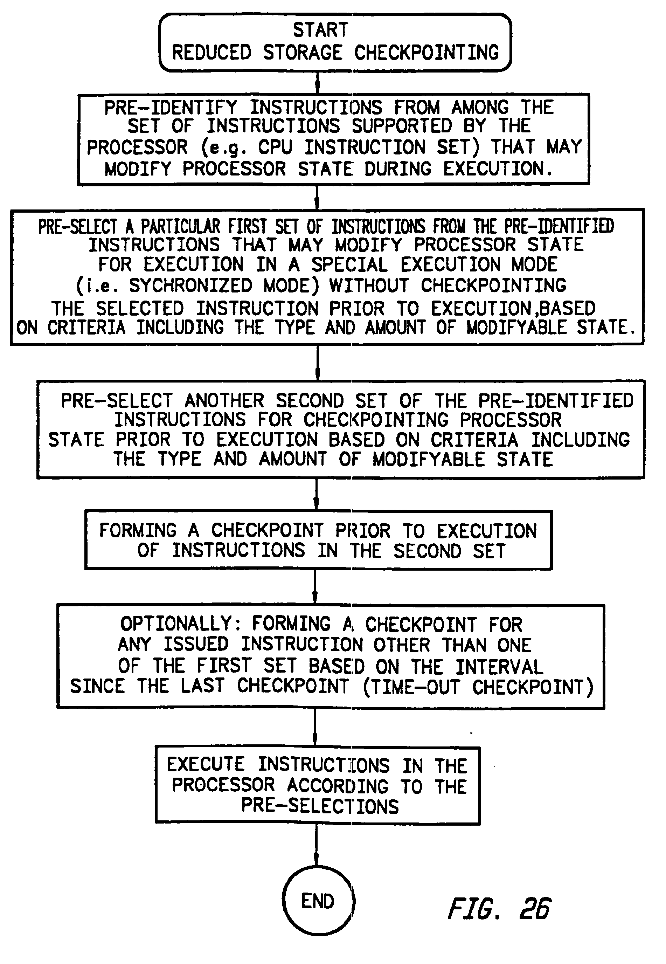

All state modified by non-sync requiring instructions which may modify control registers are checkpointed so that machine state may be quickly restored. All state modified by the instructions is checkpointed and stored locally within the CPU 51 as described. Furthermore, state for execution of instructions which do not modify control registers may be restored by backstepping the CPU 51 as described elsewhere in this specification. FIG. 26 is a diagrammatic flow-chart of an embodiment of the inventive method for checkpointing including an optional checkpointing enhancement applicable to other checkpointing methods for forming a time-out checkpoint.

### V. RECOVERY FROM MISPREDICTS AND EXCEPTIONS

As was alluded to earlier, at times, program control mispredictions and exceptions may occur in the instruction pipeline of FIG. 5. These errors must then be detected and an handle so as to return the CPU 51 to the state it was in just prior to the instruction that caused the misprediction or exception.

### A. Misprediction Detection with Watchpoint for Simultaneous Plural Unresolved Branch / Jump-and-Link Instruction Evaluation

For the processors which can execute instructions speculatively, branch direction (taken or not-taken), or branch address (target address or address next to the branch instruction) can be predicted before they are resolved. Later, if these predictions turn out to be wrong, the CPU 51 backs up to the previous state, and then begins executing instructions in the correct branch stream. In conventional processors, plural branches are often ready to evaluate in one cycle; however, these conventional processors evaluate only a single branch prediction per cycle. Not-selected branch evaluations which are ready for evaluation must therefore be delayed. Delaying branch evaluations detracts from CPU 51 performance and evaluating branches as early as possible can significantly improve performance.

The inventive Watchpoint structure and method provides several advantages over conventional techniques. First, it can monitor or watch a plurality of predicted branch or jump-and-link instructions simultaneously. Second, it can grab a plurality of condition-code data or calculated jump-and-link (JMPL) addresses for which predicted branch or jump-and-link instructions are waiting by simultaneously monitoring or watching data forward buses from a plurality of execution units. Third, it can generate a plurality of misprediction signals of branch or jump-and-link instructions simultaneously. Fourth, it can store alternate branch address or predicted jump-and-link address in a single shared storage area. Fifth, it sends the correct branch address or jump-and-link address for instruction fetch when misprediction is detected by Watchpoint.

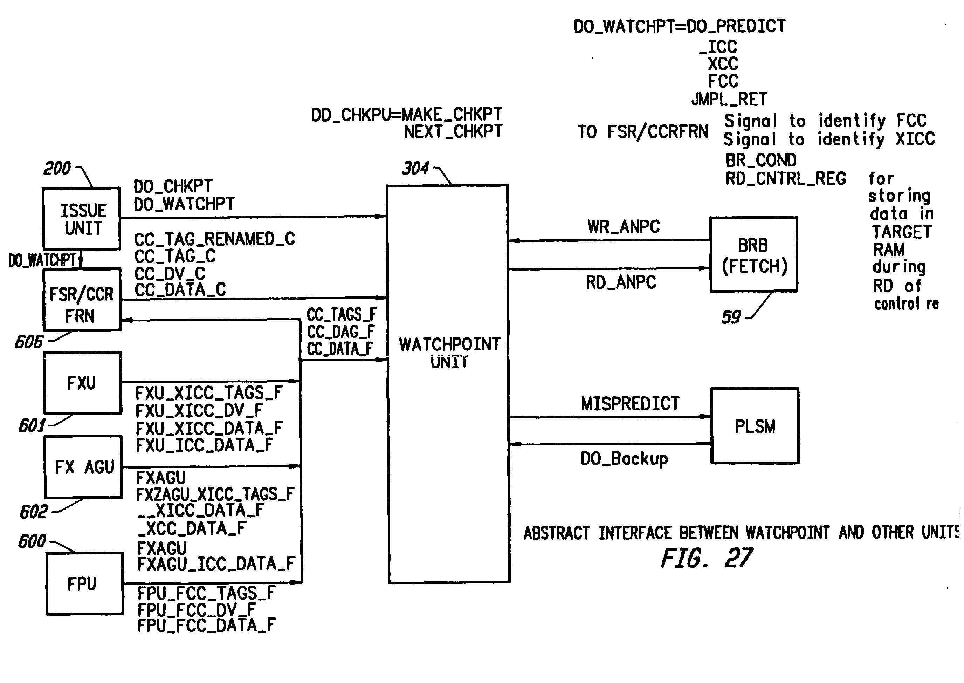

Referring to FIG. 27, Watchpoint (WPT) 304 is responsible for monitoring the execution and prediction status of each issued checkpointed control transfer instruction. Therefore, WPT 304 receives a DO_CHKPNT signal along with a DO_WTCHPT signal that includes condition code information for branch, annulling branch, and jump-link instructions including condition information for Br Xcc, condition Br Icc, condition Br Fcc, JMPL rt(I) (rd=0), and read/write to control registers (except CCR and FSR registers). Condition code information is later used by WPT 304 in determining whether an instruction sequence was properly predicted or needs to be undone. WPT 304 is discussed in greater detail elsewhere in this specification.

Watchpoint Unit 304 is responsible for monitoring or watching execution completion signals arriving over the data forward busses from DFB 62 and informing other CPU 51 units when predetermined events are detected, such as branch mispredictions for example. Watchpoint Registers 491 within Watchpoint Unit 304 are multipurpose. They check branch predictions, JMPL predictions, and supply a correct branch/JMPL address to BRB 59 for refetching instructions after a backup when the original prediction was incorrect. They are called "Watchpoint" registers because they sit on data forward distribution buses and monitor results from the several execution units (FXU, FPU, LSU, and FXAGU). There are sixteen watchpoint registers, one for each checkpoint.

An exemplary Watchpoint Unit 304 is described with respect to a CPU having an integer execution unit (FXU) and integer and address generation execution unit (FXAGU) and a floating-point execution unit (FPU). Those workers having ordinary skill in the art, in light of this description, will realize that more, fewer, or different execution units may be implemented. In particular, to match the execution units of the exemplary CPU 51, an additional FXU and FXAGU would be provided.

FIG. 27 shows a functional block diagram of the major functional blocks within Watchpoint Unit 304. Fetch Unit (FETCH) within BRB 59 fetches instructions and feeds them to ISSUE 200, and also predicts branches and JMPL's based on a decode of the instruction. Issue 200 sends DO_CHKPNT signals to Watchpoint 304 and to FSR/CCRFRN 606 and DO_WTCHPT signals to Watchpoint 304. FSR/CCRFRN is responsible for condition code renaming (CC-renaming). DO_CHKPNT includes a MAKE_CHKPNT signal that initiates checkpoint formation and a NEXT_CHKPNT signal that identifies the checkpoint number to be formed. The DO_WTCHPT signal informs Watchpoint 304 that a branch or JMPL instruction has been issued and identifies the branch type, the condition field in the issued instruction, the Condition Code (CC) tag, and the Alternate Next Program Counter address/predicted jump and link instruction address (ANPC/predicted JMPL address) of the issued instruction. FETCH also sends branch/JMPL addresses to Watchpoint 304 in the form of the WR-ANPC signal within the DO_WTCHPT signal. When a branch or JMPL or other control transfer instructions (branch/JMPL) is issued, ISU 200 sends a branch/JMPL instruction issued signal (DO_WTCHPT) signal for each predicted branch or JMPL issued which includes the signal JMPL. WP_ANPC is written into the Target-RAM and indicates the target FPC computed by PC Logic 106. The ANPC is determined during instruction decode of predicted branch and JMPL instructions. For a JMPL instruction, the WP_ANPC sent to Watchpoint within the DO_WTCHPT signal is the predicted target FPC. For a predicted branch instruction, the WP_ANPC sent to Watchpoint within the DO_WTCHPT signal is the alternative FPC, that is the FPC for the alternative branch direction. The RD_ANPC output from the ANPC Output Logic within Watchpoint is used during a Backup to compute FPC, APC, and NAPC when a misprediction occurs. The Condition Code (CC) portion of Rename 600 (referred to as FSR/CCRFRN 606) manages CC register renaming and sends CC-renaming signals to Watchpoint 304 after instruction issue. The CC-renaming signals include CC_TAG_RENAMED_C, CC_TAG_C, CC_DV_C, and CC_DATA_C as defined below.

Each of the execution units (FXU 601, FXAGU 602, and FPU 600) sends condition code tag (CC_TAGS_F), condition code data valid (CC_DV_F), and condition code data (CC_DATA_F) over the data forward busses to both Watchpoint 304 and to FSR/CCRFRN 606. Tag, data valid, and XCC and ICC data signals from FXU include FXU_XICC_TAGS_F, FXU_XICC_DV_F, FXU_XCC_DATA_F, and FXU_ICC_DATA_F. Signals from FXAGU include FXAGU_XICC_TAGS_F, FXUAG_XICC_DV_F, FXAGU_XCC_DATA_F, and FXAGU_ICC_DATA_F. Signals from FPU include FPU_FCC_TAGS_F. FPU_FCC_DV_F, and FPU_FCC_DATA_F. Examples of XCC, ICC, and FCC condition codes and formats are described in the SPARC-V9, for example.

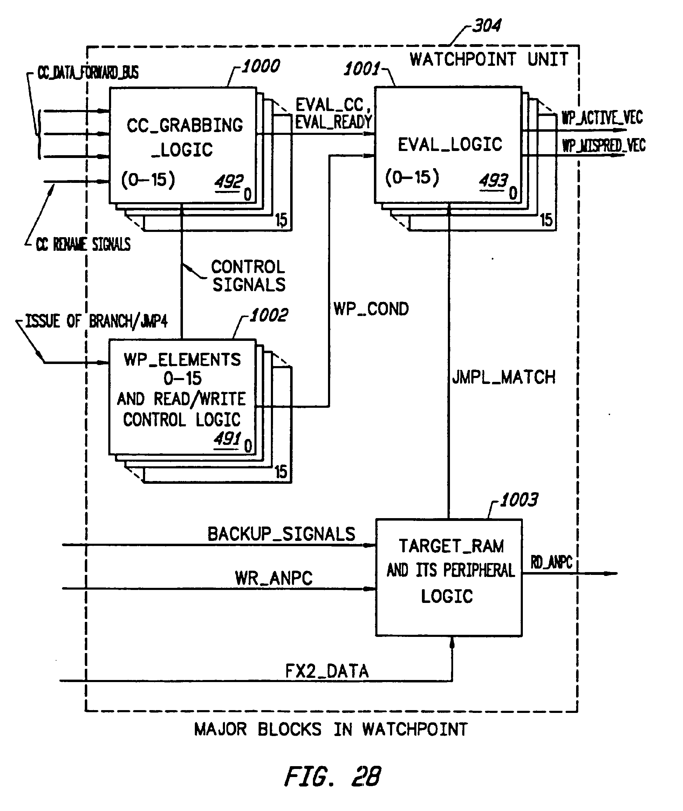

In reference to FIG. 28, Watchpoint 304 includes CC-Grabbing logic 1000 which grabs condition codes directly off of the CC data forward busses from the execution units (FXU, FPU, and FXAGU) or from renamed CC signals arriving from FSR/CCRFRN 606, Watchpoint storage elements 1002 and associated read/write control logic are responsible for storing watchpoint information including predicted condition code data arriving from BRB 59 whenever branch or JMPL instructions are decoded, and Evaluation Logic (Eval-Logic) 1001 which is responsible for performing comparisons of the computed or actual condition codes arriving from the execution units (directly or via the rename unit) and comparing tem with the predicted condition codes stored in the individual Watchpoint storage elements 1002. Target-RAM and its associated control and comparison logic 1003 participate in recovering from a branch or JMPL misprediction as described in greater detail below. CC-Grabbing logic 1000, Eval-Logic 1001, and WP-Elements 1002 comprise sixteen separate structures, one for each of the sixteen Watchpoints that may be allocated in the exemplary CPU 51. Only a single Target-RAM 1003 data storage structure is provided.

Several data elements are stored for each of the sixteen Watchpoints. Data stored for each watchpoint includes a watchpoint valid bit (WP_VALID[i]=1) that is set upon watchpoint activation, a instruction type data to distinguish branch instructions from JMPL instructions (WP_JMPL[i]=1 indicates that a JMPL requires the watchpoint, WP_JMPL[i]=0 indicates the watchpoint is formed for a predicted branch), condition field in the instruction (WP_COND[i]), and storage for WP_XCC, WP_ICC, and WP_FCC. In one exemplary embodiment, these data elements are stored in latches. CC-tags are stored in CC_TAG_ARRAY, and "ANPC" (Alternate Next Program Counter address)/predicted JMPL (jump and link instruction) addresses are stored in the Target-RAM. Valid is written by watchpoint logic, branch type, COND, CC-tag, and ANPC/JMPL address are derived from DO_WTCHPT signals received from ISU 200. In response to DO_WTCHPT, a watchpoint storage element 491 is activated for each branch/JMPL instruction and Field Selection and Write Logic decodes DO_WTCHPT signals and writes the branch type, COND field, CC tag, and the ANPC/predicted JMPL address into Watchpoint.

Watchpoint entries can be activated by setting the Valid-bit to "1", unless all checkpoint elements have already been allocated at that cycle, in which case issue of the instruction requiring a watchpoint (and checkpoint) is delayed. Multiple watchpoint elements can be active (valid) at the same time, and all watchpoint entries which are valid (VALID field set) can be evaluated and generate misprediction signals simultaneously in each cycle. Watchpoint 304 can store either one of ANPC for branch instructions, or predicted target address for JMPL instructions in the same storage location in order to reduce chip area allocated to data storage. How the allocated multipurpose watchpoint register is actually used depends on the content of the DO_WTCHPT signals from ISU 200, that is whether the watchpoint entries are formed for a predicted branch or for a predicted JMPL instruction. Watchpoint registers self-deallocate as branch and jump predictions evaluate.

A Watchpoint element is allocated by Watchpoint Unit 304 whenever an instruction may result in a mispredict such as may occur for a conditional branch instruction. Every Watchpoint element has a corresponding checkpoint element but the converse is not always true. A Checkpoint may not have a corresponding active watchpoint entry because a watchpoint element is allocated whenever an instruction may result in a mispredict, for example, in the case of a conditional branch. Since checkpoints may be allocated for other than instructions that may result in a mispredict (such as "SAVE" instruction, or when a periodic "timeout" checkpoint is formed for other than a branch instruction) not all checkpoints have watchpoints. Watchpoints are stored in one of a plurality of Watchpoint Elements 432 within Watchpoint Unit 304. A Checkpoint Register is provided to store Checkpoint information; however, the actual checkpointed machine state is stored locally throughout the CPU 51 as described. Table 4 shows an example of the type of information stored by serial number in Checkpoints and the corresponding Watchpoints, if any, for a set of exemplary instructions.

Condition Code Grabbing Logic Unit 492 is responsible for detecting and capturing Condition Codes (CC) as they appear on the data forward busses from execution units within DFB 62 and routing them to Evaluation Logic Unit 493 where the captured condition codes are compared with the condition code predicted at the time the instruction was issued and now stored in Watchpoint element 491. If the captured condition code matches the predicted condition code, then the instruction was correctly predicted and need not be undone. However, if the condition code captured by the grabbing unit does not match the predicted condition codes, then the instruction has been mispredicted and must be undone.

**Table 4. Simplified Exemplary Watchpoint and Checkpoint Storage**

| No. | | CHECKPOINTS | | WATCHPOINTS |
|---|---|---|---|---|
| 0 | | SN=33, BRZ, Machine State | | BRZ, CC Register waiting for, CC Register Tags |
| 1 | | SN=41, ADD, Machine State | | - no watchpoint needed |
| 2 | | SN=44, JMPL, Machine State | | JMPL, Register Tags (result of jmpl addr. calc.) |
| 3 | | SN=47, SAVE, Machine State | | - no watchpoint needed |
| 4 | | - free checkpoint | | - free watchpoint |
| ... | | ... | | ... |
| ... | | ... | | ... |
| 14 | | SN=28, FBGE, Machine State | | FBGE, FCC we're waiting for, Register Tags |
| 15 | | - free checkpoint | | - free watchpoint |

Capturing and comparing condition codes from the execution units is complicated by several factors, including: out-of-order instruction sequence execution, instruction execution queuing within each execution unit, the variable number of machine cycles needed for execution of different instruction types, and variability related to the need to wait for execution resources or data for instructions even for the same instruction types. These factors, and others, result in a general uncertainty as to when instruction results and status (including error and condition code information) will actually appear on the data forward busses. Therefore, the invention includes structure and method for capturing condition code data that may appear on the busses during the same machine cycle as the instruction was issued, or during any later cycle. It also provides structure and method for capturing condition codes for renamed registers. Register renaming, including renaming condition code registers, is provided in the exemplary CPU 51 in order to eliminate registers dependencies. Therefore, Watchpoint Unit 304 receives CC data and tags directly from the data forward busses, and later from FSR/CCRFRN 606, after CC registers in CCRFRN have been updated.

In FIG. 27, two Fixed-Point Execution units (FXU and FXAGU) and one Floating Point Execution Unit (FPU) within DFB 62 are shown, but more or fewer execution units can be implemented and they may be of any type. Each execution unit is connected by a CC-data-forward bus 430 to CCRFRN 606 and Watchpoint 304. The CC-data-forward bus 430 carries the result of CC-data which is just calculated by the unit execution unit (FXU, FXAGU, and FPU). The CC-data is used to update CCRFRN. Watchpoint 304 also monitors or watches the CC-data-forward-buses and "grabs" CC-data directly from the busses rather than waiting to get it from CCRFRN in a later cycle. Grabbing the CC-data directly from the buses in this manner makes branch evaluations faster.

When branch mispredictions are detected by Watchpoint 304, it sends misprediction signals WP_MISPRED_VEC to PLSM 307 within PSU 300. PSU 300 tracks and controls the main states of the CPU 51 as described. When PSU gets misprediction signals WP_MISPRED_VEC from Watchpoint, PLSM 307 within PSU 300 selects the earliest one among the mispredictions and execution exceptions and initiates backtrack procedures as described else where in this specification.

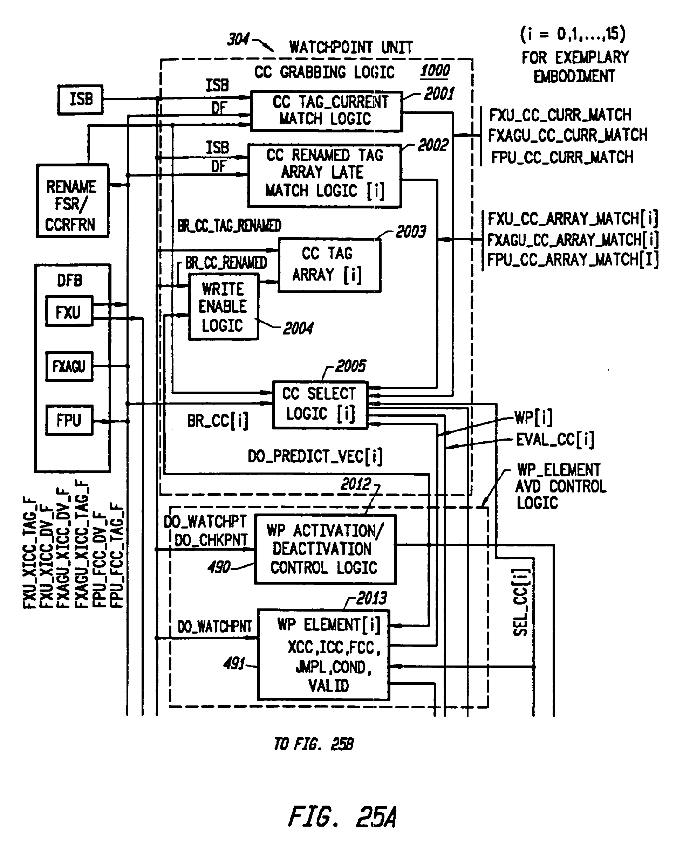

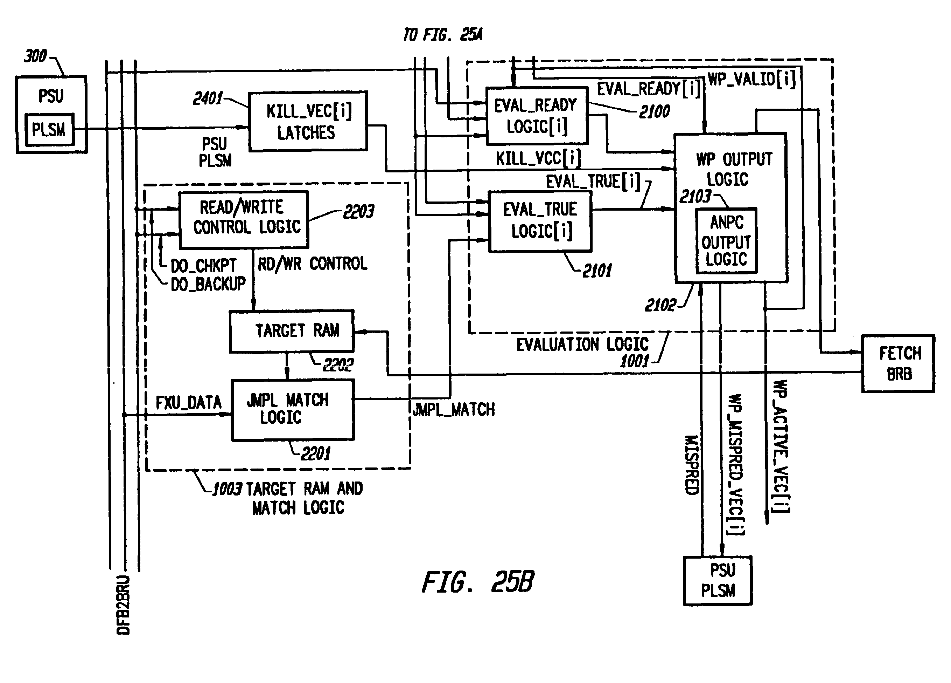

FIG. 25 shows a more detained functional block diagram of Watchpoint 304 and interfaces to ISB, FSR/CCRFRN, Execution Units (FXU, FXAGU, and FPU) within the DFB, BRB, and to PLSM within PSU 300. Each of these major functional blocks are described in greater detail below.

### 1. Activation of Watchpoint Elements

Watchpoint Element and Control Logic Unit (WP-Element) 1002 includes WP Activation/Deactivation Control Logic 2012 and a set of sixteen Watchpoint Elements 2013 where each of the sixteen elements stores information pertaining to XCC, ICC, FCC, COND, JMPL/branch, and a validity indicator. When a branch/JMPL is issued and predicted, DO_WTCHPT signal is asserted by ISU 200 that includes condition code information for predicted branch, annulling branch, and jump-link instructions. "Predict a branch" means "predict a direction of branch (taken or not-taken)". "Predict a JMPL" means "predict a JMPL target address" because JMPL always changes program flow (always taken). When issuing branch/JMPL instructions, the exemplary CPU 51 makes a checkpoint identified by a checkpoint number. Once made, a checkpoint remains active until the CPU 51 completes all instruction executions for instructions lying between the checkpoint location and the next checkpoint location. The processor can have multiple active checkpoints at a time. Checkpoint formation is not limited to issued branch/JMPL instructions, but may be formed in other cases, such as when taking a trap, for example.

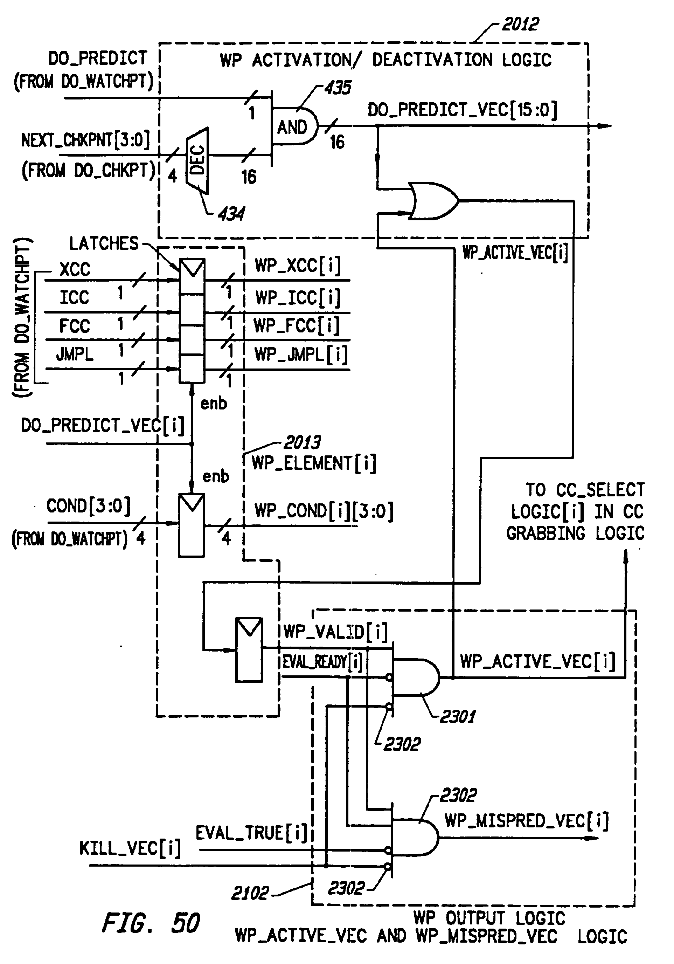

Each Watchpoint element 2012 corresponds to a checkpoint entry. The exemplary CPU 51 has sixteen checkpoint entries and therefore Watchpoint 304 has sixteen Watchpoint elements. Watchpoint Activation/Deactivation logic (WADL) 2012 is responsible for activating a watchpoint element in response to DO_CHKPNT and DO_WTCHPNT signals from ISU 200. DO_CHKPNT includes a MAKE_CHKPNT signal that initiates checkpoint formation and a NEXT_CHKPNT signal that identifies the checkpoint number to be formed. WADL 2012 is also responsible for deactivating a watchpoint element when the predicted branch/JMPL instruction is resolved. When ISU 200 issues a branch instruction ISU 200 asserts a MAKE_CHKPNT signal that indicates that a checkpoint should be formed, and a checkpoint number is assigned by PSU 300 and designated by NEXT_CHKPNT. As shown in FIG. 50, in order to activate one Watchpoint element, NEXT_CHKPNT is decoded by Decoder 434 and ANDed in an AND gate 435 with a DO_PREDICT signals derived from DO_WTCHPT from ISU 200. The output is called DO_PREDICT_VEC[i]. The signal DO_PREDICT_VEC[i] sets WP_VALID[i], where "[i]" indicates one of the sixteen watchpoint numbers. FIG. 50 also shows additional structural detail for a particular embodiment of the Watchpoint Unit associated with WP_ACTIVE_VEC and WP_MISPRED_VEC Logic, including a portion of the Watchpoint Output Logic 2102.

ISU 200 sends several signals to Watchpoint when a branch/JMPL instruction is issued. These signals identify the instruction as a branch that depends on XCC, as a branch that depends on ICC, as a branch that depends on FCC, as a jump-link instruction (JMPL), and the condition code filed of the branch (COND). These signals are received by Watchpoint 304 and stored in the watchpoint element designated by NEXT_CHKPNT as a component signal of DO_CHKPNT. When Watchpoint element "i" is assigned by the Watchpoint Activation Control Logic (WACL) 2012, these signals are kept in WP_XCC[i], WP_ICC[i], WP_FCC[i], WP_JMPL[i], and WP_COND[i] registers respectively. Each Watchpoint element retains these register values until the Watchpoint element is deactivated and then re-activated by another branch/JMPL instruction.

The exemplary CPU 51 can make more than one checkpoint each cycle and can issue more than one branch/JMPL instruction per cycle. Therefore, more than one Watchpoint element can be activated. For example, if a CPU 51 can make two checkpoints and issue two branches in the same cycle, two sets of DO_WTCHPT, XCC, ICC, FCC, JMPL, COND, DO_CHKPNT signals or their equivalent information content are needed.

Condition Code Formats and field definitions and JMPL (jump-and-link) instruction format and definitions are provided in SPARC V9 Architecture manual, already of record in this specification. Floating Point Condition codes having a two-bit format including bit-0 and bit-1. Integer Condition Codes are provided for XCC in bits 7-4 (N, Z, V, C respectively) and ICC as bits 3-0 (N, Z, V, C respectively). When a branch is issued and predicted "taken", COND value is same as the condition field data of the branch instruction. When a branch is issued and predicted "not-taken", a bit-3 of the COND field data is inverted, the rest of bits are unchanged, then, these become COND value.

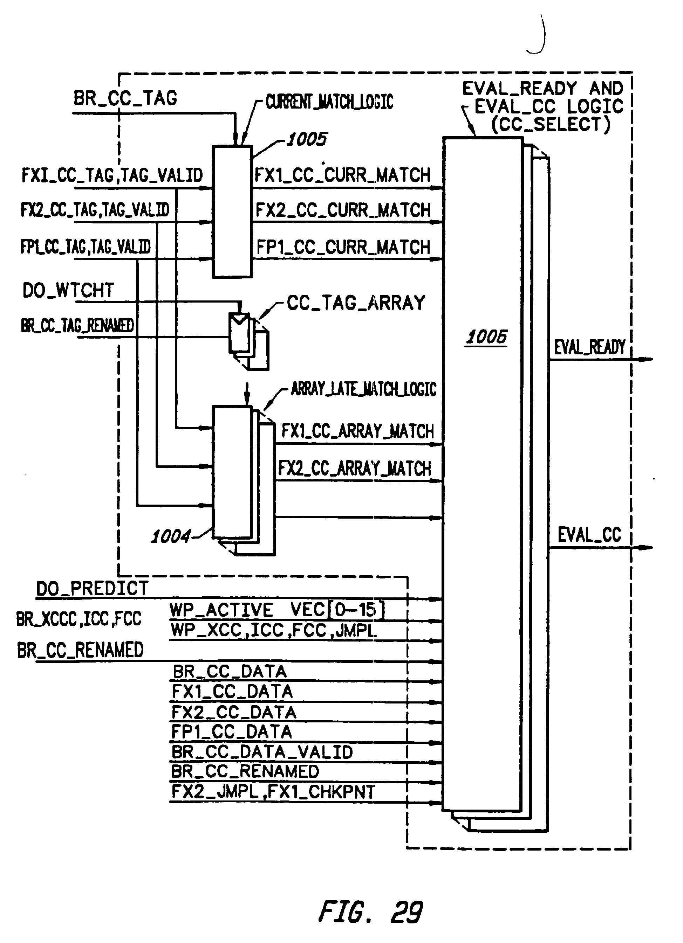

FIG. 28 shows a more detailed representation of the internal structure of Watchpoint 304 showing CC-grabbing Logic 1000, Eval-logic 1001, WP-Elements Storage and Control Unit 1002, and target ram 1003. FIG. 29 shows a different schematic portion of Watchpoint 304, including current match logic 1005, array late matching logic 1004, and CC-seled logic 1006 which includes Evaluation Ready (EVAL_READY) and Evaluate Condition Code (EVAL_CC) logic.

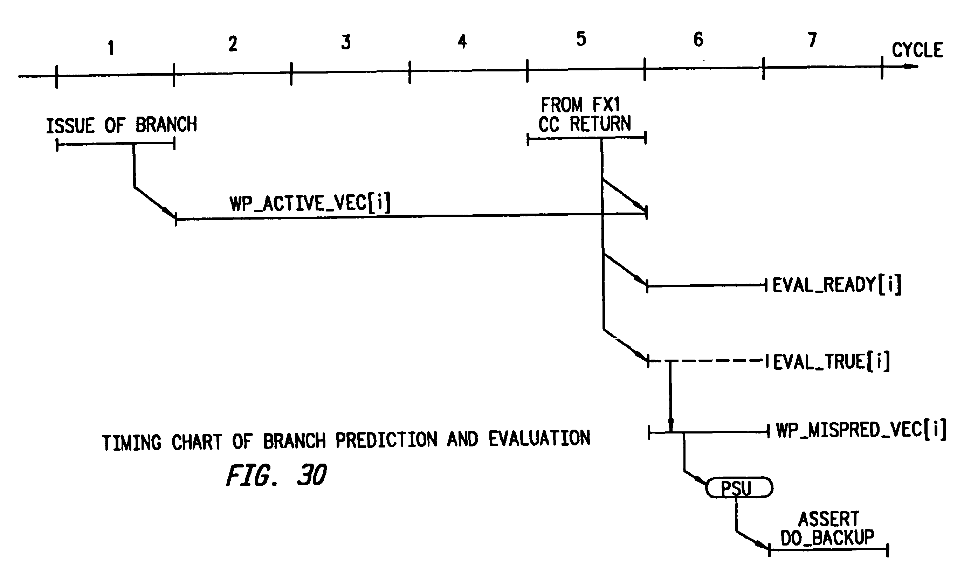

FIG. 30 shows a timing chart of branch prediction and evaluation. Watchpoint has a plurality of Watchpoint elements which each can hold a predicted branch/JMPL information and evaluate the correctness of the prediction. At cycle 1, a branch is issued. At cycle 2, one of the plurality of Watchpoint elements (assume element "i") is activated. Then WP_ACTIVE[i] is asserted. At cycle 5, FXU unit is returning the CC-data which the branch depends on and the Watchpoint element is waiting for. At cycle 5, the Watchpoint element i grabs the CC-data. At cycle 6, WP_ACTIVE_VEC[i] is de-asserted because the watchpoint element has grabbed the CC-data, and EVAL_READY[i] is asserted. EVAL_READY[i] enables CC-evaluation. If the prediction is correct, EVAL_TRUE[i] is asserted. If not, EVAL_TRUE[i] is not asserted. In this example, the timing diagram assumes that the prediction is not correct. Then WP_MISPRED_VEC is asserted and sent to PLSM within PSU 300. PLSM takes priority among WP_MISPRED_VEC[i] signals from all Watchpoint elements (sixteen elements in the exemplary embodiment) and execution trap signals from execution units, and takes determines the earliest event. At cycle 7, PSU 300 asserts DO_BACKUP signals which cause the CPU 51 to back up to a previous state. The DO_BACKUP signal includes a MAKE_BACKUP control signal that informs the CPU to perform the backup and a BACKUP_CHKPNT signal that identifies the Checkpoint number to which the backup will be made. FIG. 29 shows additional structural detail for a particular embodiment of the Watchpoint Unit associated with one of the plurality of watchpoint elements.

### 2. Watchpoint Grabbing of CC Data directly from Data Forward Busses

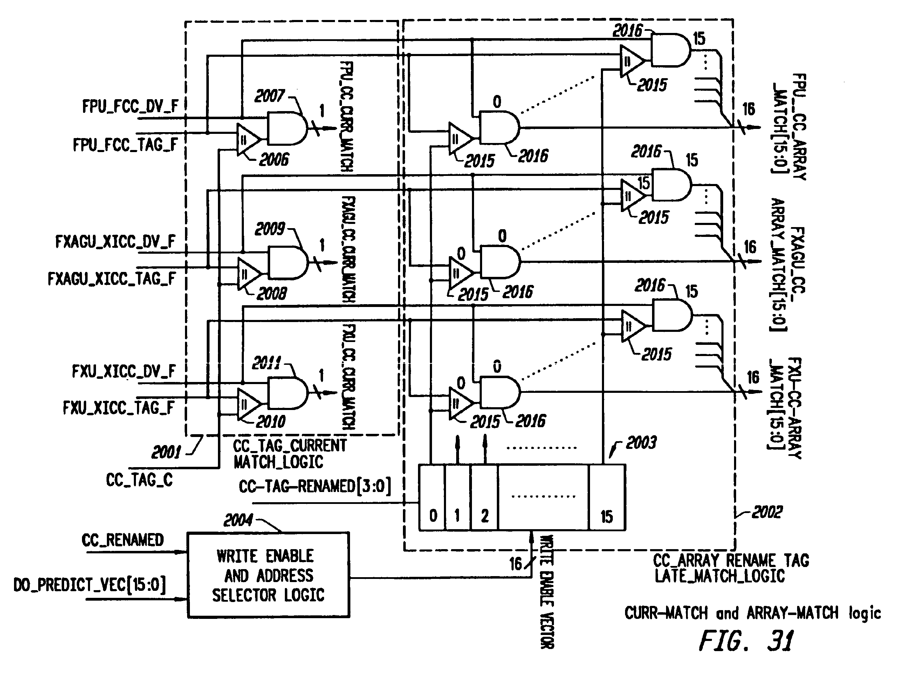

CC-Grabbing Logic 1000 includes CCTag Current Match Logic 2001 which receives condition code data valid and condition code tags from the data forward busses and attempts to match them with condition code tags received from ISB during the current machine cycle. Exemplary logic circuitry is shown for an embodiment of CC Tag Current Match Logic in FIG 31.

FSR/CCRFRN 606 sends the following signals to Watchpoint: CC_RENAMED, CC_TAG_C, CC_TAG_RENAMED_C, CC_DV_C, and CC_DATA. CC_RENAMED is asserted when CC is modified by instructions issued in the current machine cycle. CC_TAG_C identifies the renamed-CC-physical tag except that CC modifications occurring in the current machine cycle are excluded. CC_TAG_RENAMED_C also means renamed-CC-physical-tag but the CC modifications occurring in the current cycle are included. CC_DV_C is asserted when CC_DATA has CC data which is modified by the previous cycle but excludes the CC modifications done in the current cycle. Therefore if CC_DV_C=1, all CC modifications done by the previous cycle are reflected in CC_DATA. Furthermore, if CC_DV_C=0, then the CC_DATA value is not up to date, and FSR/CCRFRN is waiting for the completions of instructions which were issued by the previous cycle before it grabs up-to-date CC data. The signals sent to Watchpoint by FSR/CCRFRN 606 are described in Table 6.

**Table 6. FSR/CCRFRN 606 sends the following signals to Watchpoint:**

| Signal | Description |
|---|---|
| CC_RENAMED | Asserted when CC is modified by instructions issued in the current machine cycle. Used by Condition Code Select logic. |
| CC_TAG_C | Identifies the renamed-CC-physical tag, but excludes CC modifications occurring in the current machine cycle. Used for current match. |
| CC_TAG_RENAMED_C | Identifies renamed-CC-physical-tag but includes the CC modifications occurring in the current cycle. Written into array and used for array match. |
| CC_DV_C | Asserted when CC_DATA has CC data which is modified by the previous cycle, but exclude the CC modifications done in the current cycle. Used by Condition Code Select logic. |
| CC_DATA | If CC_DV_C=1, all CC modifications done by the previous cycle are CC_DATA[7:0]. |
| | If CC_DV_C=0. then the CC_DATA value is not up to date, and FSR/CCRFRN is waiting for the completions of instructions which were issued by the previous cycle before it grabs up-to-date CC data. Used by Condition Code Select logic. |

In FIG. 31, comparison circuits 2006, 2008, and 2010 each receive CC_TAG_C signals which identifies the renamed-CC-physical tag, but excludes CC modifications occurring in the current machine cycle. Each of the comparison circuits also receives condition code tags directly from the data forward busses; FPU_FCC_TAG_F from the FPU, FXU_XICC_TAG_F from the FXU, and FXAGU_XICC_TAG_F from the FXAGU, where both the FXAGU_XICC_TAG_F and the FXU_XICC_TAG_F include both XCC and ICC parts of the Integer condition code. The outputs of the comparisons are sent to AND gates 2007, 2009, and 2011 and ANDed with a data valid signal (FPU_FCC_DV_F, FXU_XICC_DV_F, or FXAGU-XICC-DV-F) which serves as a control signal. If the data valid signal is asserted then a match determined by the comparison circuits is valid and the CC current match signal (FPU_CURR_MATCH, FXU_CURR_MATCH, or FXAGU_CURR_MATCH) are asserted.

As shown in FIG. 31, CC renamed Tag Array Matching Logic 2002 includes a set of sixteen sets of comparison circuits 2015 and logic circuits to perform the AND logic function 2016 for each of the execution units (FPU, FXU, FXAGU). Whereas the Current Match Logic 2001 compares the signals from the data forward busses with CC_TAG_C, the Array Match Logic Unit 2002 simultaneously compares each of the signals from the data forward busses with CC_TAG_RENAMED_C which identifies renamed-CC-physical-tag but includes the CC modifications occurring in the current cycle. CC_TAG_RENAMED_C is written into one of sixteen CC Tag Array 2003 storage elements under control of a write enable signal generated by ANDing CC_RENAMED which is asserted when CC is modified by instructions issued in the current machine cycle with DO_PREDICT_VEC. Each cycle every stored value of CC_TAG_RENAMED_C is compared with FPU_FCC_TAG_F from the FPU, FXU_XICC_TAG_F from the FXU, and FXAGU_XICC_TAG_F from the FXAGU to identify any matches, that is sixteen comparisons are made for each of the FPU, FXU, and FXAGU each cycle. The outputs of comparison circuits 2016 are ANDed with data valid signals (FPU_FCC_DV_F, FXU_XICC_DV_F, or FXAGU_XICC_DV_F) which serves as control signals. If the data valid signal is asserted then a match determined by the comparison circuits is valid and the CC array match signal (FPU_ARRAY_MATCH[i], FXU_ARRAY_MATCH[i], and FXAGU_ARRAY_MATCH[i]) are asserted. Therefore, the CC-Grabbing Logic is able to simultaneously monitor plural unresolved branch evaluations.

FIG. 31 shows CC grabbing logic. CC_TAG_ARRAY comprises sixteen registers, each register corresponds to one of the sixteen checkpoints and has the same numbers of latches as CC_TAG_C bit number (here we assume 4 bit latches). When issuing and predicting a branch, CC_TAG_RENAMED_C is written into the location of CC_TAG_ARRAY designated by DO_PREDICT_VEC[i] derived from DO_WTCHPT. CC_RENAMED serves as a write enable signal in Write Enable and Address Selector Logic 2004, such as a AND logic gate.

The processor is assumed for purposes of this description to have two fixed-point execution units: FXU and FXAGU, and one floating-point execution unit FPU. In the exemplary embodiment, it is assumed that only FXU processes JMPL instructions. Each unit has CC-data-forward bus. FXU CC-data-forward bus comprises FXU_CC_TAG_VALID, FXU_CC_TAG, and FXU_CC_DATA. When FXU is finishing its execution which modifies CC, FXU_CC_TAG_VALID is asserted, FXU_CC_TAG has its renamed CC physical tag, and FXU_CC_DATA has the result data of CC. The same thing applies to FXAGU and FPU. Condition Code (CC) data in FSR/CCRFRN unit is updated using these CC data forward buses in the next cycle. Watchpoint also grabs CC data from the data forward buses if Watchpoint elements are waiting for the CC data. CC_TAG_C is compared with FXU_CC_TAG, its match signal is ANDed with FXU_CC_TAG_VALID. and the output signal is called FXU_CC_CURR_MATCH. And also the contents of registers in CC_TAG_ARRAY are compared with FXU_CC_TAG. their match signals are ANDed with FXU_CC_TAG_VALID, and the output signals are called FXU_CC_ARRAY_MATCH[i]. For FXAGU and FPU, there are the same match functions as FXU. Operation of the Grabbing Logic is now described with reference to three instruction issue sequence examples. The exemplary CPU 51 can issue up to four instructions per cycle.

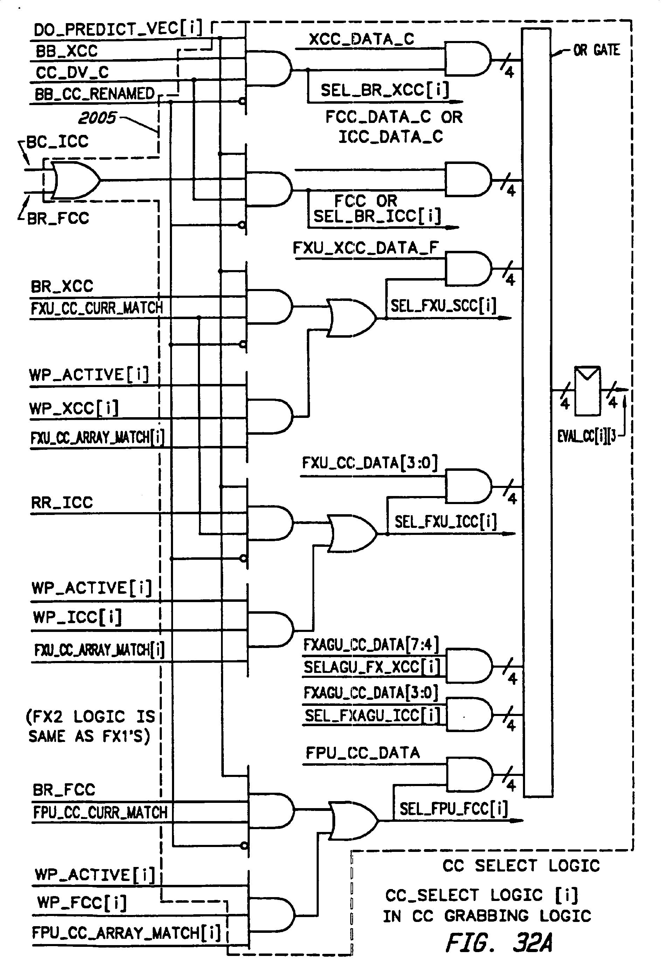

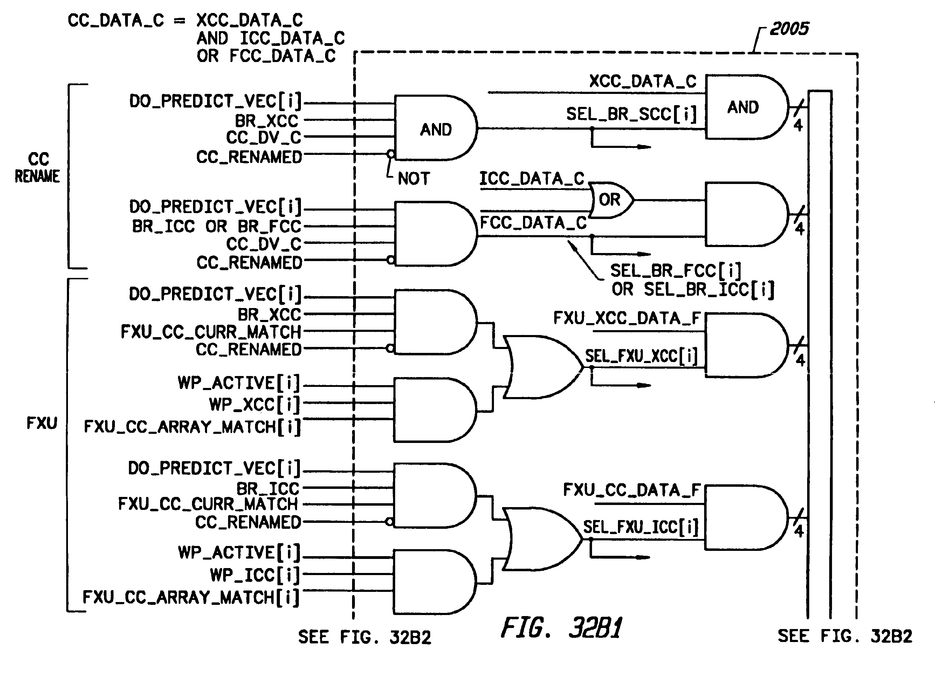

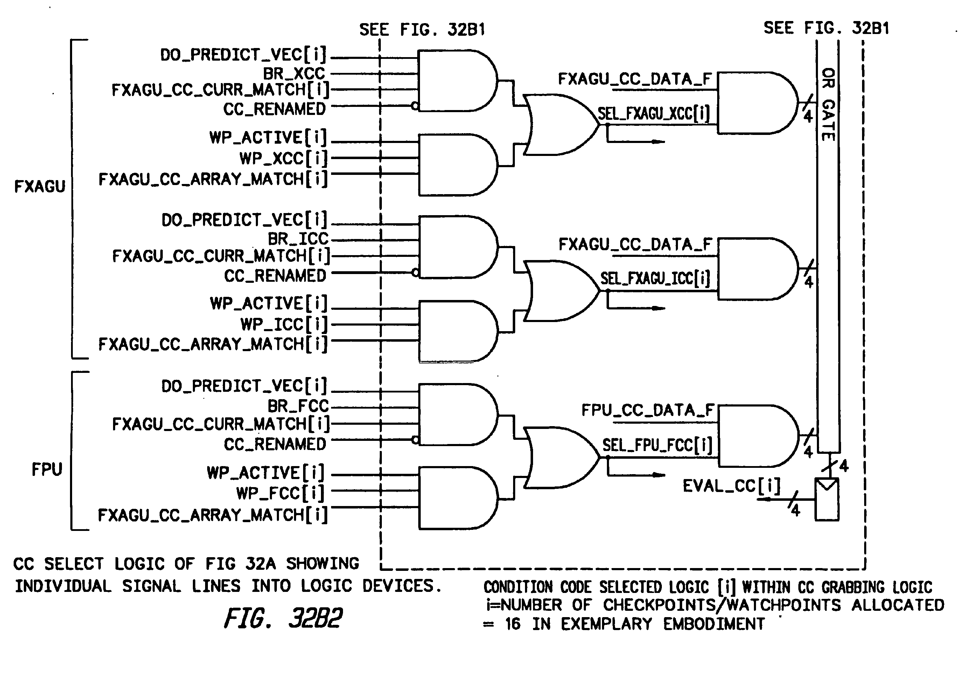

CC Grabbing Logic 1000 also includes CC Select Logic 2005 (sixteen layers, one for each watchpoint) which are responsible for generating signals based on the condition code on which the branch in that watchpoint element depends and that when asserted selects the CC data signal (for example, CC_DATA[7:4]) and also latches that data signal for evaluation in the next cycle. Exemplary logic circuitry for an embodiment of Condition Code Select Logic 2005 is provided in FIG. 32. The operation of this CC Select Logic 2005 is described with respect to three examples below.

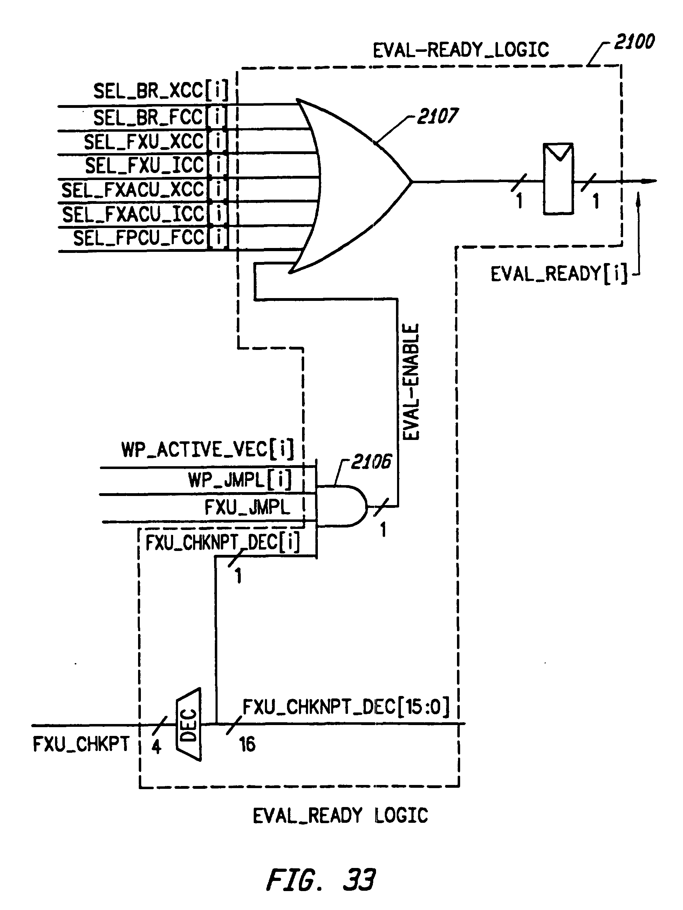

Evaluation Logic 1001 includes Evaluation Ready Logic (EVAL_READY) 2100, Evaluation True Logic (EVAL_TRUE) 2101, and Watchpoint Output Logic (WP Output Logic) 2102 as shown in FIG. 25. FIG. 33 shows additional structural detail associated with EVAL_READY Logic 2100 which receives a set of select signals (e.g. SEL_BR_XCC[i]) from CC Select Logic 2005 and an enable signal (EVAL_ENABLE) from the output of AND logic gate 2106. EVAL_ENABLE is asserted based on WP_ACTIVE_VEC[i], WP_JMPL, FXAGU_JMPL, and FXAGU_CHKPT. EVAL_READY Logic 2100 outputs an EVAL_READY[i] signal for the i-th watchpoint indicating that evaluation is ready.

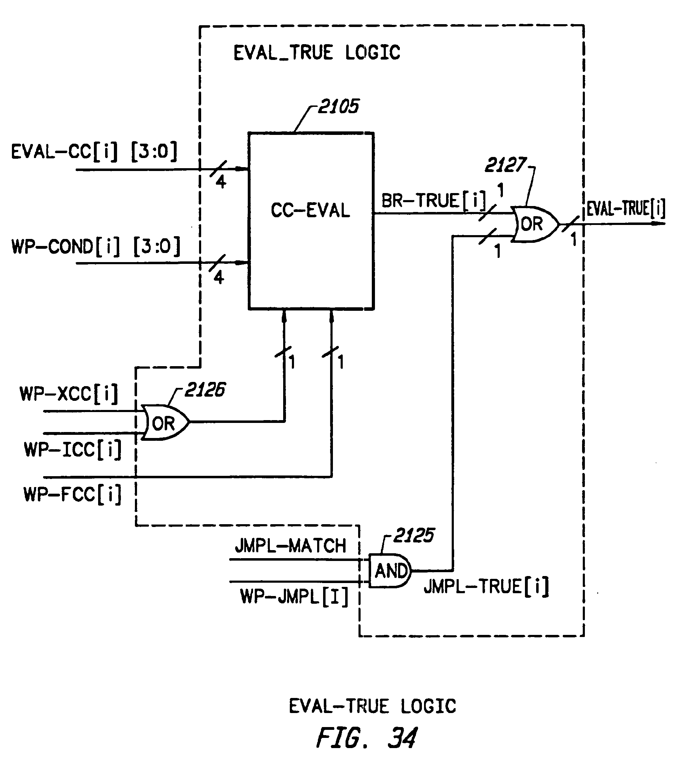

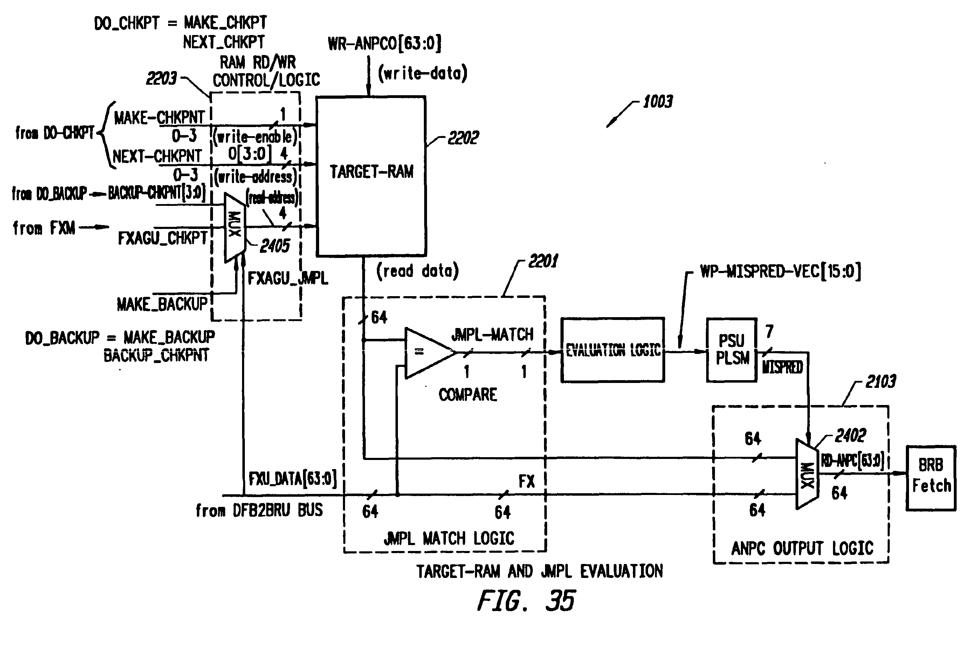

FIG. 34 shows additional structural detail associated with the EVAL_TRUE Logic 2101 which includes CC_EVAL logic 2105. EVAL_TRUE logic is responsible for determining if the branch instruction or if the JMPL instruction was properly predicted. CC_EVAL 2105 receives EVAL_CC[i] from CC Select Logic 2005 and WP_COND[i], WP_XCC[i], WP_ICC[i], and WP_FCC[i] and received from ISB and stored in the Watchpoint Element 2013 and evaluates the two signals based on a comparison using rules described in the SPARC-V9 manual. If they match, a branch true signal (BR-TRUE[i]) is generated for that i-th watchpoint. EVAL_TRUE Logic 2101 also compares the JMPL_MATCH output by JMPL Match Logic 2201 (See FIG. 35) with WP_JMPL[i] received from ISB and stored in the Witchpoint Element 2013. If JMPL_MATCH matches WP_JMPL[i] then the JMPL was properly predicted and a JMPL_TRUE[i] is asserted. The BR_TRUE[i] and JMPL_TRUE[i] are ORed to form the EVAL_TRUE[i] signal. A watchpoint is formed for a single instruction only and therefore only one of BR_TRUE[i] or JMPL_TRUE[i] will be asserted.

WP Output Logic 2102 is shown in FIG. 50. The EVAL_READY[i], EVAL_TRUE[i], WP_VALID[i] and KILL_VEC[i] from PSU 300 are input to WP Output Logic which outputs WP_ACTIVE_VEC VEC[i] and WP_MISPRED_VEC[i] signals.

FIG. 35 shows additional structural detail associated with TARGET-RAM and JMPL Evaluation Logic. The JMPL Evaluation logic evaluated JMPL instructions of the return type where rd=0. ANPC Output Logic 2103 selects the RD_ANPC to send to the BRB Fetch Unit based on whether mispredict (MISPRED) is asserted by PSU PLSM based on the prioritization schemes described hereinwith and the comparison of the stored WP_ANPC. the value of FXU_DATA which is the correct computed value.

### 3. Examples of Watchpoint Operation

**a.** **Watchpoint Unit Operation Example 1:** Table 7, is a list of instructions for Example 1, executed in cycles X, X+1, and X+2. In cycle X, four instructions are issued and one of them (addcc) modifies CC. Then renamed-CC-physical tag #7 is assigned. In cycle X+1, again four instructions are issued, and none of them modify CC, and addcc is executed and returns the CC data in cycle X+1. In cycle X+2, the CC-data modified by addcc is in FSR/CCRFRN. In cycle X+2, four instructions are issued, none of them modify CC before branch, and then a branch instruction (br, xcc) is issued. In this case, in cycle X+2, CC_RENAMED=0 because there are no instructions issued which modify CC in the current cycle. Furthermore, CC_TAG_C= CC_TAG_RENAMED_C=7 because the latest CC tag is #7 and it is assigned in cycle X. And finally, CC_DV_C=1 because the latest CC data is in FSR/CCRFRN.
   When issuing a branch, CC_DATA on which the branch depends on in FSR/CCRFRN is valid. Therefore CC_DV_C is asserted at the same cycle of issuing the branch. Suppose the branch depends on XCC. Then SEL_BR_XCC[i] is asserted (See FIG. 32) and the signal selects CC_DATA[7:4] and the data is latched in EVAL_CC[i] in the next cycle. (Signals CC_DATA[7:4] is either XCC_DATA_C and ICC_DATA_C, or FCC_DATA_C.) And EVAL_READY[i] is asserted in the next cycle (See FIG. 33). The CC evaluation becomes ready.
**b.** **Watchpoint Unit Operation - Example 2:** Table 8, is a list of instructions for Example 2, executed in cycles X, and X+1. In cycle X, four instructions are issued and one of them (addcc) modifies CC. Then renamed-CC-physical tag #7 is assigned. In cycle X+1, again four instructions are issued, and none of them modify CC before branch and one of them is a branch instruction. In this case, in cycle X+1, CC_RENAMED=0 because there are no instructions issued which modify CC in the current cycle. And CC_TAG_C= CC_TAG_RENAMED_C=7 because the latest CC tag is #7 and it is assigned in the previous cycle. But CC_DV_C=0 because the latest CC data which is modified by addcc is not written into CC-Register in the FSR/CCRFRN.
   When issuing a branch (at cycle X+1), CC_DATA on which the branch depends on in FSR/CCRFRN is not valid (CC_DV_C = 0) because the instruction "addcc" which is issued at cycle X modifies CC and the result data is not written into CC-Register in FSR/CCRFRN. We suppose "addcc" is being executed at cycle X+1 by FXU executing unit and FXU is returning CC data on its data-forward-bus at cycle X+1. Then FXU_CC_CURR_MATCH (See FIG. 31) is asserted at cycle X+1. SEL_FXU_XCC[i] (See FIG. 32) is asserted, and the signal selects FXU_CC_DATA and the data is latched in EVAL_CC[i] at cycle X+2. And EVAL_READY[i] is asserted at the cycle X+2 (See FIG. 33). Then CC evaluation becomes ready.
   Note that not CC_TAG_RENAMED_C. but CC_TAG_C is used for FXU_CC_CURR_MATCH comparison. If any instructions which modify CC are issued at the same cycle when a branch is issued, CC_TAG_C is not the latest CC-physical tag. But CC_RENAMED is asserted and the signal inhibits FXU_CC_CURR_MATCH (See FIG. 32). That means FXU_CC_CURR_MATCH can be used when there are no instructions which modify CC at the same cycle when a branch is issued. Using CC_TAG_C[3:0] for FXU_CC_TAG_CURR_MATCH helps reduce the path delay because CC_TAG_C is a faster signal than CC_TAG_RENAMED_C.
**c.** **Watchpoint Unit Operation** - **Example 3:** Table 9, is a list of instructions for Example 3, executed in cycles X and X+1. In cycle X, four instructions are issued and one of the (addcc) modifies CC. Then renamed-CC-physical tag #7 is assigned. In cycle X+1, again four instructions are issued, and one of them (subcc) modifies CC before branch, and one of them is a branch instruction. The renamed-CC-physical tag #8 is assigned to the instruction, subcc. In this case, in cycle X+1, CC_RENAMED=1 because there is an instruction issued which modifies CC in the current cycle. CC_TAG_C=7 because the latest CC tag by the previous cycle is #7, and CC_TAG_RENAMED_C=8 because an instruction which modifies CC is issued in the current cycle, and the renamed-CC-physical tag #8 is assigned. And also, CC_DV_C=0 because the latest CC data which is modified by subcc is not written into CC-Register in FSR/CCRFRN.

When issuing a branch (at cycle X+1), CC_DATA on which the branch depends on in FSR/CCRFRN is not valid (CC_DV_C=0) because the instruction "addcc" which is issued at cycle X modifies CC and the result data is not written into CC-Register in FSR/CCRFRN. Moreover the instruction "subcc" is issued at cycle X+1, then CC_RENAMED is asserted. We suppose "subcc" is being executed at cycle X+2 by FXU executing unit and FXU is returning CC data on its data-forward-bus at cycle X+2. Then FXU_CC_ARRAY_MATCH[i] (See FIG. 31) is asserted at cycle X+2. SEL_FXU_XGC[i] (See FIG. 32) is asserted, and the signal selects FXU_CC_DATA[7:4] and the data is latched in EVAL_CC[i] at cycle X+3. And EVAL_READY[i] is asserted at the cycle X+3 (See FIG. 33). The CC evaluation becomes ready. There are 16 Watchpoint elements in this example, and each element can grab CC parallel for each branch evaluation at any cycle.

**Table 7. Instructions and Signals from FSR/CCRFRN for Example 1.**

| CYCLE | INSTRUCTION | | FSR/CCRFRN SIGNALS |
|---|---|---|---|
| X | move | | |
| | mul | | |
| | addcc | <- #7 | |
| | div | | |
| X+1 | move | | |
| | move | | |
| | move | (#7 executed) | |
| | move | | |
| X+2 | mul | | CC_RENAMED=0 |
| | move | | CC_TAG_C=7 |
| | move | | CC_TAG_RENAMED_C=7 |
| | br, xcc | | CC DV C=1 |

**Table 8. Instructions and Signals from FSR/CCRFRN for Example 2.**

| CYCLE | INSTRUCTION | | FSR/CCRFRN SIGNALS |
|---|---|---|---|
| X | move | | |
| | mul | | |
| | addcc | <- #7 | |
| | div | | |
| X+1 | mul | (#7 executed) | CC_RENAMED=0 |
| | move | | CC_TAG_C=7 |
| | move | | CC_TAG_RENAMED_C=7 |
| | br, xcc | | CC DV C=0 |

**Table 9. Instructions and Signals from FSR/CCRFRN for Example 3.**

| CYCLE | INSTRUCTION | | FSR/CCRFRN SIGNALS |
|---|---|---|---|
| X | move | | |
| | mul | | |
| | addcc | <- #7 | |
| | div | | |
| X+1 | mul | | CC_RENAMED=1 |
| | move | | CC_TAG_C=7 |
| | subcc | <- #8 | CC_TAG_RENAMED_C=8 |
| | br, xcc | | CC_DV_C=0 |

### 4. Evaluation of Branch Instructions

One cycle after a branch is issued, WP_VAUD[i] is asserted. If WP_VAUD[i]=1 and EVAL_READY[i] = 0 and KILL_VEC[i] = 0, WP_ACTIVE_VEC[i] is asserted (See FIG. 29). "WP_ACTIVE[i] = 1" means a branch which uses checkpoint i is already issued and is not resolved yet. If the value becomes 0, that means the branch is resolved (completed). WP_ACTIVE_VEC is sent to ICRU 301 and used for deciding which branch/JMPL instructions are completed.

When a branch evaluation becomes ready, EVAL_READY[i] is asserted and EVAL_CC[i] is the grabbed CC value. Then EVAL_CC[i] and WP_COND[i] are fed into CC_EVAL logic within EVAL_TRUE LOGIC 2101 (See FIG. 34), and the branch is evaluated. If the prediction made when issuing the branch is correct, BR_TRUE[i] is asserted. If not, it's not asserted. When evaluating a branch, WP_XCC[i], WP_ICC[i], WP_FCC[i] signals are also used to know branch type. BR_TRUE[i] is OR-ed with JMPL_TRUE[i] (to be explained later) and EVAL_TRUE[i] is generated. When WP_VALID[i] = 1 and EVAL_READY[i]=1 and EVAL_TRUE[i]=0 and KILL_VEC[i]=0. WP_MISPRED_VEC[i] is asserted (See FIG. 29). "WP_MISPRED_VEC[i] =1" means the branch prediction made before is wrong. PSU receives this signal and execution error signals and chooses the earliest misprediction or execution error condition and then assert BACKUP signal to back up to the previous state.

PSU asserts KILL_VEC[i] signal when a backup occurs and the checkpoints taken after the backup point need to be killed. When KILL_VEC[i] is asserted, the corresponding Watchpoint element is also killed. "Killed" means WP_ACTIVE_VEC[i] and WP_MISPRED_VEC[i] are suppressed. WP_ACTIVE_VEC and WP_MISPRED_VEC can be multi-hot so that the WP_MISPRED_VEC[0-16] can be encoded in the same vector. That means that up to 16 Watchpoint elements (in this example) can be active at a time, and can detect mispredictions at a time.

When issuing and predicting a branch, FETCH sends branch-target address or next address of branch via WR_ANPC to Watchpoint. If the prediction is "taken", WR_ANPC is next address of the branch (not-taken address). If the prediction is "not-taken", WR_ANPC is branch-target address (taken address). If it turns out that the prediction was wrong, Watchpoint sends back the address via RD_ANPC to FETCH to re-fetch instructions from the correct branch path. WR_ANPC value is stored into TARGET-RAM (See FIG. 35). TARGET-RAM has 16 entries and each entry corresponds to each checkpoint and can store one WR_ANPC address. The write enable signal and write address of this RAM are MAKE_CHKPNT and NEXT_CHKPNT. MAKE_CHKPNT is asserted when making a checkpoint. When BACKUP signal is asserted, BACKUP_CHKPNT is used for read address of TARGET_RAM. BACKUP_CHKPNT designates the checkpoint which the CPU 51 backs up to. And the read data of TARGET-RAM is sent to FETCH via RD_ANPC.

### 5. Evaluation of JUMP-LINK (JMPL) Instructions

When issuing and predicting a JMPL instructions, FETCH sends predicted JMPL target address via WR_ANPC to Watchpoint. Watchpoint keeps the address, and evaluates the correctness by comparing the address and the calculated correct address by execution unit. If it turns out that the prediction was wrong, Watchpoint sends the calculated correct address via RD_ANPC to FETCH to re-fetch instructions from the correct address. The predicted JMPL target address is stored into TARGET-RAM in the same way as branch case.

We suppose only FXAGU execution unit calculates JMPL target address. When FXAGU finishes execution of JMPL instruction, FXAGU_JMPL is asserted, FXAGU_CHKPNT designates the checkpoint number of JMPL, and FXAGU_DATA contains the calculated correct JMPL target address. Then the predicted JMPL address in TARGET-RAM indexed by FXAGU_CHKPNT is read and the read data gets compared with FXAGU_DATA. The compare result gets latched and the latched signal is JMPL_MATCH (FIG. 35). JMPL_MATCH is asserted if the predicted address and the calculated address are the same. Then JMPL_MATCH is ANDed with WP_JMPL[i] and the output becomes EVAL_TRUE[i] (FIG. 34). One cycle after FXAGU_JMPL is asserted, EVAL_READY[i] is also asserted (FIG. 33).

WP_ACTIVE_VEC[i] and WP_MISPRED_VEC[i] are generated for JMPL in the same manner as for branch instructions. One cycle after WP_MISPRED_VEC[i] is asserted, PSU 300 sends BACKUP as many as two signals to Watchpoint 304: BACKUP_CHKPNT and MISPRED (but only when the backup is due to JMPL misprediction). If MISPRED is asserted, Watchpoint sends two-time latched FXAGU_DATA signals which contains the correct JMPL address to FETCH (See FIG. 35). TARGET-RAM is used for two purposes: one is for storing alternate address of branch, and another is for storing predicted JMPL target address. The two usages are exclusive, so only one TARGET-RAM is enough for this implementation.

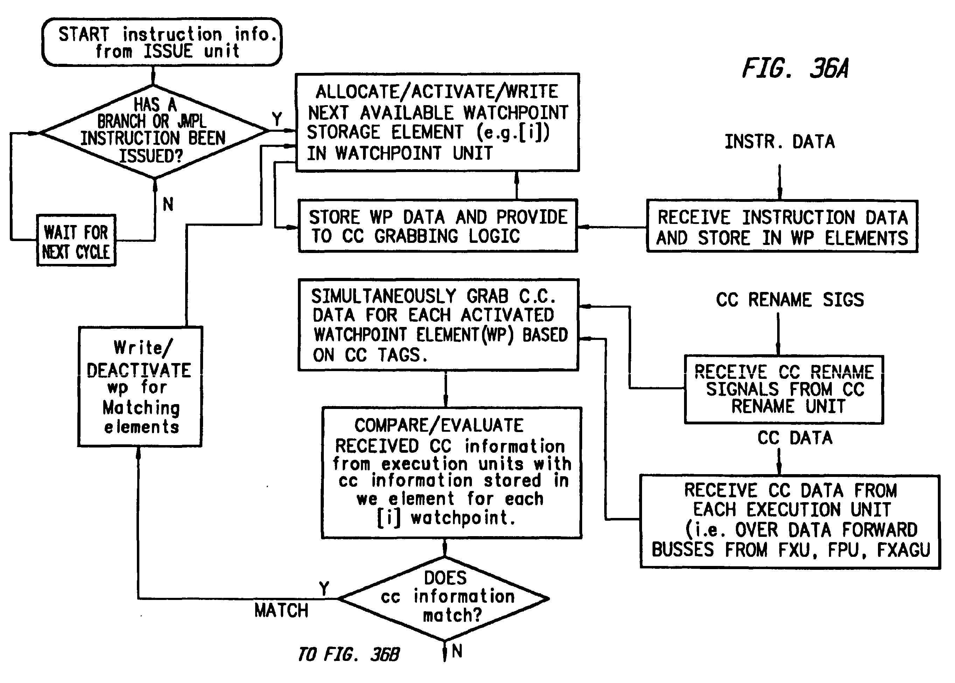

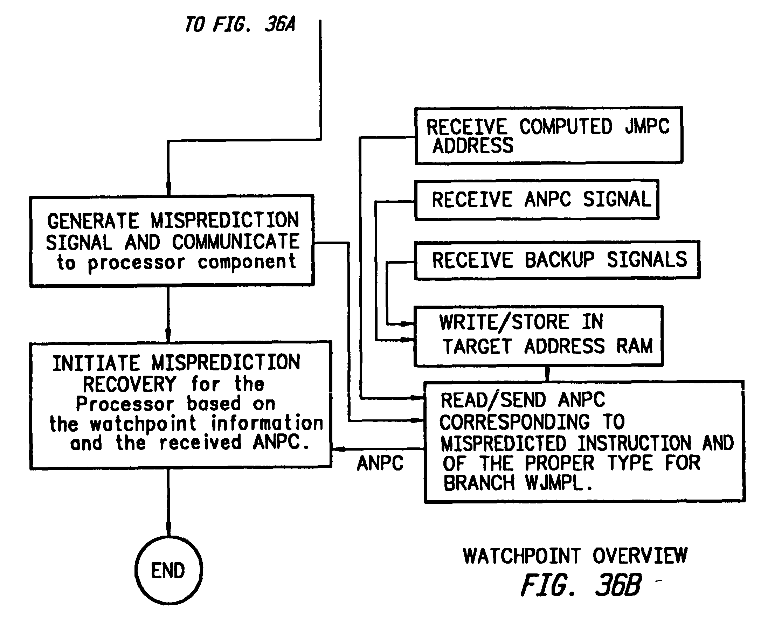

The inventive structure and method provide (1) Structure and method for initiate watching of plural predicted branch or jump-and-link instruction simultaneously; (2) Structure and method for grabbing plural Condition-Code data or calculated jump-and-link addresses for which predicted branch or jump-and-link instructions are waiting by watching data forward buses from execution units simultaneously; (3) Structure and method for being able to generate plural misprediction signals of branch or jump-and-link instructions simultaneously, either alone or in combination with (2); (4) Structure and method for storing alternate branch address or predicted jump-and-link address in one storage shared with the two above cases, either alone or in combination with (2); (5) Structure and method for sending the correct branch address or jump-and-link address for instruction fetch when misprediction happens, either alone or in combination with (4); and (6) Structure and method for speeding up critical paths, by: tag compares for grabbing CC data are split into two parts: one is cc tag in previous cycle compared to the data forward bus tag; another is currently renamed cc tag in the current issue window compared to data forward bus tag. (Alone or in combination with (2)) For the latter case, the latched signal of renamed cc tag can be used for the compare so, it's not timing-critical. FIG. 36 is a diagrammatic flow-chart of an embodiment of the inventive Watchpoint method for plural simultaneous unresolved branch evaluation.

### B. Exception Detection

Exceptions may occur during issue or execution. Thus, exceptions include issue traps and execution traps. The detection of Issue Traps and Execution Traps are described below.

### 1. Detecting Issue Traps

The ISU 200 also detects issue traps which effect issuing of instructions. These issue traps may be syncing or non-synching issue traps. Those skilled in the art will recognize, the type of issue traps that are made syncing and non-syncing can be selected based on various criteria and subject to designer choice.

For example, non-syncing issue traps are typically those that occur often and for which syncing of the CPU 51 in the manner described earlier would reduce processor speed. Thus, these kinds of issue traps are not synced and entered into speculatively. These issue traps may include issue traps such as the fill_normal, fill_other, spill_normal, spill_other, clean_window, trap_instruction (a trap always immediate (TA %g0+simm7) instruction), unimplemented_Idd, unimplemented_std, and illegal_instruction described in the SPARC-V9 Architecture Manual.

The non-syncing issue traps are typically of the type that do not occur often and for which syncing the CPU 51 would not significantly effect processor speed. These may include issue traps such as the SPARC-V9 instruction_access_error, instruction_access_exception, privileged_opcode, privileged_action, fp_exception_other, fp_disabled, emulation_trap, and trap_instruction (a conditional trap (Tcc) instruction) issue traps.

In order to detect whether certain types of these issue traps occurred during the issue stage, the ISU 200 receives control register (CNTRL_REG) fields from the control register file 800. As shown in FIG. 17, the control register file 800 contains the SPARC-V9 privileged registers including the clean windows (CLEANWIN) register 801, the restorable windows (CANRESTORE) register 802, the savable windows (CANSAVE) register 803, the windows state (WSTATE) register 804, and the processor state (PSTATE) register 805. It also contains SPARC-V9 non-privileged registers including the TICK register 806 and the floating point register status (FPRS) register 807. The CNTRL_REG fields include the CLEANWIN, CANRESTORE, CANSAVE, WSTATE_NORMAL, WSTATE_OTHER, PSTATE_PEF, PSTATE_PRIV, TICK_NPT, and FPRS_FEF fields described in the SPARC-V9 Architecture Manual and provided by the CLEANWIN, CANRESTORE, CANSAVE, WSTATE, TICK, and FPRS registers 801 - 807.

Turning back to FIG. 7, the ISU 200 decodes the FR_INSTs_BRPs instructions and utilizes the CNTRL_REG fields in accordance with the SPARC-V Architecture Manual to determine whether any of the SPARC-V9 issue traps occurred. Only the issue trap caused by the instruction in the earliest issue window slot will be taken. Therefore, when one or more issue traps are detected, only those of the instructions in the issue window slots prior to the slot of the issue trap causing instruction which is in the earliest slot can be issued by the ISU 200. The issue trap causing instruction and those of the FR_INST_BRP_0-3 instructions after the slot of the issue trap causing instruction will not be issued, except that a TA or Tcc instruction that caused the (trap_instruction) issue trap will be issued.

When an issue trap occurs, the ISU 200 outputs ISSUE_TRAP signals to the PSU 300 that indicate that a trap has occurred and identify which of the issue traps described earlier has occurred. When a non-syncing issue trap is detected by the ISU 200, the ISSUE_TRAP signals will be output by the ISU 200 as soon as the issue trap is detected. However, when a syncing issue trap is detected by the ISU 200, then the ISSUE_TRAP signals will not be output by the ISU 200 until the issue trap causing instruction is in slot 0 and the CPU 51 is synced in the manner previously described. In the case of a Tcc instruction which causes a non-syncing issue trap, the Tcc instruction can only be issued once the CPU 51 is synced.

### 2. Detecting Execution Traps

Referring to FIG. 8, during execution of issued instructions, errors may occur which are detected by the FPU 600, FXU 601, and LSU 603. As indicated earlier, FPU 600, FXU 601, and LSU 603 output ERR_STAT signals to the PSU 200 of the ISB 61 that indicate if an error occurred during execution of an instruction. Execution errors from the LSU and FXU can be easily handled by the PSU 300. But, floating point exceptions require special handling as will be described next.

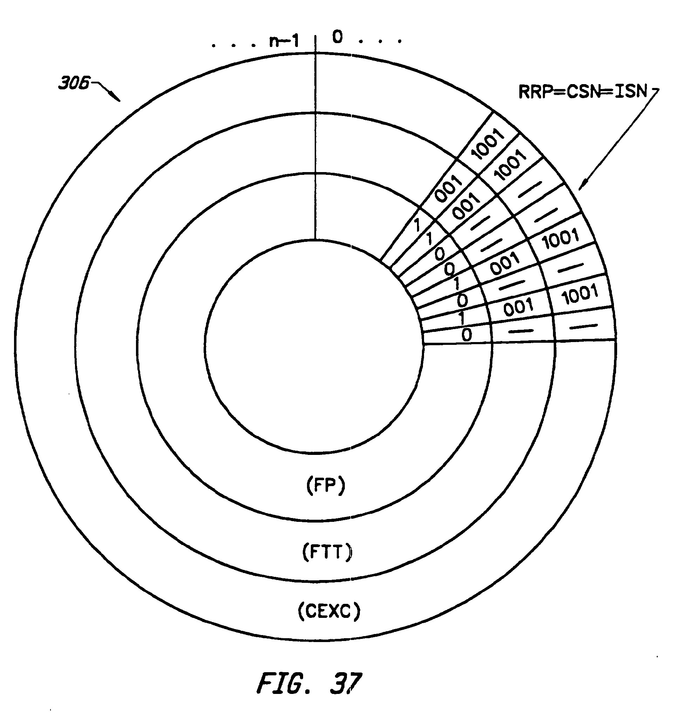

Referring to FIG. 8, as was discussed earlier, the FPU 600 executes floating point instructions out of predicted and/or actual PC order based on resource availability. During execution of floating point instructions, the FPU 600 may detect execution traps (i.e., errors). But, since the FPU 600 may execute instructions out of predicted and/or actual PC order, the execution traps they cause may also be out of predicted and/or actual PC order. In order to properly handle and detect floating point execution traps as if they had occurred in actual PC order, the PSU 300 includes a floating point exception (FPEXCEP) ring or unit 306, as shown in FIG. 37.

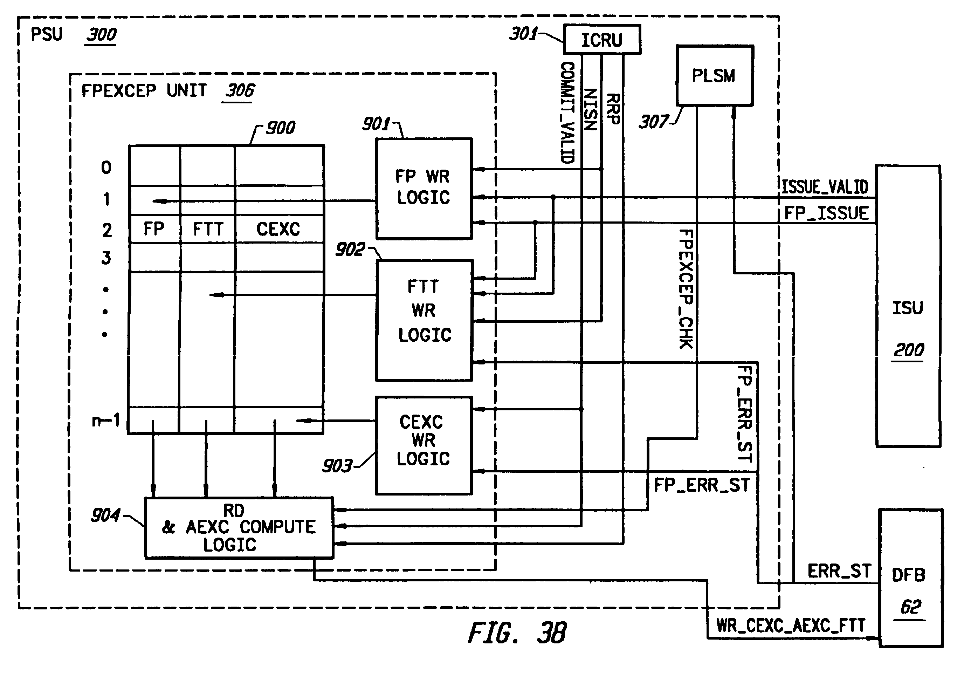

As shown in FIG. 38, the FPEXCEP ring 306 includes a data storage structure 900 with 64 storage elements or entries. Each storage entry corresponds to one of the 64 instruction serial numbers and has an instruction identifying (FP) field, a floating point trap type (FTT) field, and a current floating point exception type (CEXC) field. As shown in FIG. 37, the data storage structure forms an FP field ring that has sixty-four addressable storage elements for storing the FF FP fields, an FTT field ring that has sixty-four addressable storage elements for storing the FTT fields, and an CEXC field ring that has sixty-four addressable storage elements for storing the CEXC fields. Each of the addressable storage elements of the FP, FTT, and CEXC field rings corresponds to an instruction serial number.

The FP bits are set ("1") or cleared ("0") to indicate whether the corresponding instructions are SPARC-V9 floating point type instructions or not. For the instructions in the FPEXCEP ring 306 which are identified by the FP bit as being floating point instructions, the FTT fields identify the type of SPARC-V9 floating point trap that occurred. As indicated in the SPARC-V9 Architecture Manual, this includes no trap, an IEEE_754_exception, an unimplemented_FPop, an unfinished_FPop, a sequence_error, a hardware_error, and an invalid_fp_register error. As those skilled in the art will appreciate, the CPU 51 could be implemented without specifying, detecting, and handling some of these types of traps, in which case the FTT fields of the FPEXCEP ring 306 could be made smaller so as to require less storage space. Furthermore, for the floating point instructions for which the FTT fields indicate an IEEE_754_exception occurred, the CEXC fields identify the one or more types of IEEE_754_exceptions that did occur in accordance with IEEE Std 754-1985 and the SPARC-V9 Architecture Manual. Thus, the CEXC field includes a bit to indicate if an operand is improper (nvc), a bit to indicate if an overflow occurred (ofc), a bit to indicate if an underflow occurred (ufc), a bit to indicate if a divide by zero occurred (dzc), and a bit to indicate if an inexact result occurred (nxc). But, for floating point instructions that result in other types of floating point trap types or no floating point trap, the CEXC fields indicate that none of the types of IEEE_754_ exceptions occurred.

Like the A-ring 312 and M-ring 324 described earlier and shown in FIG. 11, the FPEXCEP ring 306 is implemented as a circular, ring, or wrap-around data structure where pointers are moved in along the data structure using "modulo-FPEXCEP-ring register length" arithmetic (here, modulo-64 arithmetic), as shown in FIG. 37. Those skilled in the art will recognize that, although a circular data structure is advantageous, it is not essential to the invention and other data structures implementing the features of the invention may be used.

Referring back to FIG. 38, during each issue stage, the ISU 200 outputs the ISSUE_VALID signal described earlier which indicates which of the fetched FR_INST_BRP_0-3 instructions was issued. At the same time, it outputs an FP_ISSUE signal that identifies which of the issued instructions is a floating point instruction. These signals are received by the FP write (WR) logic 901 and the FTT write (WR) logic 902. In addition, the FP WR logic 901 and the FTT WR logic 902 receives from the ICRU 301 the NISN pointer discussed earlier.

The FP WR logic 901 and the FTT WR logic 902 use the NISN pointer and the ISSUED_VALID signal to address the locations in the FPEXCEP ring that corresponding to the FP bits and the FTT fields for the instructions that were just issued by the ISU 200. For each of these instructions identified by FP_ISSUE as being a floating point instruction, the FP WR logic 901 sets the corresponding FP bit to indicate that it is a floating point instruction. And, for those of the issued instructions that are identified by FP_ISSUE as not being a floating point instruction, the FP WR logic 901 clears the corresponding FP bit to indicate that it is not a floating point instruction.

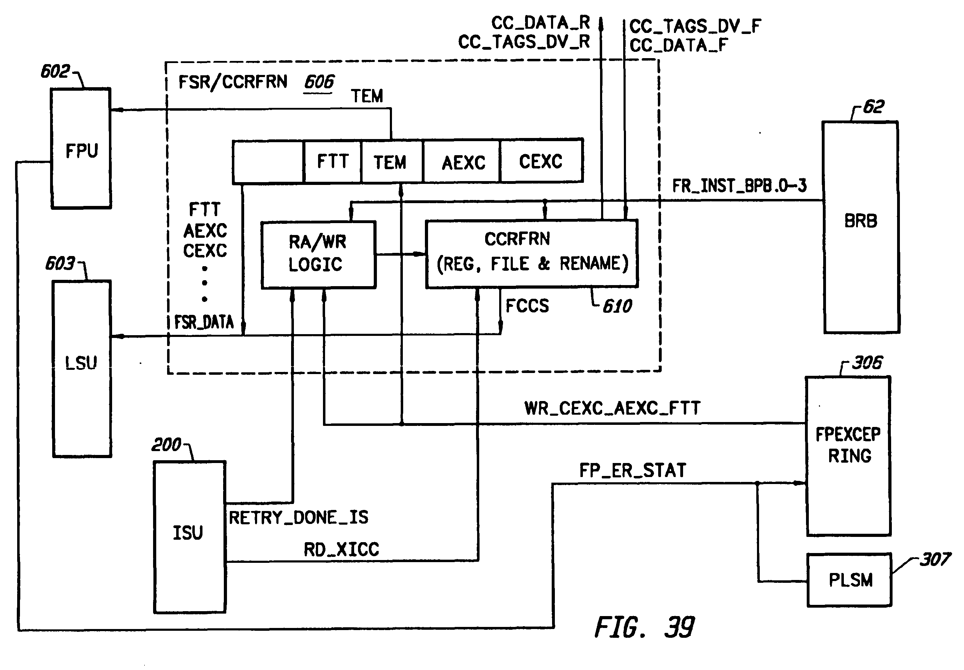

Referring to FIG. 8, as described earlier, the FPU 600, the FXU, 601, the FXAGU 602, and the LSU 603 execute issued instructions and output ERR_STAT signals when execution is completed. As shown in FIG. 39, the ERR_STAT signals include FP_ERR_STAT signals that contain the serial numbers, checkpoint numbers, and error status fields for floating point instructions executed and completed by the FPU 600. The error status fields indicate the floating point trap type that will result from an executed floating point instruction or no floating point trap if one will not result and the current floating point exceptions caused by the floating point instruction or no current floating point exceptions if none were caused. In other words, the error status fields contain data representing the FFT and CEXC fields to be written to the FPEXCEP ring 306 for the floating point instruction.

Moreover, referring to FIG. 39, the FSR/CCRFRN 606 includes the SPARC-V9 floating point status register (FSR). The FSR includes a trap enable mask (TEM) field that includes a masking bit for each of the IEEE_754_exceptions described earlier so that one or more of these exceptions may be masked. The TEM field is provided to the FPU 602. When an IEEE_754_exception occurs, the FP_ERR_STAT signals will not indicate to the PLSM 307 that an exception occurred if the TEM field indicates that it is of the type that should be masked. But, the FP_ERR_STAT signals will nevertheless indicate to the FPEXCEP unit that such an IEEE_754_exception occurred (i.e., FTT) and also the type of IEEE_754_exception that it is (i.e., CEXC).

For each completed floating point instruction, the FTT WR logic 902 uses the serial number provided in the FP_ERR_STAT signals to write into the corresponding FTT field of the FPEXCEP ring 306 the FTT data identified by the FP_ERR_STAT signals. Furthermore, the CEXC write (WR) logic 903 uses this serial number to write into the corresponding CEXC field of the FPEXCEP ring 306 the CEXC data identified by the FP_ERR_STAT signals.

The read and accrued exception compute (RD and AEXC compute) logic 904 receives the RRP pointer and the COMMIT_VALID signal from the ICRU 301 of the PSU 300. The RRP pointer points to the last instruction retired in the previous machine cycle and the COMMIT_VALID signal indicates how far the RRP pointer will advance (i.e., the number of instructions that were retired) in the previous machine cycle.

During each machine cycle, the RD and AEXC compute logic 904 uses the RRP pointer and the COMMIT_VALID signal to read the FP bit and FTT and CEXC fields in the FPEXCEP ring 306 for each instruction that was retired in the last machine cycle. Then, for those of the retired instructions that are floating point instruction (as identified by the FP bits), the RD and AEXC compute logic 904 logical ORs their CEXC fields to compute an AEXC field. The AEXC field identifies the masked IEEE_754_exceptions accrued by all of the floating point instructions retired in the last machine cycle since, as described shortly, the floating point instructions that cause non-masked IEEE_754_exceptions will not have been retired and will have resulted in execution trap sequencing by the PLSM 307.

In addition, the RD and AEXC compute logic determines from the read FP bits which of the instructions retired in the current machine cycle is the latest floating point instruction to be retired. If one or more floating point instructions were retired in the current machine cycle, the Rd and AEXC compute logic 904 then outputs WR_CEXC_AEXC_FTT signals that include a signal that contains the computed AEXC field and a signal that indicates that it should be written into the fsr.aexc field of the FSR in FIG. 39. Moreover, the WR_CEXC_AEXC_FTT signal also include signals that contain FTT and CEXC data for the most currently retired floating point instruction and signals that indicate that this data should be written into the fsr.ftt and fsr.cexc fields of the FSR in FIG. 39. In this circumstance, the FTT data will indicate no floating point trap type for several reasons. First, floating point instructions that don't cause execution exceptions can be retired and will have corresponding FTT fields in the FPEXCEP ring that indicate no floating point trap type. Second, floating point instructions that have FTT fields that indicate an IEEE_754_exception trap but which caused one or more corrresponding IEEE_754_exceptions that were masked by the TEM field of the FSR 607, can be retired since the PLSM 307 is not alerted that any of these execution execptions occurred.

As mentioned previously, the PLSM 307 also receives the FP_ERR_STAT signals. When these signals indicate that an execution trap has occurred, then an execution trap sequencing process is initiated by the PLSM 307 which causes the CPU 51 to be synced (i.e., RRP=CSN=ISN) at the instruction prior to the trap causing instruction.

The PLSM 307 then generates a FPEXCEP_CHK signal when the CPU 51 is synced. In response to the FPEXCEP_CHK signal, the RD and AEXC compute logic 902 uses the RRP pointer to read the FP, FTT, and CEXC fields in the FPEXCEP ring 306 for the instruction which is at RRP+1.

If the read FTT field indicates no floating point trap, then the instruction at RRP+1 was not responsible for causing a floating point exception. Since some other kind of exception may have occurred at this instruction, the RD and AEXC logic 904 outputs the WR_CEXC_AEXC_FTT signals so that they include signals that indicate that nothing should be written into the fsr.ftt, fsr.cexc, and fsr.aexc fields.

But, if the read FTT field indicates that a floating point trap occurred, then the instruction at RRP+1 was responsible for a floating point exception. The RD and AEXC logic 904 then outputs the WR_CEXC_AEXC_FTT signals so that they include a signal that contains the FTT field read from the FPEXCEP ring 306 for the instruction at RRP+1 and a signal that indicates that it should be read into the fsr.ftt field of the FSR 607 in FIG. 39. Thus, the trap type caused by the floating point instruction is contained in the fsr.ftt field of the FSR so that a floating point execution trap handling routine can access the FSR with a store FSR (STFSR) instruction to properly handle the trap.

In addition, if the read FTT field indicates that a IEEE_754_exception occurred, then the WR_CEXC_AEXC_FTT signals output by the RD and AEXC logic 904 include a signal that contains the CEXC field read from the FPEXCEP ring 306 for the instruction at RRP+1 and a signal that indicates that it should be read into the fsr.cexc field of the FSR 607 in FIG. 39. As a result, the current exception type caused by the floating point instruction is contained in the fsr.cexc field of the FSR so that the trap handling routine can now access this field of the FSR 607 with a store FSR (STFSR) and properly handle the trap.

Referring to FIG. 37, in this case, since floating point instructions are executed by the FPU 600 out of predicted and/or actual PC order, the instruction at RRP+1 may not have been the faulting instruction that caused the PLSM 307 to begin the execution trap sequencing process. In other words, a floating point instruction may have resulted in an execution trap that was detected earlier than an execution trap caused by another floating point instruction that was issued earlier (i.e., has an earlier serial number) but executed later. However, the later issued but earlier executed instruction caused the start of execution trap sequencing by the PLSM 307, while sequencing prior to machine sync, if an earlier instruction results in an exception, then the PLSM 307 will switch to processing it. Thus, the execution trap sequencing nevertheless results in the later detected execution trap actually being handled instead of the earlier detected execution trap as if the execution traps had occurred in actual PC order.

Although the FPEXCEP unit has been described in the context of the SPARC-V9 architecture, those skilled in the art will appreciate that it may be implemented for any architecture that involves speculative execution of floating point instructions.

### C. Recovery by Backtracking the Processor to an Earlier State

A CPU "backtrack" is initiated when either Watchpoint 304 detects a mispredicted instruction or when execution exception occurs in DFB 62 and triggers an execution exception (etrap) in PSU 300. Backtracing the processor may include a processor backup and/or processor backstep and described in greater detail below. More than one misprediction and execution exception can occur during a machine cycle. In the exemplary CPU 51, all speculatively executed control transfer instructions (e.g. predicted branch instructions) are checkpointed. Such a mispredicted instruction always lies at a "checkpoint boundary." Recovery from a checkpointed mispredicted instruction can be accomplished by restoring machine state that was stored in the checkpoint corresponding to that mispredicted instruction at the time it was issued. Execution exceptions, unlike mispredictions, may not correspond to a checkpointed instruction since not all instructions are checkpointed. In general, an instruction generating an execution exception may lie at any "instruction boundary". A checkpoint boundary corresponds to an instruction boundary only for speculatively issued control transfer instructions. Recall that not every speculatively issued instruction requires checkpoint formation, but rather only those speculative control transfer instructions that create a PC discontinuity (unless the control transfer instruction has been selected as a machine "syncing" instruction and is selectively not checkpointed as described herein). The manner in which the CPU 51 is backtracked therefore depends on the condition that initiated the recovery and whether the misprediction or exception corresponds to a checkpointed instruction.

The term "backup" as used herein refers to a structure and method for restoring machine state at a checkpoint boundary by restoring machine state previously stored in a checkpoint and then taking appropriate action to restart CPU 51 instruction issue and execution. As used herein, backup may or may not involve subsequent in-order reissue and re-execution of instructions forward from the checkpointed instruction. The term "backstep" as used herein, refers to a structure and method for restoring machine state at any instruction boundary, possibly in combination with a backup, and then taking appropriate action to restart CPU 51 instruction issue and execution.

When an execution trap (etraps) is encountered, the machine backtracks to the faulting instruction to preserve the precise state of the machine. Unlike mispredicts which lie on a checkpoint boundary, etraps may require backsteps, backups, or a combination of the two to reach the faulting instruction. There are no constraints in ordering or frequency of backstep or backup operations, other than the necessity of performing the operations. When used in combination, machine backup and backstep provide a method for efficiently recovering from mispredictions and execution exceptions and may advantageously do so, in some circumstances, without forcing re-execution of the instruction causing the exception or of the instruction between a checkpointed instructions and the faulting instruction.

Checkpoints are allocated whenever there is a change in processor flow (For example, Bcc, FBcc, jumpl, and the like instructions). The exemplary CPU 51 has up to sixteen checkpoints available for allocation. Backups are performed to restore machine state to a checkpoint boundary. Backsteps are performed to restore machine state to any instruction boundary. The exemplary machine is limited to backstepping up to four instructions per cycle by available hardware. Backups provide a coarse but fast backtracking mechanism for restoring machine state, and Backsteps provide a mechanism for restoring machine state at fine instruction boundaries. The machine can Backtrack to earlier state through any combination of Backups or Backsteps.

Two rules should be observed in order to realize precise state restoration using the inventive backstep procedure in conjunction with the inventive backup procedure. First, when instructions which may modify architectural control registers are encountered in the instruction stream, the CPU 51 should either be synced prior to execution of the instruction, or the machine should checkpoint that instruction. If this first rule is observed, backstepping never requires any architectural control register modification or update. Second, all instructions that may create program counter discontinuities should be checkpointed. If the second rule is observed, backstepping involves decrementing the PC by the number of backsteps and reclaiming and restoring machine resources (including resources maintained in RRF 302) as they are allocated at the earlier corresponding Program Counter.

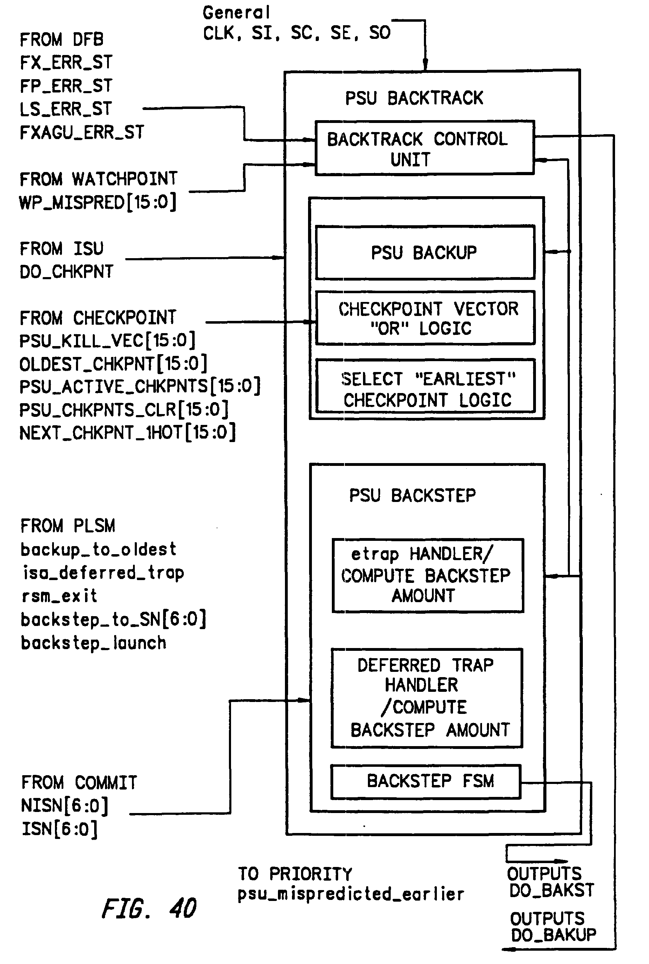

Backtrack Unit (BKTR) 305 functionally located within PSU 300 and is responsible for implementing machine backups and backsteps as required for correct CPU 51 function and recovery. As shown in FIG. 40, BKTR 305 comprises Backtrack Control Unit (BTCN) 401 which is responsible for determining whether a machine backup, one or more machine backsteps, or combinations of backups and backsteps are appropriate to recovery the CPU 51 from mispredictions and exceptions. BTCN 401 receives SN, error, and status information from each execution unit in DFB 62 and from watchpoint 304. Backup Unit (BKUP) 402 is responsible for initiating and sequencing machine backups, and Backstep Unit (BKST) 403 is responsible for initiating and sequencing machine backsteps. The CPU 51 should stop issuing instructions, and backtrack using backup and backstep as appropriate to the instruction causing the exception or misprediction. Structure and method for backing up the CPU 51 using backstep, and for backstepping the machine are described in greater detail hereinafter.

### 1. Processor Backup to a Checkpoint Boundary

A machine backup will be initiated when: (1) PLSM 307 within PSU 300 attempts to enter RED Mode, or when (2) Watchpoint 304 detects a mispredicted instruction. A machine backup may or may not also be initiated when (3) a faulting instruction (execution exception or etrap) is detected from DFB 62. Backup procedures differ, including selection of the checkpointed instruction to backup to, depending on the reason for initiating the backup. A backup may be followed by a backstep if the faulting instruction causing the execution exception does not coincide with a checkpoint boundary.

Each machine cycle, Backup Unit (BKUP) 402 receives instruction execution status information ERR_STAT from DFB 62 over the Data Forward Busses and mispredicted instruction information (WP_MISPRED) from Watchpoint 304. These signals identify the instruction serial number (SN), instruction checkpoint to which the machine should be backed up to if a backup is needed, an indication that an error has or has not occurred, and an error type indication (deferred, data breakpoint, Floating-Point operation, and the like). If the FXAGU does not handle multiplication or division operations, then the ERR_STAT signals from that execution unit may not generally provide error information but will provide SN and checkpoint number information in the ERR_STAT signals. Although checkpoints are not formed for every instruction that is issued, each instruction is assigned a backup checkpoint at the time it is issued. This checkpoint is allocated by ICRU 301 within PSU 300 prior to instruction issue, associated with the instruction by ISU 200 at issue, sent by ISU 200 to DFB 62 with the instruction operation code (op-code) and instruction serial number, and stored in one of the execution unit's queue. (For example, in FIG. 22, backup checkpoint is stored in checkpoint field 614.) Therefore, when the instruction completes execution, the serial number and checkpoint number are immediately available within the execution unit (i.e. FXU, FPU, FXAGU, or LSU).

### 2. Mispredicted Instruction, RED Mode, and Execution Trap Initiated Backup

A backup cycle is initiated by BKUP 402 whenever a mispredicted instruction is detected by Watchpoint 304 or when entering RED Mode, and may be initiated to recover from an execution exception. Recovery from an execution exception may require only backstepping, only backup, or a combination of a backup and one or more backsteps. BKUP 402 includes Checkpoint Vector Logic Unit 404 that evaluates the instruction execution status information received from DFB 62 and Watchpoint 304 each cycle and determines which instructions, if any, have been mispredicted or caused an execution exception. In the exemplary CPU, Logic Unit 404 performs an "OR" on each checkpoint received from DFB 62 or watchpoint 304. Select Earliest Checkpoint Logic 405 determines which of the checkpoints is the earliest so that etraps corresponding to later faulting instructions will not initiate a backup to checkpoints identified by Logic 404 which have already been killed. BKUP 402 takes into account mispredictions and execution exceptions when determining which checkpoint number to use for a backup.

The machine is backed-up to the mispredicted instruction checkpoint when the mispredicted instruction is the earliest checkpoint. For RED Mode initiated backup, the machine is backed up to checkpoint which is closest to, but greater (in the A-Ring circular sense) than, the Committed Serial Number (CSN). For execution exceptions, the checkpoint selection is more complex and depends on the nature of the exception.

Execution exception (etrap) initiated backups, may require different backup checkpoint number calculations for deferred and non-deferred traps. For a normal non-deferred trap, if instruction i lying in checkpoint n faults at a time when ISN has moved beyond checkpoint n+1, the machine is backed up from ISN to checkpoint n+1, that is to the checkpoint after the faulting instruction. If checkpoint n+1 is not an active or valid checkpoint, either because no instructions requiring checkpoints have been issued or because no time-out checkpoints have been created, then a backup should not be performed. Instead, recovery using backstep(s) only, from ISN backward to the faulting instruction is appropriate, unless the faulting instruction sits in the serial number slot immediately after a checkpoint. For example, if checkpoint m has been allocated and has serial number SN=10, then if the instruction sitting in slot SN=11 faults, a backup to checkpoint m is initiated, instead of a backup to checkpoint m+1. That is, the machine is backed up to the checkpoint before the faulting instruction.

When the checkpointed instruction corresponds to a speculative branch or other control transfer instruction, a program counter discontinuity exists between the checkpointed instruction and the next instruction. The exemplary backstep implementation does not backstep across Program Counter discontinuities and cannot be used in spite of there being only a single program instruction serial number difference. Program Counter and machine state can only be properly restored in this situation through a backup.

Deferred traps require a different backup destination calculation than non-deferred traps. If checkpoint m has been allocated and has serial number SN=10 for example, then if the instruction sitting in SN=11 faults and generates a deferred trap, the machine should be backed up to checkpoint m+1 (if it exists), instead of checkpoint m because ISN should point to the trapping instruction rather than to the instruction preceding the trapping instruction. If checkpoint m+1 does not exist then no backup is initiated. Instead, precise state is restored using only machine backsteps. Table 10 summarizes the backup actions taken for deferred and non-deferred traps under several conditions of checkpoint number and faulting instruction serial number.

Processor state restoration at the checkpointed instruction serial number when Backtrack 305 asserts signals (DO_BAKUP) comprising a control signal that informs CPU 51 units affected by machine backup that a backup is occurring, and four-bit data signals that inform each affected CPU 51 component of the checkpoint number to use in the backup. Since checkpointed state is stored locally in the machine, each CPU 51 unit is responsible for "restoring" state from storage areas within the affected unit in response to the DO_BAKUP signals.

**Table 10. Backup actions taken for deferred and non-deferred traps under several checkpoint and serial number conditions for embodiment of inventive method.**

| Is trap Deferred or Non-deferred? | Does Trapping Instruction have SN immediately after checkpoint SN? | Is Checkpoint n+1 valid? (Checkpoint n is assumed valid.) | Backup Action Taken |
|---|---|---|---|
| Not Deferred | NO | NO | NO BACKUP |
| Not Deferred | NO | YES | Backup to n+1 |
| Not Deferred | YES | NO | Backup to n |
| Not Deferred | YES | YES | Backup to n |
| Deferred | NO | NO | NO BACKUP |
| Deferred | NO | YES | Backup to n+1 |
| Deferred | YES | NO | NO BACKUP |
| Deferred | YES | YES | Backup to n+1 |

The CPU 51 units that are responsible for storing, maintaining, and restoring the checkpointed states, as well as the CPU 51 units responsible for sequencing the backup operation (particularly the units within PSU 300) receive and respond to the DO_BACKUP signals. Note that RRF 302 receives DO_BACKSTEP signals but not DO_BAKUP signals because RRF is directly involved only with backstepping the CPU 51 and restoring states in a step-by-step manner rather than with backups.

More specifically, referring to FIG. 6, the checkpoint storage unit 106 outputs, in the form of the CHKPT_PC and CHKPT_NPC signals, the checkpointed APC and NAPC values stored by it in the entry corresponding to the checkpoint number specified by the DO_BACKUP signals. These values are then stored in the APC and NAPC registers 112 and 113. Similarly, the control register checkpoint storage unit 817 outputs, in the form of the CHKPT_CNTRL_REG signals, the control register contents checkpointed for the checkpoint specified by the DO_BACKUP signals and these contents are then stored by the RD/WR update logic in the corresponding control registers in the control register file 800, as shown in FIG. 17. Moreover, referring to FIG. 16, the checkpoint storage unit 616 of each of the FXRFRN 604, the CCRFRN 610, and the FPRFRN 605 output, in the form of the CHKPT_MAP signals, the checkpointed rename maps for the checkpoint specified by the DO_BACKUP signals. The checkpointed rename maps are then stored back in the rename mapping logic 615 by the control logic 613. Furthermore, the checkpoint storage unit 702 of the Freelist Unit 700 outputs, in the form of the CHKPT_FREELIST signal, the checkpointed freelist of the physical registers of each of the FXRFRN 604, the CCRFRN 610, and the FPRFRN 605 which are then stored in the Freelist logic 701.

In the exemplary CPU 51, backups are initiated even as etraps are still being sequenced. Since etrap exception processing may require multiple cycles, it is possible for more than one etrap to be asserted by DFB 62 before the machine is synced (ISN=CSN=RRP) and able to take and process the trap. In one embodiment of the exemplary CPU 51, each of the error and status signals (ERR_STAT) from DFB 62 for each of slots 0 and 1 comprise single bit error indication signals, six-bit serial number signals (FX_SN, FP_SN, LS_SN, and FXAG_SN), and sixteen-bit one-hot checkpoint vectors (FXDF_CHKPNT, FPDF_CHKPNT, FXDF_CHKPNT, and LSDF_CHKPNT) that will be used to compute the proper backup checkpoint for each instruction. Furthermore, mispredicted instruction information signal WP_MISPRED is a sixteen-bit one-hot vector wherein assertion of bit-i indicates that the i-th checkpoint corresponds to a mispredicted instruction and required a backup. Checkpoint Vector Logic Unit 404 cumulatively OR's all of the sixteen-bit one-hot checkpoint vectors from each of slots 0 and 1 until the machine is able to vector into the trap table. The "ORed" checkpoint vector is fed into Select Earliest Checkpoint Logic 405 which determines the earliest checkpoint. Even if execution exceptions occur that correspond to later instructions, no backup to checkpoints which have already been killed through a prior backup will be initiated. In the exemplary CPU 51, the watchpoint mispredict signal (WP_MISPRED) is a sixteen-bit one-hot vector wherein assertion of bit-i indicates that the i-th checkpoint corresponds to a mispredicted instruction and required a backup.

### 3. Processor Backstep to Any Instruction Boundary

A machine backstep will be initiated only as a result of execution exceptions (etraps) generated from faulting instructions in DFB 62. Machine backstep frequently occurs in combination with machine backup but may be initiated without also initiating backup.

Backstep Unit (BKST) 403 is responsible for performing backsteps. Machine "backsteps" will only occur as a result of etraps generated from faulting instructions in DFB 62. When backsteps are performed, two events occur in the machine. First, resources are reclaimed (See ICRU 301 and RRF 302 description) and made available as pending instructions are killed. These resources include serial numbers, checkpoints, watchpoints, and allocated physical and logical registers. Secondly, ISN is decremented during backstepping but can never be decremented to go behind CSN and RRP, The faulting instruction still has its active-bit in A-Ring 312 set, thereby preventing CSN and RRP advancement. Only when the faulting instruction has executed successfully without error will the A-Ring bit corresponding to the instruction be cleared. (Except that when successfully handling deferred traps, the A-Bit (and M-bit) is clear to permit CSN (and NMCSN) advancement and eventual recovery of resources.)

Machine backstepping is initiated in BKST 403 by a backstep launch control signals (BACKSTEP_LAUNCH) and a backstep serial number identification signal (BACKSTEP_TO_SN) from PLSM 307 which identify the serial number of the instruction we want to use to backstep to. In response, BKST 403 starts sequencing the backstep procedure by generating a backstep notification signal (DO_BACKSTEP) that informs ICRU 301 and other CPU 51 units that Backtrack 305 is initiating a backstep mode. BKST 403 starts generating a signal that identifies a count of the number of instructions to backstep over and can be viewed as a satellite controller which can be initiated to fulfill a task by PLSM 307. BKST 403 starts the task at PLSM's request, and upon fulfilling the task, indicate the end of the task to PLSM, and await the next request.

BKST 403 handles backsteps for two types of conditions. The first type is a non-deferred etrap. The non-deferred etrap is signaled when a deferred trap signal is not asserted (ISA_DEFERRED_TRAP=0) by PLSM 307 and the backstep launch control signal is asserted (BACKSTEP_LAUNCH=1) to indicate an etrap which is not a deferred trap. In this case, a backstep amount is calculated in BKST 403 by determining the difference between the serial number to be backstepped to (BACKSTEP_TO_SN) and the Next Issued Serial Number (NISN). Using the next issued serial number NISN) rather than the Issued Instruction Serial Number (ISN) results in the machine backing up to the instruction just before the faulting instruction. This backstep amount is saved in a memory storage area within the CPU 51 and decremented until the instruction before the faulting instruction is reached.

The second backstep condition involves deferred etraps. A deferred etrap is signaled by signaled when a deferred trap signal is asserted (ISA_DEFERRED_TRAP=1) by PLSM 307 and the backstep launch control signal is asserted (BACKSTEP_LAUNCH=1) to indicate an etrap which is a deferred trap. In this case, a backstep amount is calculated in BKST 403 by determining the difference between the serial number to be backstepped to (BACKSTEP_TO_SN) and the Issued Serial Number (ISN). Here, the machine is backstepped to the faulting instruction rather than the instruction before the faulting instruction. The calculated backstep amount will be one less than the normal non-deferred case.

In the exemplary CPU 51, a maximum of four instructions may be backstepped over in each machine cycle. Therefore, multiple backstep cycles of up to four instructions each are executed to arrive at the destination (backstep to) instruction. In general, there is no need to limit the number of instructions backstepped over in a single cycle. A further limitation in the exemplary embodiment is that the backstep method does not support backstepping over instructions that cause program counter discontinuities since decrementing the PC from ISN (or NISN) by the backstep amount may not result in proper state restoration.

A simple state machine consisting of two states, "IDLE" and "BACKSTEP," is used to sequence the backstep. While in IDLE state, assertion of "BACKSTEP_LAUNCH" results in a transition to state BACKSTEP. While in state BACKSTEP, DO_BACKSTEP is asserted, and two termination conditions are evaluated. Either of these two conditions will result in termination of the BACKSTEP and returning to state IDLE.

Restoring CPU 51 state during backstepping only involves updating machine register resources and decrementing the program counter (PC) by the backstep amount. As described, instructions which may modify architectural control registers either sync the machine or are checkpointed, therefore there is no need to restore architected control registers during a backstep. In the exemplary CPU 51, the following machine states are updated during a backstep: Program Counter (PC), Next PC, information stored in RRF, and information stored in the Rename Maps. Other Control Registers including Trap PC, Trap NPC, and Privileged registers in BRB 59 are not modified or updated by backstepping. Machine resources are reclaimed from the Register Files in conjunction with logical-to-old-physical mappings stored in the Register Reclaim Format File (RRF) 302. When the backstep notification signal is asserted (DO_BACKSTEP), it informs ICRU 301, RRF 302, and other CPU 51 units that a backstep mode is being initiated. At backstep, the number of RRF 302 items to be reclaimed and restored during each backstep cycle is equal to the number of instructions to be backstepped over as indicated by the backstep count signal (with DO_BACKSTEP).

Therefore, the CPU 51 units that are responsible for storing, maintaining, and restoring these states, as well as CPU 51 units responsible for sequencing the backstep operation (particularly the units within PSU 300) receive and respond to the backstep control signals including units within BRB 59, ISB 61, and DFB 62. RRF 302 receives DO_BACKSTEP signals but not DO_BACKUP signals because RRF is directly involved only with backstepping the CPU 51 and restoring states in a step-by-step manner rather than with backups.

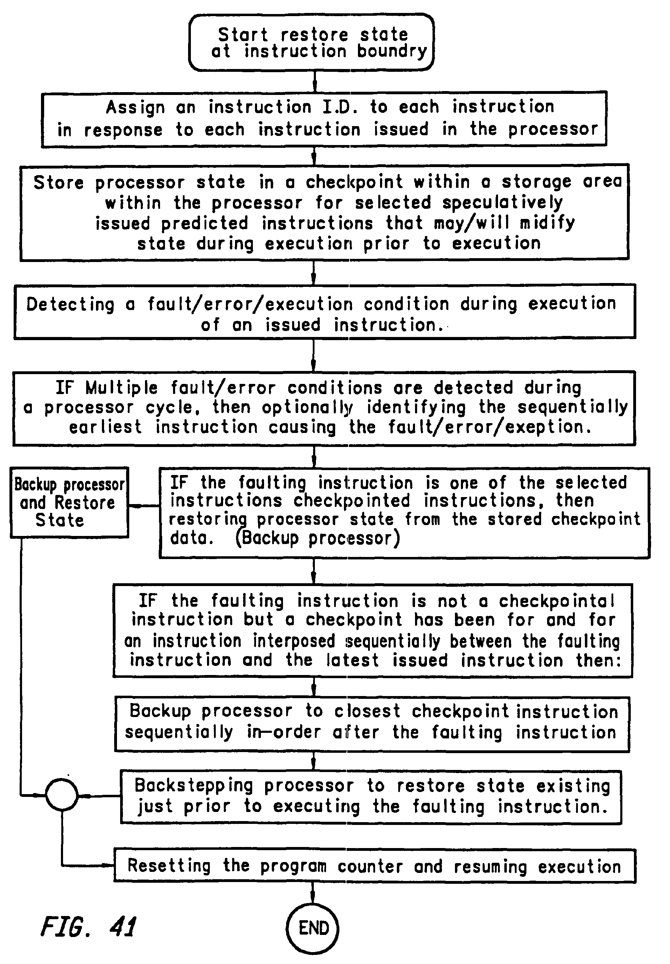

Register Reclaim Format Unit 302 responds to the backstep asserted signal (DO_BACKSTEP) and the number of RRF items to be reclaimed and restored is equal to the backstep count within the DO_BACKSTEP signal. RRF contains the logical-to-old physical register map, that is, the assignment of logical to physical registers that hold source or destination data values. Since none of the register resources allocated to instructions in RRF 302, or the register maps, have been freed back to Freelist 700 by advancement of CSN or RRP, the actual data in registers has not been disturbed. RRF permits the physical registers (old physical register) to be reassociated with the logical register in the same relationship as when each backstepped instruction was originally executed. By restoring the register mappings on a step-by-step basis, the register state at each instruction is restored. From the standpoint of register resources, in effect, the machine is run backwards during backstepping. FIG. 18 shows a block diagram of RRF. FIG. 41 shows the manner in which the logical to physical mappings are restored in the register rename files FXFRN, CCFRN, FCCRFN, and FPFRN.

In the exemplary embodiment of the RRF, the logical to old physical register information comprising several signals (LOG_OPHYS_TAGS) are bundled together in Read/Write Control unit 365 for storage in either the data storage structure or unit 366. When the RRF is read out for restoration in the Register Rename Maps, the RRF data is unbundled to restore it to its original format. Those workers having ordinary skill in the art, in light of the teachings herein will realize that various storage formats and bundling/unbundling routines may be applied to the RRF data to minimize storage area.

Specifically, when backstepping occurs, the read/write logic 365 controls the storage unit 366 to output, in the form of the LOG_OPHYS_TAGS_BKST signals, the logical to old physical register tag mappings corresponding to the instruction identified by the DO_BACKST signals. Then, referring to FIGs. 8, 16, 18 and 39, the logical to old physical register tag mappings are restored to the FXRFRN604, FPRFRN 606, and the CCRFRN 610. As shown in FIG. 16, the control logic 613 in response to the DO_BACKST signals restores these mappings to the rename mapping logic 615.

A more elaborate backstepping scheme may be implemented by maintaining additional information; however, the inventive backstepping method is simplified since program counter values correspond to instructions within a basic block, that is, there are no program counter discontinuities among the instructions that may be backstepped over. Backstep unit 403 merely signals a number of backsteps from the checkpointed instruction serial number, or from the current ISN when backsteps are used without backup, to arrive at the faulting instruction. If program discontinuities were present, merely decrementing the program counter would not necessarily result in proper restoration. However, those having ordinary skill in the art, in light of the teachings contained herein, would realize that by using more sophisticated backstepping techniques that program counter discontinuities could be tolerated.

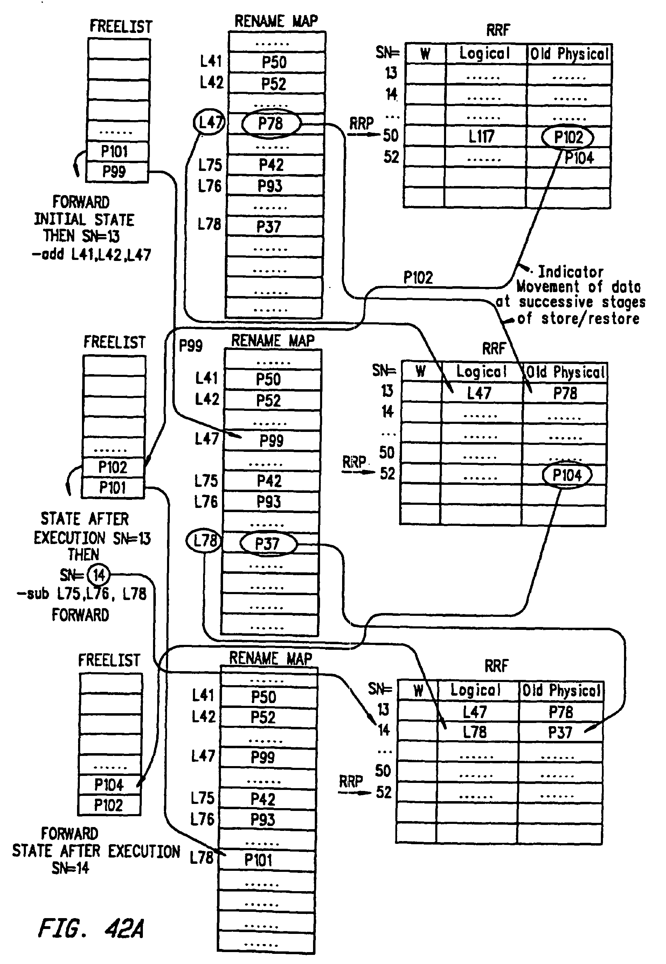

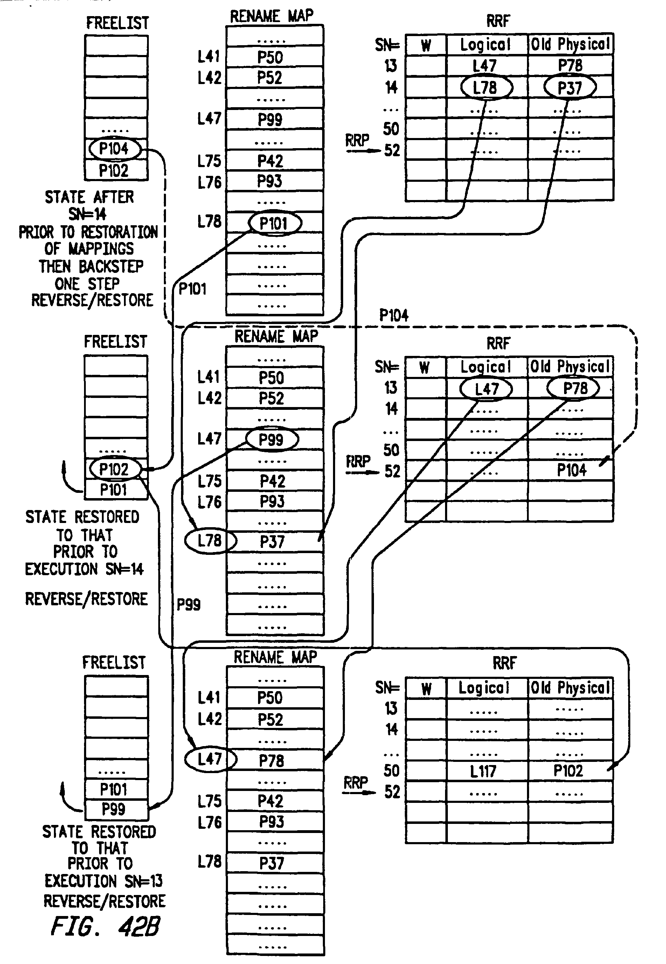

The two backtrack mechanisms, machine backup and machine backstep, provide the Precise State Unit an efficient method and structure for undoing speculative instructions sequences. Machine backups allow the Precise State Unit to bring the CPU 51 to a state corresponding to an active checkpoint boundary. Machine backsteps allow the Precise State Unit to backtrack the CPU 51 to a specific instruction boundary between checkpoint boundaries. Backups provides a coarse but fast method and structure for restoring machine state, while backsteps provide a fine but slower method and structure for restoring machine state. FIG. 41 is a diagrammatic flow-chart of an embodiment of the inventive method for maintaining and restoring precise state at any instruction boundary. FIG. 42 shows the manner in which the logical to physical mappings are restored in a register rename file.

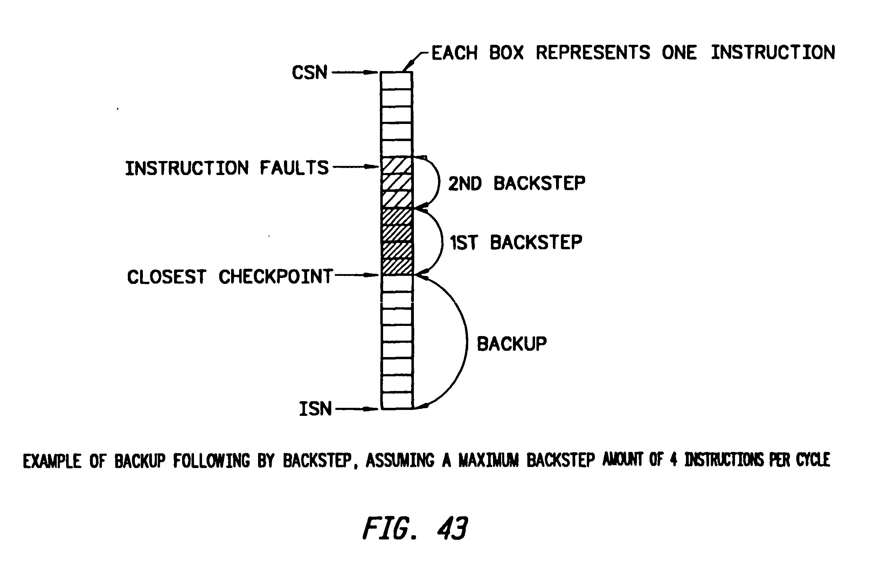

FIG. 43 provides an illustrative example of a machine backup followed by two machine backsteps. Backsteps can be executed as single steps or as multiple steps backing over several instructions at a time. In this example the CPU 51 has already issued an instruction corresponding to pointer ISN when the instruction fault is detected. The machine responds by backing up the machine to the closest checkpoint after the faulting instruction. Instructions between the closest checkpoint and ISN are killed. Then the first backstep by an amount of four instructions brings the machine closer to the faulting instruction by reclaiming all resources dedicated to the four instructions (see First backstep) during issue of those instructions. Then, the second (and last) backstep by the amount of three instructions takes the machine right before the faulting instruction by reclaiming all resources dedicated the those remaining instructions (see second backstep region).

Backing up to a checkpoint is fast but it requires a lot of machine resources to store the checkpointed state. Since all predicted instructions cause a checkpoint to be made, state can be restored to a mispredicted instruction in one step. Backstepping is slower than backing up, but the backstep procedure of this invention allows machine state to be restored to the state which existed at the point of execution of a specific instruction, rather than at a checkpoint prior to the faulting instruction. And, because of the inventive backstepping structure and method, machine state can be restored to a checkpoint after the faulting instruction, rather than to a checkpoint before a checkpoint as in conventional methods, and then backstepped to the faulting instruction.

### D. Priority Logic and State Machine Operation During Exception & Misprediction Recovery

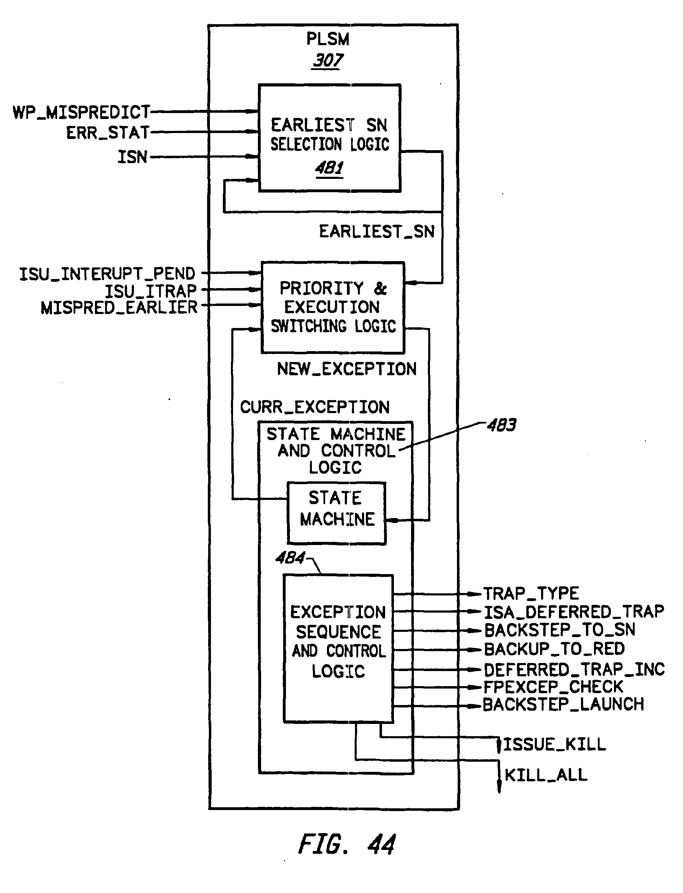

FIG. 44 shows an exemplary Priority Logic and State Machine (PLSM) 307 functionally located within CPU 51. PLSM 307 has several responsibilities. First, it identifies the earliest exception within a group of pending or concurrent exceptions. Exception conditions include RED Mode, issue traps (itraps), execution traps (etraps), interrupts, and mispredicts. Second, it priorities the exceptions and mispredictions arriving during a machine cycle among each other and among the currently handled exception and those that may be waiting to be handled. Third, it determines the possible state transitions between different types of exceptions and mispredictions. Fourth, it issues control signals that initiate Backtracking (Backup and/or Backstep), RED mode processing

Various exception types that may occur during instruction issue or execution are now described so that the prioritization and handling of the exceptions and mispredictions by PLSM 307 may be better understood. RED traps are asynchronous traps that may occur under various conditions and have the highest priority of all traps. RED Mode is described in the SPARC V-9 Architecture Manual. Itraps are issue traps generated by ISU 200 on instruction issue. These include any of the register spill/fill traps, any of the trap instructions (TA, Tcc), instruction access errors, illegal instructions, privileged opcode, and the like. Generally, issue traps have higher priority only compared to interrupts which have the lower handling priority. All other traps (mispredicts, etraps, or red traps) which are signaled will be to instructions which are temporally earlier than the itrap.

Etraps are execution traps which are signaled from one of the data forward busses. Execution traps must be prioritized against other execution traps on the basis of SN order. This is because etraps may not always occur at a checkpoint boundary and Backsteps may be required to reach the faulting instruction. If the machine performs a Backup to reach the instruction, then any new exceptions will be to an earlier instruction. If an etrap is currently being sequenced, then any new mispredicts will be of higher priority. This is because mispredicted instructions always have a checkpoint available to them. If PSU 300 is not already sequencing any exceptions, then etraps and mispredicts should be prioritized against each other. Interrupts are another type of asynchronous trap. Interrupts have priorities lower than all other exceptions.

Mispredicts are signaled by the Watchpoint Unit 304 when Watchpoint detects that a speculatively issued control transfer instruction was mispredicted. If any non-RED exceptions are being sequenced, mispredicts do not need to be prioritized since they always lie on a checkpoint boundary and will occur to a temporarily earlier instruction. If no exception is being sequenced then mispredict will have higher priorities than interrupts and itraps, but must be prioritized against etraps.

Earliest Serial Number Selection Logic Unit (ESNSL) 481 receives instruction serial numbers for instructions that have completed execution and status information, including information that an exception occurred or not during execution and exception type information, from each execution unit in DFB 62, a signal (WP_MISPREDICT) from Watchpoint Unit 304 indicating any mispredictions that have occurred that cycle, the current ISN, and a feedback signal from ESNSL 481 indicating the SN of the exception being handled in the current machine cycle prior to receipt of the new exception information from the last machine cycle (CURR_EARUEST_SN). Signals from each of the execution units include ERR_STAT. For example, if exceptions occur for instruction SN=10 and SN=56 in a 64 location A-ring 312, the earliest exception cannot be determined without also knowing the value of ISN. If ISN=40, then SN=56 is the earliest exception; however, if ISN=6, then SN=10 s the earliest exception.

ESNSLU 481 informs Priority & Execution Switching Logic (PESL) Unit 482 of the earliest exception or misprediction so that PESL can prioritize exception and misprediction handling based on both the earliest SN criteria and on the exception type. PESL also receives issue trap signals (ISU_ITRAP) and interrupt signals (ISU_INTERRUPT_PEND) from ISU 200, and a MISPIREDICTED_EARLIER signal from Backtrack Unit 305 if Backtrack was able to determine that the misprediction occurred earlier than an execution trap based on a comparison of checkpoint information. PESL also receives a state signal from State Machine and Control Logic (SMCL) 483, which includes State Machine 484 and Exception Control Signal Generation Logic 484, identifying the current exception type (CURR_EXCEPTION_TYPE), if any, being handled (e.g. etrap, itrap, RED, or the like). Exception State is stored in State Machine 484. PESL 482 uses these inputs to prioritize the current and pending exceptions and generates a signal that identifies the new exception type for the present machine cycle (NEW_EXCEPTION_TYPE).

Exception Control Signal Generation Logic (ECSIG) 484 is responsible for generating several signals that inform other units within CPU 51 the state of the CPU and in some instances directs other CPU units to take further action in response to the state. More Specifically, ECSIG generates and sends a TAKE_TRAP signal to the Trapstack Unit that includes a control portion that a trap should be taken, and the kind of trap. It sends a DEFERRED_TRAP_INC to ICRU 301 indicating if a deferred trap has occurred so that CSN and NMCSN should be advanced by one to advance past the exception. ECSIG also sends several signals to Backtrack Unit 305 including a signal that tells Backtrack 305 which instruction SN to backstep to (BACKSTEP_TO_SN); which the existence of a RED mode exception and the instruction to Backup to (BACKUP_RED) in the event of a RED Mode exception. ECSIG 484 also generates instruction kill signals to DFB 62 (KILL-ALL) and to ISU 200 (ISSUE_KILL) that instruct DFB to kill execution of instructions in the execution queues and to stop issuing instructions in the ISU respectively as appropriate to the exception or misprediction being handled during that machine cycle.

PLSM 307 tracks and differentiates traps into live different types: interrupts, red traps, itraps, etraps, and mispredicts. Depending on which exception is currently being sequenced, other exceptions that are detected may or may not have higher priority. If new exceptions have higher priority, PESL 482 tells SMCL 483 to switch from sequencing the current exception to the new higher priority exception or misprediction. These potential state transitions in State machine 484 are based on the current exception type, whether a new error has been reported from the Watch point, ISU, or any of the six data forward buses, and whether the new exception is temporally earlier than the current exception.

Possible state transitions may occur as follows: RED - No other trap types will force a transition from state RED. ITRAP - Three trap types (mispredicts, etraps, red alerts) can force transition to another state, but interrupts will not force a transition. ETRAP - Red alerts and mispredicts force transitions and always have higher priorities, other etraps require prioritization, and interrupts have lower priorities, while itraps are impossible since the machine is either backing-up or waiting for machine sync so that no instructions that could cause itraps are being issued. INTERRUPT - All trap types have higher priorities and can force transitions. MISPREDICT - Three trap types (mispredicts, etraps, red alerts) have higher priorities and do not require prioritization, interrupts have lower priorities, while itraps should not occur since instruction issue is being killed during mispredict handling. IDLE - Red traps have highest priority, followed by any one of the four trap types where simultaneous mispredicts and etraps will result in transition to BACKUP where a determination is made as to whether the mispredict or etrap occurred earlier based on a comparison of checkpoints. (Deferring to checkpoint based prioritization is preferred since Backtrack is able to make the determination more rapidly than priority; however, the prioritization may be performed in PSLM. Finally, itraps and then interrupts will be sequenced.

### E. Handling of Traps with Trap Stack

As indicated previously, traps often occur in the instruction pipeline of FIG. 5 and must be handled (i.e., taken) by a trap handling routine. Referring to FIG. 17, when the PSU 300 detects an exception in the manner described earlier for which a trap is to be taken, the PLSM 307 generates TAKE_TRAP signals instructing the control register file 800 to take a trap and identifying the type of trap to be taken. In response, the rd/wr/update logic 816 reads the corresponding trap vector (TRAP_VEC) signal from the TBA register 812 and sends it to the BRB 59. Referring to FIG. 6, the PC logic 106 uses the TRAP_VEC signal to compute a new FPC, APC, and NAPC to fetch and issue the instructions of the corresponding trap handling routine.

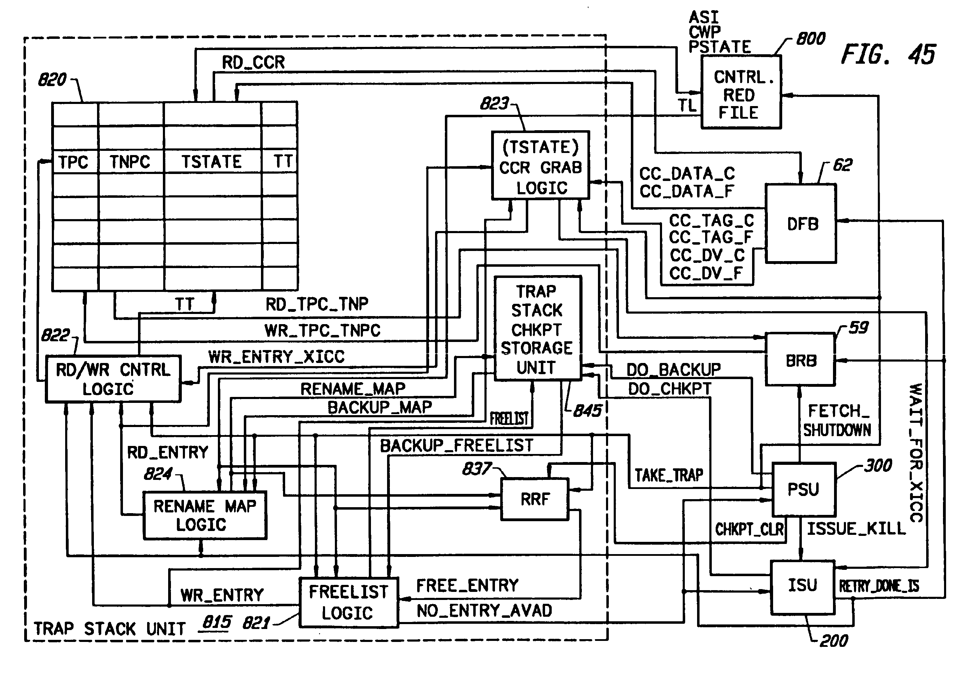

So that traps that occur within a trap handling routine may be handled in a nested fashion (i.e., traps taken within taken traps), as specified by the SPARC-V9 architecture, the control register file 800 includes the trap stack unit 815, as shown in FIG. 17. The trap stack unit 815 is shown in greater detail in FIG. 45. It includes a trap stack 820 that is a data storage structure with storage elements or entries.

Each storage entry has four fields which are designated by the SPARC-V9 Architecture Manual as the trap program counter (TPC), trap next program counter (TNPC), trap state (TSTATE), and trap type (TT) fields. The TPC and TNPC fields contain at the time a trap is taken the APC and NAPC values in the APC and NAPC registers 113 and 114 of the BRB 59. As described in the SPARC-V9 Architecture Manual, the TSTATE field contains at the time the trap was taken the contents of the XICC register in the CCRFRN 610 shown in FIG. 39 and the contents of the ASI, CWP, and PSTATE registers 808, 809, and 805 shown in FIG. 17. The TT field identifies the type of trap taken.

Turning again to FIG. 45, in general, when a trap is taken, the current PC, NPC, TSTATE, and TT values are stored in the corresponding fields of one of the storage entries of the trap stack 820. The trap level (TL), which indicates the number of nested traps taken, is then incremented and a trap handling routine begins handling the taken trap. If however a trap occurs during the trap handling routine, then the PC, NPC, TSTATE, and TT values at the time of this second trap are stored in the corresponding fields of another one of the storage entries of the trap stack 820. Then, a second trap handling routine is called upon to handle the second trap. At the end of the second trap handling routine, a DONE or RETRY instruction is executed which causes the PC, NPC, and TSTATE values stored in the storage entry for the second trap to be written to the corresponding registers and the trap level to be decremented. As a result, the CPU 51 is returned to the state at which it was when the second trap was taken and the first trap handling routine resumes handling the first trap. Then, when a DONE or RETRY instruction of the first trap handling routine is executed, the CPU 51 is returned to its original state when the first trap was taken.

From the foregoing, it is evident that, as required by the SPARC-V9 architecture, the trap stack unit 815 includes multiple trap levels to support the handling of multiple nested traps. However, while the SPARC-V9 architecture only specifies a trap stack with four storage entries to support four trap levels, the trap stack 820 includes eight storage entries 0-7 to support the four required trap levels. The additional four storage entries are used so that the concept of register or storage element renaming can be extended to the trap stack unit 815 as described next so that traps may be taken and returned from speculatively. Moreover, as expressed earlier, the present invention will work with any number of trap levels so long as the number of storage entries are larger than the number of trap levels.

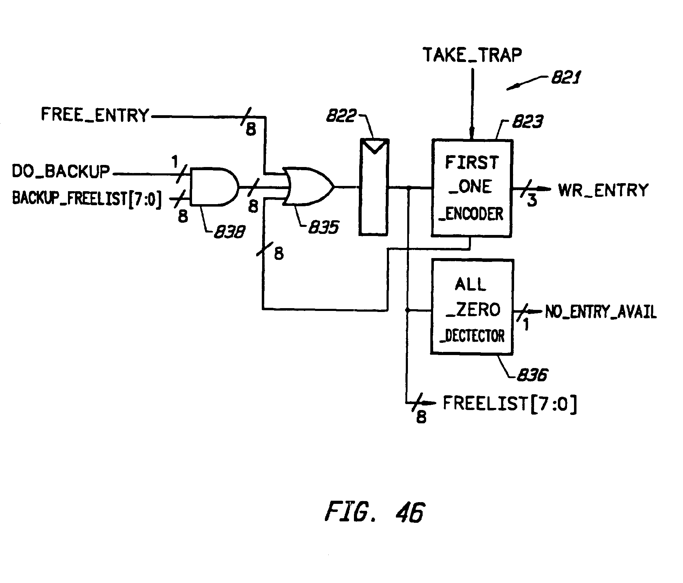

The trap stack unit 815 includes freelist logic 821 that stores a list of all of the storage entries of the trap stack 820 which are currently available for storing the TPC, TNPC, TSTATE, and TT values associated with traps. Referring to FIG. 46, the freelist register 822 stores during each machine cycle a list of the currently available storage entries in the form of an eight bit FREELIST vector signal. Each bit of the FREELIST signal corresponds to one of the storage entries of the trap stack 820 and identifies if that storage entry is currently available. For the first storage entry identified by the FREEUST vector as being available, the first-one-encoder 823 then encodes the vector into the WR_ENTRY signal which identifies this storage entry and serves as pointer for writing the TPC, TNPC, TSTATE, and TT values for the next trap to be taken.

The FREEUST logic 821 also includes an all-zero-detector 836. It determines when the FREELIST signal contains all zero bits and therefore indicates that no storage entries in the trap stack 820 are available. If this occurs, then it asserts the NO_ENTRY_AVAIL signal.

Referring now to FIG. 45, when the PSU 300 determines that a trap is to be taken, but the NO_ENTRY_AVAIL signal indicates that no storage elements are available, the TAKE_TRAP signals it issues will not indicate to take a trap until the NO_ENTRY_AVAIL signal indicates that a storage element is available. Moreover, the PSU 300 will assert the ISSUE_KILL and the FETCH_SHUTDOWN signals to stop issuing of any instructions by the ISU 200 and fetching of instructions by the BRB 59 until the NO_ENTRY_AVAIL signal indicates that a storage entry is available. This has the effect of syncing the CPU 51 so that, as will become clearer shortly, checkpoints are retired and storage entries in the trap stack 820 may be reclaimed and become available.

But, when the NO_ENTRY_AVAIL signal is not asserted, the PSU 300 outputs to the control register file 800 the TAKE_TRAP signals which, as indicated earlier, include a signal that indicates that a trap is to be taken and a signal that identifies the type of trap it is. In response, the control register read/write and update (RD/WRAJPDATE) logic 816 reads the contents of the ASI, CWP, and PSTATE registers 808, 809, and 805 and provides them to the trap stack 820 of the trap stack unit 815.

At the same time, the trap stack 820 receives the WR_TPC_TNPC signals that contain the current APC and NAPC values to be written to the TPC and TNPC fields of the trap stack 820. And, as will be discussed later, the trap stack 820 receives the XICC data of the XICC register in the FSR/CCRFRN 610 of FIG. 8 when they become available.

In response to the TAKE_TRAP signals, the trap stack read/write control (RD/WR) logic 822 extracts the trap type (TT) field contained by the TAKE_TRAP signals and provides it to the trap stack 820. Then, the RD/WR logic 822 writes the received APC, NAPC, ASI, CWP, PSTATE, and TT values immediately into the appropriate fields of the storage element pointed to by the WR_ENTRY signal. Moreover, as described later, the XICC data are written into the TSTATE field of this same storage element in response to the WR_ENTRY_XICC signal when the contents of the logical XICC register become available.

Referring to FIG. 17, the control register RD/WR/UPDATE logic 816 then receives the old TL value from the TL register 811 and increments it. It then writes the new TL value back into the TL register 811.

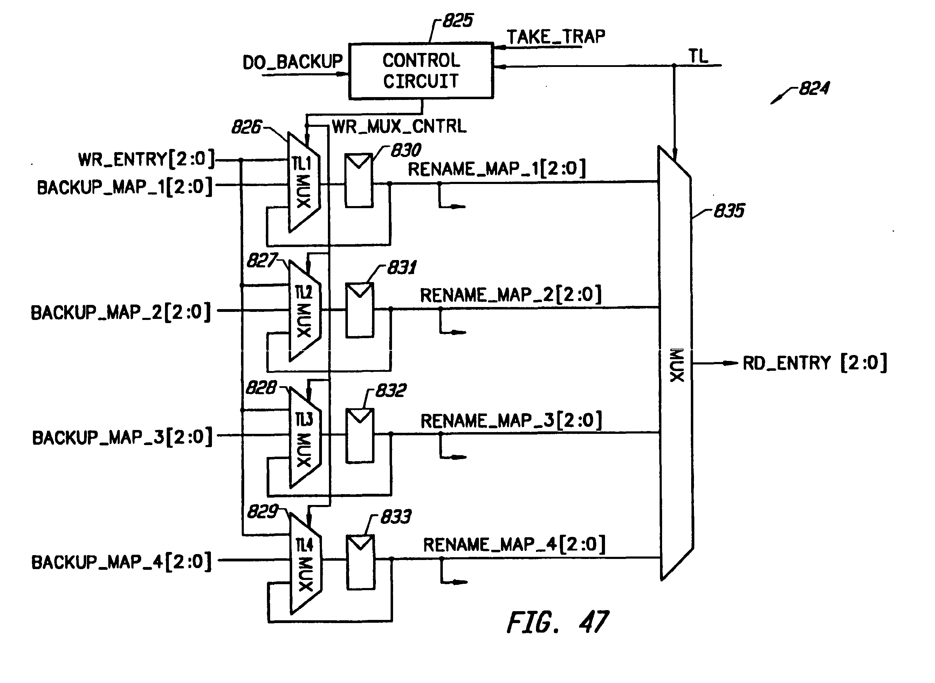

As shown in FIG. 45, the trap stack rename mapping (RENAME MAP) logic 824 receives the new TL value and the TAKE_TRAP and WR_ENTRY signals. Referring to FIG. 47, the RENAME MAP logic 824 includes TL1-4 (trap level 1-4) write multiplexers 826-829 and TL1-4 registers 830-833 which each correspond to one of the four trap levels. In response to the new TL value and the TAKE_TRAP signal, the control circuit 825 of the RENAME MAP logic 824 controls the TL1-4 write multiplexers 826-829 with the WR_MUX_CNTRL signals so that the WR_ENTRY signal is stored in the register that corresponds to the trap level identified by the new TL value and also so that the other registers re-store the same value they stored in the previous machine cycle.

Thus, the storage entry identified by the WR_ENTRY signal stored in one of the registers is mapped to the current trap level identified by the new TL value in the RENAME MAP logic 824. Furthermore, the storage entries identified by the signals stored in the other registers remain mapped in the same way as they were in the previous machine cycle.

Referring again to FIG. 46, the first-one-encoder 823 of the FREELIST 821 also receives the TAKE_TRAP signals. When the TAKE_TRAP signals indicate to take a trap, first-one-encoder 823 sends back to the OR circuit 835 an eight bit signal with the bit that corresponds to the WR_ENTRY signal set to "0". The OR circuit 835 also receives the eight bit FREE_ENTRY signal from the RRF logic 837 (shown in FIG. 45) whose bits identify those of the storage entries of the trap stack 820 that have been reclaimed in the last machine cycle and are now available. During a backup, the Or circuit 835 receives from the AND circuit 838 the eight bit BACKUP_FREELIST signal whose bits identify the storage entries that were available at the time the checkpoint that was backed up to was made. The bits of the signal received from the first-one-encoder 823 are logically ORed with the corresponding bits of the FREE_ENTRY and BACKUP_FREELIST signals and the resulting FREELIST signal is provided to the register 822. Thus, barring a backup, the FREELIST signal in the next machine cycle will indicate that the storage element corresponding to the bit in the WR_ENTRY signal that was set to "0" is no longer available.

Referring again to FIG. 7, at the same time that the PSU 300 generates the TAKE_TRAP signals, it also requests with the CHKPT_REQ signal that the ISU 200 allocate a checkpoint for the first issued instruction of the trap handling routine. In response, the ISU 200 outputs the DO_CHKPT signals to various blocks and units within the CPU 51, including the control register file 800.

Turning to FIG. 47, the RENAME_MAP_1-4 signals are output by the TL1-4 registers 830-833 and therefore respectively correspond to the trap levels 1-4. Moreover, since these signals are output by the TL1-4 registers 830-833, they provide the current mapping of the storage entries to the trap levels 1-4.

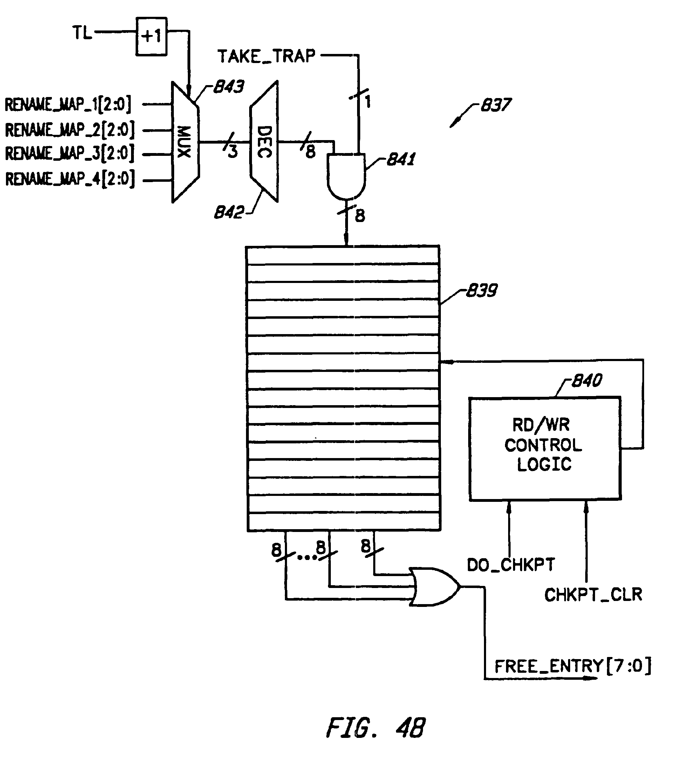

But, as described earlier, when a trap is taken, the RENAME MAP logic 824 maps a new available storage entry to the new trap level (TL). But, the old mapping of another storage entry to this trap level must be kept track of in case backing up occurs as described earlier. Thus, referring to FIG. 48, the RRF logic 837 preserves these old mappings from the RENAME_MAP_1-4 signals it receives from the RENAME MAP logic 824 until they are no longer needed.

When a trap is taken, the multiplexer 843 outputs the RENAME_MAP signal that corresponds to the TL (i.e., the old TL incremented by one) for the new trap. In other words, the multiplexer selects only the RENAME_MAP signal which will reflect a new mapping in the next machine cycle. This signal is then decoded by the decoder 842 into an eight bit signal indicating which of the storage entries is being replaced by the new mapping to the new trap level. Since the TAKE_TRAP signals will indicate that a trap is being taken, the decoded signal is provided via the AND circuit 841 to the RRF storage unit 839 of the RRF logic 837. But, when no trap is being taken, the AND circuit 842 provides the RRF storage unit 839 an eight bit signal with all bits set to "0".

The RRF storage unit 839 includes 16 storage elements or entries. Each storage entry corresponds to one of the 16 checkpoint numbers described earlier. Thus, when the DO_CHKPT signals indicate that a checkpoint is to be formed, the RRF read/write (RD/WR) control logic 840, writes the data received from the AND circuit 841 into the storage entry corresponding to the checkpoint number identified by the DO_CHKPT signals.

Thus, the RRF 837 maintains an unavailability list of each storage entry of the trap stack unit 820 which is not currently mapped to one of the trap levels by the current mappings of the RENAME MAP logic 824 but still unavailable for mapping to one of the trap levels because its old mapping to a trap level may need to be restored in case of a backup to a checkpoint. In this case, the storage entry is kept in the unavailability list until the retirement of the checkpoint formed at the time that the storage entry was mapped to the trap level of the trap that caused the checkpoint to be formed.

The RRF RD/WR control logic 840 also receives the sixteen bit CHKPT_CLR signal from the PSU 300. Each bit corresponds to one of the checkpoint numbers and indicates if the corresponding checkpoint has been retired (or cleared) in the manner discussed earlier. In response to this signal, the RRF RD/WR logic reads out the data from the corresponding storage entry of the RRF storage unit 839. Since the CHKPT_CLR signal may identify multiple checkpoints that have been cleared, the bits of the data read from the corresponding storage entries are ORed and combined to form the FREE_ENTRY signal which is sent as the eight bit FREE_ENTRY signal to the FREELIST logic 821 shown in FIG. 46.

In the case where a checkpoint identified by the CHKPT_CLR signal was formed when taking a trap, the storage entry identified by the FREE_ENTRY signal has been reclaimed and is now available again since the corresponding checkpoint has been retired. As a result, this trap can no longer be undone. Thus, assuming that a backup has not occurred, the bits of the FREE_ENTRY signal are then ORed with the corresponding bits of the signal provided by the first-one-encoder 823 to provide the FREELIST signal for the next machine cycle.

In the case where the checkpoint identified by the CHKPT_CLR signal was not formed when taking a trap, the data read from the corresponding storage element will be all "0" bits and thus have no impact in the generation of the FREELIST signal.

As shown in FIG. 45, the trap stack unit 815 also includes a trap stack checkpoint storage unit 845. The storage unit 845 is shown in greater detail in FIG. 48. It includes a data storage structure 846 that has 16 addressable storage elements or entries with each storage entry having five fields.

The storage unit receives the FREEUST signal from the FREELIST logic 821 and the RENAME_MAP signals from the RENAME MAP logic 824. Then, when the DO_CHKPT signals indicate that a checkpoint is to be formed, the trap stack storage read/write control logic 847 writes the FREELIST and RENAME_MAP signals into the appropriate fields of the storage entry corresponding to the checkpoint number identified by the DO_CHKPT signals. Since the current FREEUST and RENAME_MAP signals have been stored when the checkpoint was formed, the current mapping of trap stack storage entries to trap levels and the current list of available trap stack storage entries have been checkpointed.

When the DO_BACKUP signals indicate that a backup to a checkpoint is being performed, the RD/WR control logic 847 reads out the checkpointed FREEUST and RENAME_MAP signals form the storage element corresponding to the checkpoint number identified by the DO_BACKUP signals. The FREELIST signal is read out as the BACKUP_FREELIST signal while the RENAME_MAP signals are read out as the BACKUP_MAP signals.

As shown in FIG. 46, the FREELIST logic 821 receives the BACKUP_FREELIST and DO_BACKUP signals. Since the DO_BACKUP signals indicate that a backup is occurring, the AND circuit 838 provides the BACKUP_FREELIST to the OR circuit 835. As indicated previously, the bits of the signal received from the first-one-encoder 823 are logically ORed with the corresponding bits of the FREE_ENTRY and BACKUP_FREELIST signals to produce the FREELIST signal.

Referring to FIG. 47, the RENAME_MAP logic 824 receives the BACKUP_MAP and DO_BACKUP signals. Since the DO_BACKUP signals indicate that a backup is occurring, the WR_MUX_CNTRL signals the control circuit 825 generates provide the BACKUP_MAP_1-4 signals to the TL1-4 registers 830-833, respectively. As a result, the mapping of trap stack storage elements to trap levels that existed when the checkpoint was made has been reinstated.

As mentioned earlier, the CPU 51 issues and executes instructions speculatively. Since the trap stack unit 815 includes a mechanism to restore a previous trap level in case of a backup, it enables the CPU 51 to speculatively take and return from traps.

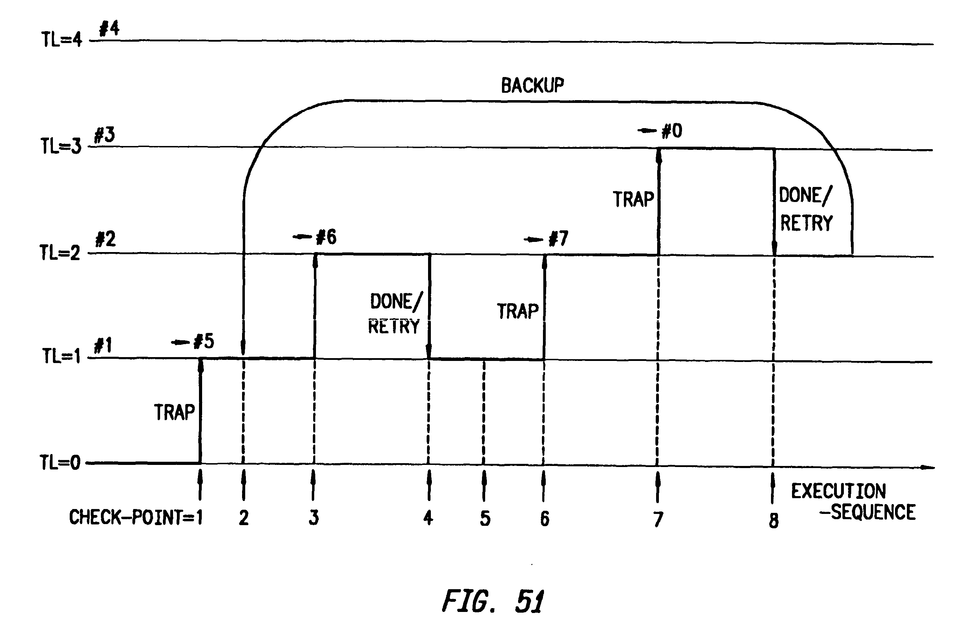

The abifity of the CPU to take and return from traps speculatively is illustrated in FIG. 51. As shown, initially the execution sequence is at trap level 0 and trap levels 1-4 are mapped to trap stack storage entries 1-4, respectively. When the first trap is taken, the trap level is incremented to trap level 1, the checkpoint 1 is formed with the trap level to storage entry mappings at checkpoint 1 being checkpointed, and a new mapping of trap level 1 to storage entry 5 is made. A new checkpoint is made at checkpoint 2 for an instruction such as a predicted program control instruction with the trap level to storage entry mappings at checkpoint 2 being checkpointed. A second trap is then taken and the trap level is incremented to trap level 2, the checkpoint 3 is formed, the trap level to storage entry mappings at checkpoint 3 are checkpointed, and a new mapping of trap level 2 to storage entry 6 is made. When a done or retry instruction in the trap handler for the trap at trap level 2 is executed, the trap level is decremented to trap level 1, the checkpoint 4 is formed, and the trap level to storage entry mappings at checkpoint 4 are checkpointed. After returning to the trap handler for the trap at trap level 1, a checkpoint is made at checkpoint 5 for an instruction of this trap handler with the trap level to storage entry mappings at checkpoint 5 being checkpointed. When another trap is taken, the trap level is incremented to trap level 2, the checkpoint 6 is formed, the trap level to storage entry mappings at checkpoint 6 are checkpointed, and a new mapping of trap level 2 to storage entry 7 is made. When yet another trap is taken, the trap level is incremented to trap level 3, the checkpoint 7 is formed, the trap level to storage entry mappings at checkpoint 7 are checkpointed, and a new mapping of trap level 3 to storage entry 0 is made. When a done or retry instruction in the trap handler for the trap at trap level 3 is executed, the trap level is decremented to trap level 2, the checkpoint 8 is formed, and the trap level to storage entry mappings at checkpoint 8 are checkpointed. Then, if it is determined that the program control instruction for which checkpoint 2 was formed was mispredicted, then a backup to checkpoint 2 occurs with the trap level to storage entry mapping at checkpoint 2 being restored. Thus, the traps for which checkpoints 3 and 7 were formed were taken and returned from speculatively while the trap for which checkpoint 6 was formed was taken speculatively.

As mentioned earlier, the TSTATE field of the trap stack includes a XICC field which holds the contents (i.e., XICC data) of the physical register mapped as the logical XICC register in the FSR/CCRFRN 606 in FIG. 8 when the trap was taken. Since fixed point instructions may be executed out of PC order by the FXU 601 and FXAGU 602, these contents may not be available at the time a trap occurs. Thus, without a mechanism for obtaining the correct XICC data at a later time, the PSU 300 would have to wait until the XICC data is available to take a trap.

However, referring to FIG. 45, the trap stack unit 815 includes such mechanism, namely the XICC grabbing logic 823. The XICC grabbing logic 823 receives from the FSR/CCRFRN 606 the CC_TAGS_C, CC_DV_C, CC_TAGS_F, and CC_DV_F signals while the trap stack 820 receives the CC_DATA_C and CC_DATA_F signals.

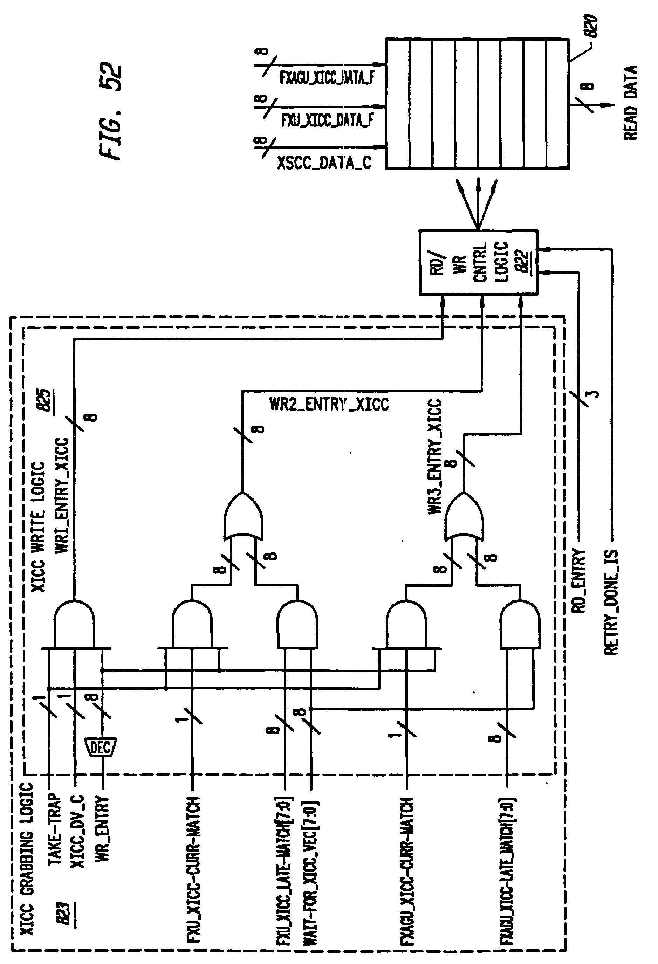

Referring to FIG. 52, CC_DATA_C signals contain the XICC_DATA_C signal and the CC_DV_C signals contain the XICC_DV_C signal. The XICC_DATA_C signal contains the current contents, if available, of the logical XICC register (i.e., the physical register mapped as the logical XICC register by the CCRFRN 610 shown in FIG. 39) in the mchine cycle when a trap is taken. The XICC_DV_C signal indicates if the contents of the XICC_DATA_C signal is valid (i.e. if the contents of the physical register currently mapped as the logical XICC register is available yet).

The contents of the physical register mapped as the logical XICC register at the time the trap is taken may already be available at that time. When this occurs, the XICC_DV_C signal indicates that the contents of the XICC_DATA_C signal is valid and the TAKE_TRAP signals received from the PSU 300 indicate that a trap is being taken. In response, the XICC write logic 825 provides a WR1_ENTRY_XICC signal that corresponds to the entry identified by the WR_ENTRY signal. When this occurs, the RD/WR control logic 822 of the trap stack unit 815 then writes the contents of the XICC_DATA_C signal into the XICC field of the TSTATE field of the entry of the trap stack 820 identified by the WR1_ENTRY_XICC signal.

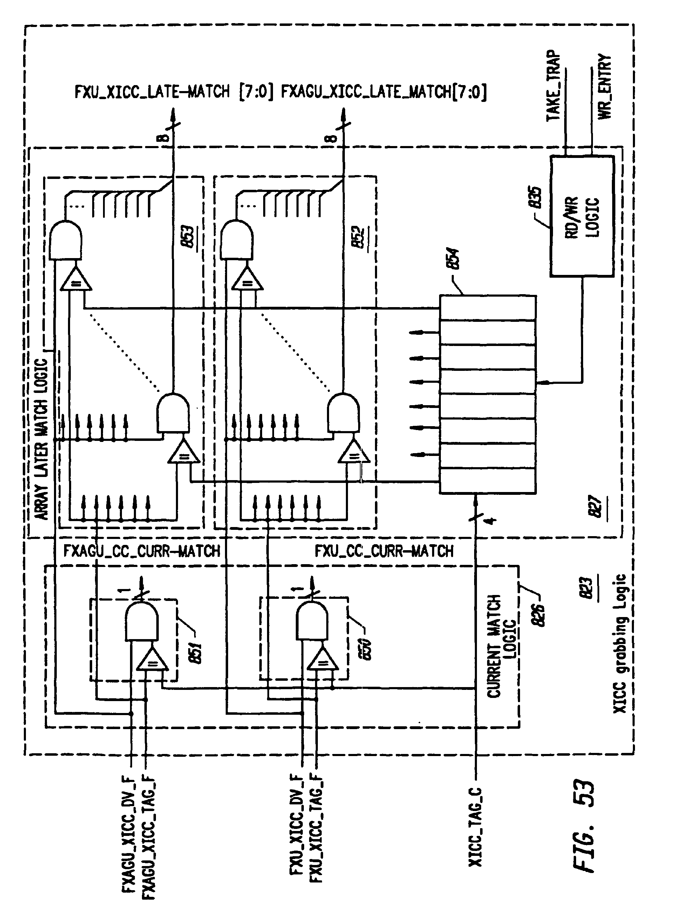

However, when the XICC_DV_C signal indicates that the contents of the XICC_DATA_C signal is not valid at the time the trap is taken, then the contents of the XICC_DATA_C signal are not written to the trap stack 820. In this case, the trap stack unit 815 must wait until the contents of the physical register mapped as the logical XICC register at the time the trap was taken becomes available. Referring to FIG. 53, in order to do this, the XICC grabbing logic 823 includes the current match logic 826 and the later match array logic 827.

Still referring to FIG. 53, the CC_TAG_C signals include the XICC_TAG_C signal which contains the physical register tag of the physical register mapped as the logical XICC register when the trap was taken. Moreover, the CC_TAG_F signals include the FXU_XICC_TAG_F and FXAGU_XICC_TAG_F signals respectively forwarded by the FXU 601 and FXAGU 6D2 when they execute fixed point instructions which modify the logical XICC register. These signals contain the physical register tags of the physical registers mapped as the logical XICC register for these executed fixed point instructions and to which the contents in the FXU_XICC_DATA_F and FXAGU_XICC_DATA_F signals of the CC_DATA_F signals are to be written. The FXU_XICC_DATA_F and FXAGU_XICC_DATA_F signals are respectively forwarded by the FXU 601 and the FXAGU 602.

The CC_DV_F signals include the FXU_XICC_TAG_F and FXAGU_XICC_TAG_F signals respectively forwarded by the FXU 601 and FXAGU 602 when they execute fixed point instructions which modify the logical XICC register. These signals indicate whether the contents in the FXU_XICC_DATA_F and FXAGU_XICC_DATA_F signals to be written to the physical registers mapped as the logical XICC register for the executed fixed point instructions are valid (i.e., available).

As indicated earlier, since instructions may be executed out of actual and/or predicted program order, the forwarded FXU_XICC_DATA_F and FXAGU_XICC_DATA_F signals will eventually contain the contents to be written to the physical register mapped as the logical XICC register when the trap was taken. This may occur in the same machine cycle in which the trap is taken (i.e., the current machine cycle) or in a later machine cycle.

In the case where this occurs in the same machine cycle, the XICC_TAG_C signal currently identifies the tag of the physical register mapped as the logical XICC register when the trap was taken. The tag identified by the XICC_TAG_C signal is compared by the compare logic 850 and the compare logic 851 of the current match logic 826 with the tags respectively identified by the FXU_XICC_TAG_F and FXAGU_XICC_TAG_F signals. If a match occurs, and the corresponding FXU_XICC_DV_P or FXAGU_XICC_DV_F signal indicates that the contents in the corresponding FXU_XICC_DATA_F or FXAGU_XICC_DATA_F signal is valid, then the current match logic 826 outputs a corresponding FXU_XICC_CURR_MATCH or FXAGU_XICC_CURR_MATCH signal. This signal indicates that the contents of the physical register mapped as the logical XICC register when the trap was taken have become available in the same machine cycle in which the trap is taken.

Referring back to FIG. 52, during this machine cycle, the TAKE_TRAP signals still indicate that a trap is being taken and the WR_ENTRY signal still identifies the entry mapped to the trap level of the trap. Thus, in response to the FXU_XICC_CURR_MATCH or FXAGU_XICC_CURR_MATCH signal, the XICC write logic 825 generates the corresponding WR2_ENTRY_XICC or WR3_ENTRY_XICC signal. This signal corresponds to the entry identified by the WR_ENTRY signal. The RD/WR control logic 822 of the trap stack unit 815 then writes the contents of the FXU_XICC_DATA_F or FXAGU_XICC_DATA_F signal into the XICC field of the TSTATE field of the entry of the trap stack 820 identified by the corresponding WR2_ENTRY_XICC or WR3_ENTRY_XICC signal.

Turning to FIG. 53, as indicated earlier, at a machine cycle after the machine cycle in which the trap was taken, the forwarded FXU_XICC_DATA_F and FXAGU_XICC_DATA_F signals may contain the contents to be written to the physical register mapped as the XICC regsiter when the trap was taken. So as to provide for this situation, the XICC grabbing logic 823 includes the later match array logic 827 which includes the tag array storage unit 854.

The storage unit 854 includes eight storage entries. Each entry corresponds to one of the entries of the trap stack 820. Thus, each time the TAKE_TRAP signals indicate that a trap is being taken, the RD/WR logic 855 writes the tag identified by the XICC_TAG_C signal at that time to the entry of the storage unit 854 that corresponds to the entry of the trap stack 820 identified by the WR_ENTRY signal.

The compare array logics 852 and 853 respecteively compare the tags identified by the FXU_XICC_TAG_F and FXAGU_XICC_TAG_F signals with each of the tags stored in the storage unit 854. As a result, if any matches occur, and the corresponding FXU_XICC_DV_F or FXAGU_XICC_DV_F signal indicates that the contents of the corresponding FXU_XICC_DATA_F or FXAGU_XICC_DATA_F signal is valid, then the corresponding compare array logic 852 or 853 outputs the corresponding FXU_XICC_LATE_MATCH or FXAGU_XICC_LATE_MATCH signal which identifies the entry of the trap stack 820 to which the contents of the corresponding FXU_XICC_DATA_F or FXAGU_XICC_DATA_F signal are to be written.

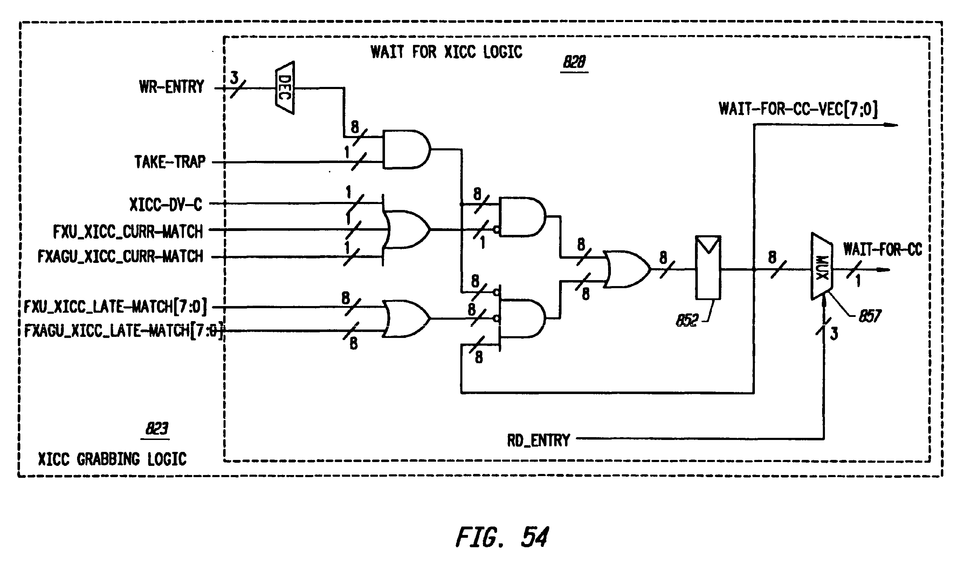

Turning to FIG. 54, the XICC grabbing logic includes the wait for XICC logic 828. The register 856 stores the WAIT_FOR_XICC_VEC vector signal. Each bit of the WAIT_FOR_XICC_VEC vector signal corresponds to one of the entries of the trap stack 820 and is asserted when the corresponding entry is waiting for the contents of the physical register mapped as the logical XICC register at the time the corresponding trap was taken to become available. Thus, the WAIT_FOR_XICC_VEC vector signal provides a list of all of the entries of the trap stack 820 which are currently waiting for the contents of various physical registers mapped as the logical XICC register at the time the corresponding traps were taken to become available.

Each time a trap is taken as indicated by the TAKE_TRAP signals, and the XICC_DV_C signal indicates that the contents of the physical register mapped as the logical XICC register are not available at this time, and neither the FXU_XICC_CURR_MATCH signal nor the FXAGU_XICC_CURR_MATCH signal indicate this either, then the WR_ENTRY signal identifies an entry which is waiting for these contents to become availale in a later machine cycle. In response, this entry is added by the wait for XICC logic 828 to the list provided by the WAIT_FOR_XICC_VEC vector signal of the entries of the trap stack 820 currently waiting for the contents to become available of the various physical registers mapped as the logical XICC register at the time the corresponding traps were taken.

However, as indicated erlier, when a trap is taken as indicated by the TAKE_TRAP signals, the XICC_DV_C signal may indicate that the contents of the physical register mapped as the logical XICC register are available at this time or the FXU_XICC_CURR_MATCH signal or the FXAGU_XICC_CURR_MATCH signal may indicate this. each time this occurs, the entry identified by the WR_ENTRY signal is not added by the wait for XICC logic 828 to the list provided by the WAIT_FOR_XICC_VEC vector signal.

Moreover, as indicated earlier, whenever the contents of a physical register mapped to the logical XICC register at the time the corresponding trap was taken has become available in a later machine cycle, the FXU_XICC_LATE_MATCH or FXAGU_XICC_LATE_MATCH signal will identify the entry of the trap stack 820 to which these contents are to be written. Turning also to FIG. 52, since at this point the WAIT_FOR_XICC_VEC vector signal still lists this entry, the XICC write logic 825 generates the corresponding WR2_ENTRY_XICC or WR3_ENTRY_XICC signal which identifies this entry. The RD/WR control logic 822 of the trap stack unit 815 then writes the contents of the FXU_XICC_DATA_F or FXAGU_XICC_DATA_F signal (i.e., the contents of a physical register mapped to the logical XICC register at the time the corresponding trap was taken) into the XICC field of the TSTATE field of the entry of the trap stack 820 identified by the corresponding WR2_ENTRY_XICC or WR3_ENTRY_XICC signal. Then, referring back to FIG. 54, this entry is removed by the wait for XICC logic 828 from the list provided by the WAIT_FOR_XICC_VEC vector signal.

Thus, for each trap taken and not yet returned from, the XICC grabbing logic is able to determine when the contents of the physical register mapped as the logical XICC register when the trap was taken becomes available and to which entry in the trap stack 820 these contents are to be written. As a result, nested traps may be taken even though these contents may not yet be available for any of the traps when they are taken. In other words, the XICC grabbing logic 823 is a mechanism that allows traps to be taken prior to all of the corresponding trap state (TSTATE) data being available.

However, upon return from taking a trap, the contents of the physical register mapped as the logical XICC register when the trap was taken must have been written into the corresponding entry of the trap stack 820. This is due to the fact that a RETRY or DONE instruction requires that these conetnts be written back into the physical register currently mapped as the logical XICC register.

As shown in FIG. 54, to insure that this occurs, the wait for XICC logic 828 includes a multiplexer 857. In response to the RD_ENTRY signal, which identifies the entry of the trap stack 820 currently mapped to the trap level of the current trap being taken, the multiplexer outputs the bit of the WAIT_FOR_XICC_VEC vector signal that corresponds to this entry as the WAIT_FOR_XICC signal. Thus, this signal indicates whether or not the entry of the trap stack 820 currently mapped to the trap level of the current trap being taken is waiting for the contents of the physical register mapped as the logical XICC register when the trap was taken.

Referring to FIG. 45, the XICC grabbing logic 823 outputs to the ISU 200 the WAIT_FOR_XICC signal. If this signal is asserted, then the ISU 200 will not issue a RETRY or DONE instruction until the signal is no longer asserted.

When the ISU 200 finally issues a RETRY or DONE instruction, it outputs DONE_RETRY_IS signals that incudes a signal that indicates if a DONE instruction was issued and a signal that indicates if a RETRY instruction was issued.

Referring to FIG. 47, the read multiplexer 835 outputs as the RD_ENTRY signal the RENAME_MAP signal that corresponds to the current TL value. And, referring to FIG. 45, the RD/WR control logic 822 of the trap stack unit 815 reads the TPC, TNPC, ASI, CWP, PSTATE and XICC values out from the storage element identified by the RD_ENTRY signal when the DONE_RETRY_IS signals indicate that a DONE or RETRY instruction has been issued.

Referring to FIG. 17, the ASI, CWP, and PSTATE values are written into their corresponding registers by the RD/WR/UPDATE logic 816 of the control register file 800 in response to the DONE_RETRY_IS signals.

Furthermore, as shown in FIG. 45, the TPC and TNPC values are provided to the BRB 59 with the RD_TPC_TNPC signals. As a result, the BRB 59 uses this values to form the PC and NPC values to fetch the next set of instructions.

Finally, the XICC values are provided to the DFB 62 with the RD_XICC signal. Referring to FIG. 8, in response to the DONE_RETRY_IS signal, the CCRFRN 610 maps the logical XICC register to a physical register. Thus, when the CCRFRN 610 receives the XICC data from the trap stack unit 815, it stores it in the newly mapped physical register.

Moreover, those skilled in the art will appreciate that the FXU 601 and the FXAGU 602 may each have more than one execution unit which can execute fixed point instructions that modify the logical XICC register. In this case, the XICC grabbing logic 823 would have duplicate logic to that already described in order to properly update the trap stack 820 with the contents of the physical register mapped as the logical XICC register at the time a trap is taken.

In addition, those skilled in the art will aprreciate that the concept of the XICC grabbing logic 823 may be extended to other types of registers for which the contents may not be available at the time a trap is taken but need to be written to a trap stack and for which register renaming (i.e., mapping of physical registers to logical registers) has been implemented.

The present invention provides, in a central processing unit for executing instructions issued by an instruction issue unit, said processor having a data store, an instruction issue unit, an instruction execution unit, and an instruction issue and execution scheduler; a method for tracking speculative instruction execution in a processor, said method comprising the steps of:
defining a data structure in the data store, the data structure providing storage for a plurality of instruction identification tags and a plurality of activity bits, each identifying an instruction active or inactive status, uniquely associated with each particular one of the plurality of instruction identification tags;
assigning an identification tag with its associated activity bit to each particular instruction issued by the instruction issue unit;
setting the activity bit stored in the data structure to a first state for a particular associated instruction to identify the particular instruction as an active instruction when the particular instruction becomes currently active in the processing unit; and
clearing the activity bit stored in the data structure to a second state for a particular associated instruction to identify the particular instruction as an inactive instruction when the particular instruction completes execution normally without error.
There is provided a method as in the above paragraph wherein the data structure comprises a circular data structure having n-addressable locations 0, 1, 2, ..., n-2, n-1; and wherein addressable location n-1 is logically adjacent addressable location 0; and
wherein the step of assigning an instruction tag to each particular instruction issued by the instruction issue unit comprises assigning an instruction tag with its associated activity bit to a unique one of the n-locations.

There is provided a method as in the above paragraphs wherein the identification tag is a numerical serial number and the step of assigning an identification tag with its associated activity bit to each issued instruction comprises assigning monotonically increasing serial numbers, modulo-n, to subsequently issued instructions as each instruction is issued, so that after n-1 serial numbers have been assigned to issued instructions the serial numbers are reassigned in circular manner and the next issued instruction is assigned serial number 0, and wherein an instruction issued earlier in time is an older instruction than an instruction issued later in time, and the serial number associated with the earlier instruction is an older serial number, independent of the numerical magnitude of the serial number.

There is provided a method as in the above paragraphs further comprising the steps of:
tracking the execution status of each issued instruction based on the state of its associated activity bit;
evaluating each activity bit in the circular data structure and identifying the oldest serial number associated with an active instruction and thereby determining the oldest issued and still active instruction; and
committing an instruction having a serial number older than the serial number associated with said oldest active instruction so that said instruction having an older serial number cannot be undone; and
reclaiming processor resources allocated to the committed instruction.

There is provided a method as in the above paragraphs wherein the reclaimed processor resources include the instruction serial number assigned to the committed instruction and the storage location in the data structure associated with the committed instruction.

The present invention provides, in a speculative out-of-order execution processor, a method for tracking instruction status comprising the steps of:
providing an addressable data structure within the processor having a plurality of storage locations for storing instruction activity status data for each of a plurality of issued instructions:
   assigning an instruction identification tag to each of the issued instructions;
   associating each assigned identification tag with one of the plurality of storage locations;
   storing an activity data in the data structure identifying a particular issued instruction as active at the time the particular instruction is issued;
   detecting completion of execution of the particular instruction; and
   storing data identifying the particular instruction as inactive when the particular instruction completes execution without the occurrence of any one of a predetermined set of execution error conditions.

There is provided a method as in the above paragraph wherein the predetermined set of execution error conditions includes an instruction execution error, an exception error condition, a hardware fault, and a branch instruction misprediction.

The present invention provides, in a speculative out-of-order processor having an instruction issue scheduler an instruction issue unit, and an instruction execution unit for executing instructions to completion, a method for tracking issued instruction status comprising the steps of:
providing an n-location data structure for storing instruction activity status data;
defining a unique storage location address for each of the n locations in the n-location data structure;
associating each particular instruction issued by the instruction issue unit with one of the unique storage location addresses;
upon issuance of the particular instruction, storing instruction activity status data in the data structure at the data structure location associated with the particular instruction to indicate that the particular instruction is active status;
detecting instruction execution completion and any error condition associated with the instruction execution completion in the execution unit for each issued instruction;
if the instruction has completed execution without an error condition then updating the activity status data in the associated storage location to indicate that the instruction is inactive, and if the instruction has completed with an error condition or has not completed execution then retaining the original activity status data identifying the particular instruction as active in the associated storage location; and
communicating instruction activity status data to the instruction issue scheduler so that said instruction issue scheduler can schedule further instructions for execution without concern for the status of previously issued instructions which are inactive at that time.

There is provided a method as in the above paragraph further comprising the steps of:
communicating the error condition associated with execution completion of any of the instructions to an error handler unit in the processor; and
modifying instruction issue and execution sequence scheduling in response to the communicated error condition.

The present invention provides, in a speculative out-of-order execution processor having an instruction issue unit for issuing instructions and a data store for storing data within the processor, a method for tracking precise processor state comprising the steps of:
defining a first data structure having n addressable data storage locations in the data store of the processor;
allocating a plurality of unique instruction identification tags for subsequent assignment to issued instructions;
assigning one of the plurality of allocated unique identification tags to each particular instruction at the time the particular instruction is issued;
associating each instruction tag with one of the addressable storage locations in the first data structure within the processor;
for each particular instruction, updating the data stored in the data storage location associated with the particular instruction in response to instruction activity status changes for each instruction, said activity status changes including a change in status from an active status at the time of instruction issue to an inactive status at the time an instruction is completed without predetermined error, and
maintaining a plurality of pointers to selected ones of the n addressable data storage locations and moving the pointers to identify different addresses in response to the instruction activity status changes.

There is provided a method as in the above paragraph wherein the step of maintaining a plurality of pointers comprises the steps of:
evaluating the data stored in the addressable storage locations to determine instruction status for each of a plurality of issued instructions;
computing a plurality of different processor condition indicators based on the data stored in the addressable storage locations, each different processor condition indicator identifying an instruction with its associated identification tag that has attained a particular execution status selected from a set of predetermined execution statuses; and
storing the processor condition indicators as the pointers in a third data store within said processor, and
wherein the step of moving the pointers in response to the instruction activity status changes comprises the steps of:
   repeating said evaluating, computing of different processor condition indicators, and storing steps at predetermined time intervals to update said processor condition indicators.

There is provided a method as in the above paragraphs wherein the set of predetermined execution statuses includes the last issued instruction, the last committed instruction, and the last retired instruction.

There is provided a method as in the above paragraphs wherein the set of predetermined execution statuses further includes the last non-memory referencing instruction, and the last predicted branch instruction.

There is provided a method as in the above paragraphs wherein said status data includes an active-bit that is set at the time the instruction is issued and cleared when execution completes without error.

There is provided a method as in the above paragraphs wherein said plurality of pointers include:
a first pointer that points to the last issued instruction, and
a second pointer that points to the last committed instruction which is the last instruction that has completed without error and for which all sequentially earlier issued instructions have completed without error.

There is provided a method as in the above paragraphs wherein said plurality of pointers further include:
a third pointer that points to the last reclaimed instruction which is the last instruction for which allocated processor resources have been reclaimed.

There is provided a method as in the above paragraphs wherein each said identification tag is one of a monotonically increasing sequence of numerical serial numbers (modulo n) and said addressable storage locations in said first data structure are addressed by said serial numbers.

There is provided a method as in the above paragraphs wherein said first data structure having n addressable data storage locations is a circular data structure, and wherein advancement of said pointers to higher valued serial numbers is accomplished with modulo-n arithmetic so that incrementing a pointer from address n places said pointer at address 0.

There is provided a method as in the above paragraphs wherein said step of maintaining said pointers by moving said pointers in response to the instruction activity status changes comprises the steps of:
advancing said first issued instruction pointer forward toward higher instruction serial numbers (modulo-n) by one serial number for every instruction issued;
advancing said second committed instruction pointer forward toward higher instruction serial numbers (modulo-n) based on a serial number sequential evaluation of the state of the active-bit for each storage location and first predetermined rules but not advancing said second pointer beyond said first pointer; and
advancing said third retired pointer forward toward higher instruction serial numbers (modulo-n) based on a serial number sequential evaluation of the state of the active-bit for each location and second predetermined rules but not advancing said third pointer beyond said second pointer.

There is provided a method as in the above paragraphs wherein said first predetermined rules include:
at every predetermined number of machine clock cycles, advancing said second pointer forward to a new address location no higher than the highest data storage location address for which all activity status bits in lower address locations are inactive "0" but no higher than the address of said first pointer at that machine cycle.

There is provided a method as in the above paragraphs wherein said second predetermined rules include: at every predetermined number of machine clock cycles, advancing said third pointer forward to a new address location no higher than the highest data storage location address for which all activity status bits in lower address locations are inactive "0" but no higher than the address of said second pointer at that machine cycle.

There is provided a method as in the above paragraphs wherein said pointers are moved as a result of instruction issue, commitment, and retirement.

There is provided a method as in the above paragraphs wherein said second and third pointers are not moved past instructions for which exceptions, branch instruction mispredicts, and error conditions are detected.

The present invention provides, in a speculative out-of-order execution processor having data storage means and means for scheduling instruction issue, dispatch, execution, and retirement; a method of tracking status of instructions comprising the steps of:
allocating n unique instruction serial numbers that define the maximum number of instructions that can be outstanding concurrently in said processor;
defining a data structure having n independently addressable storage locations in said data storage means within said processor;
associating each said allocated serial number with one of said addressable storage locations;
in response to instruction issue by said processor, assigning one of said serial numbers to each said issued instruction as an identification tag, and maintaining said assignment until said instruction has completed execution and has been retired so that a temporally unique correspondence is established between each issued instruction and a unique one of said data storage locations;
storing an ACTIVE status indicator in said data storage location associated with said instruction when said instruction is issued;
storing an INACTIVE status indicator in said data storage location associated with said instruction when said instruction completes execution without error;
defining a plurality of machine pointers that point to said addressable storage locations; and
tracking instruction status and machine resources allocated to each instruction by moving said plurality of machine pointers in response to instruction activity status as ACTIVE or INACTIVE and predetermined rules.

There is provided a method as in the above paragraph further comprising the steps of:
storing an active status indicator in said data storage location associated with said instruction when said instruction is issued;
storing an inactive status indicator in said data storage location associated with said instruction when said instruction completes without error;
defining a plurality of machine pointers that point to said addressable storage locations; and
tracking instruction status and machine resources allocated to each instruction by moving said plurality of machine pointers in response to instruction activity status and predetermined rules.

There is provided a method as in the above paragraphs wherein said data storage location is single bit in a multi-bit register, said ACTIVE status indicator is a 1-bit, and said INACTIVE status indicator is a 0-bit.

There is provided a method as in the above paragraphs wherein said plurality of machine pointers comprise:
a first last issued instruction pointer that points to the last issued instruction;
a second last committed instruction pointer that points to the last committed instruction, which instruction is the last instruction that has completed without error and for which all in-order sequentially earlier issued instructions have completed without error, and
a third retire and reclaim pointer that points to the last instruction for which all machine resources allocated by the processor to the instruction and all in-order sequentially earlier instructions have been reclaimed.

There is provided a method as in the above paragraphs wherein said data structure is a circular data structure having n-addressable locations 0, 1, 2, ..., n-2, n-1 so that addressable location n-1 is logically adjacent addressable location 0, said serial numbers are consecutive integers, and said step of associating each said serial numbers with one of said addressable storage locations comprises associating the lowest serial number with a first bit position in said circular data structure and associating said highest serial number with the nth bit position in said circular data structure.

There is provided a method as in the above paragraphs wherein said step of tracking instruction status and machine resources allocated to each instruction by moving said plurality of machine pointers comprises the steps of:
initializing said first, second, and third pointers to the same initial storage location address prior to issuing a first instruction;
advancing said first issued instruction pointer (P1) forward toward higher instruction serial numbers (modulo-n) by one serial number for every instruction issued, that is P1_{new}←(P1_{old}+1 modulo n);
advancing said second committed instruction pointer forward toward higher instruction serial numbers (modulo-n) based on a serial number sequential evaluation of the state of the active-bit for each storage location and first predetermined rules but not advancing said second pointer beyond said first pointer; and
advancing said third retired pointer forward toward higher instruction serial numbers (modulo-n) based on a serial number sequential evaluation of the state of the active-bit for each location and second predetermined rules but not advancing said third pointer beyond said second pointer;
wherein said advancing of said pointers to higher valued serial numbers is accomplished in said circular data structure with modulo-n arithmetic so that incrementing any of said first, second, or third pointers from address n-1 places said pointer at address n, and incrementing said pointer from address n places said pointer at address 0.

There is provided a method as in the above paragraphs wherein said first predetermined rules include: at every predetermined number of machine clock cycles, advancing said second pointer forward to a new address location no higher than the highest data storage location address for which all activity status bits in lower address locations are inactive "0" but no higher than the address of said first pointer at that machine cycle; and
wherein said second predetermined rules include: at every predetermined number of machine clock cycles, advancing said third pointer forward to a new address location no higher than the highest data storage location address for which all activity status bits in lower address locations are inactive but no higher than the address of said second pointer at that machine cycle.

There is provided a method as in the above paragraphs wherein said new address locations are determined based on boolean operations of said status activity bits.

There is provided a method as in the above paragraphs wherein said first predetermined rules further comprise the step of limiting the number of addresses said second pointer can be advanced during said predetermined number of machine cycles to a first maximum number of addresses; and wherein said second predetermined rules further comprise the step of limiting the number of addresses said third pointer can be advanced during said predetermined number of machine cycles to a second maximum number of addresses wherein said second maximum number of addresses is less than said first maximum number of addresses.

There is provided a method as in the above paragraphs wherein said second and third pointers are not moved past instructions for which exceptions, branch instruction mispredicts, or error conditions are detected.

The present invention provides, in a processor having data storage means, at least one instruction execution unit, and an instruction issue unit; an apparatus for maintaining precise state comprising:
means for receiving instruction execution status from said execution unit for each issued instruction, said instruction execution status including status that a particular instruction is either ACTIVE or INACTIVE, and status that if a particular instruction has completed whether the completion was without execution error;
means for tracking machine resource availability information based on the issue, execution, completion, and retirement status of instructions in said processor and for communicating said information to said instruction issue unit; and
means, in said instruction issue unit, responsive to said resource availability information for continuing issuance of instructions if machine resources are available to process further instructions and for stalling issuance of further instructions when machine resources are not available to process said instructions.

There is provided an apparatus as in the above paragraph wherein said means for tracking machine resource availability information includes:
a data structure defined within said data storage means for storing issue, execution, completion, and retirement status information for each issued instruction, including an instruction activity status information identifying the current status of each instruction as ACTIVE or INACTIVE;
first logic means for determining the last issued instruction,
second logic means for determining the last committed instruction which is the last instruction that has completed without error and for which all sequentially earlier instructions have completed without error, and
third logic means for determining the last reclaimed instruction which is the last instruction for which allocated processor resources have been reclaimed.

There is provided an apparatus as in the above paragraphs further comprising:
means for identifying predicted branch instructions issued by said issue unit;
means for detecting executed predicted branch instructions that were mispredicted and for initiating recovery from said mispredicted branches; and
means for handling instruction execution exceptions according to predetermined exception handling rules.

The present invention provides, in a central processing unit having a data store, an instruction issue unit, an instruction execution unit, and an instruction issue and execution scheduler; an apparatus for tracking speculative instruction execution in said processor comprising:
a data structure defined in said data store;
means for assigning an identification tag to each instruction issued by the issue unit in response to an instruction issue operation;
means for associating an activity data stored in the data structure and uniquely associated with each particular one of said issued instructions based on the assigned identification tag;
means for storing an activity data in the data structure to identify an ACTIVE instruction state when the instruction is issued; and
means for storing said activity data in the data structure to identify an INACTIVE instruction state when the instruction completes execution without error.

The present invention provides, in an speculative out-of-order execution processor having internal data store, an instruction decode unit, and communicating with an external memory; a method for tracking and aggressively scheduling instructions referencing memory, including load and store instructions, that maintains a precise exception model; said method comprising the steps of:
issuing a plurality of instructions for execution by said processor;
identifying which of said plurality of issued instructions are speculatively issued instructions;
storing a speculative execution indicator associated with each said identified speculatively issued instruction in said internal data store;
determining which of said issued instructions reference external memory;
storing a memory referencing instruction indicator associated with each said determined memory referencing instruction in said internal data store;
monitoring execution activity status of each one of said plurality of instructions after said instructions are issued;
ascertaining whether any error conditions arose during execution for each issued instruction and generating an error condition indicator indicating an error status for each instruction experiencing an error during execution;
tracking execution status of said issued instructions; and
scheduling a particular one of said determined memory referencing instructions for execution out-of-order ahead of a sequentially earlier issued non-memory referencing instructions based on the execution status of other issued but unexecuted instructions, said execution status including identification of the non-memory referencing instruction as being a speculative issued instruction and identification of the non-memory referencing instruction as having a predetermined execution completion status.

There is provided a method as in the above paragraph wherein said step of tracking execution status comprises the steps of:
identifying each instruction by an instruction serial number;
storing in a first one of said registers a pointer value corresponding to the serial number of the last issued instruction;
storing in a second one of said registers a pointer value corresponding to the serial number of the latest deactivated instruction, wherein a deactivated instruction is an instruction which has completed execution but has not had it's result written to state;
storing in a third one of said registers a pointer value corresponding to the serial number of the last committed instruction;
storing in a fourth one of said registers a pointer value corresponding to the serial number of the storing in a first one of said registers a pointer value corresponding to the serial number of the last retired instruction;
storing in a fifth one of said registers a pointer value corresponding to the serial number of the last predicted branch instruction;
storing in a sixth one of said registers a pointer value corresponding to the serial number of the last non-memory referencing instruction; and
ascertaining status of said processor by evaluating said first, second, third, fourth, fifth, and sixth pointer values.

The present invention provides, in a speculative out-of-order execution processor having data storage means including registers internal to said processor and memory external to said processor, an instruction issue unit, and an instruction execution unit; a method for aggressively scheduling long latency instructions that may modify architectural state out-of-sequential-order ahead of low latency instructions while maintaining precise architectural state in said processor, said method comprising the steps of:
identifying the last sequentially-ordered consecutive instruction that has completed execution without error and need never be undone;
identifying the earliest sequentially-ordered speculatively issued unresolved predicted control transfer instruction for which execution may have to be undone if execution was mispredicted;
identifying any long latency instructions sequentially-ordered between said identified last sequentially-ordered consecutive instruction that has completed execution without error and need never be undone and said identified earliest sequentially-ordered speculatively issued unresolved predicted control transfer instruction for which execution may have to be undone if execution was mispredicted, said long latency instructions being identified by comparing the issued instruction with a predetermined set of instructions predesignated as being long latency instructions; and
scheduling said identified long latency instructions for immediate execution;
whereby long latency instructions are aggressively issued and precise state is maintained by scheduling for execution only said long latency instructions that can be scheduled for execution without concern for speculatively issued intervening control transfer instructions that may have been mispredicted and instructions that otherwise might have generated execution exceptions.

There is provided a method as in the above paragraph further comprising, prior to said step of identifying the last sequentially-ordered. consecutive instruction that has completed execution without error and need never be undone, the steps of:
defining a circular modulo-n data structure having n-addressable locations 0, 1, 2, ..., n-2, n-1; wherein addressable location n-1 is logically adjacent addressable location 0 in said data storage means;
assigning a monotonically increasing (modulo-n) numerical serial number identification tag to each subsequently issued instruction as each instruction is issued;
associating an activity status indicator in said data structure with each issued instruction based on said tag;
for all instructions, setting a first element of said activity status indicator in a unique one of said n locations in said data structure with each issued instruction to indicate that said instruction has been issued at the time said instruction is issued;
for long latency instructions, setting a second element of said activity status indicator to indicate that said instruction is a long latency instruction at the time said instruction is issued;
for instructions issued speculatively based on a predicted result, setting an element of said activity status indicator to indicate that said instruction is a speculatively issued instruction at the time said instruction is issued;
clearing said activity status indicator in said data structure to indicate that said instruction has completed without error at the time said instruction completes without error;
tracking execution status of issued instructions by evaluating said activity status indicators for a plurality of issued instructions to determine execution status for each issued instruction including said last sequentially-ordered consecutive instruction that has completed without error, said earliest sequentially-ordered speculative unresolved predicted instruction, and said long latency instructions sequentially-ordered between said identified last consecutive error-free completed instruction and said identified earliest unresolved predicted instruction.

There is provided a method as in the above paragraphs wherein said step of identifying the last sequentially-ordered consecutive instruction that has completed without error and need never be undone comprises the step of establishing a second pointer that points to an entry in said data structure and indicates the last deactivated instruction, said last deactivated instruction being the last in-order sequential instruction that has completed without error and where all previous in-order sequential instructions have also completed without error, in-order sequential instructions earlier than the instruction identified by said second pointer being executable without concern for branch mispredictions and exceptions;
wherein said step of identifying the earliest sequentially-ordered speculative unresolved predicted control transfer instruction for which execution may have to be undone comprises the step of establishing a first pointer (PBSN) that points to an entry in said data structure and indicates the sequentially in-order earliest unresolved branch instruction, in-order sequential instructions earlier than the instruction identified by said first pointer being executable without concern for branch mispredictions; and
wherein said step of identifying any long latency instructions sequentially-ordered between said identified last consecutive error-free completed instruction and said identified earliest unresolved predicted control transfer instruction comprises the step of identifying any long latency instructions between said second pointer (CSN) and said third pointer (NMCSN) as available to be scheduled for execution but not identifying as available to be scheduled for execution any long latency instruction between said third pointer (NMCSN) and said first pointer (PBSN).

There is provided a method as in the above paragraphs wherein each said identification step is performed by performing boolean logic comparison operations that logically compare said status indicator elements each machine cycle and by advancing each of said pointers toward storage locations corresponding to said higher numerical serial number identification tags.

There is provided a method as in the above paragraphs wherein said long latency instructions comprise instructions referencing said external memory.

There is provided a method as in the above paragraphs wherein said instructions referencing said external memory comprise load instructions and store instructions.

The present invention provides, in a speculative out-of-order execution processor having registers internal to said processor and memory external to said processor, a method for scheduling instructions referencing memory that may modify architectural state ahead of instructions referencing only said internal registers without compromising precise state in said processor; said method comprising the steps of:
establishing a data structure in a register within said processor for storing status information on a plurality of instructions;
establishing a first predicted branch instruction serial number pointer (PBSN) that points to an entry in said data structure and indicates the earliest unresolved branch instruction, in-order sequential instructions earlier than the instruction identified by said first pointer being executable without concern for branch mispredictions;
establishing a second pointer (CSN) that points to an entry in said data structure and indicates the last deactivated instruction, said last deactivated instruction being the last in-order sequential instruction that has completed without error and where all previous in-order sequential instructions have also completed without error, in-order sequential instructions earlier than the instruction identified by said second pointer being executable without concern for branch mispredictions and exceptions;
establishing a third non-memory committed serial number pointer (NMCSN) that points to an entry in said data structure and indicates the last committed instruction other than instructions referencing memory and advancing past said second pointer (CSN) and past any of said instructions referencing memory as if they were also committed;
identifying any instruction referencing memory between said second pointer (CSN) and said third pointer (NMCSN) as available to be scheduled for execution but not identifying as available to be scheduled for execution any instruction referencing memory between said third pointer (NMCSN) and said first pointer (PBSN);
whereby long latency memory referencing instructions are decoupled from short latency register referencing instructions, and
whereby precise state is maintained by scheduling only those memory referencing instructions that can be scheduled for execution without concern for branch mispredictions and execution exceptions.

There is provided a method as in the above paragraph further comprising the step of establishing said third pointer (NMCSN) to points to an entry in said data structure and indicates the last committed instruction other than instructions referencing memory and advancing past said second pointer (CSN) and past any of said instructions referencing memory as if they were also committed, and further advancing past any instructions predetermined to be non-faulting instructions irrespective of having an active or deactivated status indicator.

The present invention provides, in a speculative out-of-order execution processor having registers internal to said processor and memory external to said processor, an instruction issue unit and an instruction execution unit; a method for aggressively scheduling instructions referencing memory that may modify architectural state ahead of instructions referencing only registers without compromising precise state in said processor, said method comprising the steps of:
defining a first data structure including a plurality of addressable data storage elements for storing first status information on memory referencing instructions and non-memory referencing instructions;
defining a second data structure including a plurality of addressable data storage elements for storing second status information on memory referencing instructions;
defining a plurality of pointers, including an Issued Serial Number Pointer (ISN), a Committed Serial Number Pointer (CSN), an Earliest Unresolved Predicted Control Transfer Instruction Serial Number Pointer (PBSN), a Non-Memory Referencing Instruction Committed Serial Number Pointer (NMCSN), each said pointer pointing to one of said addressable data storage elements;
initializing each of said plurality of pointers to non-uniquely point to predetermined ones of said addressable data storage elements;
issuing at least one instruction from said instruction issue unit;
determining whether each of said issued instructions references memory;
setting said first indicator in said first data structure to indicate an active instruction for instructions referencing memory and for instructions not referencing memory in response to an instruction issue signal from said Instruction Issue Unit;
setting said second indicator in said second data structure to indicate an active instruction only for instructions not referencing memory and clearing said second indicator to indicate said instruction is inactive for instructions referencing memory in response to an instruction issue signal from said Instruction Issue Unit;
updating status of said indicators by altering each said first and second indicators in said first and second data structures for each instruction issued to indicate current status of said instruction as active or inactive in response to (i) instruction complete signals from said Execution Unit that indicate said instruction has completed and whether said completion was with or without error, and (ii) prediction evaluation status signals for control transfer instructions from a Prediction Evaluation Status Unit indicating that a predicted control transfer was or was not correctly predicted;
advancing said ISN pointer, in response to a signal from the instruction issue unit indicating the number of instructions issued during a current machine cycle, to point to the latest issued instruction number;
sequentially evaluating said first indicators in order of increasing serial number starting from said CSN pointer and evaluating toward said ISN pointer to determine the latest serial number which has an inactive instruction indicator, and advancing said CSN pointer to point to said latest serial number which has an inactive instruction indicator;
advancing said PBSN pointer to point to the location of the earliest unresolved branch instruction in response to prediction evaluation status signals from a Prediction Evaluation Status Unit;
advancing said NMCSN pointer to point to the location of the last committed instruction and further advancing ahead of CSN past any non-committed active memory instructions up said PBSN pointer based on an evaluation of said second indicators in said second data structure;
storing machine state information just prior to executing each instruction that is a (i) control transfer instruction, and (ii) an instructions having a possible side effect of modifying a control register value which control register value can be modified speculatively, so that precise state is restorable upon misprediction of a predicted control transfer instruction or upon occurrence of an execution exception; and
syncing the machine to commit and retire all pending instructions prior to executing an instruction that may have the possible side effect of modifying a control register value which control register value cannot be modified speculatively;
whereby memory referencing instructions which require more machine cycles to execute than non-memory instructions can be scheduled for execution as soon as instruction execution status permits but without compromising precise state.

There is provided a method as in the above paragraph wherein said plurality of defined pointers further includes an Resource Reclaim Pointer (RRP) pointing to one of said addressable data storage elements; and further comprising the step of:
advancing said RRP pointer in-order, in response to a signal from the Instruction Commit and Reclaim Unit (ICRU) to point to the last instruction that is committed and for which all machine resources allocated to said instruction have been reclaimed by the machine.

There is provided a method as in the above paragraphs wherein said memory referencing instructions are selected from the group comprising load instructions, store instructions, and atomic instructions.

There is provided a method as in the above paragraphs wherein said step of advancing said ISN Pointer is based on the serial number of the last issued instruction serial number of the previous machine cycle, and wherein said signal identifies the number of instructions issued during the present machine cycle.

There is provided a method as in the above paragraphs wherein said step of advancing said CSN pointer is limited to advancing said CSN pointer by a predetermined number of serial numbers on each machine cycle.

There is provided a method as in the above paragraphs wherein said control transfer instructions comprise a branch instruction.

The present invention provides, in an speculative out-of-order execution processor having internal data store and communicating with an external memory, a method to track and aggressively schedule instructions referencing memory, including load and store instructions that maintains a precise exception model; said method comprising the steps of:
issuing a plurality of instructions for execution in said processor;
identifying which of said issued instructions involve speculative execution and storing an indicator associated with each said speculative instruction;
identifying which of said issued instructions reference external memory and storing an indicator associated with each said memory referencing instruction;
monitoring execution status of said plurality of instructions after issue of said instructions including monitoring errorless execution completion to determine a completion status for each instruction;
tracking execution status of said issued instructions; and
-scheduling said issued memory referencing instructions for execution ahead of non-memory referencing instructions based on status of other instructions including identification as being a speculative instruction and said execution completion status of said plurality of instructions.

The present invention provides, in a speculative out-of-order execution processor having data storage means including registers internal to said processor and memory external to said processor, an instruction issue unit, and an instruction execution unit; apparatus for aggressively scheduling long latency instructions that may modify architectural state out-of-sequential-order ahead of low latency instructions while maintaining precise architectural state in said processor, said apparatus comprising:
means for identifying the last sequentially-ordered consecutive instruction that has completed execution without error and need never be undone;
means for identifying the earliest sequentially-ordered speculatively issued unresolved predicted control transfer instruction for which execution may have to be undone if execution was mispredicted;
means for identifying any long latency instructions sequentially-ordered between said identified last sequentially-ordered consecutive instruction that has completed execution without error and need never be undone and said identified earliest sequentially-ordered speculatively issued unresolved predicted control transfer instruction for which execution may have to be undone if execution was mispredicted, said long latency instructions being identified by comparing the issued instruction with a predetermined set of instructions predesignated as being long latency instructions; and
means for scheduling said identified long latency instructions for immediate execution;
whereby long latency instructions are aggressively issued and precise state is maintained by scheduling for execution only said long latency instructions that can be scheduled for execution without concern for speculatively issued intervening control transfer instructions that may have been mispredicted and instructions that otherwise might have generated execution exceptions.

There is provided an apparatus as in the above paragraph further comprising:
a circular modulo-n data structure having n-addressable locations 0, 1, 2, ..., n-2, n-1; wherein addressable location n-1 is logically adjacent addressable location 0 in said data storage means;
means for assigning a monotonically increasing (modulo-n) numerical serial number identification tag to each issued instruction as each said instruction is issued;
means for associating an activity status indicator in said data structure with each issued instruction based on said tag;
means for setting a first element of said activity status indicator in a unique one of said n locations in said data structure for every one of said issued instruction to indicate that said instruction has been issued at the time said instruction is issued;
means for setting a second element of said activity status indicator to indicate that said instruction is a long latency instruction at the time said instruction is issued only for instructions identified as long latency instructions;
means for setting an element of said activity status indicator to indicate that said instruction is a speculatively issued instruction at the time said instruction is issued only for instructions issued speculatively based on a predicted result;
means for clearing said activity status indicator in said data structure to indicate that said instruction has completed without error at the time said instruction completes without error;
means for tracking execution status of issued instructions by evaluating said activity status indicators for a plurality of issued instructions to determine execution status for each issued instruction including said last sequentially-ordered consecutive instruction that has completed without error, said earliest sequentially-ordered speculative unresolved predicted instruction, and said long latency instructions sequentially-ordered between said identified last consecutive error-free completed instruction and said identified earliest unresolved predicted instruction.

There is provided an apparatus as in the above paragraphs wherein:
said means for identifying the last sequentially-ordered consecutive instruction that has completed without error comprises means for establishing a second pointer that points to an entry in said data structure and indicates the last deactivated instruction, said last deactivated instruction being the last in-order sequential instruction that has completed without error and where all previous in-order sequential instructions have also completed without error, in-order sequential instructions earlier than the instruction identified by said second pointer being executable without concern for branch mispredictions and exceptions;
said means for identifying the earliest sequentially-ordered speculative unresolved predicted control transfer instruction for which execution may have to be undone comprises means for establishing a first pointer (PBSN) that points to an entry in said data structure and indicates the sequentially in-order earliest unresolved branch instruction, in-order sequential instructions earlier than the instruction identified by said first pointer being executable without concern for branch mispredictions; and
said means for identifying any long latency instructions sequentially-ordered between said identified last consecutive error-free completed instruction and said identified earliest unresolved predicted control transfer instruction comprises means for identifying any long latency instructions between said second pointer (CSN) and said third pointer (NMCSN) as available to be scheduled for execution but not identifying as available to be scheduled for execution any long latency instruction between said third pointer (NMCSN) and said first pointer (PBSN).

There is provided an apparatus as in the above paragraphs wherein:
said means for identification comprisies boolean logic circuity for logically comparing said status indicator elements each machine cycle, and means for advancing each of said pointers toward storage locations corresponding to said higher numerical serial number identification tags.

There is provided an apparatus as in the above paragraphs wherein said long latency instructions comprise instructions referencing said external memory, and wherein said means for identifying any long latency instructions including load instructions and store instructions comprises an instruction decoder for decoding instructions and identifying instructions referencing external memory.

The present invention provides, in a speculative out-of-order execution processor having a plurality of internal processor registers and memory external to said processor, an instruction issue unit and an instruction execution unit; an apparatus for aggressively scheduling instructions referencing memory that may modify architectural state ahead of instructions referencing only registers without compromising precise state in said processor, said apparatus comprising:
a first data structure including a plurality of addressable data storage elements for storing first status information on memory referencing instructions and non-memory referencing instructions;
a second data structure including a plurality of addressable data storage elements for storing second status information on memory referencing instructions;
a plurality of pointer storage registers defined within said internal processor registers and storing a plurality of pointers values including an Issued Serial Number Pointer (ISN), a Committed Serial Number Pointer (CSN), an Earliest Unresolved Predicted Control Transfer Instruction Serial Number Pointer (PBSN), a Non-Memory Referencing Instruction Committed Serial Number Pointer (NMCSN), each said pointer pointing to one of said addressable data storage elements;
means for initializing each of said plurality of pointers to point to predetermined ones of said addressable data storage elements;
means for issuing at least one instruction from said instruction issue unit;
means for determining whether each of said issued instructions references said external memory;
means for setting said first indicator in said first data structure to indicate an active instruction for instructions referencing memory and for instructions not referencing memory in response to an instruction issue signal from said instruction issue unit;
means for setting said second indicator in said second data structure to indicate an active instruction only for instructions not referencing memory and clearing said second indicator to indicate said instruction is inactive for instructions referencing memory in response to an instruction issue signal from said instruction issue unit;
means for updating status of said indicators by altering each said first and second indicators in said first and second data structures for each instruction issued to indicate current status of said instruction as active or inactive in response to (i) instruction complete signals from said execution unit that indicate said instruction has completed and whether said completion was with or without error, and (ii) prediction evaluation status signals for control transfer instructions from a prediction evaluation status unit indicating that a predicted control transfer was or was not correctly predicted;
means for advancing said ISN pointer, in response to a signal from the instruction issue unit indicating the number of instructions issued during a current machine cycle, to point to the latest issued instruction number;
means for sequentially evaluating said first indicators in order of increasing serial number starting from said CSN pointer and evaluating toward said ISN pointer to determine the latest serial number which has an inactive instruction indicator, and for advancing said CSN pointer to point to said latest serial number which has an inactive instruction indicator;
means for advancing said PBSN pointer to point to the location of the earliest unresolved branch instruction in response to prediction evaluation status signals from a prediction evaluation status unit;
means for advancing said NMCSN pointer to point to the location of the last committed instruction and further advancing ahead of CSN past any non-committed active memory instructions up said PBSN pointer based on an evaluation of said second indicators in said second data structure;
means for storing machine state information just prior to executing each instruction that is a (i) control transfer instruction, or (ii) an instruction having a possible side effect of modifying a control register value which control register value can be modified speculatively so that precise state is restorable upon misprediction of a predicted control transfer instruction or upon occurrence of an execution exception; and
means for syncing said processor to commit and retire all pending instructions prior to executing an instruction that may have the possible side effect of modifying a control register value which control register value cannot be modified speculatively;
whereby memory referencing instructions which require more machine cycles to execute than non-memory instructions can be scheduled for execution as soon as instruction execution status permits but without compromising precise state.

There is provided an apparatus as in the above paragraph wherein said plurality of defined pointers further includes a Resource Reclaim Pointer (RRP) pointing to one of said addressable data storage elements; and further comprising means for advancing said RRP pointer in-order, in response to a signal from the Instruction Commit and Reclaim Unit (ICRU) to point to the last instruction that is committed and for which all machine resources allocated to said instruction have been reclaimed by the machine.

The present invention provides a method for checkpointing instructions in a central processing unit (CPU) to reduce checkpointed state while maintaining precise architectural state for said CPU, said method comprising the steps of:
pre-identifying instructions that may modify architectural state when executed in said CPU before said instructions are issued and executed;
pre-selecting particular ones of said identified instructions for execution in a special execution mode without checkpointing architectural state for said particular instructions before execution based on predetermined selection criteria;
checkpointing architectural state for said identified instructions other than said preselected particular ones prior to execution; and
executing said identified instructions, including executing said particular ones of said instructions in said special mode.

There is provided a method as in the above paragraph wherein said predetermined criteria comprises the type of modifiable state and the amount of modifiable state that may be modified by the instruction during execution.

There is provided a method as in the above paragraphs wherein said predetermined criteria further comprises the frequency at which the instruction occurs in the predetermined nominal instruction stream.

There is provided a method as in the above paragraphs wherein said predetermined criteria further comprises the composition of said predetermined nominal instruction stream so that said selection criteria may be optimized for a particular type of processing task in said CPU.

There is provided a method as in the above paragraphs wherein said predetermined criteria comprises:
the state modifiable by each particular one of said pre-identified instructions;
the storage requirements for the modifiable state each particular one of said pre-identified instructions; and
the estimated statistical frequency at which each particular one of said pre-identified instructions occurs for some predetermined nominal processing task.

There is provided a method as in the above paragraphs wherein said step of pre-selecting comprises the steps of:
choosing for execution in said special execution mode, those pre-identified instructions that are issued with a predetermined low estimated statistical frequency and require a relatively larger amount of checkpoint storage; and
choosing for execution in a normal processing mode, those pre-identified instructions that are issued with a predetermined high frequency and require a relatively smaller amount of checkpoint storage.

There is provided a method as in the above paragraphs wherein said special execution mode comprises the step of synchronizing said CPU before beginning execution of said selected instruction.

There is provided a method as in the above paragraphs wherein said step of synchronizing said CPU comprises the steps of:
identifying an instruction as a syncing instruction which requires machine synchronization in the instruction stream prior to execution;
delaying execution of said syncing instruction until all pending issued instructions have been committed and retired so that execution has completed without error and the execution result has been written back to state;
executing each instruction requiring machine synchronization sequentially and in-order;
identifying exception conditions arising from execution of each said syncing instruction before writeback to state is made;
handling any of said exception conditions that may arise during execution of said syncing instructions; and
writing an execution result back to machine state;
whereby precise state is maintained without checkpointing said syncing instruction.

There is provided a method as in the above paragraphs wherein said step of identifying an instruction as a syncing instruction includes identifying the instruction as a syncing instruction before issuing said instruction, and said step of delaying execution of said syncing instruction further includes delaying issuance of said syncing instruction until all pending issued instructions have been committed and retired.

There is provided a method as in the above paragraphs wherein said identified instructions include predicted program control transfer instructions, instructions that may modify program flow, instructions that may modify machine state, and instructions that may have the side-effect of modifying control register values.

There is provided a method as in the above paragraphs wherein said instruction that may modify program flow including instructions implemented within the SPARC-V9 instruction set selected from the group consisting of BPr, FB_{CC}, FBPcc, B_{CC}, BPcc, CALL, JMPL, TCC, RETURN, DONE, RETRY, and combinations thereof.

There is provided a method as in the above paragraphs wherein said instruction that may modify machine state include instructions that write to the control registers in the control register and register window control instructions.

There is provided a method as in the above paragraphs wherein said instruction that may modify machine state include instructions that read the control registers in the control register.

There is provided a method as in the above paragraphs wherein said identified instructions further including instructions which often result in an issue trap.

There is provided a method as in the above paragraphs wherein said identified instructions further include the first instruction in a trap handler routine so that return can be made if the trap was taken speculatively.

The present invention provides a method for checkpointing instructions to reduce checkpointed state while maintaining precise architectural state for said CPU, said method comprising the steps of:
pre-identifying instructions that may modify architectural state when executed in said CPU before said instructions are issued and executed;
pre-selecting particular ones of said identified instructions for execution in a machine synchronization mode without checkpointing architectural state for said particular instructions before execution based on predetermined selection criteria;
said predetermined criteria comprising:
   the state modifiable by each particular one of said pre-identified instructions;
   the storage requirements for the modifiable state each particular one of said pre-identified instructions;
   the estimated statistical frequency at which each particular one of said pre-identified instructions occurs for some predetermined nominal processing task;
   said step of pre-selecting further comprises the steps of:
      choosing for execution in said special execution mode, those pre-identified instructions that are issued with a predetermined low estimated statistical frequency and require a relatively larger amount of checkpoint storage; and
      choosing for execution in a normal processing mode, those pre-identified instructions that are issued with a predetermined high frequency and require a relatively smaller amount of checkpoint storage;
      checkpointing architectural state for said identified instructions other than said preselected particular ones prior to execution; and
      executing said identified instructions as they occur in said instruction stream, including executing said particular ones of said instructions in said machine synchronization mode;
   said machine synchronization mode further comprising the steps of:
      identifying an instruction as a syncing instruction which requires machine synchronization in the instruction stream prior to issuance;
      issuing instructions other than said syncing instructions and delaying issuing of said syncing instruction until pending issued instructions have completed execution without error and have had the result from said execution written back to state;
      issuing each instruction requiring machine synchronization sequentially and in-order;
      identifying exception conditions arising from execution of each said syncing instruction before writeback to state is made;
      handling any of said exception conditions that may arise during execution of said syncing instructions; and
      writing execution results back to state;
      whereby precise state is maintained without checkpointing said syncing instruction.

The present invention provides a method for tracking instruction status and allocating and deallocating checkpoints on the basis of the instruction status; said method comprising the steps of:
establishing a data structure in a data storage region in memory of said CPU;
defining a plurality of checkpoint allocation registers, each corresponding to a single checkpoint and having a plurality of checkpoint status fields, within said data structure;
allocating the next sequentially available checkpoint allocation register n for an instruction having an instruction serial number SN and storing checkpoint status information for said instruction in said plurality of status fields;
monitoring the committed serial number pointer (CSN) at predetermined time intervals to determine whether the committed instruction serial number pointer (CSN) has passed the instruction serial number SN associated with checkpoint n and the next stored checkpoint n+1;
communicating information stored in said checkpoint allocation register to said CPU in response to a CPU backup signal; and
deallocating a previously allocated checkpoint in response to a determination that the committed instruction serial number pointer (CSN) has passed the instruction serial number associated with checkpoint n and the next checkpoint n+1.

There is provided a method as in the above paragraph further comprising the steps of deallocating a previously allocated checkpoint in response to receipt of a CPU backup signal indicating that the CPU has backed up past the checkpoint serial number for which the checkpoint was formed.

There is provided a method as in the above paragraphs wherein said step of defining a plurality of checkpoint allocation registers, each corresponding to a single checkpoint and having a plurality of checkpoint status fields, within said data structure comprises the steps of:
defining, with each said checkpoint register, a first validity status field denoting whether that checkpoint has been allocated and that the information stored in that particular checkpoint is valid checkpoint information;
defining, with each said checkpoint register, a second checkpoint passed status field denoting whether the checkpoint has been passed by indicating whether the committed serial number instruction pointer (CSN) has passed the instruction serial number (SN) of the particular checkpoint stored in the register;
defining, with each said checkpoint register, a third status field denoting a condition associated with the committed instruction serial number pointer (CSN);
defining, with each said checkpoint register, a fourth greater than status filed denoting whether the committed serial number pointer (CSN) is greater than the serial number of the checkpoint and used to determine when the committed instruction serial number has passed this checkpoint; and
defining, with each said checkpoint register, a fifth next serial number status field denoting the next serial number (NSN) following the checkpointed serial number.

There is provided a method as in the above paragraphs wherein said first status field is a 1-bit field; said second status field is a 1-bit field; said third status field is a 3-bit field; said fourth status field is a 1-bit field; and said fifth status field is a 6-bit field.

There is provided a method as in the above paragraphs wherein said step of allocating a checkpoint i for an instruction having an instruction serial number SN comprises the steps of:
identifying a next available checkpoint number i and indexing into said checkpoint allocation register i based on said next available checkpoint number i;
writing a "1" to said first field of said allocated register to indicate said checkpoint i is valid and has not been retired;
writing a "0" into said second field to indicate that said checkpoint i has not been passed;
writing one of a plurality of states in said third field to indicate the location of said committed instruction serial number pointer (CSN) at the time said checkpoint i is allocated so that a transition of said committed instruction serial number pointer (CSN) from around a circular active instruction status ring can be detected;
comparing the committed serial number pointer (CSN) with the serial number of the checkpoint and if the committed serial number is greater then writing an indicator in said fourth status field to indicate that the committed instruction serial number has passed this checkpoint; and
writing information related to the instruction serial number for which the checkpoint is formed in said fifth status field.

There is provided a method as in the above paragraphs wherein said information related to the instruction serial number is the serial number for which the checkpoint is formed.

There is provided a method as in the above paragraphs wherein said information related to the instruction serial number is the serial number for which the checkpoint is formed incremented by one serial number.

There is provided a method as in the above paragraphs wherein said step of deallocating a previously allocated checkpoint in response to a determination that the committed instruction serial number pointer (CSN) has passed the instruction serial number associated with checkpoint n and the next checkpoint n∓1, further comprises the steps of:
generating a committed serial number passed signal by computing the difference between the serial number stored in the checkpoint register and the committed serial number pointer; and
clearing said first status field in response to said generated committed serial number passed signal.

There is provided a method as in the above paragraphs further comprising the steps of:
detecting a CPU backup indication signal;
determining whether the CPU has backed up past the checkpoint serial number identified in said backup indication signal for which the checkpoint was formed; and
deallocating said checkpoint if said determination identifies that the backup is past the checkpoint..

There is provided a method as in the above paragraphs further comprising the steps of:
detecting a CPU backup indication signal that identifies the serial number of the instruction at the backup checkpoint;
determining whether the CPU has backed up past the checkpoint serial number identified in said backup indication signal for which the checkpoint was formed; and
deallocating said checkpoint if said determination identifies that the backup is past the checkpoint by clearing said first status field in response to said generated committed serial number passed signal.

There is provided a method as in the above paragraphs further comprising the steps of:
receiving an issued serial number (ISN) signal that indicates the last issued instruction serial number;
receiving a committed instruction serial number (CSN) signal that indicates the last committed instruction serial number;
killing all issued instruction having serial numbers between the committed serial number pointer (CSN) and the backup checkpoint;
updating the issued instruction serial number pointer (ISN) during said backup based on said fifth status field storing the next serial number associated with the backup checkpoint; and
updating the Issued Serial Number pointer (ISN) based on the next serial number value stored in the checkpoint register for the backup checkpoint if an unfinished floating-point exception or a data breakpoint exception are detected.

There is provided a method as in the above paragraphs wherein said step of comparing the committed serial number pointer (CSN) with the serial number of the checkpoint is made for a plurality of said checkpoint registers simultaneously.

There is provided a method as in the above paragraphs wherein said checkpoint is allocated in response to a time-out checkpoint allocation signal indicating that a predetermined number of events have transpired since the last checkpoint was formed and that an additional checkpoint is to be formed independently of the instruction type attributes.

The present invention provides a method for maintaining precise state in a CPU by synchronizing said CPU prior to execution of said instruction; comprising the steps of:
identifying an instruction that may modify machine state during execution as a syncing instruction that requires machine synchronization in the instruction stream prior to execution;
delaying execution of said syncing instruction until all pending issued instructions have been committed and retired so that execution of said pending instructions has completed without error and the execution result has been written back to CPU state;
executing each instruction requiring machine synchronization sequentially and in-order,
identifying exception conditions arising from execution of each said syncing instruction before writeback to state is made;
handling any of said exception conditions that may arise during execution of said syncing instructions; and
writing an execution result back to machine state;
whereby precise state is maintained for said syncing instructions without pre-storing state modifiable by said syncing instruction.

There is provided a method as in the above paragraph wherein said step of identifying an instruction as.a syncing instruction includes identifying the instruction as a syncing instruction before issuing said instruction, and said step of delaying execution of said syncing instruction further includes delaying issuance of said syncing instruction until all pending issued instructions have been committed and retired.

The present invention provides a method of designing an optimum checkpoint size for a CPU, comprising the steps of:
determining the machine state modifiable by each instruction in the instruction set supported by said CPU;
determining the statistical frequency at which each particular instruction occurs for some representative nominal processing task;
determining the state storage requirements for each instruction;
choosing a maximum amount of storage for checkpoint information;
performing an optimization to select those instructions that are rarely issued and require relatively larger amounts of checkpoint storage than more frequently occurring instructions;
checkpointing only those instructions that can be checkpointed within said allocated maximum checkpoint space.

The present invention provides a method for checkpointing an instruction to reduce the amount of checkpointed data while maintaining precise state in a central processing unit (CPU), said method comprising the steps of:
defining a register rename map data structure having a plurality of map register elements in a data store in said central processing unit;
allocating an available physical register in said CPU for each logical source and/or logical destination register referenced by an instruction prior to execution of said instruction;
identifying each said logical source register and logical destination register by a unique logical register tag;
identifying each allocatable physical register by a physical register tag;
associating each one of said plurality of map register elements with one of said unique logical register tags; and
storing the physical register tag identified with each said allocated physical register in a map register element associated with the unique logical register tag for which said physical register was allocated so that each map register element stores the physical register tag that is currently mapped to the logical register tag;
whereby all state that has changed for said register as a result of issuance of said instruction is stored and available for restoration is a CPU backup is required.

There is provided a method as in the above paragraph further comprising the steps of:
defining a free physical register freelist data structure having a plurality of freelist elements each element storing a physical register tag for an available unallocated physical register in said CPU;
communicating, in response to an indication from the instruction issue unit that an instruction referencing a logical register is about to be dispatched, a free physical register tag to an instruction issue unit for use to replace a logical register as a source or destination register; and
removing said physical register tag from said free physical register freelist data structure upon communication of said free physical register tag to said instruction issue unit.

There is provided a method as in the above paragraphs further comprising the steps of:
providing a resource reclaim unit having a plurality of reclaim elements each having a logical register tag field, an old physical register tag field, and a reclaim element validity field for storing data;
associating each said reclaim element with a unique issued instruction serial number; and
in response to decoding an instruction assigned an instruction serial number SN that references a particular logical register:
   determining which particular one of said plurality of rename map register elements has been associated with said particular logical register referenced in said decoded instruction for a previously decoded and issued instruction, if any;
   reading said particular rename map register element to determine the particular physical register tag associated with said particular logical register;
   storing said particular physical register tag in said old physical register tag field and storing said particular logical register tag in said logical register tag field of the reclaim element associated with said instruction serial number SN so that the old physical register number is stored along with the logical register tag that it previously mapped;
   writing an indicator into the reclaim element validity field associated with said instruction serial number SN to indicate that the particular reclaim element contains a valid data set;
   identifying a new free physical register from said freelist for use in executing said instruction having instruction serial number SN and writing the new free physical register tag corresponding to said free physical register into
   allocating a new physical register for said particular logical register referenced by said instruction having instruction serial number SN; and
   storing said new physical register tag corresponding to said newly allocated physical register in the rename map register element associated with the logical register tag for which said new physical register was allocated in response to instruction serial number SN referencing said logical register so that each rename map register element stores the physical register tag that is currently mapped to a particular logical register;
   whereby said resource reclaim unit serves as a sequential historical ledger from which earlier logical to physical mappings can be reconstructed if necessary.

There is provided a method as in the above paragraphs wherein said step of defining a register rename map data structure comprises defining a separate register rename map data structure for each of a plurality of register types in said CPU; and wherein said step of defining a free physical register comprises defining a separate freelist data structure for each of a plurality of register types in said CPU; and wherein said step of providing a resource reclaim unit comprises providing a single resource reclaim unit which stores logical and physical registers mapped by any of said plurality of separate register rename data structures and separate freelist data structures.

There is provided a method as in the above paragraphs further comprising the steps of:
receiving a CPU backstep initiation signal including an indication of the number of instructions to backstep over;
receiving an issued instruction serial number (ISN) indicating the last issued instruction serial number;
identifying a particular reclaim element based on said received issued instruction serial number and said association of each reclaim element with a unique issued instruction serial number;
restoring the logical register to physical register mapping stored in said identified particular register rename map element for instruction serial number ISN based on the data stored in said resource reclaim element associated with said issued instruction serial number( ISN) so that each rename map register element stores the physical register tag that is was mapped to a particular logical register prior to issue of said instruction ISN; and
decrementing the issued instruction serial number and repeating said step of identifying a particular reclaim element and said step of restoring the logical register to physical register mapping stored in that identified element for each instruction to be backstepped over.

There is provided a method as in the above paragraphs wherein said step of restoring the logical register to physical register mapping at each instruction serial number comprises the steps of:
backward indexing into said resource reclaim data structure by instruction serial number and reading the logical register tag stored in said logical register tag field and said physical register tag stored in said old physical register tag field associated with said instruction serial number,
identifying the register rename map element associated with said logical register tag read from said logical register tag field;
reading the rename map element corresponding to said logical register tag to determine the physical register tag stored therein;
writing said determined physical register tag stored in said rename map element into said physical register freelist;
writing said physical register tag stored in said old physical register tag field into the register rename map element corresponding to said logical register tag stored in said logical register tag field of said resource reclaim unit element thereby effectively reversing the register renaming and restoring register state to the state that existed just prior to execution of said instruction; and
writing an indicator into said reclaim element validity field for said instruction serial number to indicate that the reclaim element does not contain a valid data set;
whereby said physical register freelist unit elements, said register rename map elements, and said register reclaim unit elements are restored to the state they had just prior to issuance of said particular instruction.

There is provided a method as in the above paragraphs further comprising the steps of:
determining the instruction serial number stored as the resource retirement pointer (RRP);
freeing allocation of the physical register previously allocated to the particular logical register for instruction serial number SN when said resource retirement pointer (RRP) is advanced to be equal to or greater than instruction serial number SN associated with a particular stored reclaim element.

There is provided a method as in the above paragraphs wherein said step of freeing allocation of the physical register comprising the steps of:
writing said physical register tag stored in said particular rename map element corresponding to said instruction serial number into said physical register freelist; and
writing an indicator into said reclaim element validity field for said instruction serial number to indicate that the reclaim element does not contain a valid data set.

There is provided a method as in the above paragraphs wherein said step of allocating a physical register prior to execution of said instruction comprises allocating said physical register prior to issuing said instruction to the execution unit.

There is provided a method as in the above paragraphs wherein said plurality of register types are selected from the group consisting of an integer register type, a floating-point register type, a condition code register type, a Y-register type, a trap-stack register type.

There is provided a method as in the above paragraphs wherein the number of physical registers is greater than the number of logical registers and each said logical register may be mapped onto a plurality of physical registers.

There is provided a method as in the above paragraphs wherein each logical source register referenced by an instruction is mapped to a physical register before any logical destination registers are mapped to physical registers.

The present invention provides a CPU that implements register renaming for registers used when an instruction is issued by mapping architected register locations onto physical register locations, a method for reducing the amount of checkpointed data while maintaining precise state comprising the steps of:
identifying logical source registers used by said issued instruction;
mapping each identified logical source register onto an available physical register and storing said logical-to-physical mapping in a resource rename data structure;
identifying logical destination registers used by said issued instruction;
mapping each identified logical destination register onto an available physical register and storing said logical-to-physical mapping in resource rename data structure.;
providing a first data store in said CPU for storing a list of free physical registers;
providing a second data store in said CPU for storing an instruction serial number SN, a logical register tag for a logical register referenced by said instruction having instruction serial number SN, and a physical register tag for a physical register mapped to said logical register;
during instruction issue prior to instruction execution, checkpointing said renamed logical and physical registers by storing machine state data pertaining to the state of said renamed source and/or destination registers affected by the issued instruction prior to executing said instructions.

There is provided a method as in the above paragraph further comprising the steps of:
in response to receipt of a CPU backup initiation signal condition, restoring earlier machine state by restoring said register rename map to the state it had at the time just prior to execution of the instruction which resulted in the backup.

The present invention provides, in a central processing unit implementing out of order speculative execution of in-order issued instructions, having an instruction issue unit for issuing instructions, and an execution unit for executing instructions, an apparatus comprising:
storage means for pre-storing the identities of a first set of instructions types that may modify architectural state when executed in said CPU and which instructions are to be checkpointed to save processor state prior to execution;
storage means for pre-storing the identities of a second set of instruction types that may modify architectural state when executed in said CPU and which second set of instructions are to be executed in a special execution mode without checkpointing architectural state prior to execution;
a comparator for comparing an issued instruction type with said first and second stored instruction types and generating output signals indicating that a issued instruction is to be checkpointed prior to execution in a normal execution mode or not checkpointed and executed in a special processor mode;
checkpoint means responsive to said comparator output signals for initiating checkpoint formation to checkpoint architectural state for said first type instructions prior to execution; and
instruction execution means for executing said instructions, including executing said second type instructions said special execution mode; said special execution mode including means for synchronizing said processor prior to executing said second type instructions.

The present invention provides, in a central processing unit implementing out of order speculative execution of in-order issued instructions, having an instruction issue unit for issuing instructions, a memory for storing data, and an execution unit for executing instructions, an apparatus comprising:
a data structure in a data storage region in memory of said CPU;
a plurality of checkpoint allocation registers, each allocated to a corresponding a single checkpoint and having a plurality of checkpoint status fields, within said data structure;
means for allocating the next sequentially available checkpoint allocation register n for an instruction having an instruction serial number SN;
means for storing checkpoint status information for said instruction in said plurality of status fields;
means for monitoring the committed serial number pointer (CSN) at predetermined time intervals to determine whether the committed instruction serial number pointer (CSN) has passed the instruction serial number SN associated with checkpoint n and the next stored checkpoint n+1;
means for communicating information stored in said checkpoint allocation register to said CPU in response to a CPU backup signal; and
means for deallocating a previously allocated checkpoint in response to a determination that the committed instruction serial number pointer (CSN) has passed the instruction serial number associated with checkpoint n and the next checkpoint n+1;
whereby instruction status is tracked and checkpoints are allocated and deallocated on the basis of the instruction status.

The present invention provides, in a central processing unit implementing out of order speculative execution of in-order issued instructions, having an instruction issue unit for issuing instructions, a memory for storing data, and an execution unit for executing instructions, an apparatus for synchronizing said CPU prior to execution of selected instructions comprising:
means for identifying an instruction that may modify machine state during execution as a syncing instruction that requires machine synchronization in the instruction stream prior to execution;
means for delaying execution of said syncing instruction until all pending issued instructions have been committed and retired so that execution of said pending instructions has completed without error and the execution result has been written back to CPU state;
means for executing each instruction requiring machine synchronization sequentially and in-order;
means for identifying exception conditions arising from execution of each said syncing instruction before writeback to state is made;
an exception handler for handling any of said exception conditions that may arise during execution of said syncing instructions; and
means for writing an execution result back to machine state;
whereby precise state is maintained for said syncing instructions without pre-storing state modifiable by said syncing instruction.

The present invention provides, in a central processing unit implementing out of order speculative execution of in-order issued instructions, having an instruction issue unit for issuing instructions, a memory for storing data, and an execution unit for executing instructions, an apparatus for checkpointing an instruction to reduce the amount of checkpointed data while maintaining precise state in a central processing unit comprising:
a register rename map data structure having a plurality of map register elements in a data store in said central processing unit;
means for allocating an available physical register in said CPU for each logical source and/or logical destination register referenced by an instruction prior to execution of said instruction;
means for identifying each said logical source register and logical destination register by a unique logical register tag;
means for identifying each allocatable physical register by a physical register tag;
means for associating each one of said plurality of map register elements with one of said unique logical register tags; and
means for storing the physical register tag identified with each said allocated physical register in a map register element associated with the unique logical register tag for which said physical register was allocated so that each map register element stores the physical register tag that is currently mapped to the logical register tag;
whereby all state that has changed for said register as a result of issuance of said instruction is stored and available for restoration is a CPU backup is required.

The present invention provides, in a central processing unit (CPU) having an instruction issue means, instruction execution means, and a data store for storing data, a method for bounding exception handling for exceptions occurring in said execution means; said method comprising the steps of:
establishing a predetermined threshold for the number of occurrences of a specified event that defines a time-out condition and storing said threshold in said data store within said CPU;
counting occurrences of a said specified event in a counter within said CPU and storing said number of occurrences as a count in said data store within said CPU;
comparing said count with said threshold; and
forming a time-out checkpoint when said count is equal to or greater than said time-out condition.

There is provided a method as in the above paragraph further comprising the steps of:
initializing said count to an initial value prior to execution of a first instruction; and
resetting said count to said initial state after a checkpoint has been formed including after said time-out checkpoint has been formed.

There is provided a method as in the above paragraphs wherein said specified event is issuance of any instruction by said central processing unit so that formation of said time-out checkpoint limits the number of instructions issued between successively formed checkpoints to said predetermined number of instructions.

There is provided a method as in the above paragraphs wherein said instruction has arbitrary instruction attributes.

There is provided a method as in the above paragraphs wherein said specified event is execution of a predetermined number of machine clock cycles.

There is provided a method as in the above paragraphs wherein said specified event is the number of instruction issue cycles that have passed without forming a checkpoint.

There is provided a method as in the above paragraphs wherein said step of forming said timeout checkpoint comprises storing state information characterizing complete state of said CPU including storing state information for all registers in said CPU.

There is provided a method as in the above paragraphs wherein said step of forming said timeout checkpoint comprises storing state information characterizing the state of a register rename map storing only indicia of data changed since the last checkpoint, including the last time-out checkpoint, was formed within said CPU.

There is provided a method as in the above paragraphs wherein said indicia comprises a mapping of logical registers to physical registers.

There is provided a method as in the above paragraphs further comprising the step of recovering from an execution error caused by a faulting instruction including the steps of:
restoring earlier processor state for said CPU from a checkpoint formed for a checkpointed instruction sequentially before said faulting instruction;
backing up said CPU from said faulting instruction to said earlier checkpointed instruction; and
re-executing instructions forward from said checkpointed instruction.

There is provided a method as in the above paragraphs further comprising the step of recovering from an execution error caused by a faulting instruction including the steps of:
restoring earlier processor state for said CPU from a checkpoint formed for a checkpointed instruction sequentially later than said faulting instruction;
backing up said CPU from said faulting instruction to said sequentially later checkpointed instruction;
backstepping said CPU to said faulting instruction including restoring processor state for each instruction lying sequentially between said later checkpointed instruction and said faulting instruction in a backward step-by-step manner; and
re-executing instructions forward from said faulting instruction.

There is provided a method as in the above paragraphs further comprising the steps of:
if all checkpoints are allocated at the time said timeout checkpoint becomes due for formation, delaying formation of said timeout checkpoint according to predetermined rules rather than stalling said CPU as might be required to maintain precise state for an instruction decode type checkpoint.

There is provided a method as in the above paragraphs wherein the predetermined rules comprise delaying formation of the timeout checkpoint for a predetermined number of cycles.

The present invention provides a method for bounding exception handling in a central processing unit (CPU) having an instruction issue unit for issuing instructions, said method comprising the steps of:
establishing a predetermined time-out threshold count in a data store within said CPU;
storing an initial count number in said data store within said CPU;
sending an instruction issued signal from said instruction issue unit during a CPU clock cycle in which an instruction was issued to indicate that at least one instruction was issued during said CPU clock cycle;
providing a time-out counter, responsive to said instruction issued signal, for counting the number of said instruction issued signals received;
receiving said instruction issued signals;
counting the number of instruction issued signals received during each CPU clock cycle and adding the number to the accumulated number stored in said data store within said CPU;
during each CPU clock cycle, comparing said accumulated count number with said time-out threshold count to determine if said accumulated count number is greater than or equal to said threshold count;
generating, within said timeout-counter, a make time-out checkpoint signal when said accumulated count number is greater than or equal to said threshold count;
communicating said make time-out checkpoint signal to said instruction issue unit informing said issue unit that a checkpoint timeout condition has occurred, and that a checkpoint should be formed;
forming a checkpoint in response to said make time-out checkpoint signal;
resetting said count number to an initial value whenever a checkpoint is formed, including a checkpoint formed in response to said make time-out checkpoint signal and a checkpoint formed in response to decoded instruction attributes;
whereby formation of said time-out checkpoint limits the number of instructions issued between successively formed checkpoints to a predetermined number of instructions and thereby bounds the number of issued instructions that may have to be undone and re-executed when an exception condition occurs.

There is provided a method as in the above paragraph further comprising the steps, after said step of comparing said accumulated count number with said time-out threshold count and before said step of generating, of:
determining if an instruction in the instruction issue window due to be issued in the same CPU clock cycle requires a checkpoint based on instruction attributes;
delaying generation of said make time-out checkpoint signal;
forming a checkpoint in response to said decoded instruction; and
resetting said accumulated count number to said initial value checkpoint in response to checkpoint formation for instruction attribute based checkpoint formation.

The present invention provides, in a processor having an instruction issue unit generating an instruction issued signal upon issue of an instruction, a checkpoint formation unit generating a checkpoint formed signal upon formation of a checkpoint storing processor state prior to execution of said instruction, a timeout checkpoint counter apparatus comprising:
a counter circuit having an enable input port for receiving said instruction issued signal and incrementing a count in response to each received instruction issued signal, a reset port for receiving said checkpoint formed signal, and an accumulated count output signal;
a data store for storing a predetermined time-out threshold count; and
a comparator for comparing said stored time-out threshold count with said accumulated count output signal;
said counter circuit outputting a timeout checkpoint request signal after counting a predetermined number of instruction issued signals.

The present invention provides, in a central processing unit having an issue unit for issuing instructions, an execution unit for executing instructions, and a data forward distribution bus communicating execution results from said execution units to other units within said central processing unit, a method for simultaneously monitoring the execution results of a plurality of speculatively issued predicted instructions; said method comprising the steps of:
providing a watchpoint unit having a plurality of watchpoint registers for storing watchpoint data coupled to receive execution result signals from said execution unit over said data forward distribution within the processor;
allocating a watchpoint register for storing watchpoint data including a predicted condition data result for each said speculatively issued predicted instruction, said predicted condition data result identifying the predicted value of a condition on which the control flow transfer direction depends and on the basis of which the speculatively issued predicted instruction was speculatively issued;
monitoring execution result signals for said speculatively issued predicted instructions that are transmitted over said data forward busses;
detecting occurrence of predetermined events based on said stored watchpoint data and execution result signals including an actual known condition data result signal and predetermined rules, said actual known condition data result signal identifying the actual value of a condition on which the control flow transfer direction of said speculatively issued predicted instruction should be determined;
comparing said watchpoint data stored in said watchpoint register for one of said speculatively issued predicted instructions with said result signals arriving over said data forward busses pertaining to said speculatively issued instruction to determine if said signals match or do not match, a match indicating that said speculatively issued predicted instruction was correctly predicted and a non-match indicating that said speculatively issued predicted instruction was mispredicted; and
if said comparing indicates that said prediction was a misprediction, then recovering said central processing unit to an earlier central processing unit state so that instructions executed on the basis of said misprediction are undone.

There is provided a method as in the above paragraph further comprising the steps of:
deallocating said watchpoint element after said step of recovering said central processing unit so that execution result signals appearing on said data forward busses no longer result in detecting occurrence of said predetermined events.

There is provided a method as in the above paragraphs wherein said step of recovering said central processing unit comprises the steps of:
supplying a new instruction address to said issue unit corresponding to a correct instruction stream corresponding to said actual known condition data result signal can be fetched and issued to correct the misprediction;
restoring central processing unit machine state to a state just prior to said and restarting instruction execution so that instructions executed on the basis of said misprediction are undone
initiating execution for said new instruction in said correct instruction stream based on said fetched instruction.

There is provided a method as in the above paragraphs wherein said method further comprises the step of storing central processing unit machine state in a checkpoint data store prior to execution of said speculatively issued predicted instruction; and
said step of restoring central processing unit state comprises restoring central processing unit state from said checkpoint data store prior to said step of initiating execution for said new instruction.

There is provided a method as in the above paragraphs wherein said step of recovering said central processing unit to an earlier central processing unit state further comprises backing up said central processing unit to recover said earlier state.

There is provided a method as in the above paragraphs wherein said step of recovering said central processing unit to an earlier central processing unit state further comprises backing up and backstepping said central processing unit to recover said earlier state.

There is provided a method as in the above paragraphs wherein said watchpoint data stored in said watchpoint register for one of said speculatively issued predicted instructions comprises WP_COND signal; and said result signals arriving over said data forward busses comprise execution unit condition code data selected from the group consisting of XCC_DATA-C, ICC_DATA_C or FCC_DATA_C, FXU_XCC_DATA, FXU_ICC_DATA, FXAGU_XCC_DATA, FXU_ICC_DATA, and FPU_FCC_DATA.

There is provided a method as in the above paragraphs wherein said instructions comprise predicted branch instructions.

There is provided a method as in the above paragraphs wherein said instructions comprise jump-and-link instructions.

There is provided a method as in the above paragraphs wherein said instructions comprise predicted branch and jump-and-link instructions.

There is provided a method as in the above paragraphs wherein said new address is stored in a data store within a watchpoint unit.

The present invention provides, in a central processing unit (CPU) having an instruction issue unit for issuing instructions, an execution unit for executing issued instructions, and a plurality of data forward buses for communicating execution results from said execution unit to other components of said CPU, a method for simultaneously grabbing execution result data for which predetermined instructions are waiting from said execution result generation units; said method comprising the steps of:
receiving an enable control signal from each execution result source unit from which said result data may be grabbed;
receiving a result data type signal from each said execution result source unit;
receiving a select source signal indicating from which of said execution result source units said result data will be received and an indication of a time relative to a current clock cycle that said result data is expected;
generating a data grab enable signal in response to receipt of said enable control signal, said result data type signal, and said select source signal according to predetermined rules to define a selected execution result source unit;
monitoring execution result data signals from said execution result source units;
grabbing execution result data from said selected execution result sources unit in response to said arriving execution result data and said grab data enable signal; and
storing said grabbed execution result data for evaluation in a data store within said central processing unit.

There is provided a method as in the above paragraph further comprising the steps of:
initiating evaluation of said grabbed execution result data in response to generation of at least one data grab enable signals.

There is provided a method as in the above paragraphs further comprising the steps of:
receiving an inhibit control signal; and
inhibiting said step of generating said data grab enable signal when said inhibit selection signal is received.

There is provided a method as in the above paragraphs wherein said inhibit control signal includes a condition code renamed signal from said condition code rename unit indicating that condition code is modified by instructions issued in the current machine cycle and that condition codes that may appear on said data forward busses during the current cycle may not be valid during the current cycle.

There is provided a method as in the above paragraphs wherein said execution result data comprises condition-code data.

There is provided a method as in the above paragraphs wherein said execution result data comprises renamed condition-code data.

There is provided a method as in the above paragraphs wherein said execution result data comprises condition-code data received from a floating-point execution unit, an integer execution unit, and an address generation unit; and renamed condition-code data received from a condition code rename unit;
said condition code data and said renamed condition-code data received during the same machine cycle.

There is provided a method as in the above paragraphs wherein said execution result data comprises condition-code data, and wherein said predetermined instructions comprise predicted control flow transfer instructions including predicted branch instructions.

There is provided a method as in the above paragraphs wherein said execution result data comprises calculated jump-and-link addresses and wherein said predetermined instructions comprise jump-and-link instructions.

There is provided a method as in the above paragraphs wherein said execution result data comprises condition-code data and calculated jump-and-link addresses and wherein said predetermined instructions comprise predicted branch instructions and jump-and-link instructions.

There is provided a method as in the above paragraphs wherein said execution result source units include an instruction execution unit.

There is provided a method as in the above paragraphs wherein said execution result source units further include a register rename unit.

There is provided a method as in the above paragraphs wherein said register rename unit includes a condition code register rename unit and wherein said execution result data includes renamed condition code data.

There is provided a method as in the above paragraphs wherein said execution result source units comprise an integer execution unit, a floating-point execution unit, an address generation unit, and a condition code register rename unit.

There is provided a method as in the above paragraphs wherein said result data includes condition code data and address data.

There is provided a method as in the above paragraphs wherein said condition code type signals comprise a condition-code type signal from said condition code rename unit generated at the time said instruction issued, and a condition-code type signal earlier generated during instruction issue and then subsequently stored in a watchpoint storage element.

There is provided a method as in the above paragraphs wherein said condition-code type signal is selected from the group consisting of a BR_XCC signal, a BR_ICC signal, a BR_FCC signal and combinations thereof.

There is provided a method as in the above paragraphs wherein said condition-code type signal is selected from the group consisting of a WP_XCC signal, a WP_ICC signal, a WP_FCC signal, and combinations thereof.

There is provided a method as in the above paragraphs wherein:
said enable control signal is selected from the group consisting of a DO_PREDICT_VEC or WP_ACTIVE:
said result data type signal is selected from the group consisting of a BR_XCC signal, BR_ICC signal, BR_FCC signal, WP_XCC signal, WP_ICC signal, and WP_FCC signal;
said select source signal is selected from the group consisting of a CC_DV_C, FXU_CC_CURR_MATCH, FXU_CC_ARRAY_MATCH, FXAGU_CC_CURR_MATCH, FXAGU_CC_ARRAY_MATCH, FPU_CC_CURR_MATCH, and FPU_CC_ARRAY_MATCH;
said generated source selection signal is selected from the group consisting of a SEL_BR_XCC, SEL_BR_ICC, SEL_FXU_XCC, SEL_FXU_ICC, SEL_FXAGU_XCC, SEL_FXAGU_ICC, SEL_FPU_FCC to select a source signal selected from the group consisting of XCC_DATA_C, FXU_DATA_C or ICC_DATA_C, FXU_XCC_DATA_F, FXAGU_CC_DATA_F, FXAGU_CC_DATA_F, and FPU_CC_DATA_F signal;
said grabbed execution result data is selected from the group consisting of XCC_DATA_C, FXU_DATA_C or ICC_DATA_C, FXU_XCC_DATA_F, FXAGU_CC_DATA_F, FXAGU_CC_DATA_F, FPU_CC_DATA_F data signal; and
said grabbed execution result data for evaluation includes a EVAL_CC signal.

There is provided a method as in the above paragraphs wherein said data store unit is a latch.

There is provided a method as in the above paragraphs wherein said plurality of execution result source units comprises an integer execution unit, an address generation unit, a floating-point execution unit, and a Condition-Code rename unit.

There is provided a method as in the above paragraphs wherein said enable control signal comprises a DO_PREDICT_VEC signal; said enable control signal comprises a WP_ACTIVE signal; and said execution result data type signal comprises a condition code type signal.

The present invention provides, in a central processing unit having an instruction issue unit for issuing instructions, an execution unit for executing an instruction, and a plurality of data forward busses for communicating execution results to other components of said central processing unit, a method for grabbing condition code tags from said data forward bus for condition code tags that have not been modified by renaming in the current CPU clock cycle; said method comprising the steps of:
receiving a renamed condition code physical register tag signal which identifies a renamed-condition code physical register tag but excluding condition code tag modifications occurring in the current machine cycle;
receiving a plurality of condition code tag signals directly from said data forward busses;
simultaneously comparing said received renamed condition code tag signal with every one of said plurality of condition code tag signals arriving from said execution units and generating a comparison signal corresponding to each of said arriving data forward buss condition code tag signals;
receiving a data valid signal from each execution unit sending valid data over said data forward busses during the current CPU cycle;
simultaneously logically ANDing each said comparison signal with a different data valid control signal arriving from each execution unit sending valid data over said data forward busses during the current CPU cycle; and
generating a condition code current match signal when each said comparison signal and each said data valid signal are asserted.
said condition code current match signal identifying which of said watchpoint numbers and thereby identifying the associated instruction number and condition code tag that can be grabbed from said data forward busses in the current CPU cycle;
whereby said current match logic is able to simultaneously monitor a plurality of unresolved speculatively issued instructions and identify condition codes which can be grabbed and made available for evaluation of the prediction on the basis of which said speculatively issued instructions were issued.

The present invention provides, in a central processing unit having an instruction issue unit for issuing instructions, an execution unit for executing an instruction, a register rename unit for renaming logical and physical, and a plurality of data forward busses for communicating execution results from said execution unit to other components of said central processing unit; a method for grabbing condition code tags from said data forward bus for condition code tags that have been modified by renaming in the current CPU clock cycle, said method comprising the steps of:
providing a condition code tag array data store having a plurality of condition code tag register elements for storing data within said CPU;
receiving a renamed condition code physical register tag signal that identifies a renamed condition code physical register tag including condition code modifications occurring in the current machine cycle;
receiving a do-prediction signal including a signal watchpoint number signal component identifying a watchpoint number and a corresponding condition code tag register element allocated to each speculatively issued instruction issued during that CPU cycle;
receiving a condition code renamed signal when a condition code is modified by an instruction issued in the then current CPU cycle and using said condition code renamed signal as a write enable signal for writing said renamed condition code physical register tag signal into the condition code tag register element identified by said do-prediction signal;
combining by logically ANDing said condition code renamed signal and said do-prediction signal and generating a write control enable signal to control writing and the location with said array of said writing of said received renamed condition code physical register tag to said tag array only when both said condition code renamed signal and said do-prediction are asserted;
storing said received renamed condition code physical register tag signal associated with said speculatively issued instruction in one of said plurality of condition code tag register elements in said tag array under control of said write enable signal wherein a particular element in said array is identified and indexed by a watchpoint number included as a component of said do-prediction signal;
retaining each said stored renamed condition code physical register tag signal in said condition code tag register until said renamed condition code physical register tag is no longer needed to match a condition code tag signal arriving over said data forward busses;
simultaneously receiving a plurality of condition code tag signal from said data forward busses during the same CPU cycle;
simultaneously comparing each of said received data forward bus condition code signals with every one of said stored renamed condition code physical register tag signal to generate a plurality of array comparison signals; and
logically ANDing said array comparisons signals with said data valid signals and generating a condition code array match signal when said comparison signal and said data valid signal are both asserted;
said condition code array match signal identifying which of said watchpoint numbers and thereby identifying the associated instruction number and condition code tag that can be grabbed from said data forward busses in the current cycle;
whereby said array late match logic is able to simultaneously monitor a plurality of unresolved speculatively issued instructions and identify condition codes which can be grabbed and made available for evaluation of the prediction on the basis of which said speculatively issued instructions were issued.

There is provided a method as in the above paragraph further comprising the steps of:
receiving a renamed condition code physical register tag signal which identifies a renamed-condition code physical register tag but excluding condition code tag modifications occurring in the current machine cycle;
receiving a plurality of condition code tag signals directly from said data forward busses;
simultaneously comparing said received renamed condition code tag signal with every one of said plurality of condition code tag signals arriving from said execution units and generating a comparison signal corresponding to each of said arriving data forward buss condition code tag signals;
receiving a data valid signal from each execution unit sending valid data over said data forward busses during the current CPU cycle;
simultaneously logically ANDing each said comparison signal with a different data valid control signal arriving from each execution unit sending valid data over said data forward busses during the current CPU cycle; and
generating a condition code current match signal when each said comparison signal and each said data valid signal are asserted.
said condition code current match signal identifying which of said watchpoint numbers and thereby identifying the associated instruction number and condition code tag that can be grabbed from said data forward busses in the current CPU cycle;
whereby said current match logic is able to simultaneously monitor a plurality of unresolved speculatively issued instructions and identify condition codes which can be grabbed and made available for evaluation of the prediction on the basis of which said speculatively issued instructions were issued.

There is provided a method as in the above paragraphs further comprising the steps of:
providing a condition code tag array data store having a plurality of condition code tag register elements for storing data within said CPU;
receiving a renamed condition code physical register tag signal that identifies a renamed condition code physical register tag including condition code modifications occurring in the current machine cycle;
receiving a do-prediction signal including a signal watchpoint number signal component identifying a watchpoint number and a corresponding condition code tag register element allocated to each speculatively issued instruction issued during that CPU cycle;
receiving a condition code renamed signal when a condition code is modified by an instruction issued in the then current CPU cycle and using said condition code renamed signal as a write enable signal for writing said renamed condition code physical register tag signal into the condition code tag register element identified by said do-prediction signal;
combining by logically ANDing said condition code renamed signal and said do-prediction signal and generating a write control enable signal to control writing and the location with said array of said writing of said received renamed condition code physical register tag to said tag array only when both said condition code renamed signal and said do-prediction are asserted;
storing said received renamed condition code physical register tag signal associated with said speculatively issued instruction in one of said plurality of condition code tag register elements in said tag array under control of said write enable signal wherein a particular element in said array is identified and indexed by a watchpoint number included as a component of said do-prediction signal;
retaining each said stored renamed condition code physical register tag signal in said condition code tag register until said renamed condition code physical register tag is no longer needed to match a condition code tag signal arriving over said data forward busses;
simultaneously receiving a plurality of condition code tag signal from said data forward busses during the same CPU cycle;
simultaneously comparing each of said received data forward bus condition code signals with every one of said stored renamed condition code physical register tag signal to generate a plurality of array comparison signals; and
logically ANDing said array comparisons signals with said data valid signals and generating a condition code array match signal when said comparison signal and said data valid signal are both asserted;
said condition code array match signal identifying which of said watchpoint numbers and thereby identifying the associated instruction number and condition code tag that can be grabbed from said data forward busses in the current cycle;
whereby said array late match logic is able to simultaneously monitor a plurality of unresolved speculatively issued instructions and identify condition codes which can be grabbed and made available for evaluation of the prediction on the basis of which said speculatively issued instructions were issued.

There is provided a method as in the above paragraphs further comprising comparing saiddata forward bus tags with said condition-code data to reduce comparison time including the steps of:
separating data forward bus tag comparisons between a currently renamed condition-code tag in the current issue window cycle and a condition-code tag in previous cycle by comparing the currently renamed condition-code tag in the current issue window signal to each data forward bus tag; and comparing previous cycle condition-code tag with each data forward bus tag;
whereby said comparisons of said data forward bus tags with said condition code tags in the previous cycle and currently renamed condition code tags in the current issue window are performed more rapidly than if said comparisons were performed in a single non-split operation.

The present invention provides, in a central processing unit (CPU) having an issue unit for issuing instructions, an execution unit for executing instructions, and means for communicating execution results from said execution units to other units within said central processing unit, a method for simultaneously monitoring the execution results of a plurality of speculatively issued instructions; said method comprising the steps of:
identifying each issued instruction with an instruction identification tag;
storing prediction data within said CPU in an indexed data store associated with said instruction identification tag during instruction issue for each speculatively issued instruction and associating said prediction data with said speculatively issue instruction, said prediction data identifying the predicted value of a condition on which the instruction was speculatively issued;
simultaneously monitoring execution result signals for all issued instructions transmitted over said means for communicating execution results;
simultaneously grabbing selected ones of said execution result data including known data corresponding to but not necessarily equal to said prediction data when said execution result data appears on said means for communicating; said known data identifying the actual value of a condition assumed for the purpose of speculatively issuing said instruction;
comparing said predicted data with said known data and generating a misprediction signal if said predicted data does not match said known data; and
recovering said central processing unit to an earlier central processing unit state in response to receipt of a misprediction signal so that instructions executed on the basis of said misprediction are undone.

The present invention provides, in a central processing unit, a method for simultaneously generating a plurality of misprediction signals for predetermined speculatively issued instructions including speculatively issued predicted branch instructions; said method comprising the steps of:
receiving a watchpoint active signal indicating that a watchpoint is being formed for monitoring said speculatively issued instructions;
allocating a watchpoint number and an associated watchpoint register in data storage structure defined within said CPU for each one of said speculatively issued instructions;
receiving watchpoint data pertaining to said one speculatively issued instruction and storing said watchpoint data in said allocated watchpoint register,
for each branch instruction issued, simultaneously generating a plurality of misprediction signals for branch instructions including the steps of:
   receiving an evaluation condition code signal from a condition code select logic circuit;
   receiving a watchpoint condition signal from a watchpoint storage element;
   receiving a condition code type control signal from a watchpoint storage element;
   receiving an enable control signal from each execution result source units;
   comparing said evaluation condition code signal with said watchpoint condition signal according to predetermined condition code evaluation rules including an asserted state of said enable control signal for each said execution result source unit to evaluate whether the condition for the branch was correctly predicted;
   if said branch instruction was correctly predicted, then asserting a branch true signal; and
generating an evaluation true signal in response to a determination that said branch true signal is asserted;
generating an evaluation ready signal in response to receipt of at least one data grab enable signal as a result of grabbing said result data for a speculatively issued branch instruction;
   and
generating an instruction misprediction signal in response to receipt of both said evaluation ready signal and said evaluation true signal.

The present invention provides, in a central processing unit, a method for simultaneously generating a plurality of misprediction signals for predetermined speculatively issued instructions including speculatively issued jump-and-link instructions; said method comprising the steps of:
receiving a watchpoint active signal indicating that a watchpoint is being formed for monitoring said speculatively issued instructions;
allocating a watchpoint number and an associated watchpoint register in data storage structure defined within said CPU for each one of said speculatively issued instructions;
receiving a watchpoint jump-and-link enable signal indicating that the watchpoint is being formed for a jump-and-link instruction;
receiving watchpoint data pertaining to said one speculatively issued instruction and storing said watchpoint data in said allocated watchpoint register;
for each said jump-and-link instruction issued, simultaneously generating a plurality of jump-and-link misprediction signals including the steps of:
   defining a target address data structure having a plurality of storage locations for storing program counter data;
   writing an alternative next program counter to one of said target address data structure storage locations when said jump-and-link instruction is issued and associating said stored alternative next program counter with said instruction;
   computing a computed next program counter value during execution of said jump-and-link instruction in a execution result source unit;
   generating a jump-and-link instruction execution completion signal upon completion of execution of said jump-and-link instruction;
   receiving said computed next program counter from said execution result source unit;
   reading said stored alternative next program counter associated with said jump-and-link instruction from said storage location;
   comparing said alternative next program counter value with said computed next program counter value;
   generating a jump-and-link match signal when said alternative next program counter value matches said computed next program counter value; and
   generating a jump-and-link true signal in response to assertion of both said jump-and-link match signal and said watchpoint jump-and-link enable signal; and
   generating an evaluation true signal in response to a determination that said jump-and-link match signal is asserted;
   generating a jump-and-link instruction evaluation enable signal in response to assertion of said watchpoint active signal, said instruction watchpoint number signal, said watchpoint active signal, and said jump-and-link instruction execution completion signal;
   generating an evaluation ready signal in response to receipt of receipt of said jump-and-link instruction evaluation enable signal; and
   generating an instruction misprediction signal in response to receipt of said evaluation ready signal and said evaluation true signal.

The present invention provides, in a central processing unit, a method for simultaneously generating a plurality of misprediction signals for predetermined speculatively issued instructions including speculatively issued predicted branch instructions and jump-and-link instructions; said method comprising the steps of:
receiving a watchpoint active signal indicating that a watchpoint is being formed for monitoring said speculatively issued instructions;
allocating a watchpoint number and an associated watchpoint register in data storage structure defined within said CPU for each one of said speculatively issued instructions;
receiving a watchpoint jump-and-link enable signal indicating that the watchpoint is being formed for a jump-and-link instruction;
receiving watchpoint data pertaining to said one speculatively issued instruction and storing said watchpoint data in said allocated watchpoint register;
for each branch instruction issued, simultaneously generating a plurality of misprediction signals for branch instructions including the steps of:
   receiving an evaluation condition code signal from a condition code select logic circuit;
   receiving a watchpoint condition signal from a watchpoint storage element;
   receiving a condition code type control signal from a watchpoint storage element;
   receiving an enable control signal from each execution result source units;
   comparing said evaluation condition code signal with said watchpoint condition signal according to predetermined condition code evaluation rules including an asserted state of said enable control signal for each said execution result source unit to evaluate whether the condition for the branch was correctly predicted;
   if said branch instruction was correctly predicted, then asserting a branch true signal; and
   generating an evaluation true signal in response to a determination that said branch true signal is asserted; and
for each said jump-and-link instruction issued, simultaneously generating a plurality of jump-and-link misprediction signals including the steps of:
   defining a target address data structure having a plurality of storage locations for storing program counter data;
   writing an alternative next program counter to one of said target address data structure storage locations when said jump-and-link instruction is issued and associating said stored alternative next program counter with said instruction;
   computing a computed next program counter value during execution of said jump-and-link instruction in a execution result source unit;
   generating a jump-and-link instruction execution completion signal upon completion of execution of said jump-and-link instruction;
   receiving said computed next program counter from said execution result source unit;
   reading said stored alternative next program counter associated with said jump-and-link instruction from said storage location;
   comparing said alternative next program counter value with said computed next program counter value;
   generating a jump-and-link match signal when said alternative next program counter value matches said computed next program counter value;
   generating a jump-and-link true signal in response to assertion of both said jump-and-link match signal and said watchpoint jump-and-link enable signal;
   generating an evaluation true signal in response to a determination that said jump-and-link match signal is asserted; and
   generating a jump-and-link instruction evaluation enable signal in response to assertion of said watchpoint active signal, said instruction watchpoint number signal, said watchpoint active signal, and said jump-and-link instruction execution completion signal;
generating an evaluation ready signal in response to receipt of either at least one data grab enable signal as a result of grabbing said result data for a speculatively issued branch instruction or receipt of said jump-and-link instruction evaluation enable signal; and
generating an instruction misprediction signal in response to receipt of both said evaluation ready signal and said evaluation true signal.

There is provided a method as in the above paragraph further comprising the steps of:
receiving an enable control signal from each execution result source unit;
receiving a result data type signal from each execution result source unit;
receiving a select source signal indicating from which of said execution result source units said result data will be received and an indication of a time relative to the current clock cycle that said result data is expected;
generating a source selection signal in response to receipt of said enable control signal, said result data type signal, and said select source signal according to predetermined rules;
monitoring execution result data signals from said execution result source units;
grabbing execution result data from said selected source in response to said arriving execution result data and said source selection signal; and
storing said grabbed execution result data for evaluation in a data store within said processor;
whereby result data for which predetermined instructions are waiting are simultaneously grabbed from a plurality of execution result source units.

There is provided a method as in the above paragraphs wherein said execution result source units include an instruction execution unit and a register rename unit.

There is provided a method as in the above paragraphs wherein:
said predetermined speculatively issued instructions are selected from the group consisting of control transfer instructions, branch instructions, jump-and-link instructions, and combinations thereof;
said condition code type control signal includes selected from the group consisting of WP_XCC, WP_ICC, WP_FCC, and combinations thereof;
said branch true signal comprises a BR_TRUE signal;
said evaluation condition code signal comprises a EVAL_CC signal;
said watchpoint condition signal comprises a WP_COND signal;
said enable signal includes a WP_JMPL signal and said first state is WP_JMPL=0 and said second state is WP_JMPL=1;
said source selection signal includes selected from the group consisting of a SEL_BR_XCC, SEL_BR_ICC, SEL_FXU_XCC, SEL_FXU_ICC, SEL_FXAGU_XCC, SEL_FXAGU_ICC, and SEL_FPU_FCC signal;
said jump-and-link instruction execution completion signal includes a FXAGU_JMPL signal;
said jump-and-link instruction checkpoint number signal includes a FXAGU_CHKPNT_DEC signal;
said jump-and-link match signal includes a JMPL_MATCH signal;
said jump-and-link true signal includes a JMPL_TRUE signal;
said watchpoint jump-and-link signal includes a WP_JMPL signal;
said evaluation true signal includes an EVAL_TRUE signal;
said evaluation ready signal includes an EVAL_READY signal;
said evaluation enable signal includes an EVAL_ENABLE signal;
said watchpoint active signal includes a WP_ACTIVE_VEC signal;
said watchpoint jump-and-link enable signal includes a WP_JMPL signal; and
said instruction misprediction signal includes a WP_MISPRED_VEC signal.

The present invention provides, in a central processing unit having an instruction issue unit and a plurality of instruction execution units, a method for simultaneously generating a plurality of misprediction signals for predetermined speculatively issued instructions including speculatively issued predicted branch instructions and jump-and-link instructions; said method comprising the steps of:
predicting a condition resulting from execution of an instruction sequence;
speculatively issuing a control transfer instruction based on said predicted condition prior to completing execution of said execution sequence;
allocating a watchpoint storage register within a data structure of said CPU and associating said allocated register with a particular one of said speculatively issued instructions;
storing said predicted condition in said allocated watchpoint register for later comparison with an evaluated condition on which the correct direction for said control transfer instruction depends; and
for each speculatively instruction issued:
   monitoring execution result data generated by said execution units,
   comparing said pre-execution prediction information stored in each said watchpoint register with post-execution evaluated condition information received from said execution units to determine if said predicted condition information matches said evaluated condition information for said instruction sequence; and
   generating a misprediction indication for each speculatively issued instruction that was wrongly issued as a result of mispredicted condition information when said prediction information for said instruction does not match said known information for said instruction.

The present invention provides, in a central processing unit having an instruction issue unit, an instruction execution unit, and a memory storage unit for storing data, a method for concurrently storing an alternate branch address and a predicted jump-and-link address in a common data structure within a single shared storage unit within said central processing unit; said method comprising the steps of:
generating a control-transfer-instruction issued signal from the issue unit for each control transfer instruction issued at the time it is issued, said control-transfer-instruction issued signal including a watchpoint instruction type signal to identify the control transfer instruction as a branch instruction or as a jump-and-link instruction;
determining the alternative next program counter during instruction decode of a predicted branch and a jump-and-link instruction;
generating a watchpoint write enable control signal and watchpoint write address signal identifying a register location within said storage unit for storing an alternate branch address; said watchpoint write enable control signal being asserted when making a checkpoint and a watchpoint;
writing said watchpoint alternative next program counter into said storage unit at the register location indicated by said watchpoint write address;
said watchpoint alternative next program counter including the predicted target fetch program counter when said control-transfer-instruction is a jump-and-link instruction, and said watchpoint alternative next program counter including the fetch program counter for the alternative branch direction when said control-transfer-instruction is a predicted branch instruction; and
storing said alternative next program counter for each said branch instruction or said jump-and-link instruction in a separate addressable storage location based on said watchpoint instruction type signal.

There is provided a method as in the above paragraph wherein said control transfer instruction is selected from the group consisting of a branch instruction, a jump-and-link instructions, and combinations thereof;
said control transfer instruction issued signal comprises a DO_WTCHPNT signal including a jump-and link signal component WP_JMPL;
said alternative next program counter includes a WP_ANPC signal;
said checkpoint write enable signal includes a MAKE_CHKPNT signal;
said checkpoint write address signal includes a NEXT_CHKPNT signal;
said storage location within said data structure is located within a TARGET_RAM; and
said information item for said branch instruction further comprising: a branch type field designating the instruction as a branch that depends on XCC, as a branch that depends on ICC, as a branch that depends on FCC, or as a jump-link instruction; a COND field; and a condition code tag field.

There is provided a method as in the above paragraphs further comprising the step of:
receiving an enable control signal from each execution result source unit;
receiving a result data type signal from each execution result source unit;
receiving a select source signal indicating from which of said execution result source units said result data will be received and an indication of a time relative to the current clock cycle that said result data is expected;
generating a source selection signal in response to receipt of said enable control signal, said result data type signal, and said select source signal according to predetermined rules;
monitoring execution result data signals from said execution result source units;
grabbing execution result data from said selected source in response to said arriving execution result data and said source selection signal; and
storing said grabbed execution result data for evaluation in a data store within said processor;
whereby result data for which predetermined instructions are waiting are simultaneously grabbed from a plurality of execution result source units.

There is provided a method as in the above paragraphs further comprising the step of sending the correct re-fetch instruction address for instruction re-fetch after a misprediction of speculatively issued instruction occurs; said step of sending including the steps of:
simultaneously storing, for each speculatively issued predicted instruction prior to execution of said instruction, an alternative path program instruction address designating the alternative execution path for said predicted instruction and a prediction information on which said predicted execution depends in a watchpoint element in a target address data structure defined in a memory unit within said CPU;
simultaneously generating, upon completing execution of each said predicted instruction, signals indicating instruction execution completion status, identifying a watchpoint element number corresponding to said instruction in which pre-execution alternative path and prediction information is stored, and a calculated correct condition data value for comparing with said stored condition value and alternative program instruction address;
simultaneously evaluating the prediction for each single instruction including by comparing said stored pre-execution alternative path and prediction information with said generated calculated condition data value for each said instruction and generating a match signal if the predicted condition data match said calculated correct condition data value for any of said instructions and including evaluating if a branch instruction or a jump-and-link instruction was correctly or incorrectly predicted and generating a mispredicted signal for each mispredicted instruction;
prioritizing recovery of said CPU from said misprediction and selecting a particular high priority misprediction based on predetermined priority rules;
identifying a checkpoint associated with said particular high priority mispredicted instruction and generating a CPU backup signal for recovering said processor from said particular mispredicted instruction;
reading the alternative next program counter for said particular mispredicted instruction from said target address data structure; and
sending said read alternative next program address to an issue unit for restarting execution of said CPU based on said re-fetched instruction.

The present invention provides, in a central processing unit having an instruction issue unit including an instruction fetch component, an instruction execution unit, an a data storage unit, a method for sending the correct fetch address for instruction fetch after a misprediction of a speculatively issued instruction occurs; said method comprising the steps of:
simultaneously storing, for each speculatively issued predicted instruction prior to execution of said instruction, an alternative path program instruction address designating an alternative execution path for said predicted instruction and a prediction information on which said predicted execution depends in a watchpoint element in a target address data structure defined in a memory unit within said CPU;
simultaneously generating, upon completing execution of each said predicted instruction, signals indicating instruction execution completion status, identifying a watchpoint element number corresponding to said instruction in which pre-execution alternative path information and prediction information is stored, and a calculated correct condition data value for comparing with said stored condition value and alternative program instruction address;
simultaneously evaluating said stored prediction information for each said speculatively issued instruction including by comparing said stored pre-execution alternative path and prediction information with said generated calculated condition data value for each said speculatively issued instruction and generating a match signal if the predicted condition data match said calculated correct condition data value for any of said instructions and including evaluating if a branch instruction or a jump-and-link instruction was correctly or incorrectly predicted and generating a mispredicted signal for each mispredicted instruction;
selecting one mispredicted instructions from among all mispredicted instructions;
identifying a watchpoint associated with said selected mispredicted instruction;
reading the alternative next program counter address for said selected mispredicted instruction from said target address data structure by indexing into said data structure with said selected watchpoint number; and
sending said read alternative next program counter address to said instruction issue unit for instruction re-fetch to initiate CPU execution along the desired instruction sequence path.

There is provided a method as in the above paragraph wherein said step of selecting one mispredicted instructions comprises the step of prioritizing mispredictions occurring in said CPU and selecting a high priority misprediction based on predetermined priority rules.

There is provided a method as in the above paragraphs wherein said speculatively issued instruction is selected from the group consisting of a predicted control transfer instruction, a predicted branch instruction, a jump-and-link instruction, and combinations thereof.

There is provided a method as in the above paragraphs wherein said steps of simultaneous store, simultaneous generate, and simultaneous evaluate comprise respectively the steps of store, generate, and evaluate within the same CPU clock cycle.

The present invention provides, in a central processing unit having an instruction issue unit including an instruction fetch component, an instruction execution unit, an a data storage unit, a method for sending the correct fetch address for instruction fetch after a misprediction of a speculatively issued instruction occurs; said method comprising the steps of:
storing, in response to issuing a predicted branch instruction, a watchpoint alternative program counter data in a watchpoint element associated with said branch instruction in a data structure of a memory unit within said CPU, wherein said watchpoint alternative program counter data is the next address of the branch if the prediction is taken is the branch-target address if the prediction is not taken;
storing, in response to issuing a predicted jump-and-link instruction, a predicted jump-and-link target address in a watchpoint element associated with said jump-and-link instruction in a data structure of a memory unit within said CPU;
asserting a watchpoint valid signal for each branch and jump-and-link instruction is issued to allocate a watchpoint element to said issued instruction;
asserting, in response to said assertion of said watchpoint valid signal, a watchpoint active vector signal to indicate that a predicted instruction which uses a checkpoint number identified in said watchpoint active vector signal is issued and is not yet resolved;
for each jump-and-link instruction, completing execution of said jump-and-link including calculating the correct jump-and-link target address, asserting an address generation unit jump-and-link instruction completion signal when the address generation unit finishes execution of jump-and-link instruction, generating an address generation unit jump-and-link checkpoint identification signal that designates the checkpoint number of the jump-and-link instruction, and generating an address generation unit jump-and-link data signal that designates the calculated correct jump-and-link instruction target address;
for each predicted branch instruction, completing execution of said branch instruction including calculating the condition code value on which the branch direction depends, and in response to receipt of said evaluation ready signal, grabbing the evaluate condition code signal corresponding to the watchpoint number when said evaluate condition code signal becomes available;
evaluating the prediction for each single instruction in an evaluation logic unit including the steps of:
   determining if a jump-and-link instruction was correctly predicted by:
      reading the predicted jump-and-link address in the storage location in said target address memory unit indexed by said address generation unit jump-and-link checkpoint identification signal;
      comparing said predicted jump-and-link address with said computed jump-and-link address and generating a compare result;
      generating a jump-and-link match signal if the predicted address and the calculated correct address are the same;
      comparing said jump-and-link match signal with said watchpoint jump-and-link enable signal stored in said watchpoint element; and
      generating a jump-and-link true output signal if said signals match indicating that said watchpoint was formed for a jump-and link instruction and the jump-and-link instruction was properly predicted;
   determining if a branch instruction was correctly predicted by:
      receiving a condition code evaluation signal from a condition code select logic unit;
      reading watchpoint data stored in a watchpoint register including a watchpoint condition signal stored in the watchpoint storage element associated with the instruction;
   comparing said evaluate condition code signal with said watchpoint condition data stored in the watchpoint element corresponding to said branch instruction based on predetermined rules to evaluate if the prediction made when issuing the branch is correct; and
      generating a branch true signal for said particular watchpoint if said condition code evaluation signal and said watchpoint condition signal; and
   logically ORing said branch true signal and the jump-and-link true signal and generating an evaluation true signal if either said branch true or jump-and-link signals are asserted as true;
   said watchpoint allocation to either a branch instruction or to a jump-and-link instruction but not both limiting concurrent assertion of said branch true signal and said jump-and-link signal for the same watchpoint element;
   generating an evaluation ready signal after said jump-and-link instruction completion signal is asserted for each instruction during a CPU cycle;
   if any of said evaluation true signals are asserted indicating that a misprediction has been detected, then generating an instruction watchpoint mispredicted signal detecting a misprediction from said evaluation true signals generated from each of the plurality of evaluation true logic units and communicating said misprediction signal to a precise state unit for maintaining precise state within said CPU;
   prioritizing all watchpoint mispredicted signals generated and identifying one of said mispredictions for CPU recovery according to predetermined prioritization rules;
   generating, in the precise state unit, a backup checkpoint signal identifying the checkpointed instruction to which the CPU will be backed up to in order to recover from the misprediction due to either a mispredicted branch instruction or a mispredicted jump-and-link instruction;
   generating, in the precise state unit, a jump-and-link mispredict signal only when the backup is due to a mispredicted jump-and-link instruction;
   choosing a location within said memory store based on factors including said identified misprediction, the type of misprediction, and the watchpoint/checkpoint number; said choosing including the steps of:
      generating a processor backup initiation signal in said precise state unit in response to receipt of a watchpoint mispredicted signal;
      receiving a processor backup initiation signal that indicates a misprediction has occurred in the CPU and that the CPU is to be backed up to an earlier state including resetting the program counter to an alternative program counter value;
      receiving a backup checkpoint signal that provides an index identifying a checkpoint/watchpoint number into said memory storage region and using said index to read the contents of the location storing the correct branch address or correct jump-and-link address for instruction fetch;
      receiving an address generation unit checkpoint signal that provides an index in the form of a watchpoint and checkpoint number into said memory storage region and using said index to read the contents of the location storing the alternative next program counter;
      receiving a make-backup control signal from said precise state unit when a CPU backup is required in response to detection of a misprediction;
      receiving an address generation unit jump-and-link instruction completion signal when the address generation unit finishes execution of a jump-and-link instruction;
      applying said jump-and-link completion signal and said make-backup signal as a control selector input signals to a multiplexer to select one of said backup checkpoint from said precise state unit or said address generation unit checkpoint input signals as a read-address index specifying a particular watchpoint element within said memory storage region;
      selecting the memory storage location address to read based on whether the mispredicted instruction is a branch instruction of a jump-and-link instruction as indicated by said make-backup and jump-and-link control signals; and
   choosing an alternative next program counter for fetching a new instruction to recover from said misprediction, said choosing comprising the steps of:
      generating a jump-and-link misprediction signal when said misprediction is a jump-and-link instruction misprediction;
      applying said misprediction signal to a multiplexer having a multiplexer selection control signal, a plurality of multiplexer input signals, and one multiplexer output for the input signal selected by said control signal;
      selecting a first multiplexer input signal containing the alternative next program counter stored in said storage location within said data structure in said data store as the multiplexer output signal when said multiplexer selection control signal has a first state indicating that the misprediction is a mispredicted branch instruction;
      selecting a second multiplexer input signal containing the computed jump-and-link address as the multiplexer output signal when said multiplexer selection control signal has a second state indicating that the misprediction has occurred and the misprediction is a mispredicted jump-and-link instruction; and
   restarting execution of said CPU including the steps of:
      generating a read alternative program counter address signal containing the predicted target fetch program counter for a jump-and-link instruction or the fetch program counter for the alternative branch direction for a predicted branch instruction; and
      sending said read alternative program address signal in said selected multiplexer output to the instruction fetch unit so that the fetch unit can re-fetch instructions from the correct address.

There is provided a method as in the above paragraph wherein:
said re-fetch address is selected from the group consisting of a branch instruction address and a jump-and-link instruction address;
said jump-and-link instruction completion signal comprises a FXAGU_JMPL signal;
said checkpoint identification signal comprises a FXAGU_CHKPNT signal;
said address generation unit data signal comprises a FXAGU_DATA signal;
said jump-and-link match signal comprises a JMPL_MATCH signal said watchpoint jump-and-link enable signal comprises a WP_JMPL signal;
said jump-and-link true comprises a JMPL_TRUE signal;
said condition code evaluation signal comprises a EVAL_CC signal;
said watchpoint data comprises WP_COND, WP_XCC, WP_ICC, and WP_FCC data signals;
said watchpoint condition signal comprises a WP_COND signal;
said branch true signal comprises a BR_TRUE signal;
said evaluation true signal comprises a EVAL_TRUE signal;
said evaluation ready signal comprises a EVAL_READY signal;
said watchpoint active signal comprises a WP_ACTIVE_VEC signal;
said watchpoint misprediction signal comprises a WP_MISPRED_VEC signal;
said backup checkpoint signal comprises a BACKUP_CHKPNT signal;
said jump-and-link mispredict signal comprises a MISPRED signal;
said processor backup initiation signal comprises a DO_BACKUP signal;
said backup checkpoint comprises a BACKUP_CHKPNT signal;
said make-backup control signal comprises a MAKE_BACKUP signal;
said address generation unit jump-and-link instruction completion signal comprises a FXAGU_JMPL signal;
said selected backup checkpoint signal comprises a BACKUP_CHKPNT signal;
said address generation said unit checkpoint comprises a FXAGU_CHKPNT signal;
said jump-and-link misprediction signal comprises a MISPRED signal;
said alternative next program counter comprises a WR_ANPC signal;
said computed jump-and-link address comprises a FXAGU_DATA signal;
said alternative program counter address comprises a RD_ANPC signal; and
said step of comparing said jump-and-link match signal with said watchpoint jump-and-link enable signal comprises boolean logically ANDing said signals.

There is provided a method as in the above paragraphs further comprising the steps of:
asserting an instruction kill signal in response to identification of a misprediction during recovery from said misprediction to kill checkpoints for instructions occurring sequentially after the instruction at the backup point;
in response to said assertion of said kill signal, deactivating the watchpoint element corresponding to each killed instruction by suppressing generation of watchpoint active signals and watchpoint mispredicted signals.

There is provided a method as in the above paragraphs wherein said watchpoint active vector signal and the watchpoint mispredicted signal are each separately encoded as a multi-hot vectors each having a number of vector bit positions corresponding to the number of allocatable checkpoints within said CPU so that watchpoint active information for each watchpoint can be simultaneously stored and communicated in the same signal;

The present invention provides a method for comparing data forward bus tags with condition-code data to reduce comparison time; said method comprising the steps of:
separating data forward bus tag comparisons between a currently renamed condition-code tag in the current issue window cycle and a condition-code tag in previous cycle by the steps of:
   comparing the currently renamed condition-code tag in the current issue window signal to each data forward bus tag; and
   comparing previous cycle condition-code tag with each data forward bus tag;
whereby said comparisons of said data forward bus tags with said condition code tags in the previous cycle and currently renamed condition code tags in the current issue window are performed more rapidly than if said comparisons were performed in a single non-split operation.

There is provided a method as in the above paragraph further comprising the step of:
latching the currently renamed condition-code tag in the current issue window signal in a latch circuit before making said comparison of the currently renamed condition-code; and
wherein said step of comparing the currently renamed condition-code tag in the current issue window cycle to each data forward bus tag comprises a comparison of said latched signal to each data forward bus tag thereby eliminating timing criticality.

The present invention provides, in a central processing unit having an instruction issue unit, a register rename unit for renaming logical and physical registers including a condition code register rename unit, a plurality of execution units, and a data forward bus for communicating execution result data from each said execution unit to other components of said central processing unit; a method for simultaneously grabbing execution result data from each of said plurality of execution units, said method comprising the steps of:
for each said execution unit, comparing an early condition code register tag signal received from said condition code register rename unit identifying a condition code register that has been renamed in a previous CPU clock cycle but not identifying condition code registers that have been renamed in the current cycle with a valid execution result data signal including a condition code register tag signal component arriving from said execution unit in a current CPU clock cycle, and generating a condition code tag current-match signal for each said execution unit if said comparing operation identifies a match between said condition code register tag signal and said valid execution result data signal including said condition code register tag signal component; and
for each said execution unit, comparing a plurality of late condition code register tag signals received from said condition code register rename unit in previous cycles each identifying a condition code register that has been renamed in a previous CPU clock cycle including identifying a condition code register that has been renamed in the current cycle with a valid execution result data signal including a condition code register tag signal component arriving from said execution unit in a current CPU clock cycle, and generating a current condition code tag array-late-match signal for each said execution unit identifying which of said plurality of condition code register tag signals matched if said comparing operation identifies a match between one of said condition code register tag signals and one of said plurality of condition code register tag signal components.

There is provided a method as in the above paragraph wherein:
said early condition code register tag signal comprises a CC_TAG_C signal;
said condition code register rename unit comprises a FSR/CCRFRN unit;
said valid execution result data signal is selected from the group consisting of a FXU_XICC_TAG_F signal, a FXAGU_XICC_TAG_F signal, and a FPU_FCC_TAG_F signal;
said execution units are selected from the group consisting of a fixed point execution unit, a fixed point/address generation unit, and a floating point unit, and
said condition code tag current-match signal is selected from the group consisting of a FXU_CURR_MATCH signal, a FXAGU_CURR_MATCH signal, and a FPU_CURR_MATCH signal;
said plurality of late condition code register tag signals comprise a plurality of CC_TAG_RENAMED signals;
said condition code register rename unit comprises a FSR/CCRFRN unit; and
said current condition code tag array-late-match signals are selected from the group consisting of a FXU_ARRAY_LATE_MATCH signal, a FXAGU_ARRAY_LATE_MATCH signal, and a FPU_ARRAY_LATE_MATCH signal for each said execution unit.

There is provided a method as in the above paragraph further comprising the steps of:
providing a late condition code tag array data store comprising a plurality of addressable tag storage elements within said CPU for storing said late condition code register tags;
receiving said late condition code register tag signal components from said condition code register rename unit;
receiving a condition code renamed signal from said condition code register rename unit;
receiving a do-prediction signal including a watchpoint number identification component signal derived from a do-watchpoint signal from said instruction issue unit;
generating a tag array write enable signal for controlling the address of each write of said condition code register tag signal into said tag array data store if said condition code renamed signal and said do-prediction signals are both asserted;
storing said receiving said late condition code register tag signal components into one of said of addressable tag storage elements identified by said watchpoint identification number when said tag array write enable signal is asserted; and
reading each said stored condition code register tags from each said tag storage element for each said execution unit for use in said compare operation.

There is provided a method as in the above paragraphs wherein:
said condition code renamed signal comprises a CC_RENAMED signal;
said do-prediction signal comprises a DO_PREDICT_VEC signal and said do-watchpoint signal comprises a DO_WTCHPT signal; and
said tag array write enable signal comprises a ARRAY_WRITE_VEC signal.

The present invention provides an apparatus for simultaneously monitoring the execution results of a plurality of instructions In a central processing unit, said apparatus comprising:
an issue unit for issuing instructions;
an execution unit for executing instructions;
a data forward distribution bus communicating execution results from said execution units to other units within said central processing unit;
a watchpoint unit having a plurality of watchpoint registers for storing watchpoint data coupled to receive execution result signals from said execution unit over said data forward distribution within the processor;
means for allocating a watchpoint register for storing watchpoint data for each speculatively issued predicted instruction at the time said instruction is issued;
means for monitoring execution result signals transmitted over said data forward busses in said watchpoint unit;
means for detecting occurrence of predetermined events based on said execution result signals and predetermined rules;
means for informing other CPU units when predetermined events are detected for the predicted speculatively issued instructions;
means for comparing said watchpoint data stored in said watchpoint register for a particular instruction with said result signals arriving over said data forward busses pertaining to said particular instruction to evaluate if the condition on which said particular instruction speculatively issued was correctly predicted;
deallocation means for deallocating said watchpoint element and continuing execution if said evaluation indicates that said prediction was correct;
means for supplying a new address to said issue unit so that the instruction corresponding to the known condition can be re-fetched and issued to correct the misprediction if said evaluation indicates that said prediction was wrong;
means for backing up said central processing unit to an earlier state so that said misprediction can be undone;
means for initiating execution for instructions in the correct the instruction stream based on said re-fetched instruction; and
means for deallocating said watchpoint element when said execution in completed.

The present invention provides an apparatus for simultaneously grabbing result data for which predetermined instructions are waiting from a plurality of execution result generation units within a central processing unit (CPU); said apparatus comprising:
means for receiving an enable control signal from each result data source;
means for receiving a result data type signal from each result data source;
means for receiving a select source signal indicating from which of said execution result generation units said result data will be received and an indication of a time relative to the current clock cycle that said result data is expected;
means for generating a source selection signal in response to receipt of said enable control signal, said result data type signal, and said select source signal according to predetermined rules;
means for monitoring execution result data signals from said execution result generation units;
means for grabbing execution result data from said selected source in response to said arriving execution result data and said source selection signal; and
means for storing said grabbed execution result data for evaluation in a data store within said processor.

There is provided an apparatus as in the above paragraph wherein said means for grabbing comprises:
a first plurality of logical AND gates each including an enable control signal input port, a result data type signal input port, and a select source signal input port;
a second plurality of logical OR gates coupled to selected ones of said first plurality of logical AND gates for combining selected outputs from said plurality of logical AND gates having the same result data type dependency;
a third plurality of logical AND gates each having a select condition code type input port and a result data source input port coupled to selected ones of said first plurality of logical AND gates and said logical OR gates;
a multi-input logical OR gate having a plurality of input ports each for receiving an output of said third plurality of logical OR gates;
a latch circuit for latching the output signal of said multi-input OR gate, wherein said output signal comprises grabbed execution result data including condition code data.

The present invention provides an apparatus for simultaneously generating a plurality of misprediction signals for predetermined instruction types including branch instructions and jump-and-link instructions in a central processing unit; said apparatus comprising:
means for receiving a watchpoint jump-and-link enable signal having a first state indicating that a watchpoint is being formed for monitoring a branch instruction or a second state indicating that a watchpoint is being formed for a jump-and-link instruction;
means for simultaneously generating a misprediction signal for each of a plurality of issued branch instructions including:
   means for receiving an evaluation condition code signal from a condition code select logic circuit;
   means for receiving a watchpoint condition signal from a watchpoint storage element;
   means for receiving a condition code type control signal from a watchpoint storage element;
   means for receiving an enable control signal from each execution result generation units;
   means for comparing said evaluation condition code signal with said watchpoint condition signal according to predetermined condition code evaluation rules including an asserted state of said enable control signal for each said execution result generation units to evaluate whether the condition for the branch was correctly predicted;
   means for generating a branch true signal if said branch was correctly predicte; and
means for simultaneously generating a jump-and-link misprediction signal for each of a plurality of issued jump-and-link instructions including:
   means for defining a target data structure having a plurality of storage locations for storing program counter data;
   means for writing an alternative next program counter to one of said storage locations when said jump-and-link instruction is issued and associating said stored alternative next program counter with said instruction;
   means for computing a computed next program counter value in a execution result generation units;
   means for receiving said computed next program counter from said execution result generation units;
   means for reading said stored alternative next program counter associated with said instruction from said storage location;
   means for comparing said alternative next program counter with said computed next program counter according to predetermined program counter comparison rules;
   means for generating a jump-and-link match signal when said comparison evaluates as true; and
   means for generating a jump-and-link true signal in response to a true state of both said jump-and-link match signal and said watchpoint jump-and-link signal; and
means for generating an evaluation true signal in response to either a determination that said jump-and-link match signal is asserted or that said branch true signal is asserted;
means for generating an evaluation ready signal in response to receipt of at least one source selection signal or receipt of an evaluation enable signal, said evaluation enable signal being generated in response to assertion of a watchpoint active signal, a watchpoint jump-and-link enable signal, a jump-and-link instruction execution completion signal, and a jump-and-link instruction checkpoint number signal; and
means for generating an instruction misprediction signal in response to receipt of said evaluation ready signal and said evaluation true signal.

The present invention provides an apparatus for concurrently storing an alternate branch address and a predicted jump-and-link address in a common data structure within a single shared storage unit in a central processing unit; said apparatus comprising:
means for generating a control-transfer-instruction issued signal from the issue unit for each control transfer instruction issued at the time it is issued;
means for providing a watchpoint jump-and-link signal within said control-transfer-instruction issued signal to identify the instruction as a branch instruction or as a jump-and-link instruction;
means for computing an alternative next program counter that specifies the target fetch program counter computed by a program control logic unit;
means for generating a checkpoint write enable control signal and checkpoint write address for storing an alternate branch address in a storage location within said data structure; said write enable control signal being asserted when making a checkpoint;
means for writing the watchpoint alternative next program counter into a storage unit at the checkpoint write address:
means for determining the alternative next program counter during instruction decode of a predicted branch and a jump-and-link instruction, said watchpoint alternative next program counter sent to the Watchpoint Unit for a jump-and-link instruction including the predicted target fetch program counter and said watchpoint alternative next program counter sent to the Watchpoint Unit for a predicted branch instruction including the fetch program counter for the alternative branch direction;
means for decoding said control transfer instruction issued signal in a field selection and write logic unit to determine the contents of selected information fields within said signal including determining whether the issued instruction is a branch instruction or a jump-and-link instruction, a first predetermined state in said JMPL field indicating that the instruction is a jump-link instruction and a second state in said JMPL filed indicating that said instruction is a branch instruction; and
means for storing an information item for each branch instruction or jump-and-link instruction in a separate addressable storage location based on said indicia present in said control transfer instruction issued signal; wherein when said instruction is a branch instruction, said information item for said branch instruction comprises an alternative next program counter; and wherein when said instruction is a jump-and-link instruction, said information item for said jump-and-link instruction comprises a predicted target address.

The present invention provides a method for sending the correct re-fetch instruction address for instruction re-fetch after a misprediction of an issued instruction occurs; said method comprising the steps of:
means for simultaneously storing, for each speculatively issued predicted instruction prior to execution of said instruction, an alternative path program instruction address designating the alternative executions path for said predicted instruction and a prediction information on which said predicted execution depends in a watchpoint element in a target address data structure defined in a memory unit within said CPU;
means for simultaneously generating, upon completing execution of each said predicted instruction, signals indicating instruction execution completion status, identifying a watchpoint element number corresponding to said instruction in which pre-execution alternative path and prediction information is stored, and a calculated correct condition data value for comparing with said stored condition value and alternative program instruction address;
means for simultaneously evaluating the prediction for each single instruction including by comparing said stored pre-execution alternative path and prediction information with said generated calculated condition data value for each said instruction and for evaluating if a branch instruction or a jump-and-link instruction was correctly or incorrectly predicted and generating a mispredicted signal for each mispredicted instruction;
means for prioritizing recovery of said CPU from said misprediction and selecting a particular high priority misprediction based on predetermined priority rules;
means for identifying a checkpoint associated with said particular high priority mispredicted instruction and generating a CPU backup signal for recovering said processor from said particular mispredicted instruction;
means for reading the alternative next program counter for said particular mispredicted instruction from said target address data structure; and
means for sending said read alternative next program address to an issue unit for restarting execution of said CPU based on said re-fetched instruction.

There is provided a method as in the above paragraph wherein:
said means for simultaneously storing comprises a plurality of watchpoint storage elements and watchpoint read/write control logic for controlling writing to and reading from said watchpoint elements; said watchpoint elements coupled to an instruction issue unit and receiving instruction decode information for each predicted instruction;
said means for simultaneously generating instruction execution completion signals comprises at least one instruction execution unit coupled a plurality of condition code grabbing units for grabbing execution result data including condition code data from data forward busses;
said means for simultaneously evaluating comprises a plurality of evaluation logic units for evaluating predicted and actual condition data on which a predicted instruction depends;
said means for prioritizing comprises a precise state unit for tracking instruction status including execution status and selecting said high priority misprediction from multiple mispredictions and execution faults based on predetermined rules;
said means for identifying comprises a target address random access memory unit, peripheral control logic associated with said target address random access memory; a multiplexor circuit having a control input signal and a plurality of selectable signal inputs including a backup checkpoint input and a address generation unit checkpoint signal for gating either an address associated with a branch instruction or an address associated with a jump-and-link instruction out of said target address random access unit;
said means for reading comprises jump-and-link match logic for comparing a pre-execution condition with an actual execution condition result; and
said means for sending comprises and alternative program counter output logic including a multiplexer circuit having target address random access memory input signal and an execution result data input signal and a control signal input coupled to said precise state unit for outputting the proper instruction program counter address from among a plurality of program counter.

The present invention provides an apparatus for comparing data forward bus tags with condition-code data to reduce comparison time in a central processing unit; said apparatus comprising:
means for separating data forward bus tag comparisons between a currently renamed condition-code tag in the current issue window cycle and a condition-code tag in previous cycle by the steps of:
   means for comparing the currently renamed condition-code tag in the current issue window signal to each data forward bus tag; and
   means for comparing previous cycle condition-code tag with each data forward bus tag;
whereby said comparisons of said data forward bus tags with said condition code tags in the previous cycle and currently renamed condition code tags in the current issue window are performed more rapidly than if said comparisons were performed in a single non-split operation.

The present invention provides an apparatus for simultaneously monitoring the execution results of a plurality of instructions in a central processing unit, said apparatus comprising:
an issue unit for issuing instructions;
an execution unit for executing instructions;
a data forward distribution bus communicating execution results from said execution units to other units within said central processing unit;
a watchpoint unit having a plurality of watchpoint registers for storing watchpoint data coupled to receive execution result signals from said execution unit over said data forward distribution within the processor;
means for allocating a watchpoint register for storing watchpoint data for each speculatively issued predicted instruction at the time said instruction is issued;
means for monitoring execution result signals transmitted over said data forward busses in said watchpoint unit;
means for detecting occurrence of predetermined events based on said execution result signals and predetermined rules;
means for informing other CPU units when predetermined events are detected for the predicted speculatively issued instructions;
means for comparing said watchpoint data stored in said watchpoint register for a particular instruction with said result signals arriving over said data forward busses pertaining to said particular instruction to evaluate if the condition on which said particular instruction speculatively issued was correctly predicted;
deallocation means for deallocating said watchpoint element and continuing execution if said evaluation indicates that said prediction was correct;
means for supplying a new address to said issue unit so that the instruction corresponding to the known condition can be re-fetched and issued to correct the misprediction if said evaluation indicates that said prediction was wrong;
means for backing up said central processing unit to an earlier state so that said misprediction can be undone;
means for initiating execution for instructions in the correct the instruction stream based on said re-fetched instruction;
means for deallocating said watchpoint element when said execution in completed;
means for receiving an enable control signal from each result data source;
means for receiving a result data type signal from each result data source;
means for receiving a select source signal indicating from which of said execution result generation units said result data will be received and an indication of a time relative to the current clock cycle that said result data is expected;
means for generating a source selection signal in response to receipt of said enable control signal, said result data type signal, and said select source signal according to predetermined rules;
means for monitoring execution result data signals from said execution result generation units;
means for grabbing execution result data from said selected source in response to said arriving execution result data and said source selection signal;
means for storing said grabbed execution result data for evaluation in a data store within said processor;
means for receiving a watchpoint jump-and-link enable signal having a first state indicating that a watchpoint is being formed for monitoring a branch instruction or a second state indicating that a watchpoint is being formed for a jump-and-link instruction;
means for simultaneously generating a misprediction signal for each of a plurality of issued branch instructions including:
   means for receiving an evaluation condition code signal from a condition code select logic circuit;
   means for receiving a watchpoint condition signal from a watchpoint storage element;
   means for receiving a condition code type control signal from a watchpoint storage element;
   means for receiving an enable control signal from each execution result generation units;
   means for comparing said evaluation condition code signal with said watchpoint condition signal according to predetermined condition code evaluation rules including an asserted state of said enable control signal for each said execution result generation unit to evaluate whether the condition for the branch was correctly predicted;
   means for generating a branch true signal if said branch was correctly predicte; and
means for simultaneously generating a jump-and-link misprediction signal for each of a plurality of issued jump-and-link instructions including:
   means for defining a target data structure having a plurality of storage locations for storing program counter data;
   means for writing an alternative next program counter to one of said storage locations when said jump-and-link instruction is issued and associating said stored alternative next program counter with said instruction;
   means for computing a computed next program counter value in an execution result generation units;
   means for receiving said computed next program counter from said execution result generation units;
   means for reading said stored alternative next program counter associated with said instruction from said storage location;
   means for comparing said alternative next program counter with said computed next program counter according to predetermined program counter comparison rules;
   means for generating a jump-and-link match signal when said comparison evaluates as true; and
   means for generating a jump-and-link true signal in response to a true state of both said jump-and-link match signal and said watchpoint jump-and-link signal; and
means for generating an evaluation true signal in response to either a determination that said jump-and-link match signal is asserted or that said branch true signal is asserted;
means for generating an evaluation ready signal in response to receipt of at least one source selection signal or receipt of an evaluation enable signal, said evaluation enable signal being generated in response to assertion of a watchpoint active signal, a watchpoint jump-and-link enable signal, a jump-and-link instruction execution completion signal, and a jump-and-link instruction checkpoint number signal; and
means for generating an instruction misprediction signal in response to receipt of said evaluation ready signal and said evaluation true signal;
means for generating a control-transfer-instruction issued signal from the issue unit for each control transfer instruction issued at the time it is issued;
means for providing a watchpoint jump-and-link signal within said control-transfer-instruction issued signal to identify the instruction as a branch instruction or as a jump-and-link instruction;
means for computing an alternative next program counter that specifies the target fetch program counter computed by a program control logic unit;
means for generating a checkpoint write enable control signal and checkpoint write address for storing an alternate branch address in a storage location within said data structure; said write enable control signal being asserted when making a checkpoint;
means for writing the watchpoint alternative next program counter into a storage unit at the checkpoint write address;
means for determining the alternative next program counter during instruction decode of a predicted branch and a jump-and-link instruction, said watchpoint alternative next program counter sent to the Watchpoint Unit for a jump-and-link instruction including the predicted target fetch program counter and said watchpoint alternative next program counter sent to the Watchpoint Unit for a predicted branch instruction including the fetch program counter for the alternative branch direction;
means for decoding said control transfer instruction issued signal in a field selection and write logic unit to determine the contents of selected information fields within said signal including determining whether the issued instruction is a branch instruction or a jump-and-link instruction, a first predetermined state in said JMPL field indicating that the instruction is a jump-link instruction and a second state in said JMPL filed indicating that said instruction is a branch instruction; and
means for storing an information item for each branch instruction or jump-and-link instruction in a separate addressable storage location based on said indicia present in said control transfer instruction issued signal; wherein when said instruction is a branch instruction, said information item for said branch instruction comprises an alternative next program counter; and wherein when said instruction is a jump-and-link instruction, said information item for said jump-and-link instruction comprises a predicted target address;
means for simultaneously storing, for each speculatively issued predicted instruction prior to execution of said instruction, an alternative path program instruction address designating the alternative execution path for said predicted instruction and a prediction information on which said predicted execution depends in a watchpoint element in a target address data structure defined in a memory unit within said CPU;
means for simultaneously generating, upon completing execution of each said predicted instruction, signals indicating instruction execution completion status, identifying a watchpoint element number corresponding to said instruction in which pre-execution alternative path and prediction information is stored, and a calculated correct condition data value for comparing with said stored condition value and alternative program instruction address;
means for simultaneously comparing said stored pre-execution alternative path and prediction information with said generated calculated condition data value for each said instruction and generating a match signal if the predicted condition data match said calculated correct condition data value for any of said instructions;
means for simultaneously evaluating the prediction for each single instruction, including evaluating if a branch instruction or a jump-and-link instruction was correctly or incorrectly predicted and generating a mispredicted signal for each mispredicted instruction;
means for prioritizing recovery of said CPU from said misprediction and selecting a particular high priority misprediction based on predetermined priority rules;
means for identifying a checkpoint associated with said particular high priority mispredicted instruction and generating a CPU backup signal for recovering said processor from said particular mispredicted instruction;
means for reading the alternative next program counter for said particular mispredicted instruction from said target address data structure; and
means for sending said read alternative next program address to an issue unit for restarting execution of said CPU based on said re-fetched instruction;
means for separating data forward bus tag comparisons between a currently renamed condition-code tag in the current issue window cycle and a condition-code tag in previous cycle by the steps of:
   means for comparing the currently renamed condition-code tag in the current issue window signal to each data forward bus tag; and
   means for comparing previous cycle condition-code tag with each data forward bus tag;
whereby said comparisons of said data forward bus tags with said condition code tags in the previous cycle and currently renamed condition code tags in the current issue window are performed more rapidly than if said comparisons were performed in a single non-split operation.

The present invention provides an out of program control order execution data processor apparatus comprising:
an issue unit to issue instructions in program control order for execution, the issued instructions including floating point instructions and non-floating point instructions;
execution means to execute the issued instructions wherein at least the floating point instructions may be executed out of program control order by the execution means;
a floating point exception unit including:
   a data storage structure including storage elements, each of the issued instructions corresponding to one of the storage elements, each of the storage elements having a floating point instruction identifying field and a floating point trap type field;
   first logic to write, for each of the issued instructions, data in the floating point instruction identifying field of the corresponding one of the storage elements which indicates whether or not the issued instruction is a floating point instruction;
   second logic to write, for each of the issued floating point instructions which causes during execution one or more floating point execution exceptions that will result in a corresponding one of a plurality of predefined types of floating point execution traps, data in the floating point trap type field of the corresponding one of the storage elements which identifies the one of the predefined types of floating point execution traps that will result;
precise state means to retire each of the issued instructions which does not cause an execution exception during execution and for which all ones of the issued instructions preceding it in program control order have been retired;
when a first execution exception is caused by one of the issued instructions, the execution means continuing execution of ones of the issued instructions and the precise state means engaging in execution trap sequencing by continuing to retire ones of the issued instructions until it encounters one of the issued instructions that cannot be retired, the issued instruction that cannot be retired being one of (a) the issued instruction that caused the first execution exeception, and (b) an issued instruction that was issued earlier than the issued instruction that caused the first execution exception but which caused a second execution exception occurring later than the first execution exception;
a floating point status register having a floating point trap type field; and
writing means to write, when the precise state means engages in execution trap sequencing and encounters one of the issued instructions that cannot be retired, data to the floating point trap type field of the floating point status register which identifies the type of floating point execution trap identified by the data in the floating point trap type field of the one of the storage elements corresponding to the instruction that cannot be retired when the data in the floating point identifying field of the corresponding one of the storage elements indicates that the instruction that cannot be retired is a floating point instruction.

There is provided an apparatus as in the above paragraph wherein:
each of the storage elements of the data storage structure also has a current floating point execution exception field;
the floating point exception unit further includes third logic to write, for each of the issued floating point instructions that causes during execution one or more specific floating point execution exceptions that will result in a specific one of the predefined types of floating point execution traps, data to the current floating point execution exception field of the corresponding one of the storage elements which identifies the one or more of the specific floating point execution exceptions that were caused;
the floating point status register also has a current floating point execution exception field; and
the writing means also writes, when the precise state means engages in execution trap sequencing and encounters one of the issued instructions that cannot be retired, data to the the current floating point execution exception field of the floating point status register which identifies the one or more of the specific floating point execution exceptions identified by the data in the current floating point execution exception field of the one of the storage elements corresponding to the issued instruction that cannot be retired when (a) the data in the floating point instruction identifying field of the one of the storage elements corresponding to the issued instruction that cannot be retired indicates that the issued instruction that cannot be retired is a floating point instruction, and (b) the data in the floating point trap type field of the one of the storage elements corresponding to the issued instruction that cannot be retired identifies the specific one of the predefined types of floating point execution traps.

There is provided an apparatus as in the above paragraphs wherein:
the writing means also writes, for each of the issued floating point instructions that does not cause during execution any of the specific floating point execution exceptions, data to the current floating point execution exception field of the corresponding one of the storage elements which indicates that none of the specific floating point execution exceptions were caused;
the floating point status register includes an accrued exception field and a trap enable mask field, the trap enable mask field providing selective masking of any combination of the specific floating point execution exceptions;
the precise state means also retires each of the issued floating point instructions which causes one or more masked ones of the specific floating point execution exceptions and no other floating point execution exceptions during execution and for which all ones of the issued instructions preceding it in program control order have been retired;
during each current machine cycle in which ones of the issued instructions are retired, the writing means writes data to the accrued exception field of the floating point status register which represents an accrual of (a) the specific floating point execution exceptions identified by the data in the current floating point execution exception fields of the ones of the storage elements corresponding to the ones of the issued instructions that are being retired in the current machine cycle and for which the data in the floating point instruction identifying fields of the corresponding ones of the storage elements indicates are floating point instructions and (b) the specific floating point execution exceptions identified by current data in the accrued floating point execution exception field of the floating point status register;
during each current machine cycle in which ones of the issued instructions are retired, the writing means also writes data to the current exception field of the floating point status register which identifies those of the specific floating point execution exceptions identified by the data in the current floating point execution exception field of the one of the storage elements corresponding to the last one of the issued instructions retired in the current machine cycle for which the data in the floating point instruction identifying field of the corresponding one of the storage elements indicates that it is a floating point instruction;
during each current machine cycle in which instructions are retired, the writing means further writes data to the trap type field of the floating point status register which indicates that none of the predefined types of floating point execution traps will result for the last one of the issued instructions retired in the current machine cycle for which the data in the floating point instruction identifying field of the corresponding one of the storage elements indicates that it is a floating point instruction.

There is provided an apparatus as in the above paragraphs wherein:
the issued instructions comprise SPARC instructions;
the floating point status register comprises a SPARC floating point status register;
the specific one of the predefined types of floating point execution traps comprises an IEEE_754_exception trap; and
the specific floating point execution exceptions comprise IEEE_754 exceptions.

The present invention provides a method of detecting floating point exceptions in an out of program control order execution data processor, the method comprising the steps of:
issuing instructions in program control order for execution, the issued instructions including floating point instructions and non-floating point instructions;
executing the issued instructions such that at least the floating point instructions may be executed out of program control order;
providing a data storage structure including storage elements, each of the issued instructions corresponding to one of the storage elements, each of the storage elements having a floating point instruction identifying field and a floating point trap type field;
writing, for each of the issued instructions, data in the floating point instruction identifying field of the corresponding one of the storage elements which indicates whether or not the issued instruction is a floating point instruction;
writing, for each of the issued floating point instructions which causes during execution one or more floating point execution exceptions that will result in a corresponding one of a plurality of predefined types of floating point execution traps, data in the floating point trap type field of the corresponding one of the storage elements which identifies the one of the predefined types of floating point execution traps that will result;
retiring each of the issued instructions which does not cause an execution exception during execution and for which all ones of the issued instructions preceding it in program control order have been retired;
when a first execution exception is caused by one of the issued instructions, continuing execution of ones of the issued instructions and engaging in execution trap sequencing by continuing to retire ones of the issued instructions until one of the issued instructions that cannot be retired is encountered, the issued instruction that cannot be retired being one of (a) the issued instruction that caused the first execution exeception, and (b) an issued instruction that was issued earlier than the issued instruction that caused the first execution exception but which caused a second execution exception occurring later than the first execution exception;
providing a floating point status register having a floating point trap type field; and
writing, when one of the issued instructions that cannot be retired is encountered in the execution trap sequencing engaging step, data to the floating point trap type field of the floating point status register which identifies the type of floating point execution trap identified by the data in the floating point trap type field of the one of the storage elements corresponding to the instruction that cannot be retired when the data in the floating point identifying field of the corresponding one of the storage elements indicates that the instruction that cannot be retired is a floating point instruction.

There is provided a method as in the above paragraph wherein:
each of the storage elements of the data storage structure also has a current floating point execution exception field;
the floating point status register also has a current floating point execution exception field;
the method further comprises the steps of:
   writing, for each of the issued floating point instructions that causes during execution one or more specific floating point execution exceptions that will result in a specific one of the predefined types of floating point execution traps, data to the current floating point execution exception field of the corresponding one of the storage elements which identifies the one or more of the specific floating point execution exceptions that were caused; and
   writing, when one of the issued instructions that cannot be retired is encountered in the execution trap sequencing engaging step, data to the the current floating point execution exception field of the floating point status register which identifies the one or more of the specific floating point execution exceptions identified by the data in the current floating point execution exception field of the one of the storage elements corresponding to the issued instruction that cannot be retired when (a) the data in the floating point instruction identifying field of the one of the storage elements corresponding to the issued instruction that cannot be retired indicates that the issued instruction that cannot be retired is a floating point instruction, and (b) the data in the floating point trap type field of the one of the storage elements corresponding to the issued instruction that cannot be retired identifies the specific one of the predefined types of floating point execution traps.

There is provided a method as in the above paragraphs further comprising the steps of:
writing, for each of the issued floating point instructions that does not cause during execution any of the specific floating point execution exceptions, data to the current floating point execution exception field of the corresponding one of the storage elements which indicates that none of the specific floating point execution exceptions were caused;
the floating point status register including an accrued exception field and a trap enable mask field, the trap enable mask field providing selective masking of any combination of the specific floating point execution exceptions;
retiring each of the issued floating point instructions which causes one or more masked ones of the specific floating point execution exceptions and no other floating point execution exceptions during execution and for which all ones of the issued instructions preceding it in program control order have been retired;
during each current machine cycle in which ones of the issued instructions are retired, writing data to the accrued exception field of the floating point status register which represents an accrual of (a) the specific floating point execution exceptions identified by the data in the current floating point execution exception fields of the ones of the storage elements corresponding to ones of the issued instructions that are being retired in the current machine cycle and for which the data in the floating point instruction identifying fields of the corresponding ones of the storage elements indicates are floating point instructions and (b) the specific floating point execution exceptions identified by current data in the accrued floating point execution exception field of the floating point status register;
during each current machine cycle in which ones of the issued instructions are retired, writing data to the current exception field of the floating point status register which identifies those of the specific floating point execution exceptions identified by the data in the current floating point execution exception field of the one of the storage elements corresponding to the last issued instruction retired in the current machine cycle for which the data in the floating point instruction identifying field of the corresponding one of the storage elements indicates that it is a floating point instruction;
during each current machine cycle in which onesof the issued instructions are retired, writing data to the trap type field of the floating point status register which indicates that none of the predefined types of floating point execution traps will result for the last one of the issued instructions retired in the current machine cycle for which the data in the floating point instruction identifying field of the corresponding one of the storage elements indicates that it is a floating point instruction.

There is provided a method as in the above paragraphs wherein:
the issued instructions comprise SPARC instructions;
the floating point status register comprises a SPARC floating point status register;
the specific one of the predefined types of floating point execution traps comprises an IEEE_754_exception trap; and
the specific floating point execution exceptions comprise IEEE_754 exceptions.

The present invention provides a data processor apparatus for speculatively taking and returning from nested traps, the data processor having a predefined number of trap levels for nesting the traps such that, each time one of the traps is taken, the data processor assigns to the trap a corresponding one of the trap levels, the data processor comprising:
means to form checkpoints;
means to back up to the checkpoints;
means to take the traps;
means to return from the traps;
registers that, each time one of the traps is taken, store contents that define the state of the data processor at the time the trap is taken;
a trap stack unit comprising:
   a trap stack data storage structure that has a predefined number of trap stack storage entries, the number of trap stack storage entries being greater than the number of trap levels;
   a freelist unit that maintains a current availability list of the trap stack storage entries that are currently available for mapping to one of the trap levels, the freelist unit identifying, each time one of the traps is taken, a next one of the currently available trap stack storage entries for mapping to the corresponding trap level;
   read/write logic that, each time one of the traps is taken, writes the contents of the registers to the identified next currently available trap stack storage entry;
   rename mapping logic that maintains a current trap level mapping of each of the trap levels to one of the trap stack storage entries, the rename mapping logic replacing, each time one of the traps is taken, an old trap level mapping of the corresponding trap level to one of the trap stack storage entries with a new trap level mapping of the corresponding trap level to the identified next currently available trap stack storage entry;
   the read/write logic reading, each time one of the traps is returned from, the contents of the trap stack storage entry mapped to the corresponding trap level by the current trap level mappings;
   a resource reclaim unit that maintains an unavailability list of each of the trap stack storage entries not currently mapped to one of the trap levels by the current trap level mappings but unavailable for mapping to one of the trap levels, the resource reclaim unit adding to the unavailability list, each time one of the traps is taken, the trap stack storage entry that was mapped to the corresponding trap level by the replaced old trap level mapping, the resource reclaim unit removing from the unavailability list, each time one of the traps can no longer be undone, the trap stack storage entry that was mapped to the corresponding trap level by the replaced old trap level mapping;
   the freelist unit adding to the current availability list, each time one of the traps can no longer be undone, the trap stack storage entry removed from the unavailability list; and
   a checkpoint storage unit that has checkpoint storage entries, each of the not retired checkpoints having a corresponding checkpoint storage entry, the checkpoint storage unit storing, for each of the checkpoints, the current trap level mappings and the current availability list in the corresponding checkpoint storage entry at the time the checkpoint was formed;
   the rename mapping logic replacing, each time one of the checkpoints is backed up to, the current trap level mappings with the stored mappings in the corresponding checkpoint storage entry;
   the freelist unit replacing, each time one of the checkpoints is backed up to, the current availability list with the stored availability list in the corresponding checkpoint storage entry.

There is provided an apparatus as in the above paragraph further comprising:
an execution unit that executes instructions specifying a specific one of the registers out of order so that, each time one of the traps is taken, the contents of the specific register may not yet be available therein, the execution unit forwarding, each time the contents of the specific register are available for storage therein, the contents of the specific register;
the trap stack unit further comprising grabbing logic to determine, each time one of the traps is taken while the contents of the specific register is not yet available therein, when the contents of the specific register are being forwarded; and
the read/write logic writing, each time one of the traps is taken while the contents of the specific register is not yet available therein, the forwarded contents of the specific register to the trap stack storage entry that was the identified next currently available trap stack storage entry at the time the trap was taken when the grabbing logic determines that the contents of the specific register are being forwarded.

There is provided an apparatus as in the above paragraphs wherein the grabbing logic, each time one of the traps is taken while the contents of the specific register is not yet available therein, indicates to the means to return from a trap whether the contents of the specific register is not yet available therein so that the means to return from a trap will not return from the trap until the grabbing logic indicates that the contents of the specific register has become available therein.

There is provided an apparatus as in the above paragraphs further comprising:
a register file and rename unit that comprises:
   physical registers, the specific register being an architected register so that the physical registers can be mapped to the specific register and the instructions specifying the specific register can be executed out of order; and
   renaming logic that maintains a current register mapping of the specific register to one of the physical registers with a tag that identifies the physical register and is provided to the execution unit, the renaming mapping logic replacing, each time one of the instructions specifying the specific register requires a new register mapping of the specific register to one of the physical registers, an old register mapping of the specific register to one of the physical registers with the new register mapping;
the execution unit, each time the contents of one of the physical registers mapped to the architected register are available for storage therein, forwarding the contents and the tag of the physical register;
the grabbing logic comprising:
   current match logic that, each time one of the traps is taken while the contents of the physical register mapped to the specific register by the current mapping are not yet available therein but the contents and the tag of one of the physical registers are being forwarded, compares the tag being forwarded with the tag of the physical register mapped to the specific register by the current register mapping to determine if there is a current match;
   later match logic that, each time one of the traps is taken, stores the tag of the physical register mapped to the specific register by the current register mapping and that, each time the contents and the tag of one of the physical registers are being forwarded, compares the tag being forwarded with the stored tag to determine if there is a later match;
the read/write logic writing, each time that there is a current match, the contents being forwarded to the identified next currently available trap stack storage entry and writing, each time that there is a later match, the contents being forwarded to the trap stack storage entry that was the identified next currently available trap stack storage entry at the time the trap was taken.

There is provided an apparatus as in the above paragraphs further comprising:
a register file and rename unit that comprises:
   physical registers, the specific register being an architected register so that the physical registers can be mapped to the specific register and the instructions specifying the specific register can be executed out of order; and
   renaming logic that maintains a current register mapping of the specific register to one of the physical registers with a tag that identifies the physical register and is provided to the execution unit, the renaming mapping logic replacing, each time one of the instructions specifying the specific register requires a new register mapping of the specific register to one of the physical registers, an old register mapping of the specific register to one of the physical registers with the new register mapping;
the execution unit, each time the contents of one of the physical registers mapped to the architected register are available for storage therein, forwarding the contents and the tag of the physical register;
the grabbing logic comprising:
   current match logic that, each time one of the traps is taken while the contents of the physical register mapped to the specific register by the current mapping are not yet available therein but the contents and the tag of one of the physical registers are being forwarded, compares the tag being forwarded with the tag of the physical register mapped to the specific register by the current register mapping to determine if there is a current match;
   later match logic that, each time one of the traps is taken, stores the tag of the physical register mapped to the specific register by the current register mapping and that, each time the contents and the tag of one of the physical registers are being forwarded, compares the tag being forwarded with the stored tag to determine if there is a later match;
the read/write logic writing, each time that there is a current match, the contents being forwarded to the identified next currently available trap stack storage entry and writing, each time that there is a later match, the contents being forwarded to the trap stack storage entry that was the identified next currently available trap stack storage entry at the time the trap was taken.

There is provided an apparatus as in the above paragraphs wherein, each time one of the traps is taken, the freelist unit indicates to the means to take a trap whether at least one of the trap stack storage entries is currently available for mapping to the corresponding trap level so that the means to take a trap will not take the trap until the freelist unit indicates that at least one of the trap stack storage entries is available for mapping to the corresponding trap level.

There is provided an apparatus as in the above paragraphs further comprising:
means to retire the checkpoints;
the checkpoint forming means forms, each time one of the traps is taken, a corresponding one of the checkpoints for the trap so that, when the checkpoint for the trap is retired, the trap can no longer be undone;
the resource reclaim unit includes a resource reclaim data storage structure that has resource reclaim storage entries, each of the checkpoints for the traps corresponding to one of the resource reclaim storage entries, the resource reclaim unit storing, each time one of the checkpoints for one of the traps is formed, data in the corresponding resource reclaim storage entry that identifies the trap stack storage entry that was mapped to the corresponding trap level by the replaced old trap level mapping;
the freelist unit adding to the current availability list, each time one of the checkpoints for one of the traps is retired, the storage entry identified by the data in the corresponding resource reclaim storage entry.

The present invention provides, in a data processor, a method of speculatively taking and returning from nested traps, the data processor having a predefined number of trap levels for nesting the traps such that, each time one of the traps is taken, the data processor assigns to the trap a corresponding one of the trap levels, the data processor having registers that, each time one of the traps is taken, store contents that define the state of the data processor at the time the trap was taken, the method comprising the steps of:
forming checkpoints;
backing up to ones of the checkpoints;
taking traps;
returning from ones of the traps;
providing a predefined number of trap stack storage entries, the number of trap stack storage entries being greater than the number of trap levels;
maintaining a current availability list of the trap stack storage entries that are currently available for mapping to one of the trap levels and identifying, each time one of the traps is taken, a next one of the currently available trap stack storage entries for mapping to the corresponding trap level;
writing, each time one of the traps is taken, the contents of the registers to the identified next currently available trap stack storage entry;
maintaining a current mapping of each of the trap levels to one of the trap stack storage entries by replacing, each time one of the traps is taken, an old trap level mapping of the corresponding trap level to one of the trap stack storage entries with a current mapping of the corresponding trap level to the identified next currently available trap stack storage entry;
reading, each time one of the traps is returned from, the contents of the trap stack storage entry mapped to the corresponding trap level by the current trap level mappings;
maintaining an unavailability list of each of the trap stack storage entries not currently mapped to one of the trap levels by the current trap level mappings but unavailable for mapping to one of the trap levels by adding to the unavailability list, each time one of the traps is taken, the trap stack storage entry that was mapped to the corresponding trap level by the replaced old trap level mapping and by removing from the unavailability list, each time one of the traps can no longer be undone, the trap stack storage entry that was mapped to the corresponding trap level by the replaced old trap level mapping;
adding to the current availability list, each time one of the traps can no longer be undone, the trap stack storage entry removed from the unavailability list; and
providing checkpoint storage entries, each of the formed checkpoints having a corresponding checkpoint storage entry,
storing, for each of the checkpoints, the current trap level mappings and the current availability list in the corresponding checkpoint storage entry;
for each of the checkpoints backed up to, replacing the current trap level mappings with the stored mappings in the corresponding checkpoint storage entry and replacing the current availability list with the stored availability list in the corresponding checkpoint storage entry.

There is provided a method as in the above paragraph wherein:
the data processor has an execution unit that executes instructions specifying a specific one of the registers out of order so that, each time one of the traps is taken, the contents of the specific register may not yet be available therein, the execution unit forwarding, each time the contents of the specific register are available for storage therein, the contents of the specific register;
the method further comprises the steps of:
   determining, each time one of the traps is taken while the contents of the specific register is not yet available therein, when the contents of the specific register are being forwarded;
   writing, each time one of the traps is taken while the contents of the specific register is not yet available therein, the forwarded contents of the specific register to the trap stack storage entry that was the identified next available trap stack storage entry at the time the trap was taken when it is determined in the determining step that the contents of the specific register are being forwarded.

There is provided a method as in the above paragraphs wherein the step of returning from ones of the traps includes, each time one of the traps is taken while the contents of the specific register is not yet available therein, returning from the trap only when the contents of the specific one of the registers has become available therein.

There is provided a method as in the above paragraphs wherein:
the data processor has a register file and rename unit that comprises physical registers, the specific register being an architected register so that the physical registers can be mapped to the specific register and the instructions specifying the specific register can be executed out of order, the register file and rename unit maintaining a current register mapping of the specific register to one of the physical registers with a tag that identifies the physical register and is provided to the execution unit, the register file and rename unit replacing, each time one of the instructions specifying the specific register requires a new register mapping of the specific register to one of the physical registers, an old register mapping of the specific register to one of the physical registers with the new register mapping;
the execution unit, each time the contents of one of the physical registers mapped to the architected register are available for storage therein, forwards the contents and the tag of the physical register;
the step of determining when the contents of the specific register are being forwarded including:
   each time one of the traps is taken while the contents of the physical register mapped to the specific register by the current mapping are not yet available therein but the contents and the tag of one of the physical registers are being forwarded, comparing the tag being forwarded with the tag of the physical register mapped to the specific register by the current register mapping to determine if there is a current match;
   each time one of the traps is taken, storing the tag of the physical register mapped to the specific register by the current register mapping and, each time the contents and the tag of one of the physical registers are being forwarded, comparing the tag being forwarded with the stored tag to determine if there is a later match;
   the step of writing including writing, each time that there is a current match, the contents being forwarded to the identified next currently available trap stack storage entry and writing, each time that there is a later match, the contents being forwarded to the trap stack storage entry that was the identified next currently available trap stack storage entry at the time the trap was taken.

There is provided a method as in the above paragraphs wherein:
the data processor has a register file and rename unit that comprises physical registers, the specific register being an architected register so that the physical registers can be mapped to the specific register and the instructions specifying the specific register can be executed out of order, the register file and rename unit maintaining a current register mapping of the specific register to one of the physical registers with a tag that identifies the physical register and is provided to the execution unit, the register file and rename unit replacing, each time one of the instructions specifying the specific register requires a new register mapping of the specific register to one of the physical registers, an old register mapping of the specific register to one of the physical registers with the new register mapping;
the execution unit, each time the contents of one of the physical registers mapped to the architected register are available for storage therein, forwards the contents and the tag of the physical register;
the step of determining when the contents of the specific register are being forwarded including:
   each time one of the traps is taken while the contents of the physical register mapped to the specific register by the current mapping are not yet available therein but the contents and the tag of one of the physical registers are being forwarded, comparing the tag being forwarded with the tag of the physical register mapped to the specific register by the current register mapping to determine if there is a current match;
   each time one of the traps is taken, storing the tag of the physical register mapped to the specific register by the current register mapping and, each time the contents and the tag of one of the physical registers are being forwarded, comparing the tag being forwarded with the stored tag to determine if there is a later match;
the step of writing including writing, each time that there is a current match, the contents being forwarded to the identified next currently available trap stack storage entry and writing, each time that there is a later match, the contents being forwarded to the trap stack storage entry that was the identified next currently available trap stack storage entry at the time the trap was taken.

There is provided a method as in the above paragraphs wherein the step of taking traps includes, each time one of the traps is taken, taking the trap only when at least one of the trap stack storage entries is available for mapping to the corresponding trap level.

There is provided a method as in the above paragraphs further comprising the steps of:
retiring ones of the formed checkpoints;
the step of forming checkpoints including forming, each time one of the traps is taken, a corresponding checkpoint for the trap so that, when the checkpoint for the trap is retired, the trap can no longer be undone;
the step of maintaining the unavailability list includes:
   providing resource reclaim storage entries, each of the checkpoints for the traps corresponding to one of the resource reclaim storage entries;
   storing for each of the traps taken, data in the corresponding resource reclaim storage entry that identifies the trap stack storage entry that was mapped to the corresponding trap level by the replaced old trap level mapping,
   the step of adding to the availability list including adding to the availability list, each time one of the checkpoints for one of the traps is retired, the trap stack storage entry identified by the data stored in the corresponding resource reclaim storage entry.

The present invention provides, in a processor having means for issuing instructions, means for executing instructions, and a memory store for storing data within said processor, a method of restoring a prior machine state in a processor at any instruction boundary upon detecting a condition requiring processor state restoration; said method comprising the steps of:
allocating an instruction serial number for each issued instruction;
storing machine state information in a checkpoint within said memory store in said processor prior to execution only for a first predetermined set of executable instructions that alter machine state, said predetermined set of executable instructions that alter machine state being fewer than the set of all of the executable instructions that alter machine state implemented within said processor;
identifying the instruction causing said fault, and if multiple exceptions or faults occurred simultaneously, then identifying the in order sequentially earliest instruction causing a fault or exception;
if said earliest faulting instruction is a checkpointed instruction, then restoring said machine state information stored prior to execution of said faulting instruction, and decrementing the processor program counter to the instruction serial number of said faulting instruction to restore said prior machine state;
if one of said predetermined executable instructions for which a machine state information has been stored is sequentially interposed between said faulting instruction and the last issued instruction, then (i) first, backing-up said processor to the closest checkpoint to said faulting instruction sequentially after said faulting instruction, and (ii) second, backstepping said processor to restore machine state to the state that existed just prior to execution of said faulting instruction by updating register resources, and (iii) decrementing the processor program counter to the instruction serial number of said faulting instruction.

There is provided a method as in the above paragraph wherein said step of storing machine state information in said memory store within said processor comprises the step of storing a register rename map rather than storing register data values, and storing alternative next program counters for speculatively issued predicted instructions.

There is provided a method as in the above paragraphs wherein said a first predetermined set of executable instructions are instructions selected from the group consisting of:
predicted program control transfer instructions including predicted branch instructions;
instructions that may have the side-effect of modifying control register values;
instructions of the type that result in program flow changes including jump-and-link type instructions;
selected instructions of the type that modify processor state including instructions which may have the side-effect of modifying control register values, but limited to fewer than all instruction of this type in-order to reduce the amount of checkpointed state, non-checkpointed instructions of this type resulting in controlled processor syncing;
instructions which frequently result in an instruction issue trap; and
instructions of the type that initiate speculative trap entry.

There is provided a method as in the above paragraphs further comprising the step of synchronizing said processor prior to executing any one of a second predetermined set of executable instructions that involve a speculative instruction sequence.

There is provided a method as in the above paragraphs wherein said step of synchronizing said processor comprising the steps of:
temporarily suspending issue/execution of said instruction requiring processor synchronization prior to execution;
waiting for all pending instructions in the execution stage to be committed and retired; and after said processor arrives at processor synchronization issuing/executing said other instruction.

The present invention provides, in a processor having means for issuing instructions, means for executing instructions, and a memory data store for storing data within said processor, a method of restoring machine state in said processor at an instruction boundary; said method comprising the steps of:
storing predetermined machine state parameters in registers in said data store of said processor prior to execution of a predetermined plurality of speculatively issued predicted instructions;
monitoring instruction execution to detect an execution exception or fault condition;
saving an instruction identifier of each instruction that results in said execution exception or fault condition;
if more than one executed instruction results in an execution exception or fault condition, determining which of said more than one excepting or faulting instructions occurred sequentially earlier;
using said earliest excepting or faulting instruction identifier as an endpoint to backup the program counter in said processor;
if said earliest faulting instruction is a checkpointed instruction, then restoring said machine state information stored in said checkpoint prior to execution of said faulting instruction and decrementing the processor program counter to the instruction identifier of said faulting instruction to restore said prior machine state; and
if one of said predetermined executable instructions for which a machine state information has been stored is sequentially interposed between said faulting instruction and the last issued instruction, then (i) first, backing-up said processor to the closest checkpoint to said faulting instruction after said faulting instruction, and (ii) second, backstepping said processor to restore processor state to the state that existed just prior to execution of said faulting instruction by updating register resources and (iii) decrementing the processor program counter to the instruction serial number of said faulting instruction.

The present invention provides a method of restoring machine state at an instruction boundary; said method comprising the steps of:
for any instruction which may modify architectural control registers, including instructions which may have the side-effect of modifying control register values, choosing to either (i) synchronize said machine, or (ii) generate and store an instruction checkpoint in data storage structure within said processor to preserve machine state prior to execution of said instruction so that control register updates are not needed;
for any instruction that creates a program counter discontinuity including any speculative instruction sequence, generating and storing an instruction checkpoint in data storage within said processor to preserve architectural and machine state prior to execution of said instruction so that program counter values correspond to instructions within an in-order sequence of instructions and so that the correct program counter can be reconstructed without re-issue and execution of the instruction that caused the fault;
monitoring instruction execution to detect an execution exception or fault condition;
saving an instruction identifier of each instruction that results in said execution exception or fault condition;
if more than one executed instruction results in an execution exception or fault condition, determining which of said more than one excepting or faulting instructions occurred sequentially earlier;
using said earliest excepting or faulting instruction identifier as an endpoint to backup the program counter in said processor,
if said earliest faulting instruction is a checkpointed instruction, then restoring said machine state information stored in the checkpoint prior to execution of said faulting instruction and decrementing the processor program counter to the instruction serial number of said faulting instruction to restore said prior machine state; and
if one of said predetermined executable instructions for which a machine state information has been stored is sequentially interposed between said faulting instruction and the last issued instruction, then (i) first, backing-up said processor to the closest checkpoint to said faulting instruction after said faulting instruction, (ii) second, backstepping said processor to restore processor state to the state that existed just prior to execution of said faulting instruction by updating register resources, and (iii) decrementing the processor program counter to the instruction serial number of said faulting instruction.

There is provided a method as in the above paragraph wherein said instruction identifier is an instruction serial number assigned at the time said instruction was issued.

There is provided a method as in the above paragraphs wherein each said checkpoint includes a register rename map and control; architectural control registers values; an ISN; an architectural program counter (APC) and next architectural program counter (NAPC); and an alternate next program counter (ANPC).

There is provided a method as in the above paragraphs wherein said checkpoints are generated and assigned during the instruction issue cycle.

There is provided a method as in the above paragraphs wherein said step of synchronizing the machine comprising the steps of:
temporarily suspending issue/execution of said instruction requiring machine synchronization prior to execution;
waiting for all pending instructions in the execution stage to be committed and; and
after said processor arrives at machine synchronization issuing/executing said instruction requiring machine synchronization.

There is provided a method as in the above paragraphs wherein said other instructions identified for requiring syncing of the machine prior to execution are selected on the basis of a performance-design trade-off including a consideration of the performance degradation for requiring machine synchronization and the dependence on the degree of speculation.

The present invention provides a method of choosing which instructions in a machine are to be designated as requiring syncing of said machine before execution, said method comprising the steps of:
determining the degree of speculation for said instruction.;
determining the limits of logic complexity that it is desirable to implement including determining the maximum circuit area that it is desirable to allocate to implement the required logic that will be needed to handle all of the instructions speculatively;
establishing predetermined trade-off parameters including a weighting factor for each said trade-off parameter; and
computing a performance index for instruction to determine if the instruction is one that should require syncing on the basis of said determinations and said criteria.

The present invention provides, in a processor having means for issuing instructions, means for executing instructions, and a memory data store for storing data within said processor, a apparatus for restoring a prior machine state in a processor at any instruction boundary comprising:
means for allocating an instruction serial number for each issued instruction;
means for storing machine state information in a checkpoint within said data store in said processor prior to execution only for a first predetermined set of executable instructions that alter machine state, said predetermined set of executable instructions that alter machine state being fewer than the set of all of the executable instructions that alter machine state implemented within said processor;
means for identifying the instruction causing said fault, and if multiple exceptions or faults occurred simultaneously then identifying the in order sequentially earliest instruction causing a fault or exception;
means for restoring said machine state information stored prior to execution of said faulting instruction and decrementing the processor program counter to the instruction serial number of said faulting instruction to restore said prior machine state if said earliest faulting instruction is a checkpointed instruction;
means for backtracking said processor to an earlier state if one of said predetermined executable instructions for which a machine state information has been stored is sequentially interposed between said faulting instruction and the last issued instruction;
said means for backtracking including means for backing-up said processor to the closest checkpoint to said faulting instruction sequentially after said faulting instruction;
means for backstepping said processor to restore processor state to the state that existed just prior to execution of said faulting instruction by updating register resources;
and means for decrementing the processor program counter to the instruction serial number of said faulting instruction.

There is provided an apparatus as in the above paragraph wherein said means for storing machine state information in said data store within said processor comprises means for storing a register rename map for said machine state.

There is provided an apparatus as in the above paragraphs further comprising means for restoring said machine state by restoring said state from said register rename map.

There is provided an apparatus as in the above paragraphs further comprising means for synchronizing said processor prior to executing any one of a second predetermined set of executable instructions that involve a speculative instruction sequence.

There is provided an apparatus as in the above paragraphs wherein said means for syncing the machine comprising:
means for temporarily suspending issue/execution of said instruction requiring machine synchronization prior to execution;
means for delaying issuance of all pending instructions in the execution stage until previously issued instructions have been committed and retired; and
means for initiating issuance and execution of said syncing type instructions after said processor arrives at machine synchronization.

The present invention provides, in a processing unit for executing instructions issued by an instruction issue unit, said processor having an internal data store for storing data, an instruction issue unit means for issuing instructions, an instruction decode unit , an instruction execution unit means for executing instructions, and an instruction issue and execution scheduler, and a data forward distribution bus communicating execution results from said execution units to other units within said processing unit, and said processor communicating with an external memory and supporting a predefined number of trap levels for taking nested traps each having a corresponding trap level, a method for increasing instruction execution efficiency comprising the steps of:
tracking speculative instruction execution in a processor;
tracking and aggressively scheduling instructions referencing memory, including load and store instructions, that maintains a precise exception model;
checkpointing instructions in said processing unit to reduce checkpointed state while maintaining precise architectural state;
bounding exception handling for exceptions occurring in said execution means;
simultaneously monitoring the execution results of a plurality of speculatively issued predicted instructions;
detecting floating point exceptions;
taking and returning from traps speculatively; and
restoring a prior machine state in a processor at any instruction boundary upon detecting a condition requiring processor state restoration.

There is provided a method as in the above paragraph wherein said step of tracking speculative instruction execution in said processor comprising the steps of:
defining a data structure in the data store;
assigning an identification tag to each instruction issued by the issue unit;
associating an activity bit stored in the data structure for each issued instruction based on the assigned tag;
setting the activity bit in the data structure when the instruction is issued; and
clearing the activity bit in the data structure when the instruction completes execution without error.

There is provided a method as in the above paragraphs wherein said step of tracking and aggressively scheduling instructions referencing memory, including load and store instructions, that maintains a precise exception model comprises the steps of:
issuing a plurality of instructions for execution by said processor;
identifying which of said plurality of issued instructions are speculatively issued instructions;
storing a speculative execution indicator associated with each said identified speculatively issued instruction in said internal data store;
determining which of said issued instructions reference external memory;
storing a memory referencing instruction indicator associated with each said determined memory referencing instruction in said internal data store;
monitoring execution activity status of each one of said plurality of instructions after said instructions are issued;
ascertaining whether any error conditions arose during execution for each issued instruction and generating an error condition indicator indicating an error status for each instruction experiencing an error during execution;
tracking execution status of said issued instructions; and
scheduling a particular one of said determined memory referencing instructions for execution out-of-order ahead of a sequentially earlier issued non-memory referencing instructions based on the execution status of other issued but unexecuted instructions, said execution status including identification of the non-memory referencing instruction as being a speculative issued instruction and identification of the non-memory referencing instruction as having a predetermined execution completion status.

There is provided a method as in the above paragraphs wherein said step of checkpointing instructions in said processor to reduce checkpointed state while maintaining precise architectural state for said CPU comprises the steps of:
pre-identifying instructions that may modify architectural state when executed in said CPU before said instructions are issued and executed;
pre-selecting particular ones of said identified instructions for execution in a special execution mode without checkpointing architectural state for said particular instructions before execution based on predetermined selection criteria;
checkpointing architectural state for said identified instructions other than said preselected particular ones prior to execution; and
executing said identified instructions, including executing said particular ones of said instructions in said special mode.

There is provided a method as in the above paragraphs wherein said step of bounding exception handling for exceptions occurring in said execution means comprises the steps of:
establishing a predetermined threshold for the number of occurrences of a specified event that defines a time-out condition and storing said threshold in a first data store within said CPU;
counting occurrences of a said specified event in a counter within said CPU and storing said number of occurrences as a count in a second data store within said CPU;
comparing said count with said threshold;
forming a time-out checkpoint when said count is equal to or greater than said time-out condition.

There is provided a method as in the above paragraphs wherein said step of simultaneously monitoring the execution results of a plurality of speculatively issued predicted instructions comprises the steps of:
providing a watchpoint unit having a plurality of watchpoint registers for storing watchpoint data coupled to receive execution result signals from said execution unit over said data forward distribution within the processor;
allocating a watchpoint register for storing watchpoint data including a predicted condition data result for each said speculatively issued predicted instruction, said predicted condition data result identifying the predicted value of a condition on which the control flow transfer direction depends and on the basis of which the speculatively issued predicted instruction was speculatively issued;
monitoring execution result signals for said speculatively issued predicted instructions that are transmitted over said data forward busses;
detecting occurrence of predetermined events based on said stored watchpoint data and execution result signals including an actual known condition data result signal and predetermined rules, said actual known condition data result signal identifying the actual value of a condition on which the control flow transfer direction of said speculatively issued predicted instruction should be determined;
comparing said watchpoint data stored in said watchpoint register for one of said speculatively issued predicted instructions with said result signals arriving over said data forward busses pertaining to said speculatively issued instruction to determine if said signals match or do not match, a match indicating that said speculatively issued predicted instruction was correctly predicted and a non-match indicating that said speculatively issued predicted instruction was mispredicted; and
if said comparing indicates that said prediction was a misprediction, then recovering said central processing unit to an earlier central processing unit state so that instructions executed on the basis of said misprediction are undone.

There is provided a method as in the above paragraphs wherein said step of detecting floating point exceptions comprises the steps of:
issuing instructions in program control order for execution, the issued instructions including floating point instructions and non-floating point instructions;
executing the issued instructions such that at least the floating point instructions may be executed out of program control order;
providing a data storage structure including storage elements, each issued instruction corresponding to one of the storage elements, each storage element having a floating point instruction identifying field and a floating point trap type field;
writing, for each issued instruction, data in the floating point instruction identifying field of the corresponding storage element which indicates whether or not the corresponding issued instruction is a floating point instruction;
writing, for each issued floating point instruction which causes during execution one or more floating point execution exceptions that will result in a corresponding one of a plurality of predefined types of floating point execution traps, data in the floating point trap type field of the corresponding storage element which identifies the one of the predefined types of floating point execution traps that will result;
retiring each issued instruction which does not cause an execution exception during execution and for which all issued instructions preceding it in program control order have been retired;
when a first one of the predefined execution exceptions is caused by an issued instruction, continuing execution of issued instructions and engaging in execution trap sequencing by continuing to retire issued instructions until an issued instruction that cannot be retired is encountered, the issued instruction that cannot be retired being one of (a) the issued instruction that caused the first execution exception, and (b) an issued instruction that was issued earlier than the issued instruction that caused the first execution exception but which caused a second execution exception occurring later than the first execution exception;
providing a floating point status register having a floating point trap type field; and
writing data to the floating point trap type field of the floating point status register which identifies the type of floating point execution trap identified by the data in the floating point trap type field of the storage element corresponding to the instruction that cannot be retired when the data in the floating point identifying field of the storage element corresponding to the instruction that cannot be retired indicates that the instruction that cannot be retired is a floating point instruction.

There is provided a method as in the above paragraphs wherein said step of taking and returning from traps speculatively comprises the steps of:
forming checkpoints;
backing up to the checkpoints;
taking traps;
returning from traps;
providing registers having contents that define the state of the data processor each time a trap is taken;
providing a trap stack data storage structure that has a greater number of trap stack storage entries than there are trap levels;
maintaining a current availability list of the trap stack storage entries that are currently available for mapping to one of the trap levels and identifying, each time a trap is taken, a next one of the currently available trap stack storage entries for mapping to the corresponding one of the trap levels;
writing, for each trap taken, the contents of the registers to the next one of the currently available trap stack storage entries;
maintaining a current mapping of each trap level to one of the trap stack storage entries by replacing, each time a trap is taken, an old mapping of the corresponding trap level to one of the trap stack storage entries with a current mapping of the corresponding trap level to the next one of the currently available trap stack storage entries;
maintaining an unavailability list of each trap stack storage entry not currently mapped to one of the trap levels by the current mappings but unavailable for mapping to one of the trap levels by adding to the unavailability list, each time a trap is taken, the trap stack storage entry that was mapped to the corresponding trap level by the old mapping and removing from the unavailability list, each time a taken trap can no longer be undone, the trap stack storage entry that was mapped to the corresponding trap level by the old mapping;
adding each trap stack storage entry removed from the unavailability list to the currently availability list; and
providing a checkpoint storage unit that includes checkpoint storage entries, each formed checkpoint having a corresponding checkpoint storage entry,
storing, for each formed checkpoint, the current mappings and the current availability list in the corresponding checkpoint storage entry;
for each backup to a checkpoint, replacing the current mappings with the mappings stored in the corresponding checkpoint storage entry and replacing the current availability list with the availability list stored in the corresponding checkpoint storage entry.

There is provided a method as in the above paragraphs wherein said step of restoring a prior machine state in a processor at any instruction boundary upon detecting a condition requiring processor state restoration comprises the steps of:
allocating an instruction serial number for each issued instruction;
storing machine state information in a checkpoint within a data store in said processor prior to execution only for a first predetermined set of executable instructions that alter machine state, said predetermined set of executable instructions that alter machine state being fewer than the set of all of the executable instructions that alter machine state implemented within said processor;
identifying the instruction causing said fault, and if multiple exceptions or faults occurred simultaneously then identifying the in order sequentially earliest instruction causing a fault or exception;
if said earliest faulting instruction is a checkpointed instruction, then restoring said machine state information stored prior to execution of said faulting instruction and decrementing the processor program counter to the instruction serial number of said faulting instruction to restore said prior machine state;
if one of said predetermined executable instructions for which a machine state information has been stored is sequentially interposed between said faulting instruction and the last issued instruction, then (i) first, backing-up said processor to the closest checkpoint to said faulting instruction sequentially after said faulting instruction, and (ii) second, backstepping said processor to restore processor state to the state that existed just prior to execution of said faulting instruction by updating register resources and (iii) decrementing the processor program counter to the instruction serial number of said faulting instruction.

The present invention provides, in a data processor, a trap stack unit for enabling the data processor to speculatively take and return from nested traps, the data processor having a predefined number of trap levels for nesting the traps such that, each time one of the traps is taken, the data processor assigns to the trap a corresponding one of the trap levels, the data processor having registers that, each time one of the traps is taken, store contents that define the state of the data processor at the time the trap was taken, the data processor being capable of forming checkpoints and backing up to the checkpoints, the trap stack unit comprising:
a trap stack data storage structure that has a predefined number of trap stack storage entries, the number of trap stack storage entries being greater than the number of trap levels;
a freelist unit that maintains a current availability list of the trap stack storage entries that are currently available for mapping to one of the trap levels, the freelist unit identifying, each time one of the traps is taken, a next one of the currently available trap stack storage entries for mapping to the corresponding trap level;
read/write logic that, each time one of the traps is taken, writes the contents of the registers to the identified next currently available trap stack storage entry;
rename mapping logic that maintains a current trap level mapping of each of the trap levels to one of the trap stack storage entries, the rename mapping logic replacing, each time one of the traps is taken, an old trap level mapping of the corresponding trap level to one of the trap stack storage entries with a new trap level mapping of the corresponding trap level to the identified next currently available trap stack storage entry; the read/write logic reading, each time one of the traps is returned from, the contents of the trap stack storage entry mapped to the corresponding trap level by the current trap level mappings;
a resource reclaim unit that maintains an unavailability list of each of the trap stack storage entries not currently mapped to one of the trap levels by the current trap level mappings but unavailable for mapping to one of the trap levels, the resource reclaim unit adding to the unavailability list, each time one of the traps is taken, the trap stack storage entry that was mapped to the corresponding trap level by the replaced old trap level mapping, the resource reclaim unit removing from the unavailability list, each time one of the traps can no longer be undone, the trap stack storage entry that was mapped to the corresponding trap level by the replaced old trap level mapping;
the freelist unit adding to the current availability list, each time one of the traps can no longer be undone, the trap stack storage entry removed from the unavailability list; and
a checkpoint storage unit that has checkpoint storage entries, each of the not retired checkpoints having a corresponding checkpoint storage entry, the checkpoint storage unit storing, for each of the checkpoints, the current trap level mappings and the current availability list in the corresponding checkpoint storage entry at the time the checkpoint was formed;
the rename mapping logic replacing, each time one of the checkpoints is backed up to, the current trap level mappings with the stored mappings in the corresponding checkpoint storage entry;
the freelist unit replacing, each time one of the checkpoints is backed up to, the current availability list with the stored availability list in the corresponding checkpoint storage entry.

A trap stack unit as in the above paragraph wherein:
the data processor has an execution unit that executes instructions specifying a specific one of the registers out of order so that, each time one of the traps is taken, the contents of the specific register may not yet be available therein, the execution unit forwarding, each time the contents of the specific register are available for storage therein, the contents of the specific register;
the trap stack unit further comprises grabbing logic to determine, each time one of the traps is taken while the contents of the specific register is not yet available therein, when the contents of the specific register are being forwarded; and
the read/write logic writing, each time one of the traps is taken while the contents of the specific register is not yet available therein, the forwarded contents of the specific register to the trap stack storage entry that was the identified next currently available trap stack storage entry at the time the trap was taken when the grabbing logic determines that the contents of the specific register are being forwarded.

A trap stack unit as in the above paragraphs wherein the grabbing logic, each time one of the traps is taken while the contents of the specific register is not yet available therein, indicates whether the contents of the specific register is not yet available therein so that the data processor will not return from the trap until the grabbing logic indicates that the contents of the specific register has become available therein.

A trap stack unit as in the above paragraphs wherein, each time one of the traps is taken, the freelist unit indicates whether at least one of the trap stack storage entries is currently available for mapping to the corresponding trap level so that the data processor will not take the trap until the freelist unit indicates that at least one of the trap stack storage entries is available for mapping to the corresponding trap level.

A trap stack unit as in the above paragraphs wherein:
the data processor is capable of retiring the checkpoints and forms, each time one of the traps is taken, a corresponding one of the checkpoints for the trap so that, when the checkpoint for the trap is retired, the trap can no longer be undone;
the resource reclaim unit includes a resource reclaim data storage structure that has resource reclaim storage entries, each of the checkpoints for the traps corresponding to one of the resource reclaim storage entries, the resource reclaim unit storing, each time one of the checkpoints for one of the traps is formed, data in the corresponding resource reclaim storage entry that identifies the trap stack storage entry that was mapped to the corresponding trap level by the replaced old trap level mapping;
the freelist unit adding to the current availability list, each time one of the checkpoints for one of the traps is retired, the storage entry identified by the data in the corresponding resource reclaim storage entry.

A trap stack unit as in the above paragraphs wherein:
the data processor has a register file and rename unit that comprises physical registers, the specific register being an architected register so that the physical registers can be mapped to the specific register and the instructions specifying the specific register can be executed out of order, the register file and rename unit maintaining a current register mapping of the specific register to one of the physical registers with a tag that identifies the physical register and is provided to the execution unit, the register file and rename unit replacing, each time one of the instructions specifying the specific register requires a new register mapping of the specific register to one of the physical registers, an old register mapping of the specific register to one of the physical registers with the new register mapping;
the execution unit, each time the contents of one of the physical registers mapped to the architected register are available for storage therein, forwarding the contents and the tag of the physical register;
the grabbing logic comprising:
   current match logic that, each time one of the traps is taken while the contents of the physical register mapped to the specific register by the current mapping are not yet available therein but the contents and the tag of one of the physical registers are being forwarded, compares the tag being forwarded with the tag of the physical register mapped to the specific register by the current register mapping to determine if there is a current match;
   later match logic that, each time one of the traps is taken, stores the tag of the physical register mapped to the specific register by the current register mapping and that, each time the contents and the tag of one of the physical registers are being forwarded, compares the tag being forwarded with the stored tag to determine if there is a later match;
   the read/write logic writing, each time that there is a current match, the contents being forwarded to the identified next currently available trap stack storage entry and writing, each time that there is a later match, the contents being forwarded to the trap stack storage entry that was the identified next currently available trap stack storage entry at the time the trap was taken.

The present invention provides, in a data processor, a trap stack unit for enabling the data processor to speculatively take and return from nested traps, the data processor having a predefined number of trap levels for nesting the traps such that, each time one of the traps is taken, the data processor assigns to the trap a corresponding one of the trap levels, the data processor having registers that, each time one of the traps is taken, store contents that define the state of the data processor at the time the trap was taken, the data processor being capable of forming checkpoints and backing up to the checkpoints, the trap stack unit comprising:
a trap stack data storage structure that has a predefined number of trap stack storage entries, the number of trap stack storage entries being greater than the number of trap levels;
a freelist unit that maintains a current availability list of the trap stack storage entries that are currently available for mapping to one of the trap levels, the freelist unit identifying, each time one of the traps is taken, a next one of the currently available trap stack storage entries for mapping to the corresponding trap level;
read/write logic that, each time one of the traps is taken, writes the contents of the registers to the identified next currently available trap stack storage entry;
rename mapping logic that maintains a current trap level mapping of each of the trap levels to one of the trap stack storage entries, the rename mapping logic replacing, each time one of the traps is taken, an old trap level mapping of the corresponding trap level to one of the trap stack storage entries with a new trap level mapping of the corresponding trap level to the identified next currently available trap stack storage entry;
the read/write logic reading, each time one of the traps is returned from, the contents of the trap stack storage entry mapped to the corresponding trap level by the current trap level mappings;
a resource reclaim unit that maintains an unavailability list of each of the trap stack storage entries not currently mapped to one of the trap levels by the current trap level mappings but unavailable for mapping to one of the trap levels, the resource reclaim unit adding to the unavailability list, each time one of the traps is taken, the trap stack storage entry that was mapped to the corresponding trap level by the replaced old trap level mapping, the resource reclaim unit removing from the unavailability list, each time one of the traps can no longer be undone, the trap stack storage entry that was mapped to the corresponding trap level by the replaced old trap level mapping;
the freelist unit adding to the current availability list, each time one of the traps can no longer be undone, the trap stack storage entry removed from the unavailability list; and
a checkpoint storage unit that has checkpoint storage entries, each of the not retired checkpoints having a corresponding checkpoint storage entry, the checkpoint storage unit storing, for each of the checkpoints, the current trap level mappings and the current availability list in the corresponding checkpoint storage entry at the time the checkpoint was formed;
the rename mapping logic replacing, each time one of the checkpoints is backed up to, the current trap level mappings with the stored mappings in the corresponding checkpoint storage entry;
the freelist unit replacing, each time one of the checkpoints is backed up to, the current availability list with the stored availability list in the corresponding checkpoint storage entry.

A trap stack unit as in the above paragraph wherein:
the data processor has an execution unit that executes instructions specifying a specific one of the registers out of order so that, each time one of the traps is taken, the contents of the specific register may not yet be available therein, the execution unit forwarding, each time the contents of the specific register are available for storage therein, the contents of the specific register;
the trap stack unit further comprises grabbing logic to determine, each time one of the traps is taken while the contents of the specific register is not yet available therein, when the contents of the specific register are being forwarded; and
the read/write logic writing, each time one of the traps is taken while the contents of the specific register is not yet available therein, the forwarded contents of the specific register to the trap stack storage entry that was the identified next currently available trap stack storage entry at the time the trap was taken when the grabbing logic determines that the contents of the specific register are being forwarded.

A trap stack unit as in the above paragraphs wherein the grabbing logic, each time one of the traps is taken while the contents of the specific register is not yet available therein, indicates whether the contents of the specific register is not yet available therein so that the data processor will not return from the trap until the grabbing logic indicates that the contents of the specific register has become available therein.

A trap stack unit as in the above paragraphs wherein, each time one of the traps is taken, the freelist unit indicates whether at least one of the trap stack storage entries is currently available for mapping to the corresponding trap level so that the data processor will not take the trap until the freelist unit indicates that at least one of the trap stack storage entries is available for mapping to the corresponding trap level.

A trap stack unit as in the above paragraphs wherein:
the data processor is capable of retiring the checkpoints and forms, each time one of the traps is taken, a corresponding one of the checkpoints for the trap so that, when the checkpoint for the trap is retired, the trap can no longer be undone;
the resource reclaim unit includes a resource reclaim data storage structure that has resource reclaim storage entries, each of the checkpoints for the traps corresponding to one of the resource reclaim storage entries, the resource reclaim unit storing, each time one of the checkpoints for one of the traps is formed, data in the corresponding resource reclaim storage entry that identifies the trap stack storage entry that was mapped to the corresponding trap level by the replaced old trap level mapping;
the freelist unit adding to the current availability list, each time one of the checkpoints for one of the traps is retired, the storage entry identified by the data in the corresponding resource reclaim storage entry.

A trap stack unit as in the above paragraphs wherein:
the data processor has a register file and rename unit that comprises physical registers, the specific register being an architected register so that the physical registers can be mapped to the specific register and the instructions specifying the specific register can be executed out of order, the register file and rename unit maintaining a current register mapping of the specific register to one of the physical registers with a tag that identifies the physical register and is provided to the execution unit, the register file and rename unit replacing, each time one of the instructions specifying the specific register requires a new register mapping of the specific register to one of the physical registers, an old register mapping of the specific register to one of the physical registers with the new register mapping;
the execution unit, each time the contents of one of the physical registers mapped to the architected register are available for storage therein, forwarding the contents and the tag of the physical register;
the grabbing logic comprising:
   current match logic that, each time one of the traps is taken while the contents of the physical register mapped to the specific register by the current mapping are not yet available therein but the contents and the tag of one of the physical registers are being forwarded, compares the tag being forwarded with the tag of the physical register mapped to the specific register by the current register mapping to determine if there is a current match;
   later match logic that, each time one of the traps is taken, stores the tag of the physical register mapped to the specific register by the current register mapping and that, each time the contents and the tag of one of the physical registers are being forwarded, compares the tag being forwarded with the stored tag to determine if there is a later match;
   the read/write logic writing, each time that there is a current match, the contents being forwarded to the identified next currently available trap stack storage entry and writing, each time that there is a later match, the contents being forwarded to the trap stack storage entry that was the identified next currently available trap stack storage entry at the time the trap was taken..

The present invention provides a floating point exception unit for use in an out of program control order execution data processor, the data processor issuing instructions in program control order for execution, the issued instructions including floating point instructions and non-floating point instructions, the data processor executing the issued instructions wherein at least the floating point instructions may be executed out of program control order, the data processor retiring each of the issued instructions which does not cause an execution exception during execution and for which all ones of the issued instructions preceding it in program control order have been retired, the data processor, when a first execution exception is caused by one of the issued instructions, continuing execution of ones of the issued instructions and engaging in execution trap sequencing by continuing to retire ones of the issued instructions until it encounters one of the issued instructions that cannot be retired, the issued instruction that cannot be retired being one of (a) the issued instruction that caused the first execution exeception, and (b) an issued instruction that was issued earlier than the issued instruction that caused the first execution exception but which caused a second execution exception occurring later than the first execution exception, the data processor including a floating point status register having a floating point trap type field, the floating point exception unit comprising:
a data storage structure including storage elements, each of the issued instructions corresponding to one of the storage elements, each of the storage elements having a floating point instruction identifying field and a floating point trap type field;
first logic to write, for each of the issued instructions, data in the floating point instruction identifying field of the corresponding one of the storage elements which indicates whether or not the issued instruction is a floating point instruction;
second logic to write, for each of the issued floating point instructions which causes during execution one or more floating point execution exceptions that will result in a corresponding one of a plurality of predefined types of floating point execution traps, data in the floating point trap type field of the corresponding one of the storage elements which identifies the one of the predefined types of floating point execution traps that will result;
wherein the data processor writes, when it engages in execution trap sequencing and encounters one of the issued instructions that cannot be retired, data to the floating point trap type field of the floating point status register which identifies the type of floating point execution trap identified by the data in the floating point trap type field of the one of the storage elements corresponding to the instruction that cannot be retired when the data in the floating point identifying field of the corresponding one of the storage elements indicates that the instruction that cannot be retired is a floating point instruction.

The floating point exception unit of the above paragraph wherein:
each of the storage elements of the data storage structure also has a current floating point execution exception field;
the floating point exception unit further includes third logic to write, for each of the issued floating point instructions that causes during execution one or more specific floating point execution exceptions that will result in a specific one of the predefined types of floating point execution traps, data to the current floating point execution exception field of the corresponding one of the storage elements which identifies the one or more of the specific floating point execution exceptions that were caused;
the floating point status register also has a current floating point execution exception field; and
the data processor also writes, when it engages in execution trap sequencing and encounters one of the issued instructions that cannot be retired, data to the the current floating point execution exception field of the floating point status register which identifies the one or more of the specific floating point execution exceptions identified by the data in the current floating point execution exception field of the one of the storage elements corresponding to the issued instruction that cannot be retired when (a) the data in the floating point instruction identifying field of the one of the storage elements corresponding to the issued instruction that cannot be retired indicates that the issued instruction that cannot be retired is a floating point instruction, and (b) the data in the floating point trap type field of the one of the storage elements corresponding to the issued instruction that cannot be retired identifies the specific one of the predefined types of floating point execution traps.

The floating point exception unit of the above paragraphs wherein:
the data processor also writes, for each of the issued floating point instructions that does not cause during execution any of the specific floating point execution exceptions, data to the current floating point execution exception field of the corresponding one of the storage elements which indicates that none of the specific floating point execution exceptions were caused;
the floating point status register includes an accrued exception field and a trap enable mask field, the trap enable mask field providing selective masking of any combination of the specific floating point execution exceptions;
the data processor also retires each of the issued floating point instructions which causes one or more masked ones of the specific floating point execution exceptions and no other floating point execution exceptions during execution and for which all ones of the issued instructions preceding it in program control order have been retired;
during each current machine cycle in which ones of the issued instructions are retired, the data processor writes data to the accrued exception field of the floating point status register which represents an accrual of (a) the specific floating point execution exceptions identified by the data in the current floating point execution exception fields of the ones of the storage elements corresponding to the ones of the issued instructions that are being retired in the current machine cycle and for which the data in the floating point instruction identifying fields of the corresponding ones of the storage elements indicates are floating point instructions and (b) the specific floating point execution exceptions identified by current data in the accrued floating point execution exception field of the floating point status register;
during each current machine cycle in which ones of the issued instructions are retired, the data processor also writes data to the current exception field of the floating point status register which identifies those of the specific floating point execution exceptions identified by the data in the current floating point execution exception field of the one of the storage elements corresponding to the last one of the issued instructions retired in the current machine cycle for which the data in the floating point instruction identifying field of the corresponding one of the storage elements indicates that it is a floating point instruction;
during each current machine cycle in which instructions are retired, the writing means further writing data to the trap type field of the floating point status register which indicates that none of the predefined types of floating point execution traps will result for the last one of the issued instructions retired in the current machine cycle for which the data in the floating point instruction identifying field of the corresponding one of the storage elements indicates that it is a floating point instruction.

The floating point exception unit of the above paragraphs wherein:
- the issued instructions comprise SPARC instructions;
the floating point status register comprises a SPARC floating point status register;
the specific one of the predefined types of floating point execution traps comprises an IEEE_754_exception trap; and
the specific floating point execution exceptions comprise IEEE_754 exceptions.

## Claims

1. In a central processing unit (51) for executing instructions issued by an instruction issue unit (61), said processing unit (51) having a data store, an instruction issue unit (61), an instruction execution unit adapted to execute said instructions speculatively and out of sequential order, and an instruction issue and execution scheduler; a method for tracking speculative instruction execution and maintaining precise processing unit (51) state at any check-pointed or non-check-pointed instruction boundary in said processing unit (51), said method comprising the steps of:
defining a data structure (312, 324) in the data store, the data structure comprising a circular data structure having n addressable locations 0, 1, 2, ..., n-2, n-1, where an addressable location n-1 is logically adjacent to an addressable location 0, each addressable location corresponds to a particular instruction identification tag that identifies one of the issued instructions, and an activity bit is set to an addressable location, the activity bit identifying a status of an instruction identified by the particular instruction identification tag corresponding to the addressable location as active status or inactive status;
assigning a sequential serial number as said instruction identification tag to each particular instruction issued by the instruction issue unit when the instruction is issued, wherein the step of assigning said instruction identification tag to each particular issued instruction issued by the instruction issue unit comprises assigning an instruction identification tag to a unique one of the n addressable locations and advancing an issued serial number pointer (314) by one for each instruction issued, said issued serial number pointer thus always pointing to the serial number of the last issued instruction;
setting the activity bit stored in an addressable location of the data structure corresponding to a particular instruction to a first state to identify the particular instruction as an active instruction when the particular instruction has been dispatched and becomes currently active in the processing unit (51), a dispatched instruction being an issued instruction but not all issued instructions being dispatched instructions;
detecting whether an execution of an instruction is completed or not, and any error condition associated with the instruction in which the execution is completed in the execution unit for each issued instruction;
clearing the activity bit stored in an addressable location of the data structure (312, 324) corresponding to a particular instruction to a second state to identify the particular instruction as an inactive instruction, when an execution of the particular instruction is completed normally without the occurrence of any one of a predetermined set of execution error conditions;
maintaining a plurality of pointers to selected ones of the n addressable circular data structure locations, and moving the pointers to identify different addresses in response to the instruction activity bit status changes; and
tracking machine resource availability information based on the issue, execution, completion and retirement status of instructions in said processing unit and communicating said information to said instruction issue unit.

2. A method as in claim 1, wherein:
if the execution of the instruction has completed without an error condition then updating the activity status data including the activity bits in the associated storage location to indicate that the executed instruction is inactive, and
if the execution of the instruction has completed with an error condition or the execution of the instruction has not completed then retaining the original activity status data identifying the particular instruction as active in the associated storage location; and the method further comprising:
communicating instruction activity status data to the instruction issue scheduler so that said instruction issue scheduler can schedule further instructions for execution without concern for the status of previously issued instructions which are inactive at that time.

3. A method as in claim 2, further comprising the steps of:
communicating the error condition associated with execution completion of any of the instructions to an error handler unit in the processing unit; and
modifying instruction issue and execution sequence scheduling in response to the communicated error condition.

4. A method as in claim 1, 2 or 3, wherein the identification tag is a numerical serial number and the step of assigning an identification tag with its associated activity bit to each issued instruction comprises assigning monotonically increasing serial numbers, modulo-n, to subsequently issued instructions as each instruction is issued, so that after n-1 serial numbers have been assigned to issued instructions the serial numbers are reassigned in circular manner and the next issued instruction after n-1 is assigned serial number 0, and wherein an instruction issued earlier in time is an older instruction than an instruction issued later in time, and the serial number associated with the earlier instruction is an older serial number, independent of the numerical magnitude of the serial number.

5. A method as in claim 4, further comprising the steps of:
tracking the execution status of each issued instruction based on the state of its associated activity bit;
evaluating each activity bit in the circular data structure and identifying the oldest serial number associated with an active instruction and thereby determining the oldest issued and still active instruction;
committing an instruction having a serial number older than the serial number associated with said oldest active instruction so that said instruction having an older serial number cannot be undone; and
reclaiming processor resources in addition to the instruction identification tag and activity bits allocated to the committed instruction.

6. A method as in any preceding claim, wherein the predetermined set of execution error conditions are selected from the set consisting of an instruction execution error, an exception error condition, a hardware fault, and a branch instruction misprediction.

7. A method as in any preceding claim, wherein the step of maintaining a plurality of pointers comprises the steps of:
evaluating the data stored in the addressable storage locations to determine instruction status for each of a plurality of issued instructions;
computing a plurality of different processor condition indicators based on the data stored in the addressable storage locations, each different processor condition indicator identifying an instruction with its associated identification tag that has attained a particular execution status selected from a set of predetermined execution statuses; and
storing the processor condition indicators as the pointers in a third data store within said processing unit.

8. A method as in any preceding claim, wherein the step of moving the pointers in response to the instruction activity status changes comprises the steps of:
repeating said evaluating, computing of different processor condition indicators, and storing steps at predetermined time intervals to update said processor condition indicators.

9. A method as in any preceding claim, wherein the set of predetermined execution statuses includes the last issued instruction, the last committed instruction, and the last retired instruction.

10. A method as in claim 9, wherein the set of predetermined execution statuses further includes the last non-memory referencing instruction and the last predicted branch instruction.

11. A method as in claim 10, wherein said plurality of pointers include:
a last issued instruction pointer that points to the last issued instruction, and
a last committed instruction pointer that points to the last committed instruction which is the last instruction that has completed without error and for which all sequentially earlier issued instructions have completed without error.

12. A method as in claim 11, wherein said plurality of pointers further include:
a last reclaimed instruction pointer that points to the last reclaimed instruction which is the last instruction for which allocated processor resources have been reclaimed.

13. A method as in claim 12, wherein each said identification tag is one of a monotonically increasing sequence of numerical serial numbers (modulo-n) and said addressable storage locations in said data structure are addressed by said serial numbers.

14. A method as in claim 13, wherein advancement of said pointers to higher valued serial numbers is accomplished with modulo-n arithmetic so that incrementing a pointer from address n-1 places said pointer at address 0.

15. A method as in claim 11, wherein said step of maintaining said pointers by moving said pointers in response to the instruction activity status changes comprises the steps of:
advancing said issued instruction pointer forward toward higher instruction serial numbers (modulo-n) by one serial number for every instruction issued;
advancing said committed instruction pointer forward toward higher instruction serial numbers (modulo-n) based on a serial number sequential evaluation of the state of the active-bit for each storage location and first predetermined rules but not advancing said second pointer beyond said first pointer; and
advancing said retired instruction pointer forward toward higher instruction serial numbers (modulo-n) based on a serial number sequential evaluation of the state of the active-bit for each location and second predetermined rules but not advancing said third pointer beyond said second pointer.

16. A method as in claim 15, wherein said first predetermined rules include:
at every predetermined number of machine clock cycles, advancing said committed instruction pointer forward to a new address location no higher than the highest data storage location address for which all activity status bits in lower address locations are inactive "0" but no higher than the address of said issued instruction pointer at that machine cycle.

17. A method as in claim 15, wherein said second predetermined rules include: at every predetermined number of machine clock cycles, advancing said last reclaimed instruction pointer forward to a new address location no higher than the highest data storage location address for which all activity status bits in lower address locations are inactive "0" but no higher than the address of said committed instruction pointer at that machine cycle.

18. A method as in claim 12, wherein said pointers are moved as a result of instruction issue, instruction commitment, and instruction retirement.

19. A method as in claim 12, wherein said committed instruction and last reclaimed instruction pointers are not moved past instructions for which any one or more of exceptions, branch instruction mispredictions, and error conditions are detected.

20. A method as in claim 19, further including tracking instruction status and machine resources allocated to each instruction by moving said plurality of machine pointers in response to instruction activity Status as ACTIVE or INACTIVE and predetermined rules; and
said plurality of machine pointers comprise:
a last issued instruction pointer that points to the last issued instruction;
a last committed instruction pointer that points to the last committed instruction, which instruction is the last instruction that has completed without error and for which all in-order sequentially earlier issued instructions have completed without error; and
a retire and reclaim pointer that points to the last instruction for which all machine resources allocated by the processing unit to the instruction and all in-order sequentially earlier instructions have been reclaimed.

21. A method as in claim 20, wherein said step of tracking instruction status and machine resources allocated to each instruction by moving said plurality of machine pointers comprises the steps of:
initializing said first, second, and third pointers to the same initial storage location address prior to issuing a first instruction;
advancing said issued instruction pointer forward toward higher instruction serial numbers (modulo-n) by one serial number for every instruction issued;
advancing said committed instruction pointer forward toward higher instruction serial numbers (modulo-n) based on a serial number sequential evaluation of the State of the active-bit for each storage location and first predetermined rules but not advancing said second pointer beyond said first pointer; and
advancing said retired instruction pointer forward toward higher instruction serial numbers (modulo-n) based on a serial number sequential evaluation of the State of the active-bit for each location and second predetermined rules but not advancing said third pointer beyond said second pointer; and
wherein said advancing of said pointers to higher valued serial numbers is accomplished in said circular data structure with modulo-n arithmetic so that incrementing any of said issued instruction , committed instruction, or retired instruction pointers from address n-1 places said pointer at address n, and incrementing said pointer from address n places said pointer at address 0.

22. A method as in claim 21, wherein said first predetermined rules include:
at every predetermined number of machine clock cycles, advancing said committed instruction pointer forward to a new address location no higher than the highest data storage location address for which all activity status bits in lower address locations are inactive "0" but no higher than the address of said first pointer at that machine cycle; and
wherein said second predetermined rules include:
at every predetermined number of machine clock cycles, advancing said retired pointer forward to a new address location no higher than the highest data storage location address for which all activity status bits in lower address locations are inactive but no higher than the address of said second pointer at that machine cycle.

23. A method as in claim 22, wherein said new address locations are determined based on boolean operations of said status activity bits.

24. A method as in claim 22, wherein said first predetermined rules further comprise the step of limiting the number of addresses said committed instruction pointer can be advanced during said predetermined number of machine cycles to a first maximum number of addresses; and wherein said second predetermined rules further comprise the step of limiting the number of addresses said retired pointer can be advanced during said predetermined number of machine cycles to a second maximum number of addresses wherein said second maximum number of addresses is less than said first maximum number of addresses.

25. A method as in claim 22, wherein said committed instruction pointer and said retired pointer are not moved past instructions for which exceptions, branch instruction mispredicts, or error conditions are detected.

26. An apparatus for tracking speculative instruction execution in a processing unit (51) that executes instructions issued by an instruction issue unit (61), said apparatus comprising:
a data storage means coupled with said processing unit (51),
the data storage means comprising a circular data structure having n addressable locations 0, 1, 2, ..., n-2, n-1, where an addressable location n-1 is logically adjacent to an addressable location 0, each addressable location corresponds to a particular instruction identification tag that identifies one of the issued instructions, and an activity bit is set to an addressable location, the activity bit identifying a status of an instruction identified by the particular instruction identification tag corresponding to the addressable location as active status or inactive status;
an instruction execution unit adapted to execute said issued instructions speculatively and out of sequential order;
aninstruction issue and execution scheduler;
means for assigning a sequential serial number as said instruction identification tag to each particular instruction issued by the instruction issue unit when the instruction is issued, by assigning an instruction identification tag to a unique one of the n addressable locations and advancing an issued serial number pointer (314) by one for each instruction issued, said issued serial number pointer thus always pointing to the serial number of the last issued instruction;
means for receiving instruction execution status from said execution unit for each issued instruction, said instruction execution status including status that a particular instruction is either active or inactive, and status that if an execution of a particular instruction has completed or not and whether the execution of the particular instruction has completed without execution error;
means for tracking machine resource availability information based on the issue, execution, completion, and retirement status of instructions in said processing unit, and for communicating said information to said instruction issue unit; and
means, in said instruction issue unit, responsive to said resource availability information for continuing issuance of instructions if machine resources are available to process further instructions and for stalling issuance of further instructions when machine resources are not available to process said instructions.

27. An apparatus as in claim 26, wherein said means for tracking machine resource availability information includes:
a circular data structure defined within said data storage means for storing issue, execution, completion, and retirement status information for each issued instruction, including an instruction activity status information identifying the current status of each instruction as active or inactive;
first logic means for determining the last issued instruction,
second logic means for determining the last committed instruction which is the last instruction that has completed without error and for which all sequentially earlier instructions have completed without error, and
third logic means for determining the last reclaimed instruction which is last instruction for which allocated processor resources have been reclaimed.

28. An apparatus as in claim 27, further comprising:
means for identifying predicted branch instructions issued by said issue unit;
means for detecting predicted branch instructions issued by said issue unit;
means for detecting executed predicted branch instructions that were mispredicted and for initiating recovery from said mispredicted branches; and
means for handling instruction execution exceptions 5 according to predetermined exception handling rules.

## Patentansprüche

1. In einer zentralen Verarbeitungseinheit (51) zum Ausführen von Instruktionen, die durch eine Instruktionsausgabeeinheit (61) ausgegeben werden - wobei die Verarbeitungseinheit (51) einen Datenspeicher, eine Instruktionsausgabeeinheit (61), eine Instruktionsausführungseinheit, die dafür ausgelegt ist, die Instruktionen spekulativ und außerhalb der sequenziellen Reihenfolge auszuführen, und einen Instruktionsausgabe- und -ausführungsplaner aufweist -, ein Verfahren zum Verfolgen einer spekulativen Instruktionsausführung und zum Aufrechterhalten eines genauen Zustands der Verarbeitungseinheit (51) an jeder mit einem Überprüfungspunkt versehenen oder nicht mit einem Überprüfungspunkt versehenen Instruktionsgrenze in der Verarbeitungseinheit (51), wobei das Verfahren folgende Schritte umfasst:
Definieren einer Datenstruktur (312, 324) in dem Datenspeicher, wobei die Datenstruktur eine zirkuläre Datenstruktur umfasst, die n adressierbare Positionen 0, 1, 2, ..., n-2, n-1 aufweist, wobei sich eine adressierbare Position n-1 logisch neben einer adressierbaren Position 0 befindet, wobei jede adressierbare Position einem bestimmten Instruktionsidentifizierungs-Tag entspricht, der eine der ausgegebenen Instruktionen identifiziert, und ein Aktivitätsbit auf eine adressierbare Position gesetzt wird, wobei das Aktivitätsbit einen Status einer durch den bestimmten Instruktionsidentifizierungs-Tag identifizierten Instruktion gemäß der adressierbaren Position als aktiven Status oder inaktiven Status identifiziert;
Zuweisen einer sequenziellen laufenden Nummer als den Instruktionsidentifizierungs-Tag zu jeder bestimmten Instruktion, die durch die Instruktionsausgabeeinheit ausgegeben wird, wenn die Instruktion ausgegeben wird, wobei der Schritt des Zuweisens des Instruktionsidentifizierungs-Tags zu jeder bestimmten ausgegebenen Instruktion, die durch die Instruktionsausgabeeinheit ausgegeben wird, umfasst, einen Instruktionsidentifizierungs-Tag zu einer eindeutigen der n adressierbaren Positionen zuzuweisen und einen Ausgegebene-Seriennummern-Zeiger (314) für jede ausgegebene Instruktion um eins weiterzurücken, wodurch der Ausgegebene-Seriennummern-Zeiger immer auf die Seriennummer der zuletzt ausgegebenen Instruktion zeigt;
Setzen des Aktivitätsbits, das an einer adressierbaren Position der Datenstruktur entsprechend einer bestimmten Instruktion gespeichert ist, auf einen ersten Zustand, um die bestimmte Instruktion als eine aktive Instruktion zu identifizieren, wenn die bestimmte Instruktion versendet wurde und in der Verarbeitungseinheit (51) momentan aktiv wird, wobei eine versendete Instruktion eine ausgegebene Instruktion ist, aber nicht alle ausgegebenen Instruktionen versendete Instruktionen sind;
Detektieren, ob eine Ausführung einer Instruktion vollendet ist oder nicht, und alle Fehlerzustände, die der Instruktion zugeordnet sind, in denen die Ausführung in der Ausführungseinheit für jede ausgegebene Instruktion vollendet ist;
Löschen des Aktivitätsbits, das an einer adressierbaren Position der Datenstruktur (312, 324) entsprechend einer bestimmten Instruktion gespeichert ist, zu einem zweiten Zustand, um die bestimmte Instruktion als eine inaktive Instruktion zu identifizieren, wenn eine Ausführung der bestimmten Instruktion normal vollendet ist, ohne dass einer aus einem zuvor festgelegten Satz von Ausführungsfehlerzuständen eingetreten ist;
Verwalten mehrerer Zeiger zu ausgewählten der n adressierbaren zirkulären Datenstrukturpositionen, und Verschieben der Zeiger, um verschiedene Adressen zu identifizieren, in Reaktion auf die Instruktionsaktivitätsbit-Statusänderungen; und
Verfolgen von Maschinenressourcenverfügbarkeitsinformationen auf der Grundlage des Ausgabe-, Ausführungs-, Vollendungs- und Erledigungsstatus von Instruktionen in der Prozessoreinheit und Übermitteln der Informationen an die Instruktionsausgabeeinheit.

2. Verfahren nach Anspruch 1, wobei:
wenn die Ausführung der Instruktion ohne einen Fehlerzustand vollendet wurde, die Aktivitätsstatusdaten einschließlich der Aktivitätsbits an der zugehörigen Speicherposition aktualisiert werden, um anzuzeigen, dass die ausgeführte Instruktion inaktiv ist, und
wenn die Ausführung der Instruktion mit einem Fehlerzustand vollendet wurde oder die Ausführung der Instruktion nicht vollendet wurde, die ursprünglichen Aktivitätsstatusdaten, die die bestimmte Instruktion als aktiv identifizieren, in der zugehörigen Speicherposition belassen werden; und wobei das Verfahren des Weiteren Folgendes umfasst:
Übermitteln von Instruktionsaktivitätsstatusdaten an den Instruktionsausgabeplaner, so dass der Instruktionsausgabeplaner weitere Instruktionen zur Ausführung planen kann, ohne den Status von zuvor ausgegebenen Instruktionen beachten zu müssen, die zu dem Zeitpunkt inaktiv sind.

3. Verfahren nach Anspruch 2, das des Weiteren die folgenden Schritte umfasst:
Übermitteln des Fehlerzustands, der der Vollendung der Ausführung einer der Instruktionen zugeordnet ist, an eine Fehlerhandhabungseinheit in der Verarbeitungseinheit; und
Modifizieren der Instruktionsausgabe- und - ausführungsabfolge-Planung in Reaktion den übermittelten Fehlerzustand.

4. Verfahren nach Anspruch 1, 2 oder 3, wobei der Identifizierungs-Tag eine numerische Seriennummer ist und der Schritt des Zuweisens eines Identifizierungs-Tags mit seinem zugehörigen Aktivitätsbit zu jeder ausgegebenen Instruktion umfasst, gleichmäßig größer werdende Seriennummern, modulo-n, zu anschließend ausgegebenen Instruktionen zuzuweisen, wenn jede Instruktion ausgegeben wird, so dass, nachdem n-1 Seriennummern zu ausgegebenen Instruktionen zugewiesen wurden, die Seriennummern in einer zirkulären Weise neu zugewiesen werden und die nächste ausgegebene Instruktion nach n-1 eine Seriennummer 0 zugewiesen bekommt, und wobei eine Instruktion, die zu einem früheren Zeitpunkt ausgegeben wurde, eine ältere Instruktion ist als eine Instruktion, die zu einem späteren Zeitpunkt ausgegeben wurde, und die Seriennummer, die der früheren Instruktion zugeordnet ist, eine ältere Seriennummer ist, unabhängig der numerischen Größenordnung der Seriennummer.

5. Verfahren nach Anspruch 4, das des Weiteren die folgenden Schritte umfasst:
Verfolgen des Ausführungsstatus jeder ausgegebenen Instruktion auf der Grundlage des Zustands ihres zugehörigen Aktivitätsbits;
Evaluieren jedes Aktivitätsbits in der zirkulären Datenstruktur und Identifizieren der ältesten Seriennummer, die einer aktiven Instruktion zugeordnet ist, und dadurch Bestimmen der ältesten ausgegebenen und immer noch aktiven Instruktion;
Binden einer Instruktion mit einer Seriennummer, die älter als die Seriennummer ist, die der ältesten aktiven Instruktion zugeordnet ist, so dass die Instruktion mit einer älteren Seriennummer nicht ungeschehen gemacht werden kann; und
Zurückgewinnen von Prozessorressourcen zusätzlich zu dem Instruktionsidentifizierungs-Tag und den Aktivitätsbits, die der gebundenen Instruktion zugeordnet sind.

6. Verfahren nach einem der vorangehenden Ansprüche, wobei der zuvor festgelegte Satz von Ausführungsfehlerzuständen aus dem Satz ausgewählt wird, der aus einem Instruktionsausführungsfehler, einem Ausnahmefehlerzustand, einem Hardwarefehler und einer Abzweiginstruktions-Fehlinterpretation besteht.

7. Verfahren nach einem der vorangehenden Ansprüche, wobei der Schritt des Verwaltens mehrerer Zeiger folgende Schritte umfasst:
Evaluieren der an den adressierbaren Speicherpositionen gespeicherten Daten, um einen Instruktionsstatus für jede von mehreren ausgegebenen Instruktionen zu bestimmen;
Berechnen mehrerer verschiedener Prozessorzustandsindikatoren auf der Grundlage der an den adressierbaren Speicherpositionen gespeicherten Daten, wobei jeder verschiedene Prozessorzustandsindikator eine Instruktion mit ihrem zugehörigen Identifizierungs-Tag identifiziert, die einen bestimmten Ausführungsstatus erreicht hat, der aus einem Satz zuvor festgelegter Ausführungsstatuszustände ausgewählt wurde; und
Speichern der Prozessorzustandsindikatoren als die Zeiger in einem dritten Datenspeicher innerhalb der Verarbeitungseinheit.

8. Verfahren nach einem der vorangehenden Ansprüche, wobei der Schritt des Verschiebens der Zeiger in Reaktion auf die Instruktionsaktivitätsstatusänderungen folgende Schritte umfasst:
Wiederholen der Schritte des Evaluierens, des Berechnens verschiedener Prozessorzustandsindikatoren und des Speicherns an zuvor festgelegten Zeitintervallen, um die Prozessorzustandsindikatoren zu aktualisieren.

9. Verfahren nach einem der vorangehenden Ansprüche, wobei der Satz zuvor festgelegter Ausführungsstatuszustände die letzte ausgegebene Instruktion, die letzte gebundene Instruktion und die letzte erledigte Instruktion enthält.

10. Verfahren nach Anspruch 9, wobei der Satz zuvor festgelegter Ausführungsstatuszustände des Weiteren die letzte nicht auf einen Speicher verweisende Instruktion und die letzte prognostizierte Abzweiginstruktion enthält.

11. Verfahren nach Anspruch 10, wobei die mehreren Zeiger Folgendes enthalten:
einen Letzte-ausgegebene-Instruktion-Zeiger, der auf die letzte ausgegebene Instruktion zeigt, und
einen Letzte-gebundene-Instruktion-Zeiger, der auf die letzte gebundene Instruktion zeigt, die die letzte Instruktion ist, die ohne Fehler vollendet wurde und für die alle sequenziell früher ausgegebenen Instruktionen ohne Fehler vollendet wurden.

12. Verfahren nach Anspruch 11, wobei die mehreren Zeiger des Weiteren Folgendes enthalten:
einen Letzte-zurückgewonnene-Instruktion-Zeiger, der auf die letzte zurückgewonnene Instruktion zeigt, die die letzte Instruktion ist, für die zugeordnete Prozessorressourcen zurückgewonnen wurden.

13. Verfahren nach Anspruch 12, wobei jeder Identifizierungs-Tag einer aus einer gleichmäßig ansteigenden Sequenz von numerischen Seriennummern (modulo-n) ist und die adressierbaren Speicherpositionen in der Datenstruktur durch die Seriennummern adressiert werden.

14. Verfahren nach Anspruch 13, wobei das Weiterrücken der Zeiger zu höherwertigen Seriennummern mittels einer modulo-n-Arithmetik erfolgt, so dass das Inkrementieren eines Zeigers von der Adresse n-1 den Zeiger an die Adresse 0 rückt.

15. Verfahren nach Anspruch 11, wobei der Schritt des Verwaltens der Zeiger durch Bewegen der Zeiger in Reaktion auf die Instruktionsaktivitätsstatusänderungen folgende Schritte umfasst:
Weiterrücken des Ausgegebene-Instruktionen-Zeigers vorwärts in Richtung höherer Instruktionsseriennummern (modulo-n) um eine einzelne Seriennummer für jede ausgegebene Instruktion;
Weiterrücken des Gebundene-Instruktionen-Zeigers vorwärts in Richtung höherer Instruktionsseriennummern (modulo-n) auf der Grundlage einer Seriennummersequenz-Evaluierung des Zustands des Aktiv-Bits für jede Speicherposition und erster zuvor festgelegter Regeln, aber Nicht-Weiterrücken des zweiten Zeigers weiter als den ersten Zeiger; und
Weiterrücken des Erledigte-Instruktionen-Zeigers vorwärts in Richtung höherer Instruktionsseriennummern (modulo-n) auf der Grundlage einer Seriennummersequenz-Evaluierung des Zustands des Aktiv-Bits für jede Position und zweiter zuvor festgelegter Regeln, aber Nicht-Weiterrücken des dritten Zeigers weiter als den zweiten Zeiger.

16. Verfahren nach Anspruch 15, wobei die ersten zuvor festgelegten Regeln Folgendes enthalten:
bei jeder zuvor festgelegten Anzahl von Maschinentaktzyklen, Weiterrücken des Gebundene-Instruktionen-Zeigers vorwärts zu einer neuen Adressposition, die nicht höher als die höchste Datenspeicherpositionsadresse ist, für die alle Aktivitätsstatusbits in niedrigeren Adresspositionen inaktiv "0" sind, aber nicht höher als die Adresse des Ausgegebene-Instruktionen-Zeigers bei jenem Maschinentakt.

17. Verfahren nach Anspruch 15, wobei die zweiten zuvor festgelegten Regeln Folgendes enthalten:
bei jeder zuvor festgelegten Anzahl von Maschinentaktzyklen, Weiterrücken des Letzte-zurückgewonnene-Instruktion-Zeigers vorwärts zu einer neuen Adressposition, die nicht höher als die höchste Datenspeicherpositionsadresse ist, für die alle Aktivitätsstatusbits in niedrigeren Adresspositionen inaktiv "0" sind, aber nicht höher als die Adresse des Gebundene-Instruktionen-Zeigers bei jenem Maschinentakt.

18. Verfahren nach Anspruch 12, wobei die Zeiger infolge einer Instruktionsausgabe, einer Instruktionsbindung und einer Instruktionserledigung bewegt werden.

19. Verfahren nach Anspruch 12, wobei der Gebundene-Instruktionen-Zeiger und der Letzte-zurückgewonnene-Instruktion-Zeiger nicht über Instruktionen hinaus bewegt werden, für die Ausnahmen und/oder Abzweiginstruktions-Fehlinterpretationen und/oder Fehlerzustände detektiert werden.

20. Verfahren nach Anspruch 19, das des Weiteren das Verfolgen des Instruktionsstatus und von Maschinenressourcen, die jeder Instruktion zugeordnet sind, enthält, indem die mehreren Maschinenzeiger in Reaktion auf Instruktionsaktivitätsstatus als AKTIV oder INAKTIV und zuvor festgelegte Regeln verschoben werden; und
wobei die mehreren Maschinenzeiger Folgendes umfassen:
einen Letzte-ausgegebene-Instruktion-Zeiger, der auf die letzte ausgegebene Instruktion zeigt;
einen Letzte-gebundene-Instruktion-Zeiger, der auf die letzte gebundene Instruktion zeigt, wobei diese Instruktion die letzte Instruktion ist, die ohne Fehler vollendet wurde und für die alle sequenziell der Reihe nach früher ausgegebenen Instruktionen ohne Fehler vollendet wurden; und
einen-Erledigungs- und Rückgewinnungs-Zeiger, der auf die letzte Instruktion zeigt, für die alle Maschinenressourcen, die der Instruktion durch die Verarbeitungseinheit zugeordnet wurden, und alle sequenziell der Reihe nach früheren Instruktionen zurückgewonnen wurden.

21. Verfahren nach Anspruch 20, wobei der Schritt des Verfolgens des Instruktionsstatus und der Maschinenressourcen, die jeder Instruktion zugeordnet sind, durch Bewegen der mehreren Maschinenzeiger folgende Schritte umfasst:
Initialisieren des ersten, zweiten und dritten Zeigers zu derselben ursprünglichen Speicherpositionsadresse vor dem Ausgeben einer ersten Instruktion;
Weiterrücken des Ausgegebene-Instruktionen-Zeigers vorwärts in Richtung höherer Instruktionsseriennummern (modulo-n) um eine einzelne Seriennummer für jede ausgegebene Instruktion;
Weiterrücken des Gebundene-Instruktionen-Zeigers vorwärts in Richtung höherer Instruktionsseriennummern (modulo-n) auf der Grundlage einer Seriennummersequenz-Evaluierung des Zustands des Aktiv-Bits für jede Speicherposition und erster zuvor festgelegter Regeln, aber Nicht-Weiterrücken des zweiten Zeigers weiter als den ersten Zeiger; und
Weiterrücken des Erledigte-Instruktionen-Zeigers vorwärts in Richtung höherer Instruktionsseriennummern (modulo-n) auf der Grundlage einer Seriennummersequenz-Evaluierung des Zustands des Aktiv-Bits für jede Position und zweiter zuvor festgelegter Regeln, aber Nicht-Weiterrücken des dritten Zeigers weiter als den zweiten Zeiger; und
wobei das Weiterrücken der Zeiger zu höherwertigen Seriennummern in der zirkulären Datenstruktur mittels modulo-n-Arithmetik erfolgt, so dass das Inkrementieren der Ausgegebene-Instruktionen-, Gebundene-Instruktionen- oder Erledigte-Instruktionen-Zeiger von Adresse n-1 den Zeiger an eine Adresse n setzt, und das Inkrementieren des Zeigers von Adresse n den Zeiger an die Adresse 0 setzt.

22. Verfahren nach Anspruch 21, wobei die ersten zuvor festgelegten Regeln Folgendes enthalten:
bei jeder zuvor festgelegten Anzahl von Maschinentaktzyklen, Weiterrücken des Gebundene-Instruktionen-Zeigers vorwärts zu einer neuen Adressposition, die nicht höher ist als die höchste Datenspeicherpositionsadresse, für die alle Aktivitätsstatusbits in niedrigeren Adresspositionen inaktiv "0" sind, aber nicht höher als die Adresse des ersten Zeigers bei jenem Maschinentakt; und
wobei die zweiten zuvor festgelegten Regeln Folgendes enthalten:
bei jeder zuvor festgelegten Anzahl von Maschinentaktzyklen, Weiterrücken der Erledigt-Zeigers vorwärts zu einer neuen Adressposition, die nicht höher ist als die höchste Datenspeicherpositionsadresse, für die alle Aktivitätsstatusbits in niedrigeren Adresspositionen inaktiv sind, aber nicht höher als die Adresse des zweiten Zeigers bei jenem Maschinentakt.

23. Verfahren nach Anspruch 22, wobei die neuen Adresspositionen auf der Grundlage Boolescher Operationen der Statusaktivitätsbits bestimmt werden.

24. Verfahren nach Anspruch 22, wobei die ersten zuvor festgelegten Regeln des Weiteren folgenden Schritt umfassen: Begrenzen der Anzahl von Adressen, um die der Gebundene-Instruktionen-Zeiger während der zuvor festgelegten Anzahl von Maschinentakten weitergerückt werden kann, auf eine erste maximale Anzahl von Adressen; und wobei die zweiten zuvor festgelegten Regeln des Weiteren folgenden Schritt umfassen: Begrenzen der Anzahl von Adressen, um die der Erledigt-Zeiger während der zuvor festgelegten Anzahl von Maschinentakten weitergerückt werden kann, auf eine zweite maximale Anzahl von Adressen, wobei die zweite maximale Anzahl von Adressen kleiner ist als die erste maximale Anzahl von Adressen.

25. Verfahren nach Anspruch 22, wobei der Gebundene-Instruktionen-Zeiger und der Erledigt-Zeiger nicht über Instruktionen hinaus bewegt werden, für die Ausnahmen, Abzweiginstruktions-Falschvorhersagen oder Fehlerzustände detektiert werden.

26. Vorrichtung zum Verfolgen einer spekulativen Instruktionsausführung in einer Verarbeitungseinheit (51), die Instruktionen ausführt, die durch eine Instruktionsausgabeeinheit (61) ausgegeben wurden, wobei die Vorrichtung Folgendes umfasst:
ein Datenspeichermittel, das mit der Verarbeitungseinheit (51) gekoppelt ist, wobei das Datenspeichermittel eine zirkuläre Datenstruktur umfasst, die n adressierbare Positionen 0, 1, 2, ..., n-2, n-1 aufweist, wobei sich eine adressierbare Position n-1 logisch neben einer adressierbaren Position 0 befindet, wobei jede adressierbare Position einem bestimmten Instruktionsidentifizierungs-Tag entspricht, der eine der ausgegebenen Instruktionen identifiziert, und ein Aktivitätsbit auf eine adressierbare Position gesetzt wird, wobei das Aktivitätsbit einen Status einer durch den bestimmten Instruktionsidentifizierungs-Tag identifizierten Instruktion gemäß der adressierbaren Position als aktiven Status oder inaktiven Status identifiziert;
eine Instruktionsausführungseinheit, die dafür ausgelegt ist, die ausgegebenen Instruktionen spekulativ und außerhalb der sequenziellen Reihenfolge auszuführen;
einen Instruktionsausgabe- und -ausführungsplaner;
ein Mittel zum Zuweisen einer sequentiellen Seriennummer als den Instruktionsidentifizierungs-Tag zu jeder bestimmten Instruktion, die durch die Instruktionsausgabeeinheit ausgegeben wird, wenn die Instruktion ausgegeben wird, durch Zuweisen eines Instruktionsidentifizierungs-Tag zu einer eindeutigen der n adressierbaren Positionen und Weiterrücken eines Ausgegebene-Seriennummern-Zeigers (314) um eins für jede ausgegeben Instruktion, wodurch der Ausgegebene-Seriennummern-Zeiger immer auf die Seriennummer der letzten ausgegebenen Instruktion weist,
ein Mittel zum Empfangen eines Instruktionsausführungsstatus von der Ausführungseinheit für jede ausgegebene Instruktion, wobei der Instruktionsausführungsstatus einen Status enthält, dass eine bestimmte Instruktion entweder aktiv oder inaktiv ist, und einen Status enthält, ob eine Ausführung einer bestimmten Instruktion vollendet wurde oder nicht, und ob die Ausführung der bestimmten Instruktion ohne Ausführungsfehler vollendet wurde;
ein Mittel zum Verfolgen von Maschinenressourcenverfügbarkeitsinformationen auf der Grundlage des Ausgabe-, Ausführungs-, Vollendungs- und Erledigungsstatus von Instruktionen in der Verarbeitungseinheit und zum Übermitteln der Informationen an die Instruktionsausgabeeinheit; und
ein Mittel - in der Instruktionsausgabeeinheit -, das auf die Ressourcenverfügbarkeitsinformationen in der Weise reagiert, dass es die Ausgabe von Instruktionen fortsetzt, wenn Maschinenressourcen verfügbar sind, um weitere Instruktionen zu verarbeiten, und die Ausgabe weiterer Instruktionen anhält, wenn keine Maschinenressourcen verfügbar sind, um die Instruktionen zu verarbeiten.

27. Vorrichtung nach Anspruch 26, wobei das Mittel zum Verfolgen der Maschinenressourcenverfügbarkeitsinformationen Folgendes enthält:
eine zirkuläre Datenstruktur, die innerhalb des Datenspeichermittels zum Speichern von Ausgabe-, Ausführungs-, Vollendungs- und Erledigungsstatusinformationen für jede ausgegebene Instruktion definiert ist, einschließlich Instruktionsaktivitätsstatusinformationen, die den momentanen Status jeder Instruktion als aktiv oder inaktiv identifiziert;
ein erstes Logikmittel zum Bestimmen der letzten ausgegebenen Instruktion,
ein zweites Logikmittel zum Bestimmen der letzten gebundenen Instruktion, die die letzte Instruktion ist, die ohne Fehler vollendet wurde und für die alle sequentiell früheren Instruktionen ohne Fehler vollendet wurden; und
ein drittes Logikmittel zum Bestimmen der letzten zurückgewonnenen Instruktion, die die letzte Instruktion ist, für die zugeordnete Prozessorressourcen zurückgewonnen wurden.

28. Vorrichtung nach Anspruch 27, die des Weiteren Folgendes umfasst:
ein Mittel zum Identifizieren prognostizierter Abzweiginstruktionen, die durch die Ausgabeeinheit ausgegeben wurden;
ein Mittel zum Detektieren prognostizierter Abzweiginstruktionen, die durch die Ausgabeeinheit ausgegeben wurden;
ein Mittel zum Detektieren ausgeführter prognostizierter Abzweiginstruktionen, die falsch vorhergesagt wurden, und zum Initiieren der Rückgewinnung der falsch vorhergesagten Abzweigungen; und
ein Mittel zum Handhaben von Instruktionsausführungsausnahmen gemäß zuvor festgelegten Ausnahmehandhabungsregeln.

## Revendications

1. Dans une unité centrale de traitement (51) pour exécuter des instructions émises par une unité d'émission d'instruction (61), ladite unité de traitement (51) ayant une mémoire de données, une unité d'émission d'instruction (61), une unité d'exécution d'instruction adaptée pour exécuter lesdites instructions spéculativement et pas dans un ordre séquentiel, et un ordonnanceur d'émission et d'exécution d'instruction ; procédé pour suivre l'exécution d'instruction spéculative et maintenir un état d'unité de traitement (51) précis à toute frontière d'instruction jalonnée de points de contrôle ou non jalonnée de points de contrôle dans ladite unité de traitement (51), ledit procédé comprenant les étapes consistant à :
définir une structure de données (312, 324) dans la mémoire de données, la structure de données comprenant une structure de données circulaire ayant n emplacements adressables 0, 1, 2, ..., n-2, n-1, où un emplacement adressable n-1 est adjacent logiquement à un emplacement adressable 0, chaque emplacement adressable correspond à une étiquette d'identification d'instruction particulière qui identifie une des instructions émises, et un bit d'activité est établi à un emplacement adressable, le bit d'activité identifiant un statut d'une instruction identifiée par l'étiquette d'identification d'instruction particulière correspondant à l'emplacement adressable comme statut actif ou statut inactif ;
affecter un numéro d'ordre séquentiel comme ladite étiquette d'identification d'instruction à chaque instruction particulière émise par l'unité d'émission d'instruction lorsque l'instruction est émise, où l'étape d'affectation de ladite étiquette d'identification d'instruction à chaque instruction émise particulière émise par l'unité d'émission d'instruction comprend l'affectation d'une étiquette d'identification d'instruction à un emplacement unique des n emplacements adressables et l'avance d'un pointeur de numéro d'ordre émis (314) de un pour chaque instruction émise, ledit pointeur de numéro d'ordre émis pointant ainsi toujours vers le numéro d'ordre de la dernière instruction émise ;
établir le bit d'activité stocké dans un emplacement adressable de la structure de données correspondant à une instruction particulière à un premier état pour identifier l'instruction particulière comme une instruction active lorsque l'instruction particulière a été distribuée et devient actuellement active dans l'unité de traitement (51), une instruction distribuée étant une instruction émise mais toutes les instructions émises n'étant pas des instructions distribuées ;
détecter si une exécution d'une instruction est achevée ou non, et toute condition d'erreur associée à l'instruction dans laquelle l'exécution est achevée dans l'unité d'exécution pour chaque instruction émise ;
effacer le bit d'activité stocké dans un emplacement adressable de la structure de données (312, 324) correspondant à une instruction particulière à un second état pour identifier l'instruction particulière comme une instruction inactive, lorsqu'une exécution de l'instruction particulière est achevée normalement sans l'occurrence de l'une quelconque d'un ensemble prédéterminé de conditions d'erreur d'exécution ;
maintenir une pluralité de pointeurs à des emplacements sélectionnés des n emplacements de structure de données circulaire adressables, et déplacer les pointeurs pour identifier des adresses différentes en réponse aux changements de statut de bit d'activité d'instruction ; et
suivre des informations de disponibilité de ressources machine sur la base du statut d'émission, d'exécution, d'achèvement et de retrait d'instructions dans ladite unité de traitement et communiquer lesdites informations à ladite unité d'émission d'instruction.

2. Procédé selon la revendication 1, dans lequel :
si l'exécution de l'instruction s'est achevée sans condition d'erreur, alors mettre à jour les données de statut d'activité comprenant les bits d'activité dans l'emplacement de stockage associé pour indiquer que l'instruction exécutée est inactive, et
si l'exécution de l'instruction s'est achevée avec une condition d'erreur ou l'exécution de l'instruction ne s'est pas achevée, conserver alors les données de statut d'activité d'origine identifiant l'instruction particulière comme active dans l'emplacement de stockage associé ; et le procédé comprenant en outre :
la communication de données de statut d'activité d'instruction à l'ordonnanceur d'émission d'instruction de sorte que ledit ordonnanceur d'émission d'instruction puisse ordonnancer d'autres instructions pour l'exécution sans se préoccuper du statut d'instructions émises précédemment qui sont inactives à ce moment-là.

3. Procédé selon la revendication 2, comprenant en outre les étapes consistant à :
communiquer la condition d'erreur associée à l'achèvement d'exécution de l'une quelconque des instructions à une unité gestionnaire de traitement d'erreur dans l'unité de traitement ; et
modifier l'ordonnancement de séquence d'émission et d'exécution d'instruction en réponse à la condition d'erreur communiquée.

4. Procédé selon la revendication 1, 2 ou 3, dans lequel l'étiquette d'identification est un numéro d'ordre numérique et l'étape d'affectation d'une étiquette d'identification avec son bit d'activité associé à chaque instruction émise comprend l'affectation de numéros d'ordre augmentant monotonement, modulo-n, à des instructions émises subséquemment à mesure que chaque instruction est émise, de sorte qu'après que n-1 numéros d'ordre ont été affectés à des instructions émises, les numéros d'ordre sont réaffectés de manière circulaire et la prochaine instruction émise après n-1 se voit affecter le numéro d'ordre 0, et dans lequel une instruction émise plus tôt dans le temps est une instruction plus ancienne qu'une instruction émise plus tard dans le temps, et le numéro d'ordre associé à l'instruction antérieure est un numéro d'ordre plus ancien, indépendant de la grandeur numérique du numéro d'ordre.

5. Procédé selon la revendication 4, comprenant en outre les étapes consistant à :
suivre le statut d'exécution de chaque instruction émise sur la base de l'état de son bit d'activité associé ;
évaluer chaque bit d'activité dans la structure de données circulaire et identifier le numéro d'ordre le plus ancien associé à une instruction active et déterminer ainsi l'instruction la plus ancienne émise et encore active ;
archiver une instruction ayant un numéro d'ordre plus ancien que le numéro d'ordre associé à ladite instruction la plus ancienne active de sorte que ladite instruction ayant un numéro d'ordre plus ancien ne puisse pas être annulée ; et
récupérer des ressources de processeur en plus de l'étiquette d'identification d'instruction et des bits d'activité alloués à l'instruction archivée.

6. Procédé selon l'une quelconque des revendications précédentes, dans lequel l'ensemble prédéterminé de conditions d'erreur d'exécution est sélectionné parmi l'ensemble comprenant une erreur d'exécution d'instruction, une condition d'erreur d'exception, une panne de matériel, et une mauvaise prédiction d'instruction de branchement.

7. Procédé selon l'une quelconque des revendications précédentes, dans lequel l'étape de maintien d'une pluralité de pointeurs comprend les étapes consistant à :
évaluer les données stockées dans les emplacements de stockage adressables pour déterminer un statut d'instruction pour chacune d'une pluralité d'instructions émises ;
calculer une pluralité d'indicateurs de condition de processeur différents sur la base des données stockées dans les emplacements de stockage adressables, chaque indicateur de condition de processeur différent identifiant une instruction avec son étiquette d'identification associée qui a atteint un statut d'exécution particulier sélectionné parmi un ensemble de statuts d'exécution prédéterminés ; et
stocker les indicateurs de condition de processeur comme les pointeurs dans une troisième mémoire de données à l'intérieur de ladite unité de traitement.

8. Procédé selon l'une quelconque des revendications précédentes, dans lequel l'étape de déplacement des pointeurs en réponse aux changements de statut d'activité d'instruction comprend les étapes consistant à :
répéter lesdites étapes d'évaluation, de calcul d'indicateurs de condition de processeur différents, et de stockage à des intervalles de temps prédéterminés pour mettre à jour lesdits indicateurs de condition de processeur.

9. Procédé selon l'une quelconque des revendications précédentes, dans lequel l'ensemble de statuts d'exécution prédéterminés comprend la dernière instruction émise, la dernière instruction archivée, et la dernière instruction retirée.

10. Procédé selon la revendication 9, dans lequel l'ensemble de statuts d'exécution prédéterminés comprend en outre la dernière instruction ne faisant pas appel à la mémoire et la dernière instruction de branchement prédite.

11. Procédé selon la revendication 10, dans lequel ladite pluralité de pointeurs comprend :
un pointeur de dernière instruction émise qui pointe vers la dernière instruction émise, et
un pointeur de dernière instruction archivée qui pointe vers la dernière instruction archivée qui est la dernière instruction qui s'est achevée sans erreur et pour laquelle toutes les instructions émises plus tôt séquentiellement se sont achevées sans erreur.

12. Procédé selon la revendication 11, dans lequel ladite pluralité de pointeurs comprend en outre :
un pointeur de dernière instruction récupérée qui pointe vers la dernière instruction récupérée qui est la dernière instruction pour laquelle des ressources de processeur allouées ont été récupérées.

13. Procédé selon la revendication 12, dans lequel chaque dite étiquette d'identification est une d'une séquence augmentant monotonement de numéros d'ordre numériques (modulo-n) et lesdits emplacements de stockage adressables dans ladite structure de données sont adressés par lesdits numéros d'ordre.

14. Procédé selon la revendication 13, dans lequel l'avance desdits pointeurs à des numéros d'ordre de valeur supérieure est accomplie avec une arithmétique modulo-n de sorte que l'incrémentation d'un pointeur depuis l'adresse n-1 place ledit pointeur à l'adresse 0.

15. Procédé selon la revendication 11, dans lequel ladite étape de maintien desdits pointeurs en déplaçant lesdits pointeurs en réponse aux changements de statut d'activité d'instruction comprend les étapes consistant à :
avancer ledit pointeur d'instruction émise en avant vers des numéros d'ordre d'instruction supérieurs (modulo-n) d'un numéro d'ordre pour chaque instruction émise ;
avancer ledit pointeur d'instruction archivée en avant vers des numéros d'ordre d'instruction supérieurs (modulo-n) sur la base d'une évaluation séquentielle de numéro d'ordre de l'état du bit actif pour chaque emplacement de stockage et de premières règles prédéterminées mais ne pas avancer ledit deuxième pointeur au-delà dudit premier pointeur ; et
avancer ledit pointeur d'instruction retirée en avant vers des numéros d'ordre d'instruction supérieurs (modulo-n) sur la base d'une évaluation séquentielle de numéro d'ordre de l'état du bit actif pour chaque emplacement et de secondes règles prédéterminées mais ne pas avancer ledit troisième pointeur au-delà dudit deuxième pointeur.

16. Procédé selon la revendication 15, dans lequel lesdites premières instructions prédéterminées comprennent :
à chaque nombre prédéterminé de cycles d'horloge machine, l'avance dudit pointeur d'instruction archivée en avant à un nouvel emplacement d'adresse non supérieur à l'adresse d'emplacement de stockage de données la plus élevée pour laquelle tous les bits de statut d'activité dans des emplacements d'adresse inférieurs sont des « 0 » inactifs mais non supérieur à l'adresse dudit pointeur d'instruction émise à ce cycle machine.

17. Procédé selon la revendication 15, dans lequel lesdites secondes règles prédéterminées comprennent : à chaque nombre prédéterminé de cycles d'horloge machine, l'avance dudit pointeur de dernière instruction récupérée en avant à un nouvel emplacement d'adresse non supérieur à l'adresse d'emplacement de stockage de données la plus élevée pour laquelle tous les bits de statut d'activité dans des emplacements d'adresse inférieurs sont des « 0 » inactifs mais non supérieur à l'adresse dudit pointeur d'instruction archivée à ce cycle machine.

18. Procédé selon la revendication 12, dans lequel lesdits pointeurs sont déplacés à la suite d'une émission d'instruction, d'un archivage d'instruction, et d'un retrait d'instruction.

19. Procédé selon la revendication 12, dans lequel lesdits pointeurs d'instruction archivée et de dernière instruction récupérée ne sont pas déplacés passées des instructions pour lesquelles l'une quelconque ou plusieurs parmi des exceptions, des mauvaises prédictions d'instruction de branchement, et des conditions d'erreur sont détectées.

20. Procédé selon la revendication 19, comprenant en outre le suivi de statut d'instruction et de ressources machine allouées à chaque instruction en déplaçant ladite pluralité de pointeurs machine en réponse au Statut d'activité d'instruction ACTIF ou INACTIF et à des règles prédéterminées ; et
ladite pluralité de pointeurs machine comprend :
un pointeur de dernière instruction émise qui pointe vers la dernière instruction émise ;
un pointeur de dernière instruction archivée qui pointe vers la dernière instruction archivée, laquelle instruction est la dernière instruction qui s'est achevée sans erreur et pour laquelle toutes les instructions émises plus tôt séquentiellement dans l'ordre se sont achevées sans erreur ; et
un pointeur de retrait et de récupération qui pointe vers la dernière instruction pour laquelle toutes les ressources machine allouées par l'unité de traitement à l'instruction et toutes les instructions antérieures séquentiellement dans l'ordre ont été récupérées.

21. Procédé selon la revendication 20, dans lequel ladite étape de suivi de statut d'instruction et de ressources machine allouées à chaque instruction en déplaçant ladite pluralité de pointeurs machine comprend les étapes consistant à :
initialiser lesdits premier, deuxième, et troisième pointeurs à la même adresse d'emplacement de stockage initiale avant d'émettre une première instruction ;
avancer ledit pointeur d'instruction émise en avant vers des numéros d'ordre d'instruction supérieurs (modulo-n) d'un numéro d'ordre pour chaque instruction émise ;
avancer ledit pointeur d'instruction archivée en avant vers des numéros d'ordre d'instruction supérieurs (modulo-n) sur la base d'une évaluation séquentielle de numéro d'ordre de l'état du bit actif pour chaque emplacement de stockage et de premières règles prédéterminées mais ne pas avancer ledit deuxième pointeur au-delà dudit premier pointeur ; et
avancer ledit pointeur d'instruction retirée en avant vers des numéros d'ordre d'instruction supérieurs (modulo-n) sur la base d'une évaluation séquentielle de numéro d'ordre de l'état du bit actif pour chaque emplacement et de secondes règles prédéterminées mais ne pas avancer ledit troisième pointeur au-delà dudit deuxième pointeur ; et
dans lequel ladite avance desdits pointeurs à des numéros d'ordre de valeur supérieure est accomplie dans ladite structure de données circulaire avec une arithmétique modulo-n de sorte que l'incrémentation de l'un quelconque desdits pointeurs d'instruction émise, d'instruction archivée, ou d'instruction retirée depuis l'adresse n-1 place ledit pointeur à l'adresse n, et l'incrémentation dudit pointeur depuis l'adresse n place ledit pointeur à l'adresse 0.

22. Procédé selon la revendication 21, dans lequel lesdites premières règles prédéterminées comprennent :
à chaque nombre prédéterminé de cycles d'horloge machine, l'avance dudit pointeur d'instruction archivée en avant à un nouvel emplacement d'adresse non supérieur à l'adresse d'emplacement de stockage de données la plus élevée pour laquelle tous les bits de statut d'activité dans des emplacements d'adresse inférieurs sont des « 0 » inactifs mais non supérieur à l'adresse dudit premier pointeur à ce cycle machine ; et
dans lequel lesdites secondes règles prédéterminées comprennent :
à chaque nombre prédéterminé de cycles d'horloge machine, l'avance dudit pointeur d'instruction retirée en avant à un nouvel emplacement d'adresse non supérieur à l'adresse d'emplacement de stockage de données la plus élevée pour laquelle tous les bits de statut d'activité dans des emplacements d'adresse inférieurs sont inactifs mais non supérieur à l'adresse dudit deuxième pointeur à ce cycle machine.

23. Procédé selon la revendication 22, dans lequel lesdits nouveaux emplacements d'adresse sont déterminés sur la base d'opérations booléennes desdits bits d'activité de statut.

24. Procédé selon la revendication 22, dans lequel lesdites premières règles prédéterminées comprennent en outre l'étape consistant à limiter le nombre d'adresses duquel ledit pointeur d'instruction archivée peut être avancé pendant ledit nombre prédéterminé de cycles machine à un premier nombre maximum d'adresses ; et dans lequel lesdites secondes règles prédéterminées comprennent en outre l'étape consistant à limiter le nombre d'adresses duquel ledit pointeur retiré peut être avancé pendant ledit nombre prédéterminé de cycles machine à un second nombre maximum d'adresses, où ledit second nombre maximum d'adresses est inférieur audit premier nombre maximum d'adresses.

25. Procédé selon la revendication 22, dans lequel ledit pointeur d'instruction archivée et ledit pointeur retiré ne sont pas déplacés passées des instructions pour lesquelles des exceptions, des mauvaises prédictions d'instruction de branchement, ou des conditions d'erreur sont détectées.

26. Appareil pour suivre une exécution d'instruction spéculative dans une unité de traitement (51) qui exécute des instructions émises par une unité d'émission d'instruction (61), ledit appareil comprenant :
un moyen de stockage de données couplé avec ladite unité de traitement (51), le moyen de stockage de données comprenant une structure de données circulaire ayant n emplacements adressables 0, 1, 2, ..., n-2, n-1, où un emplacement adressable n-1 est adjacent logiquement à un emplacement adressable 0, chaque emplacement adressable correspond à une étiquette d'identification d'instruction particulière qui identifie une des instructions émises, et un bit d'activité est établi à un emplacement adressable, le bit d'activité identifiant un statut d'une instruction identifiée par l'étiquette d'identification d'instruction particulière correspondant à l'emplacement adressable comme statut actif ou statut inactif ;
une unité d'exécution d'instruction adaptée pour exécuter lesdites instructions émises spéculativement et pas dans un ordre séquentiel ;
un ordonnanceur d'émission et d'exécution d'instruction ;
des moyens pour affecter un numéro d'ordre séquentiel comme ladite étiquette d'identification d'instruction à chaque instruction particulière émise par l'unité d'émission d'instruction lorsque l'instruction est émise, en affectant une étiquette d'identification d'instruction à un emplacement unique des n emplacements adressables et en avançant un pointeur de numéro d'ordre émis (314) de un pour chaque instruction émise, ledit pointeur de numéro d'ordre émis pointant ainsi toujours vers le numéro d'ordre de la dernière instruction émise ;
des moyens pour recevoir un statut d'exécution d'instruction de ladite unité d'exécution pour chaque instruction émise, ledit statut d'exécution d'instruction comprenant un statut selon lequel une instruction particulière est soit active soit inactive, et un statut selon lequel si une exécution d'une instruction particulière s'est achevée ou non et si l'exécution de l'instruction particulière s'est achevée sans erreur d'exécution ;
des moyens pour suivre des informations de disponibilité de ressources machine sur la base du statut d'émission, d'exécution, d'achèvement et de retrait d'instructions dans ladite unité de traitement, et pour communiquer lesdites informations à ladite unité d'émission d'instruction ; et
des moyens, dans ladite unité d'émission d'instruction, sensibles auxdites informations de disponibilité de ressources pour continuer l'émission d'instructions si des ressources machine sont disponibles pour traiter d'autres instructions et pour bloquer l'émission d'autres instructions lorsque des ressources machine ne sont pas disponibles pour traiter lesdites instructions.

27. Appareil selon la revendication 26, dans lequel lesdits moyens pour suivre des informations de disponibilité de ressources machine comprennent :
une structure de données circulaire définie à l'intérieur dudit moyen de stockage de données pour stocker des informations de statut d'émission, d'exécution, d'achèvement, et de retrait pour chaque instruction émise, comprenant des informations de statut d'activité d'instruction identifiant le statut actuel de chaque instruction comme actif ou inactif ;
des premiers moyens logiques pour déterminer la dernière instruction émise,
des deuxièmes moyens logiques pour déterminer la dernière instruction archivée qui est la dernière instruction qui s'est achevée sans erreur et pour laquelle toutes les instructions séquentiellement antérieures se sont achevées sans erreur, et
des troisièmes moyens logiques pour déterminer la dernière instruction récupérée qui est la dernière instruction pour laquelle des ressources de processeur allouées ont été récupérées.

28. Appareil selon la revendication 27, comprenant en outre :
des moyens pour identifier des instructions de branchement prédites émises par ladite unité d'émission ;
des moyens pour détecter des instructions de branchement prédites émises par ladite unité d'émission ;
des moyens pour détecter des instructions de branchement prédites exécutées qui ont fait l'objet d'une mauvaise prédiction et pour initier la reprise à partir desdites branches ayant fait l'objet d'une mauvaise prédiction ; et
des moyens pour prendre en charge des exceptions d'exécution d'instruction selon des règles de prise en charge d'exception prédéterminées.
